# EUROPEAN PATENT APPLICATION

(11) **EP 2 503 385 A1**
(43) Date of publication of application: **26.09.2012**
(21) Application number: 10831559.9
(22) Date of filing: 16.11.2010
(51) Int. Cl.: G02F 1/1337, G02F 1/1335, G02F 1/1343

(54) **LIQUID CRYSTAL DISPLAY DEVICE AND MANUFACTURING METHOD THEREFOR**

(30) Priority: 19.11.2009 JP 2009264389
(71) Applicant: Sharp Kabushiki Kaisha, Osaka-shi, Osaka 545-8522 (JP)
(72) Inventor: INOUE, Iichiroh, Osaka-shi, Osaka 545 - 8522 (JP); MIYACHI, Koichi, Osaka-shi, Osaka 545 - 8522 (JP); NAKAGAWA, Hidetoshi, Osaka-shi, Osaka 545 - 8522 (JP); SHOHRAKU, Akihiro, Osaka-shi, Osaka 545 - 8522 (JP)
(74) Representative: Müller - Hoffmann & Partner
(86) International application number: PCT/JP2010/070399
(87) International publication number: WO 2011/062165

(57) **Abstract**

A liquid crystal display device (**100**) according to the present invention includes a vertical alignment type liquid crystal layer (**3**); and a pair of optical alignment films (**12, 22**). A plurality of picture elements (**R, G, B, Y**) each include four liquid crystal domains (**D1** through **D4**) in which tilt directions of liquid crystal molecules when a voltage is applied are different. The four liquid crystal domains are located in a matrix of 2 rows × 2 columns. The pair of optical alignment films have such an alignment regulation force that causes an identical alignment pattern to appear in repetition in the liquid crystal layer along a first direction which is parallel to one of a row direction and a column direction, with 2n pixels (n is an integer of 1 or greater) being a minimum unit. In the 2n pixels which form the repeat unit of alignment pattern, there are first picture elements and second picture elements in a mixed state, the first picture elements each including the four liquid crystal domains located in a first order, and the second picture elements each including the four liquid crystal domains located in a second order which is different from the first order. According to the present invention, when the 4D-RTN mode is adopted for a liquid crystal display device in which one pixel includes a picture element having a different size from that of another picture element, increase of the cost and the time which are required for optical alignment processing can be suppressed.

## Description

### TECHNICAL FIELD

The present invention relates to a liquid crystal display device and a method for producing the same, and specifically a liquid crystal display device having a wide viewing angle characteristic and a method for producing the same.

### BACKGROUND ART

Recently, liquid crystal display devices have been improved in terms of display characteristics, and are now used for TV receivers and the like more and more widely. The viewing angle characteristics of the liquid crystal display devices have been improved but are desired to be further improved. Especially, the viewing angle characteristics of liquid crystal display devices using a vertical alignment type liquid crystal layer (also referred to as "VA-mode liquid crystal display devices") are strongly desired to be improved.

VA-mode liquid crystal display devices currently used for large display devices of TVs and the like adopt a multi-domain structure in which a plurality of liquid crystal domains are formed in one picture element in order to improve the viewing angle characteristics. A mainly used method for forming the multi-domain structure is an MVA mode. The MVA mode is disclosed in, for example, Patent Document 1.

According to the MVA mode, a pair of substrates facing each other with a vertical alignment type liquid crystal layer interposed therebetween each include an alignment regulation structure on a surface thereof on the liquid crystal layer side. Owing to such alignment regulation structures, a plurality of domains having different alignment directions (tilt directions) of liquid crystal molecules (typically, there are four types of alignment directions) are formed in each picture element. As the alignment regulation structures, slits (openings) or ribs (protrusion structures) provided in or on electrodes are used, and an alignment regulation force is exerted from both sides of the liquid crystal layer.

However, in the case where the slits or ribs are used, unlike in the case where pretilt directions are defined by alignment films used in the conventional TN mode, the alignment regulation force on the liquid crystal molecules is nonuniform in the picture element because the slits and ribs are linear. This causes a problem that there occurs a response speed distribution. There is another problem that since the light transmittance of an area where the slits or ribs are provided is lowered, the display luminance is decreased.

In order to avoid the above-described problems, it is preferable that even in a VA-mode liquid crystal display device, the multi-domain structure is formed by defining the pretilt direction by means of alignment films. The present applicant has proposed a VA-mode liquid crystal display device having such a multi-domain structure in Patent Document 2.

In the liquid crystal display device disclosed in Patent Document 2, the pretilt directions are defined by alignment films to form a 4-domain alignment structure. Namely, when a voltage is applied to the liquid crystal layer, four liquid crystal domains are formed in one picture element. Such a 4-domain alignment structure is occasionally referred simply as the "4D structure".

In the liquid crystal display device disclosed in Patent Document 2, the pretilt direction defined by one of a pair of alignment films facing each other with the liquid crystal layer interposed therebetween, and the pretilt direction defined by the other alignment film, are different from each other by about 90°. Therefore, in the presence of an applied voltage, liquid crystal molecules are twist-aligned. A VA-mode in which the liquid crystal molecules are twist-aligned by use of a pair of vertical alignment films provided such that the pretilt directions (alignment directions) are perpendicular to each other is occasionally referred to also as the "VATN (Vertical Alignment Twisted Nematic) mode" or the "RTN (Reverse Twisted Nematic) mode". As described above, since the liquid crystal display device disclosed in Patent Document 2 forms the 4D structure, the present applicant refers the display mode of the liquid crystal display device disclosed in Patent Document 2 as the "4D-RTN mode".

As a specific technique for causing the alignment films to define the pretilt directions of the liquid crystal molecules, as described in Patent Document 2, optical alignment processing is considered prospective. Optical alignment processing, which can be performed in a non-contact manner, does not generate static electricity due to friction unlike rubbing and thus can improve the yield.

Recently, for the purpose of further improving the viewing angle characteristics of VA-mode liquid crystal display devices, a picture element division driving technology have been put into practice (e.g., Patent Documents 3 and 4). According to the picture element division driving technology, the problem that the γ characteristic (gamma characteristic) in the state where the display is observed in a front direction and the γ characteristic in the state where the display is observed in an oblique direction are different from each other is alleviated; namely, the viewing angle dependence of the γ characteristic is improved. The "γ characteristic" is a gray scale dependence of the display luminance. According to the picture element division driving technology, one picture element is formed of a plurality of sub picture elements which can display different levels of luminance from each other, so that a prescribed luminance for a display signal voltage which is input to the picture element is displayed. Namely, the picture element division driving technology is a technology for improving the viewing angle dependence of the γ characteristic of a picture element by synthesizing different γ characteristics of a plurality of sub picture elements included in the picture element.

Recently, it is desired to enlarge a color reproduction range of a liquid crystal display device (range of displayable colors) in addition to the above-described improvement of the viewing angle characteristics. In a general liquid crystal display device, one pixel is formed of three picture elements respectively for displaying three primary colors of light, i.e., red, green and blue. Owing to this, color display is realized. By contrast, a technique of enlarging the color reproduction range of a liquid crystal display device by using four or more primary colors for display has been proposed as disclosed in Patent Document 5.

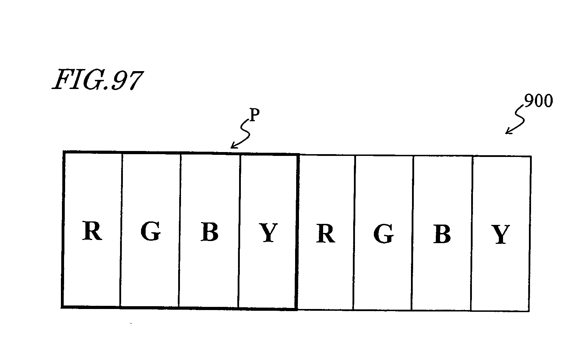

For example, in a liquid crystal display device **900** shown in FIG. **97****,** one pixel **P** is formed of four picture elements **R, G, B and Y** for displaying red, green, blue and yellow respectively. Owing to this structure, the color reproduction range can be enlarged. Alternatively, one pixel may be formed of five picture elements for displaying red, green, blue, yellow and cyan respectively, or of six picture elements for displaying red, green, blue, yellow, cyan and magenta respectively. By use of four or more primary colors, the color reproduction range can be made larger than that of a conventional liquid crystal display device which provides display by use of three primary colors. A liquid crystal display device which provides display by use of four or more primary colors is referred to as a "multiple primary color display device".

### CITATION LIST

### PATENT LITERATURE

Patent Document 1: Japanese Laid-Open Patent Publication No. 11-242225
Patent Document 2: International Publication WO2006/132369
Patent Document 3: Japanese Laid-Open Patent Publication No. 2004-62146
Patent Document 4: Japanese Laid-Open Patent Publication No. 2004-78157
Patent Document 5: PCT Japanese National-Phase Laid-Open Patent Publication No. 2004-529396

### SUMMARY OF INVENTION

### TECHNICAL PROBLEM

While making a consideration on adoption of the 4D-RTN mode for a multiple primary color display device, the present inventors found the following problem.

Generally in a liquid crystal display device which provides display by use of three primary colors, a plurality of picture elements included in one pixel all have the same size. By contrast, in a multiple primary color display device, a part of the picture elements in one pixel may have a different size from that of the remaining picture elements in the same pixel in order to, for example, improve the brightness or adjust the white balance. All the picture elements in one pixel may have different sizes from each other. In the case where the 4D-RTN mode is adopted for such a liquid crystal display device in which the size of the picture elements is not uniform, "shifted exposure" cannot be performed for optical alignment processing as described later in detail. This increases the cost and the time required for the optical alignment processing.

The present invention made in light of the above-described problem has an object of suppressing the increase of the cost and the time required for the optical alignment processing in the case where the 4D-RTN mode is adopted for a liquid crystal display device in which one pixel includes a picture element having a different size from that of another picture element.

### SOLUTION TO PROBLEM

A liquid crystal display device according to the present invention includes a vertical alignment type liquid crystal layer; a first substrate and a second substrate facing each other with the liquid crystal layer interposed therebetween; a first electrode provided on the liquid crystal layer side of the first substrate and a second electrode provided on the liquid crystal layer side of the second substrate; a pair of optical alignment films provided between the first electrode and the liquid crystal layer and between the second electrode and the liquid crystal layer; and a plurality of pixels arranged in a matrix having a plurality of rows and a plurality of columns. The plurality of pixels each include a plurality of picture elements for displaying different colors from each other, the plurality of picture elements including at least three picture elements; each of the plurality of picture elements includes a first liquid crystal domain in which a tilt direction of liquid crystal molecules at a center and in the vicinity thereof in a layer plane and in a thickness direction of the liquid crystal layer when a voltage is applied between the first electrode and the second electrode is a predetermined first tilt direction, a second liquid crystal domain in which the tilt direction is a predetermined second tilt direction, a third liquid crystal domain in which the tilt direction is a predetermined third tilt direction, and a fourth liquid crystal domain in which the tilt direction is a predetermined fourth tilt direction; the first, second, third and fourth tilt directions are such that a difference between any two of these four directions is approximately equal to an integral multiple of 90°; and the first, second, third and fourth liquid crystal domains are arranged in a matrix of 2 rows x 2 columns; the pair of optical alignment films have such an alignment regulation force that causes an identical alignment pattern to appear in repetition in the liquid crystal layer along a first direction which is parallel to one of a row direction and a column direction, with 2n pixels (n is an integer of 1 or greater) being a minimum unit; and in the 2n pixels which form the repeat unit of alignment pattern, there are first picture elements and second picture elements in a mixed state, the first picture elements each including the first, second, third and fourth liquid crystal domains located in a first order, and the second picture elements each including the first, second, third and fourth liquid crystal domains located in a second order which is different from the first order.

In a preferable embodiment, in the 2n pixels forming the repeat unit of alignment pattern, an alignment pattern of n pixel(s) which is half on one side of the 2n pixels and an alignment pattern of another n pixel(s) which is half on the other side of the 2n pixels are inverted to each other.

In a preferable embodiment, in the n pixel(s) which is half on one side of the 2n pixels forming the repeat unit of alignment pattern, a difference between the number of the first picture element(s) and the number of the second picture element(s) is 0 or 1; and in the another n pixel(s) which is half on the other side of the 2n pixels, a difference between the number of the first picture element(s) and the number of the second picture element(s) is 0 or 1.

In a preferable embodiment, when the plurality of picture elements in each of the plurality of pixels are ranked in accordance with a length thereof along the first direction, one of any two picture elements having continuous ranks is the first picture element and the other of the two picture elements is the second picture element.

In a preferable embodiment, n is 1 or greater and 10 or less.

In a preferable embodiment, the plurality of picture elements include a picture element having a prescribed first length L1 along the first direction and a picture element having a second length L2, which is different from the first length L1, along the first direction.

In a preferable embodiment, the plurality of picture elements further include a picture element having a third length L3, which is different from the first length L1 and is also different from the second length L2, along the first direction.

In a preferable embodiment, when a gray scale is displayed, in each of the plurality of picture elements, a dark area darker than the gray scale appears; the dark area appearing in the first picture element is generally gammadion-shaped; and the dark area appearing in the second picture element is generally letter 8-shaped.

In a preferable embodiment, because of the alignment regulation force of the pair of optical alignment films, an identical alignment pattern appears in repetition in the liquid crystal layer along a second direction which is parallel to the other of the row direction and the column direction, with 2m pixels (m is an integer of 1 or greater) being a minimum unit; and in the 2m pixels which form the repeat unit of alignment pattern along the second direction, there are the first picture elements and the second picture elements in a mixed state.

In a preferable embodiment, in the 2m pixels forming the repeat unit of alignment pattern along the second direction, an alignment pattern of m pixel(s) which is half on one side of the 2m pixels and an alignment pattern of another m pixel (s) which is half on the other side of the 2m pixels are inverted to each other.

In a preferable embodiment, in the m pixel(s) which is half on one side of the 2m pixels forming the repeat unit of alignment pattern along the second direction, a difference between the number of the first picture element(s) and the number of the second picture element (s) is 0 or 1; and in the another m pixel(s) which is half on the other side of the 2m pixels, a difference between the number of the first picture element(s) and the number of the second picture element(s) is 0 or 1.

In a preferable embodiment, m is 1 or greater and 10 or less.

In a preferable embodiment, the first, second, third and fourth liquid crystal domains are located such that the tilt directions of any two adjacent liquid crystal domains thereamong are different by 90° from each other; the first tilt direction and the third tilt direction have an angle of about 180° with respect to each other. In the first picture element, a portion of edges of the first electrode close to the first liquid crystal domain includes a first edge portion such that an azimuthal angle direction perpendicular to the first edge portion and directed to the inside of the first electrode has an angle exceeding 90° with respect to the first tilt direction; a portion of edges of the first electrode close to the second liquid crystal domain includes a second edge portion such that an azimuthal angle direction perpendicular to the second edge portion and directed to the inside of the first electrode has an angle exceeding 90° with respect to the second tilt direction; a portion of edges of the first electrode close to the third liquid crystal domain includes a third edge portion such that an azimuthal angle direction perpendicular to the third edge portion and directed to the inside of the first electrode has an angle exceeding 90° with respect to the third tilt direction; a portion of edges of the first electrode close to the fourth liquid crystal domain includes a fourth edge portion such that an azimuthal angle direction perpendicular to the fourth edge portion and directed to the inside of the first electrode has an angle exceeding 90° with respect to the fourth tilt direction; and the first edge portion and the third edge portion are generally parallel to one of a horizontal direction and a vertical direction of a display plane, and the second edge portion and the fourth edge portion are generally parallel to the other of the horizontal direction and the vertical direction of the display plane. In the second picture element, a portion of edges of the first electrode close to a first liquid crystal domain includes a first edge portion such that an azimuthal angle direction perpendicular to the first edge portion and directed to the inside of the first electrode has an angle exceeding 90° with respect to the first tilt direction; a portion of edges of the first electrode close to the third liquid crystal domain includes a third edge portion such that an azimuthal angle direction perpendicular to the third edge portion and directed to the inside of the first electrode has an angle exceeding 90° with respect to the third tilt direction; and the first edge portion and the third edge portion each include a first portion generally parallel to the horizontal direction of the display plane and a second portion generally parallel to the vertical direction of the display plane.

In a preferable embodiment, the plurality of picture elements each include a plurality of sub picture elements capable of applying different voltages to corresponding parts of the liquid crystal layer; and the plurality of sub picture elements each include the first, second, third and fourth liquid crystal domains.

In a preferable embodiment, the plurality of picture elements include a red picture element for displaying red, a green picture element for displaying green, and a blue picture element for displaying blue.

In a preferable embodiment, the plurality of picture elements further include a yellow picture element for displaying yellow.

In a preferable embodiment, the liquid crystal display device further includes a pair of polarizing plates facing each other with the liquid crystal layer interposed therebetween and located such that transmission axes thereof are generally perpendicular to each other. The first, second, third and fourth tilt directions make an angle of approximately 45° with respect to the transmission axes of the pair of polarizing plates.

In a preferable embodiment, the liquid crystal layer contains liquid crystal molecules having a negative dielectric anisotropy; and a pretilt direction defined by one of the pair of optical alignment films and a pretilt direction defined by the other of the pair of optical alignment films are different by approximately 90° from each other.

A method for producing a liquid crystal display device according to the present invention is a method for producing a liquid crystal display device including a vertical alignment type liquid crystal layer; a first substrate and a second substrate facing each other with the liquid crystal layer interposed therebetween; a first electrode provided on the liquid crystal layer side of the first substrate and a second electrode provided on the liquid crystal layer side of the second substrate; a first optical alignment film provided between the first electrode and the liquid crystal layer and a second optical alignment film provided between the second electrode and the liquid crystal layer; and a plurality of pixels arranged in a matrix having a plurality of rows and a plurality of columns; wherein: the plurality of pixels each include a plurality of picture elements for displaying different colors from each other, the plurality of picture elements including at least three picture elements; and each of the plurality of picture elements includes a first liquid crystal domain in which a tilt direction of liquid crystal molecules at a center and in the vicinity thereof in a layer plane and in a thickness direction of the liquid crystal layer when a voltage is applied between the first electrode and the second electrode is a predetermined first tilt direction, a second liquid crystal domain in which the tilt direction is a predetermined second tilt direction, a third liquid crystal domain in which the tilt direction is a predetermined third tilt direction, and a fourth liquid crystal domain in which the tilt direction is a predetermined fourth tilt direction; the first, second, third and fourth tilt directions are such that a difference between any two of these four directions is approximately equal to an integral multiple of 90°; and the first, second, third and fourth liquid crystal domains are arranged in a matrix of 2 rows × 2 columns. The method includes a step (A) of forming, by optical alignment processing, a first area having a first pretilt direction and a second area having a second pretilt direction which is antiparallel to the first pretilt direction, in an area of the first optical alignment film corresponding to each of the plurality of picture elements; and a step (B) of forming, by optical alignment processing, a third area having a third pretilt direction and a fourth area having a fourth pretilt direction which is antiparallel to the third pretilt direction, in an area of the second optical alignment film corresponding to each of the plurality of picture elements. The step (A) of forming the first area and the second area includes a first exposure step of directing light to a part of the first optical alignment film which is to be the first area; and a second exposure step of directing light to a part of the first optical alignment film which is to be the second area, after the first exposure step. The first exposure step and the second exposure step are performed by use of one, common first photomask having a mask pattern including a plurality of striped light shielding parts and a plurality of light transmitting parts located between the plurality of light shielding parts; and a mask pattern of an area of the first photomask corresponding to certain n pixel(s) (n is an integer of 1 or greater) continuous along a first direction which is parallel to one of a row direction and a column direction, and a mask pattern of an area of the first photomask corresponding to another n pixel(s) adjacent to the certain n pixel(s) along the first direction, are negative/positive-inverted to each other.

In a preferable embodiment, the plurality of striped light shielding parts extend along a second direction which is parallel to the other of the row direction and the column direction.

In a preferable embodiment, the step (A) of forming the first area and the second area further includes a first photomask locating step of, before the first exposure step, locating the first photomask such that a part of the first optical alignment film corresponding to about half of each of the plurality of picture elements overlaps each of the plurality of light shielding parts; and a first photomask moving step of, between the first exposure step and the second exposure step, shifting the first photomask along the first direction by n pixel(s).

In a preferable embodiment, the plurality of picture elements include a picture element having a prescribed first length L1 along the first direction and a picture element having a second length L2, which is different from the first length L1, along the first direction.

In a preferable embodiment, the plurality of picture elements further include a picture element having a third length L3, which is different from the first length L1 and is also different from the second length L2, along the first direction.

In a preferable embodiment, n is 1 or greater and 10 or less.

In a preferable embodiment, the step (B) of forming the third area and the fourth area includes a third exposure step of directing light to a part of the second optical alignment film which is to be the third area; and a fourth exposure step of directing light to a part of the second optical alignment film which is to be the fourth area, after the third exposure step. The third exposure step and the fourth exposure step are performed by use of one, common second photomask having a mask pattern including a plurality of striped light shielding parts and a plurality of light transmitting parts located between the plurality of light shielding parts; and a mask pattern of an area of the second photomask corresponding to certain m pixel(s) (m is an integer of 1 or greater) continuous along a second direction which is parallel to the other of the row direction and the column direction, and a mask pattern of an area of the second photomask corresponding to another m pixel(s) adjacent to the certain m pixel(s) along the second direction, are negative/positive-inverted to each other.

In a preferable embodiment, the plurality of striped light shielding parts of the second photomask extend along the first direction.

In a preferable embodiment, the step (B) of forming the third area and the fourth area further includes a second photomask locating step of, before the third exposure step, locating the second photomask such that a part of the second optical alignment film corresponding to about half of each of the plurality of picture elements overlaps each of the plurality of light shielding parts; and a second photomask moving step of, between the third exposure step and the fourth exposure step, shifting the second photomask along the second direction by m pixel(s).

In a preferable embodiment, the plurality of picture elements include a red picture element for displaying red, a green picture element for displaying green, and a blue picture element for displaying blue.

In a preferable embodiment, the plurality of picture elements further include a yellow picture element for displaying yellow.

### ADVANTAGEOUS EFFECTS OF INVENTION

According to the present invention, in the case where the 4D-RTN mode is adopted for a liquid crystal display device in which one pixel includes a picture element having a different size from that of another picture element, the increase of the cost and the time which are required for optical alignment processing can be suppressed.

### BRIEF DESCRIPTION OF DRAWINGS

[FIG. 1] FIG. **1** shows an example of picture element having a 4-domain alignment structure.
[FIG. 2] FIG. **2** shows a method for dividing the picture element shown in FIG. **1** into domains having different alignment directions; FIG. **2(a)** shows pretilt directions on the side of a TFT substrate; FIG. **2(b)** shows pretilt directions on the side of a CF substrate; and FIG. **2(c)** shows tilt directions and a dark area obtained when a voltage is applied to a liquid crystal layer.
[FIG. 3] FIG. **3** is provided for explaining why dark lines appear in the vicinity of edges of a picture element electrode corresponding to the picture element shown in FIG. **1****.**
[FIG. 4] FIG. **4** shows another method for dividing a picture element into domains having different alignment directions; FIG. **4 (a)** shows a pretilt direction on the side of the TFT substrate; FIG. **4(b)** shows a pretilt direction on the side of the CF substrate; and FIG. **4(c)** shows tilt directions and a dark area obtained when a voltage is applied to the liquid crystal layer.
[FIG. 5] FIG. **5** shows still another method for dividing a picture element into domains having different alignment directions; FIG. **5(a)** shows a pretilt direction on the side of the TFT substrate; FIG. **5(b)** shows a pretilt direction on the side of the CF substrate; and FIG. **5 (c)** shows tilt directions and a dark area obtained when a voltage is applied to the liquid crystal layer.
[FIG. 6] FIG. **6** shows still another method for dividing a picture element into domains having different alignment directions; FIG. **6(a)** shows a pretilt direction on the side of the TFT substrate; FIG. **6(b)** shows a pretilt direction on the side of the CF substrate; and FIG. **6(c)** shows tilt directions and a dark area obtained when a voltage is applied to the liquid crystal layer.
[FIG. 7] FIG. **7** schematically shows a structure of a conventional liquid crystal display device **900** adopting a 4D-RTN mode, and is a plan view showing two pixels **P.**
[FIG. 8] FIGS. 8(a)**, (b)** and **(c)** show optical alignment processing for realizing the structure shown in FIG. **7**; FIG. **8(a)** shows a photomask used for the optical alignment processing performed on an optical alignment film on the TFT substrate; and FIGS. 8(b) and **(c)** show exposure steps performed in the optical alignment processing on the optical alignment film on the TFT substrate.
[FIG. 9] FIGS. **9(a)**, **(b)** and **(c)** show optical alignment processing for realizing the structure shown in FIG. **7****;** FIG. **9(a)** shows a photomask used for the optical alignment processing performed on an optical alignment film on the CF substrate; and FIGS. **9(b)** and **(c)** show exposure steps performed in the optical alignment processing on the optical alignment film on the CF substrate.
[FIG. 10] FIG. **10** schematically shows a liquid crystal display device **900A** in which a red picture element **R** and a blue picture element **B** each have a size different from that of each of a green picture element **G** and a yellow picture element **Y**, and is a plan view showing two pixels **P.**
[FIG. 11] FIG. **11** shows a photomask used for optical alignment processing performed on an optical alignment film on a TFT substrate included in the liquid crystal display device **900A.**
[FIG. 12] FIGS. **12(a), (b)** and **(c)** show exposure steps performed in the optical alignment processing on the optical alignment film on the TFT substrate included in the liquid crystal display device **900A.**
[FIG. 13] FIG. **13** schematically shows a liquid crystal display device **900B** in which the size of a red picture element **R,** the size of a blue picture element **B,** and the size of each of a green picture element **G** and a yellow picture element **Y are** different from each other, and is a plan view showing two pixels **P.**
[FIG. 14] FIG. **14** schematically shows a liquid crystal display device **900C** in which a red picture element **R,** a blue picture element **B,** a green picture element **G** and a yellow picture element **Y** all have different sizes from each other, and is a plan view showing two pixels **P.**
[FIG. 15] FIG. **15** shows a photomask designed by a conventional technological concept in order to perform optical alignment processing on an optical alignment film on a TFT substrate included in the liquid crystal display device **900B.**
[FIG. 16] FIG. **16** shows a photomask designed by the conventional technological concept in order to perform optical alignment processing on an optical alignment film on a TFT substrate included in the liquid crystal display device **900C.**
[FIG. 17] FIG. **17** schematically shows a liquid crystal display device **100** in a preferable embodiment according to the present invention, and is a cross-sectional view showing one picture element.
[FIG. 18] FIGS. **18(a)** and **(b)** schematically show the liquid crystal display device **100** in a preferable embodiment according to the present invention, and is a plan view showing two pixels **P.**
[FIG. 19] FIG. **19** shows a photomask used for optical alignment processing performed on an optical alignment film on a TFT substrate included in the liquid crystal display device **100.**
[FIG. 20] FIGS. **20(a), (b)** and **(c)** show the optical alignment processing performed on the optical alignment film on the TFT substrate included in the liquid crystal display device **100.**
[FIG. 21] FIGS. **21(a), (b)** and **(c)** show the optical alignment processing performed on the optical alignment film on the TFT substrate included in the liquid crystal display device **100.**
[FIG. 22] FIG. **22** shows a photomask used for optical alignment processing performed on an optical alignment film on a CF substrate included in the liquid crystal display device 100.
[FIG. 23] FIGS. **23(a), (b)** and **(c)** show the optical alignment processing performed on the optical alignment film on the CF substrate included in the liquid crystal display device **100.**
[FIG. 24] FIGS. 24(a)**, (b)** and **(c)** show the optical alignment processing performed on the optical alignment film on the CF substrate included in the liquid crystal display device **100.**
[FIG. 25] FIGS. **25(a)** and **(b)** respectively show a first exposure step and a second exposure step when a variation of the photomask usable for the optical alignment processing performed on the optical alignment film on the TFT substrate included the liquid crystal display device **100** is used; and FIG. **25(c)** shows a minimum repeat unit (two pixels) of alignment pattern in the liquid crystal display device **100** in a completed form.
[FIG. 26] FIGS. **26(a)** and **(b)** respectively show the first exposure step and the second exposure step when a variation of the photomask usable for the optical alignment processing performed on the optical alignment film on the TFT substrate included the liquid crystal display device **100** is used; and FIG. **26(c)** shows a minimum repeat unit (two pixels) of alignment pattern in the liquid crystal display device **100** in a completed form.
[FIG. 27] FIGS. **27(a)** and **(b)** respectively show the first exposure step and the second exposure step when a variation of the photomask usable for the optical alignment processing performed on the optical alignment film on the TFT substrate included the liquid crystal display device **100** is used; and FIG. **27(c)** shows a minimum repeat unit (two pixels) of alignment pattern in the liquid crystal display device **100** in a completed form.
[FIG. 28] FIGS. **28(a)** and **(b)** respectively show the first exposure step and the second exposure step when a variation of the photomask usable for the optical alignment processing performed on the optical alignment film on the TFT substrate included the liquid crystal display device **100** is used; and FIG. **28(c)** shows a minimum repeat unit (two pixels) of alignment pattern in the liquid crystal display device **100** in a completed form.
[FIG. 29] FIGS. **29 (a)** and **(b)** respectively show the first exposure step and the second exposure step when a variation of the photomask usable for the optical alignment processing performed on the optical alignment film on the TFT substrate included the liquid crystal display device 100 is used; and FIG. **29(c)** shows a minimum repeat unit (two pixels) of alignment pattern in the liquid crystal display device **100** in a completed form.
[FIG. 30] FIGS. **30(a)** and **(b)** respectively show the first exposure step and the second exposure step when a variation of the photomask usable for the optical alignment processing performed on the optical alignment film on the TFT substrate included the liquid crystal display device **100** is used; and FIG. **30(c)** shows a minimum repeat unit (two pixels) of alignment pattern in the liquid crystal display device **100** in a completed form.
[FIG. 31] FIGS. **31(a)** and **(b)** respectively show the first exposure step and the second exposure step when a variation of the photomask usable for the optical alignment processing performed on the optical alignment film on the TFT substrate included the liquid crystal display device **100** is used; and FIG. **31(c)** shows a minimum repeat unit (two pixels) of alignment pattern in the liquid crystal display device **100** in a completed form.
[FIG. 32] FIGS. **32(a)** and **(b)** respectively show the first exposure step and the second exposure step when a variation of the photomask usable for the optical alignment processing performed on the optical alignment film on the TFT substrate included the liquid crystal display device **100** is used; and FIG. **32(c)** shows a minimum repeat unit (two pixels) of alignment pattern in the liquid crystal display device **100** in a completed form.
[FIG. 33] FIGS. **33(a)** and **(b)** respectively show the first exposure step and the second exposure step when a variation of the photomask usable for the optical alignment processing performed on the optical alignment film on the TFT substrate included the liquid crystal display device **100** is used; and FIG. **33(c)** shows a minimum repeat unit (two pixels) of alignment pattern in the liquid crystal display device **100** in a completed form.
[FIG. 34] FIGS. **34(a)** and **(b)** respectively show the first exposure step and the second exposure step when a variation of the photomask usable for the optical alignment processing performed on the optical alignment film on the TFT substrate included the liquid crystal display device **100** is used; and FIG. **34(c)** shows a minimum repeat unit (two pixels) of alignment pattern in the liquid crystal display device **100** in a completed form.
[FIG. 35] FIGS. 35(a) and (b) respectively show the first exposure step and the second exposure step when a variation of the photomask usable for the optical alignment processing performed on the optical alignment film on the TFT substrate included the liquid crystal display device **100** is used; and FIG. **35(c)** shows a minimum repeat unit (two pixels) of alignment pattern in the liquid crystal display device **100** in a completed form.
[FIG. 36] FIGS. 36(a) and (b) respectively show the first exposure step and the second exposure step when a variation of the photomask usable for the optical alignment processing performed on the optical alignment film on the TFT substrate included the liquid crystal display device **100** is used; and FIG. **36(c)** shows a minimum repeat unit (two pixels) of alignment pattern in the liquid crystal display device **100** in a completed form.
[FIG. 37] FIGS. 37(a) and (b) respectively show the first exposure step and the second exposure step when a variation of the photomask usable for the optical alignment processing performed on the optical alignment film on the TFT substrate included the liquid crystal display device **100** is used; and FIG. **37(c)** shows a minimum repeat unit (two pixels) of alignment pattern in the liquid crystal display device **100** in a completed form.
[FIG. 38] FIGS. 38(a) and(b) respectively show the first exposure step and the second exposure step when a variation of the photomask usable for the optical alignment processing performed on the optical alignment film on the TFT substrate included the liquid crystal display device **100** is used; and FIG. **38 (c)** shows a minimum repeat unit (two pixels) of alignment pattern in the liquid crystal display device **100** in a completed form.
[FIG. 39] FIGS. 39(a) and (b) respectively show the first exposure step and the second exposure step when a variation of the photomask usable for the optical alignment processing performed on the optical alignment film on the TFT substrate included the liquid crystal display device **100** is used; and FIG. **39(c)** shows a minimum repeat unit (two pixels) of alignment pattern in the liquid crystal display device **100** in a completed form.
[FIG. 40] FIGS. 40(a) and (b) respectively show the first exposure step and the second exposure step when a variation of the photomask usable for the optical alignment processing performed on the optical alignment film on the TFT substrate included the liquid crystal display device **100** is used; and FIG. **40(c)** shows a minimum repeat unit (two pixels) of alignment pattern in the liquid crystal display device **100** in a completed form.
[FIG. 41] FIGS. **41(a), (b)** and **(c)** show optical alignment processing performed on the optical alignment film on the TFT substrate included in the liquid crystal display device **100.**
[FIG. 42] FIGS. **42(a), (b)** and **(c)** show the optical alignment processing performed on the optical alignment film on the TFT substrate included in the liquid crystal display device **100.**
[FIG. 43] FIG. **43** shows a double-exposed area formed by the optical alignment processing shown in FIG. **41** and FIG. **42****.**
[FIG. 44] FIGS. **44(a)** and **(b)** each schematically show a liquid crystal display device **200** in a preferable embodiment according to the present invention, and is a plan view showing four pixels **P.**
[FIG. 45] FIG. **45** shows a photomask used for optical alignment processing performed on an optical alignment film on a TFT substrate included in the liquid crystal display device **200.**
[FIG. 46] FIGS. **46(a), (b)** and **(c)** show the optical alignment processing performed on the optical alignment film on the TFT substrate included in the liquid crystal display device **200.**
[FIG. 47] FIGS. **47(a), (b)** and **(c)** show the optical alignment processing performed on the optical alignment film on the TFT substrate included in the liquid crystal display device **200.**
[FIG. 48] FIG. **48** shows a photomask used for optical alignment processing performed on an optical alignment film on a CF substrate included in the liquid crystal display device **200.**
[FIG. 49] FIGS. **49(a), (b)** and **(c)** show the optical alignment processing performed on the optical alignment film on the CF substrate included in the liquid crystal display device **200.**
[FIG. 50] FIGS. **50 (a), (b)** and **(c)** show the optical alignment processing performed on the optical alignment film on the CF substrate included in the liquid crystal display device **100.**
[FIG. 51] FIG. **51** schematically shows a liquid crystal display device **300** in a preferable embodiment according to the present invention, and is a plan view showing six pixels **P.**
[FIG. 52] FIG. **52** shows a photomask used for optical alignment processing performed on an optical alignment film on a TFT substrate included in the liquid crystal display device **300.**
[FIG. 53] FIGS. **53(a), (b)** and **(c)** show the optical alignment processing performed on the optical alignment film on the TFT substrate included in the liquid crystal display device **300.**
[FIG. 54] FIGS. **54(a), (b)** and **(c)** show the optical alignment processing performed on the optical alignment film on the TFT substrate included in the liquid crystal display device **300.**
[FIG. 55] FIG. **55** shows a photomask used for optical alignment processing performed on an optical alignment film on a CF substrate included in the liquid crystal display device **300.**
[FIG. 56] FIGS. **56(a), (b)** and **(c)** show the optical alignment processing performed on the optical alignment film on the CF substrate included in the liquid crystal display device **300.**
[FIG. 57] FIGS. **57(a), (b)** and **(c)** show the optical alignment processing performed on the optical alignment film on the CF substrate included in the liquid crystal display device **300.**
[FIG. 58] FIG. **58** schematically shows a liquid crystal display device **400** in a preferable embodiment according to the present invention, and is a plan view showing two pixels **P.**
[FIG. 59] FIG. **59** schematically shows a liquid crystal display device **500** in a preferable embodiment according to the present invention, and is a plan view showing two pixels **P.**
[FIG. 60] FIG. **60** schematically shows a liquid crystal display device **500A** in a preferable embodiment according to the present invention, and is a plan view showing two pixels **P.**
[FIG. 61] FIG. **61** schematically shows a liquid crystal display device **500B** in a preferable embodiment according to the present invention, and is a plan view showing two pixels **P.**
[FIG. 62] FIG. **62** shows an example of specific structure of each picture element for performing picture element division driving.
[FIG. 63] FIG. **63** shows an example of specific structure of each picture element for performing picture element division driving.
[FIG. 64] FIG. **64** schematically shows a liquid crystal display device **1000** obtained by the technology described in International Application PCT/JP2010/062585, and is a plan view showing four pixels **P.**
[FIG. 65] FIG. **65** schematically shows the liquid crystal display device **1000** obtained by the technology described in International Application PCT/JP2010/062585, and is a plan view showing four pixels **P.**
[FIG. 66] FIG. **66** shows a photomask used for optical alignment processing performed on an optical alignment film on a TFT substrate included in the liquid crystal display device **1000.**
[FIG. 67] FIGS. **67(a), (b)** and **(c)** show the optical alignment processing performed on the optical alignment film on the TFT substrate included in the liquid crystal display device **1000.**
[FIG. 68] FIGS. **68(a), (b)** and **(c)** show the optical alignment processing performed on the optical alignment film on the TFT substrate included in the liquid crystal display device **1000.**
[FIG. 69] FIG. **69** shows a photomask used for optical alignment processing performed on an optical alignment film on a CF substrate included in the liquid crystal display device **1000.**
[FIG. 70] FIGS. **70(a), (b)** and **(c)** show the optical alignment processing performed on the optical alignment film on the CF substrate included in the liquid crystal display device **1000.**
[FIG. 71] FIGS. **71(a), (b)** and **(c)** show the optical alignment processing performed on the optical alignment film on the CF substrate included in the liquid crystal display device **1000.**
[FIG. 72] FIG. **72(a)** shows an alignment state of the liquid crystal display device **1000** in the case where a bonding shift does not occur; and FIG. **72(b)** shows an alignment state of the liquid crystal display device **1000** in the case where a bonding shift occurs in a leftward direction.
[FIG. 73] FIGS. **73(a)** and **(b)** schematically show how a display plane of the liquid crystal display device **1000** is visually recognized when being observed from a top oblique direction in the case where the bonding shift does not occur and the bonding shift occurs in the leftward direction, respectively.
[FIG. 74] FIGS. **74(a)** and **(b)** schematically show how the display plane of the liquid crystal display device **1000** is visually recognized when being observed from a bottom oblique direction in the case where the bonding shift does not occur and the bonding shift occurs in the leftward direction, respectively.
[FIG. 75] FIG. **75** schematically shows a liquid crystal display device **600** in a preferable embodiment according to the present invention, and is a plan view showing four pixels **P.**
[FIG. 76] FIG. **76** schematically shows the liquid crystal display device **600** in a preferable embodiment according to the present invention, and is a plan view showing four pixels **P.**
[FIG. 77] FIG. **77** shows a photomask used for optical alignment processing performed on an optical alignment film on a TFT substrate included in the liquid crystal display device **600.**
[FIG. 78] FIGS. **78(a), (b)** and **(c)** show the optical alignment processing performed on the optical alignment film on the TFT substrate included in the liquid crystal display device **600.**
[FIG. 79] FIGS. **79(a), (b)** and **(c)** show the optical alignment processing performed on the optical alignment film on the TFT substrate included in the liquid crystal display device **600.**
[FIG. 80] FIG. **80** shows a photomask used for optical alignment processing performed on an optical alignment film on a CF substrate included in the liquid crystal display device **600.**
[FIG. 81] FIGS. **81(a), (b)** and **(c)** show the optical alignment processing performed on the optical alignment film on the CF substrate included in the liquid crystal display device **600.**
[FIG. 82] FIGS. **82(a), (b)** and **(c)** show the optical alignment processing performed on the optical alignment film on the CF substrate included in the liquid crystal display device **600.**
[FIG. 83] FIG. **83 (a)** shows an alignment state of the liquid crystal display device **600** in the case where a bonding shift does not occur; and FIG. **83(b)** shows an alignment state of the liquid crystal display device **600** in the case where a bonding shift occurs in the leftward direction.
[FIG. 84] FIGS. **84(a)** and **(b)** schematically show how a display plane of the liquid crystal display device **600** is visually recognized when being observed from the top oblique direction in the case where the bonding shift does not occur and the bonding shift occurs in the leftward direction, respectively.
[FIG. 85] FIGS. **85(a)** and **(b)** schematically show how the display plane of the liquid crystal display device 600 is visually recognized when being observed from the bottom oblique direction in the case where the bonding shift does not occur and the bonding shift occurs in the leftward direction, respectively.
[FIG. 86] FIG. **86** schematically shows a liquid crystal display device **700** in a preferable embodiment according to the present invention, and is a plan view showing four pixels **P.**
[FIG. 87] FIG. **87** schematically shows the liquid crystal display device **700** in a preferable embodiment according to the present invention, and is a plan view showing four pixels **P.**
[FIG. 88] FIG. **88** shows a photomask used for optical alignment processing performed on an optical alignment film on a TFT substrate included in the liquid crystal display device **700.**
[FIG. 89] FIGS. **89(a), (b)** and **(c)** show the optical alignment processing performed on the optical alignment film on the TFT substrate included in the liquid crystal display device **700.**
[FIG. 90] FIGS. **90(a), (b)** and **(c)** show the optical alignment processing performed on the optical alignment film on the TFT substrate included in the liquid crystal display device **700.**
[FIG. 91] FIG. **91** shows a photomask used for optical alignment processing performed on an optical alignment film on a CF substrate included in the liquid crystal display device **700.**
[FIG. 92] FIGS. **92(a), (b)** and **(c)** show the optical alignment processing performed on the optical alignment film on the CF substrate included in the liquid crystal display device **700.**
[FIG. 93] FIGS. **93(a), (b)** and **(c)** show the optical alignment processing performed on the optical alignment film on the CF substrate included in the liquid crystal display device **700.**
[FIG. 94] FIG. **94(a)** shows an alignment state of the liquid crystal display device **700** in the case where a bonding shift does not occur; and FIG. **94(b)** shows an alignment state of the liquid crystal display device **700** in the case where a bonding shift occurs in an upward direction.
[FIG. 95] FIGS. **95(a)** and **(b)** schematically show how a display plane of the liquid crystal display device **700** is visually recognized when being observed from a left oblique direction in the case where the bonding shift does not occur and the bonding shift occurs in the upward direction, respectively.
[FIG. 96] FIGS. **96(a)** and **(b)** schematically show how the display plane of the liquid crystal display device **700** is visually recognized when being observed from a right oblique direction in the case where the bonding shift does not occur and the bonding shift occurs in the upward direction, respectively.
[FIG. 97] FIG. **97** schematically shows a conventional multiple primary color display device, and is a plan view showing two pixels **P.**

### DESCRIPTION OF EMBODIMENTS

Hereinafter, embodiments of the present invention will be described with reference to the drawings. The following description is given with an example of a multiple primary color display device, but the present invention is not limited to a multiple primary color display device. The present invention is widely applicable to a case where a 4D-RTN mode is adopted for a liquid crystal display device in which one pixel includes a picture element having a different size from that of another picture element. The 4D-RTN mode is, as described above, an RTN mode in which each picture element has a 4-domain alignment structure (4D structure) (VATN mode). A liquid crystal display device adopting the 4D-RTN mode includes a vertical alignment type liquid crystal layer.

In this specification, the term "vertical alignment type liquid crystal layer" refers to a liquid crystal layer in which liquid crystal molecules are aligned at an angle of about 85° or greater with respect to surfaces of vertical alignment films. The liquid crystal molecules contained in the vertical alignment type liquid crystal layer have a negative dielectric anisotropy. By a combination of the vertical alignment type liquid crystal layer and a pair of polarizing plates facing each other with the liquid crystal layer interposed therebetween and located in crossed Nicols (i.e., located such that transmission axes thereof are generally perpendicular to each other), normally black mode display is provided.

In this specification, the term "picture element" refers to the minimum unit which represents a particular gray scale level in display, and corresponds to a unit representing a gray scale level of each of primary colors used for display (red, green, blue and the like) (a "picture element" is also referred to as a "dot"). A combination of a plurality of picture elements forms (defines) one "pixel", which is the minimum unit for providing color display. The term "sub picture element" refers to a unit for displaying a level of luminance. A plurality of sub picture elements are included in one picture element and are capable of displaying different levels of luminance from each other. Such a plurality of sub picture elements display a prescribed level of luminance (gray scale) for a display signal voltage which is input to one picture element.

The term "pretilt direction" refers to an alignment direction of a liquid crystal molecule defined by an alignment film and is an azimuthal angle direction in a display plane. An angle of the liquid crystal molecule with respect to the surface of the alignment film when the liquid crystal molecule is aligned in the pretilt direction is referred to as a "pretilt angle". In this specification, performing processing on the alignment film to allow the alignment film to exert a capability of defining a prescribed pretilt direction is expressed as "giving a pretilt direction to the alignment film". The pretilt direction defined by the alignment film is occasionally referred to simply as the "pretilt direction of the alignment film".

By changing the combination of the pretilt directions given by a pair of alignment films facing each other with the liquid crystal layer interposed therebetween, a 4-domain alignment structure can be formed. A picture element divided into four has four liquid crystal domains.

Each liquid crystal domain is characterized by the tilt direction (also referred to as a "reference alignment direction") of the liquid crystal molecules at a center and in the vicinity thereof in a layer plane and in a thickness direction of the liquid crystal layer when a voltage is applied to the liquid crystal layer. This tilt direction (reference alignment direction) has a dominant influence on the viewing angle dependence of each domain. This tilt direction is also an azimuthal angle direction. The reference based on which the azimuthal angle direction is measured is a horizontal direction of the display plane, and the counterclockwise direction is the forward direction (assuming that the display plane is the face of a clock, the 3 o'clock direction is an azimuthal angle of 0° and the counterclockwise direction is the forward direction). Where the tilt directions of the four liquid crystal domains are set such that a difference between any two tilt directions among the four tilt directions is approximately equal to an integral multiple of 90° (e.g., 12 o'clock direction, 9 o'clock direction, 6 o'clock direction and 3 o'clock direction), the viewing angle characteristics are averaged and thus good display can be provided. From the viewpoint of uniformizing the viewing angle characteristics, it is preferable that the area sizes of the four liquid crystal domains in the picture element are approximately equal to each other. Specifically, it is preferable that a difference between the area size of the largest liquid crystal domain and the area size of the smallest liquid crystal domain among the four liquid crystal domains is 25% or less of the area size of the largest liquid crystal domain.

A vertical alignment type liquid crystal layer shown as an example in the following embodiments contains liquid crystal molecules having a negative dielectric anisotropy (a nematic liquid crystal material having a negative dielectric anisotropy). The pretilt direction defined by one of the alignment films and the pretilt direction defined by the other alignment film are different by about 90° from each other. A direction at the middle between these two pretilt directions is defined as the tilt direction (reference alignment direction). When a voltage is applied to the liquid crystal layer, the liquid crystal molecules are twist-aligned in accordance with alignment regulation forces of the alignment films. When necessary, a chiral agent may be incorporated into the liquid crystal layer.

It is preferable that the pretilt angles respectively defined by the pair of alignment films are approximately equal to each other. When the pretilt angles are approximately equal to each other, there is an advantage that the display luminance characteristic can be improved. Especially where the difference between the pretilt angles is 1° or less, the tilt direction (reference alignment direction) of the liquid crystal molecules at the center and in the vicinity thereof of the liquid crystal layer can be controlled to be stable and thus the display luminance characteristic can be improved. A conceivable reason for this is that when the difference between the pretilt angles exceeds 1°, the tilt direction is dispersed in accordance with the position in the liquid crystal layer, and as a result, the transmittance is dispersed (i.e., an area having a transmittance lower than a desired transmittance is formed).

A pretilt direction is given to each alignment film by optical alignment processing. When an optical alignment film containing a photosensitive group is used, the variance in the pretilt angle can be controlled to be 1° or less. It is preferable that the optical alignment film contains, as the photosensitive group, at least one selected from the group consisting of 4-chalcone group, 4'-chalcone group, coumarin group and cinnamoyl group.

In the following embodiments, an active matrix driving type liquid crystal display device including thin film transistors (TFTs) will be shown as a typical example, but the present invention is applicable to any other system of liquid crystal display device, needless to say.

### (EMBODIMENT 1)

Before describing this embodiment, a method for dividing one picture element of a general 4D-RTN mode into domains having different alignment directions, and a problem occurring when the 4D-RTN mode is adopted for a multiple primary color liquid crystal display device, will be described.

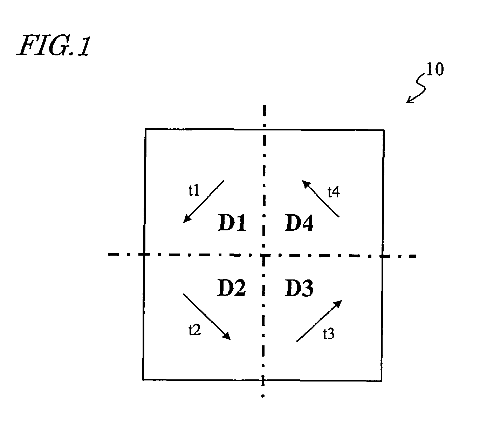

FIG. **1** shows a picture element **10** having a 4-domain alignment structure (4D structure). In FIG. **1****,** the picture element **10** is generally square in correspondence with a generally square picture element electrode for the sake of simplicity, but there is no limitation on the shape of the picture element. For example, the picture element **10** may be generally rectangular.

As shown in FIG. **1****,** the picture element **10** includes four liquid crystal domains **D1, D2, D3** and **D4.** In FIG. **1****,** the liquid crystal domains **D1, D2, D3** and **D4** have an equal area size, and the example shown in FIG. **1** is the most preferable 4D structure from the viewpoint of viewing angle characteristics. The four liquid crystal domains **D1, D2, D3** and **D4** are arranged in a matrix of 2 rows × 2 columns.

The tilt directions (reference alignment directions) of the liquid crystal domains **D1, D2, D3** and **D4** are respectively represented as **t1, t2, t3** and **t4.** A difference between any two among these four directions is approximately equal to an integral multiple of 90°. Where the azimuthal angle of the horizontal direction of the display plane (3 o'clock direction) is 0°, the tilt direction **t1** of the liquid crystal domain **D1** is a direction of about 225°, the tilt direction **t2** of the liquid crystal domain **D2** is a direction of about 315°, the tilt direction **t3** of the liquid crystal domain **D3** is a direction of about 45°, and tilt direction **t4** of the liquid crystal domain **D4** is a direction of about 135°. Namely, the liquid crystal domains **D1, D2, D3** and **D4** are located such that the tilt directions thereof are different by about 90° between adjacent domains among the liquid crystal domains **D1, D2, D3** and **D4.**

A pair of polarizing plates facing each other with a liquid crystal layer interposed therebetween are located such that transmission axes (polarization axes) thereof are generally perpendicular to each other. More specifically, the transmission axis of one of the polarizing plates is generally parallel to the horizontal direction of the display plane, and the transmission axis of the other polarizing plate is generally parallel to a vertical direction of the display plane. Accordingly, the tilt directions **t1, t2, t3** and **t4** have an angle of about 45° with respect to the transmission axes of the pair of polarizing plates. Hereinafter, unless otherwise specified, the transmission axes of the polarizing plates are located as described above.

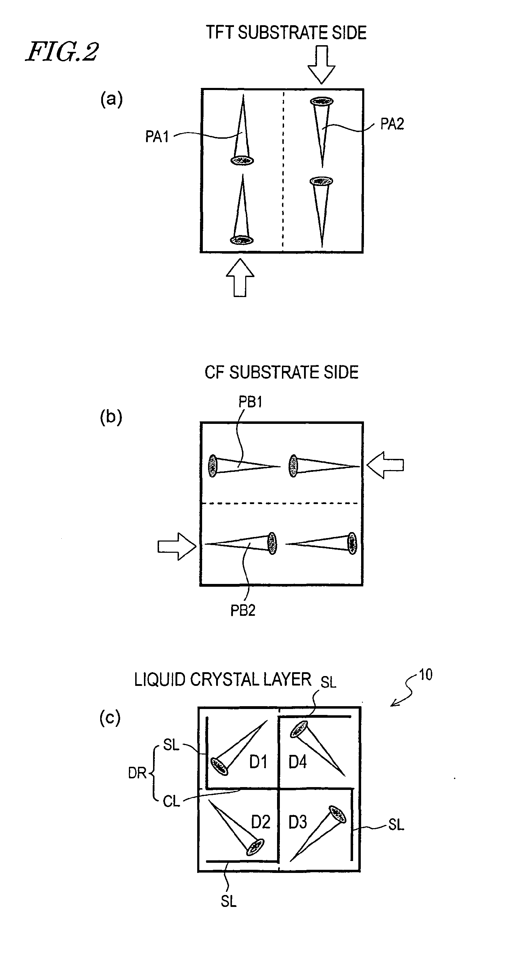

The 4D structure of the picture element **10** shown in FIG. **1** is obtained as shown in FIG. **2**. FIGS. **2(a)**, **(b)** and **(c)** illustrate a method for dividing the picture element **10** shown in FIG. **1** into domains having different alignment directions. FIG. **2(a)** shows pretilt directions **PA1** and **PA2** of an alignment film provided on a TFT substrate (lower substrate), and FIG. **2(b)** shows pretilt directions **PB1** and **PB2** of an alignment film provided on a color filter (CF) substrate (upper substrate). FIG. **2(c)** shows the tilt directions when a voltage is applied to the liquid crystal layer. In these figures, the alignment directions of the liquid crystal molecules as seen from the observer are schematically shown. Each liquid crystal molecule shown as having a conical shape is tilted such that the bottom end of the cone is closer to the observer than the tip of the cone.

As shown in FIG. **2(a)****,** an area on the TFT substrate side (area corresponding to one picture element **10**) is divided into two, namely, a left area and a right area, and the vertical alignment film is align-processed such that the pretilt directions **PA1** and **PA2** antiparallel to each other are given to the respective areas (left area and right area) of the vertical alignment film. Specifically, optical alignment processing is performed by ultraviolet rays directed obliquely in the directions represented by the arrows. When the light is to be directed to the left area, the right area is shielded by a light shielding part of a photomask. When the light is to be directed to the right area, the left area is shielded in a similar manner.

As shown in FIG. **2(b)**, an area on the CF substrate side (area corresponding to one pixel area **10**) is divided into two, namely, a top area and a bottom area, and the vertical alignment film is alignment-processed such that the pretilt directions **PB1** and **PB2** antiparallel to each other are given to the respective areas (top area and bottom area) of the vertical alignment film. Specifically, optical alignment processing is performed by ultraviolet rays directed obliquely in the directions represented by the arrows. When the light is to be directed to the top area, the bottom area is shielded by a light shielding part of a photomask. When the light is to be directed to the bottom area, the top area is shielded in a similar manner.

By bonding together the TFT substrate and the CF substrate alignment-processed as shown in FIGS. **2(a)** and **(b)**, the picture element **10** divided to have domains as shown in FIG. **2(c)** can be formed. As can be seen from FIGS. **2(a)**, **(b)**and **(c)**, in each of the liquid crystal domains **D1** through **D4**, the pretilt direction of the alignment film on the TFT substrate and the pretilt direction of the alignment film on the CF substrate are different by 90° from each other, and a direction at the middle of these two pretilt directions is defined as the tilt direction (reference alignment direction). Among the liquid crystal domains **D1** through **D4**, the combination of the pretilt directions provided by the top and bottom alignment films is different. Owing to this, four tilt directions are realized in one picture element **10.**

In the picture element **10** of the 4D-RTN mode, when a gray scale is displayed, as shown in FIG. **2(c)**, a dark area **DR,** which is darker than the gray scale to be displayed, appears. The dark area **DR** includes a cross-shaped dark line (cross-shaped part) **CL** located at borders between each two adjacent liquid crystal domains among the liquid crystal domains **D1**, **D2**, **D3** and **D4** and straight dark lines (straight parts) **SL** located in the vicinity of edges of the picture element electrode and extending generally parallel to the edges. The dark area **DR** is generally gammadion-shaped as a whole.

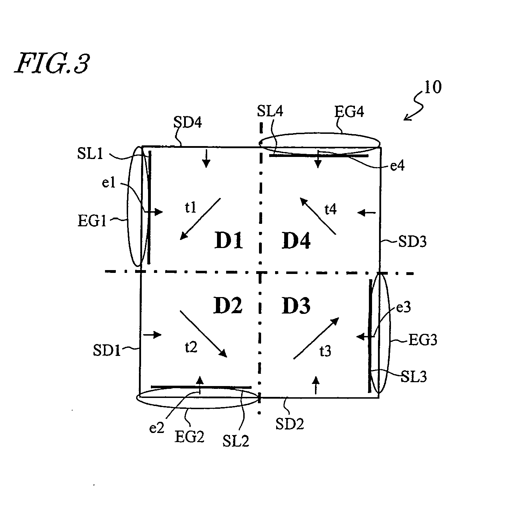

The cross-shaped dark line **CL** is formed when the liquid crystal molecules are aligned to be parallel or perpendicular to the transmission axes of the polarizing plates at the borders between adjacent liquid crystal domains and thus the alignment of the liquid crystal molecules is continuous between such adjacent liquid crystal domains. Each of straight dark lines **SL**, which is formed in the vicinity of edges of the picture element electrode which is close to the corresponding liquid crystal domain, is formed when the edges includes an edge portion such that an azimuthal angle direction perpendicular to the edge portion and directed to the inside of the picture element electrode has an angle exceeding 90° with respect to the tilt direction (reference alignment direction) of the corresponding liquid crystal domain. This is conceived to occur because the tilt direction of the liquid crystal domain and the direction of the alignment regulation force caused by the oblique electric field generated at the edge of the picture element electrode have components facing each other and therefore the liquid crystal molecules are aligned to be parallel or perpendicular to the transmission axes of the polarizing plates in this area. Hereinafter, a reason why the dark lines **SL** appear in the vicinity of the edges will be specifically described regarding the picture element **10** of the 4D structure shown in FIG. **1** with reference to FIG. **3**. In FIG. **3**, the cross-shaped dark line **CL** is omitted.

As shown in FIG. **3**, the picture element electrode has four edges (sides) **SD1**, **SD2**, **SD3** and **SD4**. Each of the oblique electric fields generated when a voltage is applied exhibits an alignment regulation force having a component of a direction (azimuthal angle direction) perpendicular to the respective side and directed to the inside of the picture element electrode. In FIG. **3**, the azimuthal angle directions respectively perpendicular to the four edges **SD1**, **SD2**, **SD3** and **SD4** and directed to the inside of the picture element electrode are represented by arrows **e1**, **e2**, **e3** and **e4**.

Each of the four liquid crystal domains **D1**, **D2**, **D3** and **D4** is close to two among the four edges **SD1**, **SD2**, **SD3** and **SD4** of the picture element electrode, and in the presence of a voltage, receives alignment regulation forces caused by the oblique electric fields generated along the respective edges.

Regarding an edge portion **EG1** at the edges of the picture element electrode close to the liquid crystal domain **D1**, the azimuthal angle direction **e1** perpendicular to the edge portion **EG1** and directed to the inside of the picture element electrode makes an angle exceeding 90° with respect to the tilt direction **t1** of the liquid crystal domain **A**. As a result, in the liquid crystal domain **D1**, a dark line **SL1** appears generally parallel to the edge portion **EG1** when a voltage is applied.

Similarly, regarding an edge portion **EG2** at the edges of the picture element electrode close to the liquid crystal domain **D2**, the azimuthal angle direction **e2** perpendicular to the edge portion **EG2** and directed to the inside of the picture element electrode makes an angle exceeding 90° with respect to the tilt direction **t2** of the liquid crystal domain **D2**. As a result, in the liquid crystal domain **D2**, a dark line **SL2** appears generally parallel to the edge portion **EG2** when a voltage is applied.

Similarly, regarding an edge portion **EG3** at the edges of the picture element electrode close to the liquid crystal domain **D3**, the azimuthal angle direction **e3** perpendicular to the edge portion **EG3** and directed to the inside of the picture element electrode makes an angle exceeding 90° with respect to the tilt direction **t3** of the liquid crystal domain **D3**. As a result, in the liquid crystal domain **D3**, a dark line **SL3** appears generally parallel to the edge portion **EG3** when a voltage is applied.

Similarly, regarding an edge portion **EG4** at the edges of the picture element electrode close to the liquid crystal domain **D4**, the azimuthal angle direction **e4** perpendicular to the edge portion **EG4** and directed to the inside of the picture element electrode makes an angle exceeding 90° with respect to the tilt direction **t4** of the liquid crystal domain **D4**. As a result, in the liquid crystal domain **D4**, a dark line **SL4** appears generally parallel to the edge portion **EG4** when a voltage is applied.

The angles made between the tilt directions **t1**, **t2**, **t3** and **t4** of the liquid crystal domains **D1**, **D2**, **D3** and **D4** and the azimuthal angle components **e1**, **e2**, **e3** and **e4** of the alignment regulation forces caused by the oblique electric fields generated in the edge portions **EG1**, **EG2**, **EG3** and **EG4** close to the liquid crystal domains **D1**, **D2**, **D3** and **D4**, respectively, are all about 135°.

As described above, in the liquid crystal domain **D1,** the dark line **SL1** appears generally parallel to the edge portion **EG1.** In the liquid crystal domain **D2**, the dark line **SL2** appears generally parallel to the edge portion **EG2**. In the liquid crystal domain **D3,** the dark line **SL3** appears generally parallel to the edge portion **EG3**. In the liquid crystal domain **D4**, the dark line **SL4** appears generally parallel to the edge portion **EG4**. The dark line **SL1** and the dark line **SL3** are generally parallel to the vertical direction of the display plane, and the dark line **SL2** and the dark line **SL4** are generally parallel to the horizontal direction of the display plane. Namely, the edge portion **EG1** and the edge portion **EG3** are generally parallel to the vertical direction, and the edge portion **EG2** and the edge portion **EG4** are generally parallel to the horizontal direction.

The method for dividing one picture element into four liquid crystal domains **D1** through **D4** (i.e., the method for determining the positions of the liquid crystal domains **D1** through **D4** in the picture element) is not limited to the example shown in FIGS. **1** through **3**.

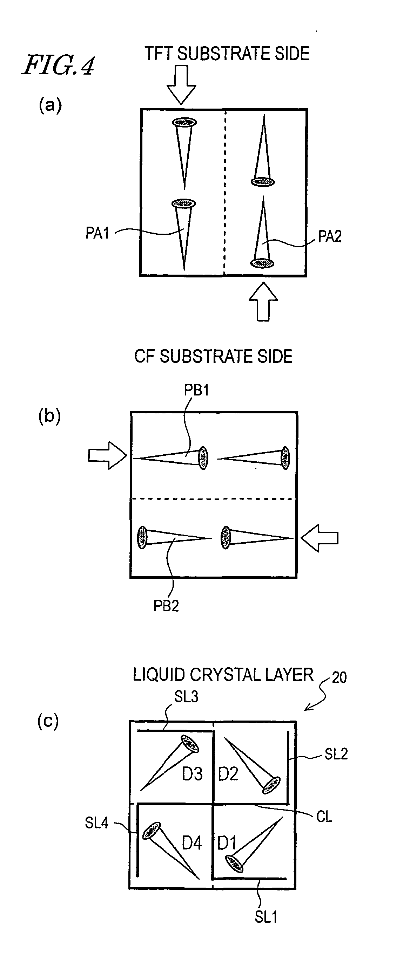

For example, by bonding together the TFT substrate and the CF substrate alignment-processed as shown in FIGS. **4(a)** and **(b)**, a picture element **20** divided to have domains having different alignment directions as shown in FIG. **4(c)** can be formed. Like the picture element **10**, the picture element **20** includes four liquid crystal domains **D1** through **D4**. The tilt directions of the liquid crystal domains **D1** through **D4** are the same as those of the liquid crystal domains **D1** through **D4** in the picture element **10**.

It should be noted that in the picture element **10**, the liquid crystal domains **D1** through **D4** are located in the order of top left, bottom left, bottom right and top right (i.e., counterclockwise from top left); whereas in the picture element **20**, the liquid crystal domains **D1** through **D4** are located in the order of bottom right, top right, top left and bottom left (i.e., counterclockwise from bottom right). A reason for this is that the pretilt directions of the left area and the right area on the TFT substrate side are opposite, and the pretilt directions of the top area and the bottom area on the CF substrate side are opposite, between the picture element **10** and the picture element **20**. The dark lines **SL1** and **SL3** appearing in the liquid crystal domains **D1** and **D3** are generally parallel to the horizontal direction of the display plane, and the dark lines **SL2** and **SL4** appearing in the liquid crystal domains **D2** and **D4** are generally parallel to the vertical direction of the display plane. Namely, the edge portions **EG1** and **EG3** are generally parallel to the horizontal direction of the display plane, and the edge portions **EG2** and **EG4** are generally parallel to the vertical direction of the display plane.

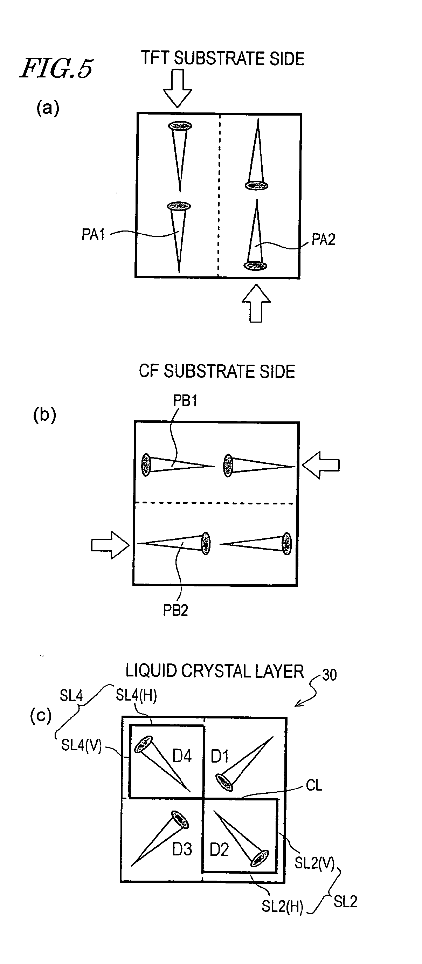

Alternatively, by bonding together the TFT substrate and the CF substrate alignment-processed as shown in FIGS. **5(a)** and **(b)**, a picture element **30** divided to have domains having different alignment directions as shown in FIG. **5(c)** can be formed. Like the picture element **10**, the picture element **30** includes four liquid crystal domains **D1** through **D4**. The tilt directions of the liquid crystal domains **D1** through **D4** are the same as those of the liquid crystal domains **D1** through **D4** in the picture element **10**.

It should be noted that in the picture element **30**, the liquid crystal domains **D1** through **D4** are located in the order of top right, bottom right, bottom left and top left (i.e., clockwise from top right). A reason for this is that the pretilt directions of the left area and the right area on the TFT substrate side are opposite between the picture element **10** and the picture element **30**.

In the picture element **30**, no dark line appears in the liquid crystal domains **D1** and **D3**. A reason for this is that any of the edges of the picture element electrode close to the liquid crystal domains **D1** and **D3** does not have an edge portion such that the azimuthal angle direction perpendicular to the edge portion and directed to the inside of the picture element electrode has an angle exceeding 90° with respect to the corresponding tilt direction. By contrast, the dark lines **SL2** and **SL4** appear in the liquid crystal domains **D2** and **D4**. A reason for this is that each of the edges of the picture element electrode close to the liquid crystal domains **D2** and **D4** has an edge portion such that the azimuthal angle direction perpendicular to the edge portion and directed to the inside of the picture element electrode has an angle exceeding 90° with respect to the corresponding tilt direction. The dark lines **SL2** and **SL4** respectively include portions **SL2(H)** and **SL4(H)** parallel to the horizontal direction and portions **SL2(V)** and **SL4(V)** parallel to the vertical direction. A reason for this is that the tilt direction of each of the liquid crystal domains **D2** and **D4** has an angle exceeding 90° with respect to both of an azimuthal angle direction perpendicular to the horizontal edge and directed to the inside of the picture element electrode and an azimuthal angle direction perpendicular to the vertical edge and directed to the inside of the picture element electrode.

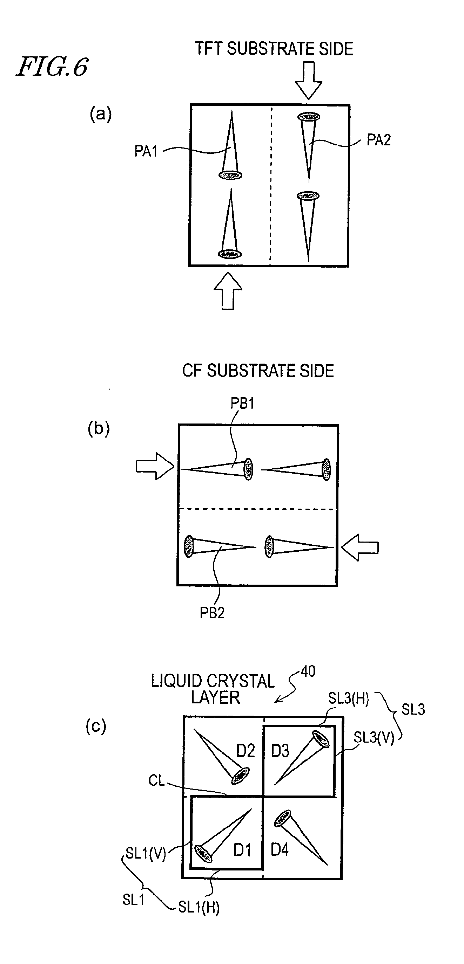

By bonding together the TFT substrate and the CF substrate alignment-processed as shown in FIGS. **6(a)** and **(b)**, a picture element **40** divided to have domains having different alignment directions as shown in FIG. **6(c)** can be formed. Like the picture element **10**, the picture element **40** includes four liquid crystal domains **D1** through **D4**. The tilt directions of the liquid crystal domains **D1** through **D4** are the same as those of the liquid crystal domains **D1** through **D4** in the picture element **10**.

It should be noted that in the picture element **40**, the liquid crystal domains **D1** through **D4** are located in the order of bottom left, top left, top right and bottom right (i.e., clockwise from bottom left). A reason for this is that the pretilt directions of the top area and the bottom area on the CF substrate side are opposite between the picture element **10** and the picture element **40**.

In the picture element **40**, no dark line appears in the liquid crystal domains **D2** and **D4.** A reason for this is that any of the edges of the picture element electrode close to the liquid crystal domains **D2** and **D4** does not have an edge portion such that the azimuthal angle direction perpendicular to the edge portion and directed to the inside of the picture element electrode has an angle exceeding 90° with respect to the corresponding tilt direction. By contrast, the dark lines **SL1** and **SL3** appear in the liquid crystal domains **D1** and **D3.** A reason for this is that the edges of the picture element electrode close to the liquid crystal domains **D1** and **D3** has an edge portion such that the azimuthal angle direction perpendicular to the edge portion and directed to the inside of the picture element electrode has an angle exceeding 90° with respect to the corresponding tilt direction. The dark lines **SL1** and **SL3** respectively include portions **SL1 (H)** and **SL3 (H)** parallel to the horizontal direction and portions **SL1(V)** and **SL3(V) parallel** to the vertical direction. A reason for this is that the tilt direction of each of the liquid crystal domains **D1** and **D3** has an angle exceeding 90° with respect to both of an azimuthal angle direction perpendicular to the horizontal edge and directed to the inside of the picture element electrode and an azimuthal angle direction perpendicular to the vertical edge and directed to the inside of the picture element electrode.

As described above, the liquid crystal domains **D1** through **D4** may be arranged in any of various manners in a picture element. As shown in FIGS. **2** through **6**, when the arrangement of the liquid crystal domains **D1** through **D4** is different, the pattern of the dark lines **SL** in the vicinity of the edges is different. Therefore, the entire shape of the dark area **DR** is different. In the picture elements **10** and **20** shown in FIGS. **2** and **4**, the dark line **DR** is generally gammadion-shaped; whereas in the picture elements **30** and **40** shown in FIGS. **5** and **6**, the dark area **DR** is generally shaped like the letter "8" (the letter "8" inclined from the vertical direction). In this specification, the expression "gammadion-shaped" encompasses both of "right gammadion-shaped" (see FIG. **2**) and "left gammadion-shaped" (see FIG. **4**).

As described above, the shape of the dark area **DR** varies in accordance with the arrangement of the liquid crystal domains **D1** through **D4**. Thus, the shape of the dark area **DR** is considered to characterize the arrangement of the liquid crystal domains **D1** through **D4**. Therefore, in the figures referred to below, a dark area **DR** may be occasionally shown instead of (or in addition to) the liquid crystal domains **D1** through **D4**. In the following description, an alignment (domain arrangement) in which a generally gammadion-shaped dark area **DR** appears in a picture element will be referred to as a "gammadion alignment", and an alignment (domain arrangement) in which a generally letter 8-shaped dark area **DR** appears in a picture element will be referred to as a "letter 8 alignment".

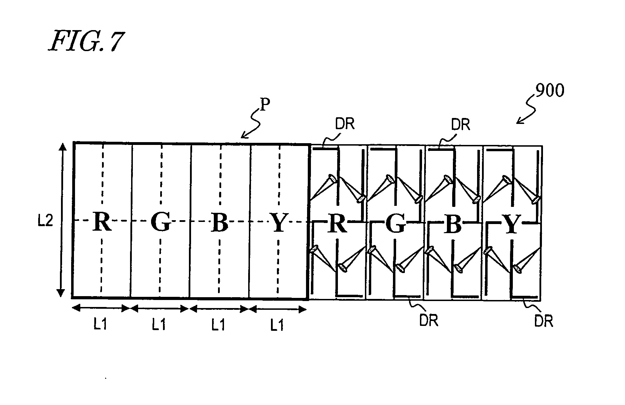

Now, optical alignment processing performed in the case where the 4D-RTN mode is adopted for a multiple primary color liquid crystal display device **900** shown in FIG. **97** will be specifically described. In this example, as shown in FIG. **7**, the liquid crystal domains are located such that a generally gammadion-shaped dark area **DR** appears in each of a red picture element **R**, a green picture element **G**, a blue picture element **B** and a yellow picture element **Y** (same as the arrangement in the picture element **20** shown in FIG. **4**). As shown in FIG. **7**, all the picture elements have an equal length **L1** along the row direction and have an equal length **L2** along the column direction.

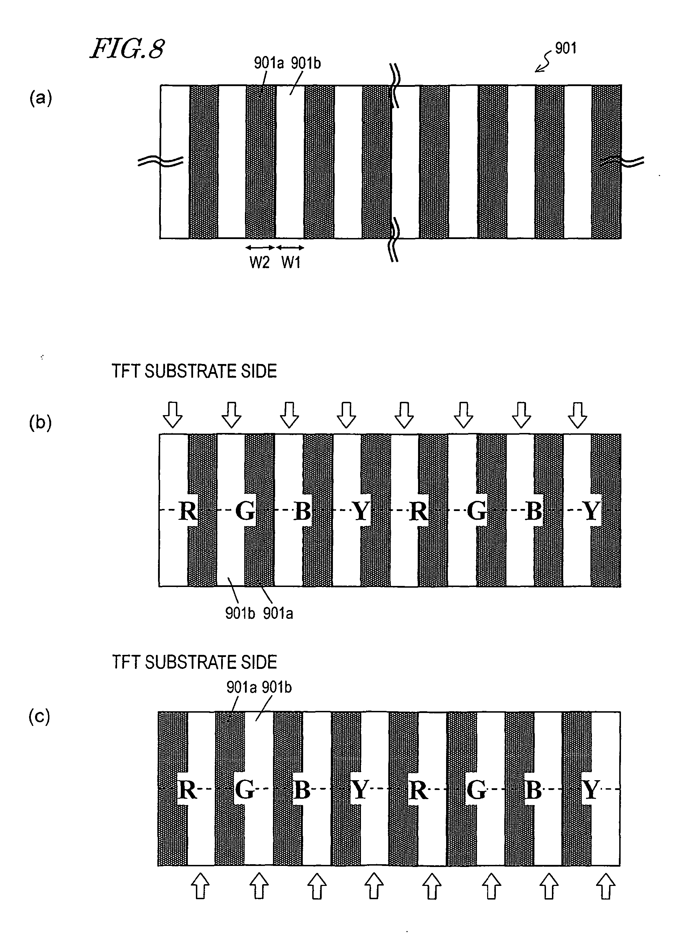

On the alignment film on the TFT substrate side, the optical alignment processing is performed as shown in FIG. **8**. First, a photomask **901** as shown in FIG. **8(a)** is prepared. The photomask **901** includes a plurality of light shielding parts **901a** extending like stripes parallel to a column direction (vertical direction) and a plurality of light transmitting parts **901b** located between the plurality of light shielding parts **901a.** A width **W1** of each of the plurality of light transmitting parts **901b** (width in the row direction) is half of the length **L1** of each picture element along the row direction (see FIG. **7**) (i.e., W1 = L1/2). A width **W2** of each of the plurality of light shielding parts **901a** (width in the row direction) is also half of the length **L1** of each picture element along the row direction (i.e., W2 = L1/2; W1 + W2 = L1).

As shown in FIG. **8(b)**, the photomask **901** is located such that each light shielding part **901a** overlaps a right half of each picture element and each light transmitting part **901b** overlaps a left half of each picture element. In this state, ultraviolet rays are directed obliquely in the direction represented by the arrows. As a result of this exposure step, a part of the alignment film on the TFT substrate side corresponding to the left half of each picture element is given a prescribed pretilt direction (pretilt direction **PA1** shown in FIG. **4(a)**).

Next, the photomask **901** is shifted in the row direction by half of the length **L1** of the picture element such that as shown in FIG. **8(c)**, each light shielding part **901a** overlaps the left half of each picture element and each light transmitting part **901b** overlaps the right half of each picture element. In this state, ultraviolet rays are directed obliquely in the direction represented by the arrows. As a result of this exposure step, a part of the alignment film on the TFT substrate side corresponding to the right half of each picture element is given a prescribed pretilt direction (pretilt direction **PA2** shown in FIG. **4(a)**).

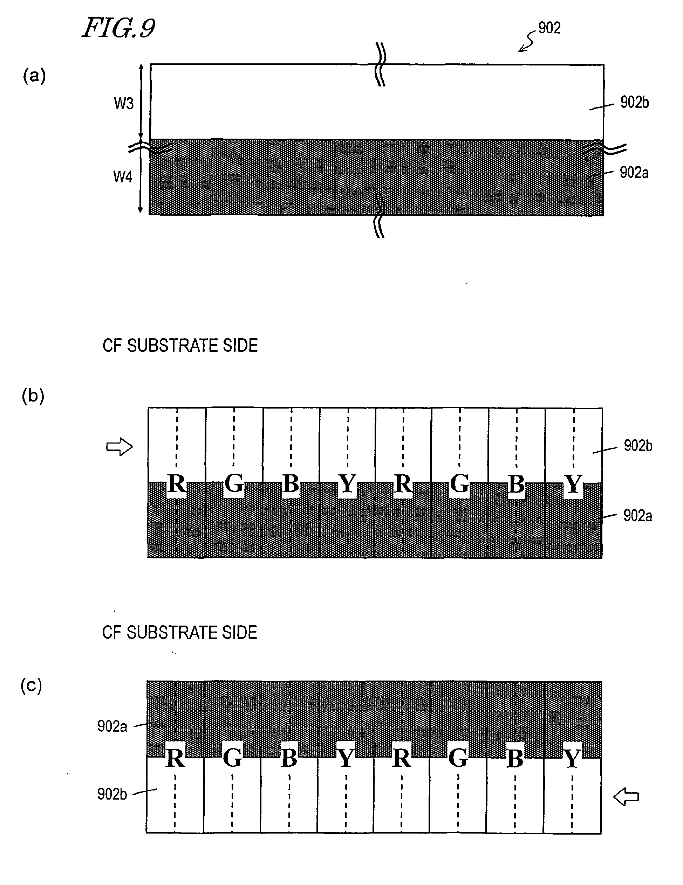

On the alignment film on the CF substrate side, the optical alignment processing is performed as shown in FIG. **9**. First, a photomask **902** as shown in FIG. **9(a)** is prepared. The photomask **902** includes a plurality of light shielding parts **902a** extending like stripes parallel to the row direction (horizontal direction) and a plurality of light transmitting parts **902b** located between the plurality of light shielding parts **902a**. A width **W3** of each of the plurality of light transmitting parts **902b** (width in the column direction) is half of the length **L2** of each picture element along the column direction (see FIG. **7**) (i.e., W3 = L2/2). A width **W4** of each of the plurality of light shielding parts **902a** (width in the column direction) is also half of the length **L2** of each picture element along the column direction (i.e., W4 = L2/2; W3 + W4 = L2).

As shown in FIG. **9****(b**), the photomask **902** is located such that each light shielding part **902a** overlaps a bottom half of each picture element and each light transmitting part **902b** overlaps a top half of each picture element. In this state, ultraviolet rays are directed obliquely in the direction represented by the arrows. As a result of this exposure step, a part of the alignment film on the CF substrate side corresponding to the top half of each picture element is given a prescribed pretilt direction (pretilt direction **PB1** shown in FIG. **4(b)**).

Next, the photomask **902** is shifted in the column direction by half of the length **L2** of the picture element such that as shown in FIG. **9(c)**, each light shielding part **902a** overlaps the top half of each picture element and each light transmitting part **902b** overlaps the bottom half of each picture element. In this state, ultraviolet rays are directed obliquely in the direction represented by the arrows. As a result of this exposure step, a part of the alignment film on the CF substrate side corresponding to the bottom half of each picture element is given a prescribed pretilt direction (pretilt direction **PB2** shown in FIG. **4(b)**).

As described above, for the optical alignment processing performed on the alignment film on the TFT substrate side, the photomask **901** used in the first exposure step is shifted before the second exposure step and used as it is for the second exposure step. Also for the optical alignment processing performed on the alignment film on the CF substrate side, the photomask **902** used in the first exposure step is shifted before the second exposure step and used as it is for the second exposure step. In this specification, such a technique of exposure is referred to as a "shifted exposure".

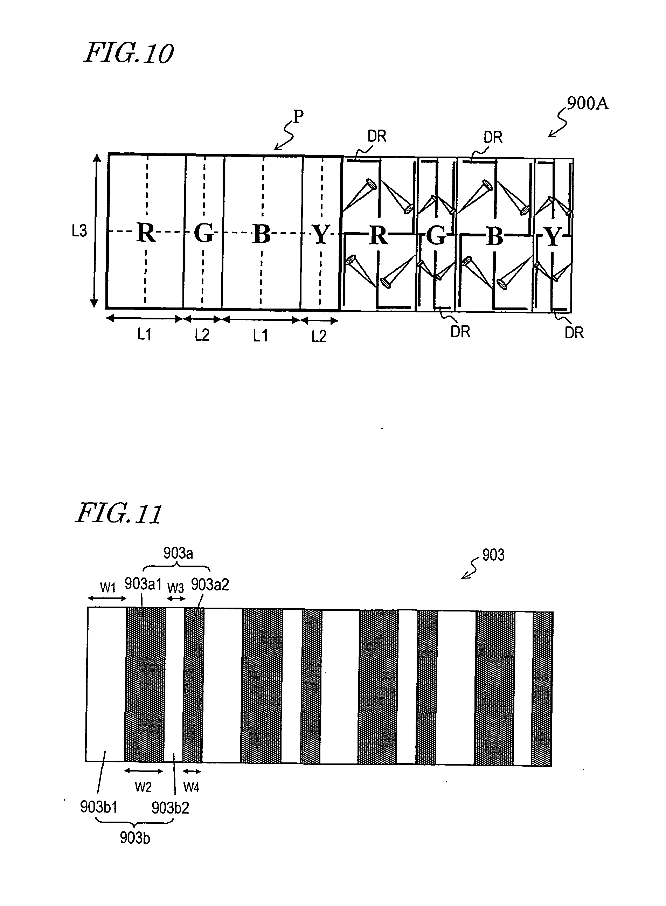

However, when one pixel includes a picture element having a different size from that of another picture element, shifted exposure cannot be performed on the alignment film on the TFT substrate side and/or the alignment film on the CF substrate side. For example, in a multiple primary color liquid crystal display device **900A** shown in FIG. **10**, all the picture elements have an equal length **L3** along the column direction, whereas a length **L1** of each of a red picture element **R** and a blue picture element **B** along the row direction is different from a length **L2** of each of a green picture element **G** and a yellow picture element **Y** along the row direction. Specifically, the length **L2** of each of the green picture element **G** and the yellow picture element **Y** along the row direction is half of the length **L1** of each of the red picture element **R** and the blue picture element **B** along the row direction (i.e., L2 = L1/2). In this manner, in the liquid crystal display device **900A**, in one pixel **P**, the size of the red picture element **R** and the blue picture element **B** is different from the size of the green picture element **G** and the yellow picture element **Y**.

A liquid crystal display device in which the size of the red picture element **R** is larger than the size of the yellow picture element **Y** like the liquid crystal display device **900A** shown in FIG. **10** is disclosed in International Publication WO2007/148519. When the size of the red picture element **R** is larger than the size of the yellow picture element **Y**, brighter red (red having a higher lightness) can be displayed than when all the picture elements have the same size.

When optical alignment processing is to be performed on this liquid crystal display device **900A** to realize the liquid crystal domain arrangement as shown in the right half of FIG. **10** (same as the arrangement shown in the right half of FIG. **7**), the shifted exposure cannot be performed on the alignment film on the TFT substrate side as described below.

For performing the optical alignment processing on the alignment film on the TFT substrate side of the liquid crystal display device **900A**, first, a photomask **903** as shown in FIG. **11** is prepared. The photomask **903** includes a plurality of light shielding parts **903a** extending like stripes parallel to the column direction (vertical direction) and a plurality of light transmitting parts **903b** located between the plurality of light shielding parts **903a**. It should be noted that the plurality of light shielding parts **903a** include two types of light shielding parts **903a1** and **903a2** having different widths from each other. The plurality of light transmitting parts **903b** include two types of light transmitting parts **903b1** and **903b2** having different widths from each other.

A width **W1** of the light transmitting part **903b1**, among the two types of light transmitting parts **903b1** and **903b2**, is half of the length **L1** of each of the red picture element **R** and the blue picture element **B** along the row direction (see FIG. **10**) (i.e., W1 = L1/2). By contrast, a width **W3** of the other light transmitting part **903b2** is half of the length **L2** of each of the green picture element **G** and the yellow picture element **Y** along the row direction (see FIG. **10**) (i.e., W3 = L2/2).

A width **W2** of the light shielding part **903a1,** among the two types of light shielding parts **903a1** and **903a2,** is half of the length **L1** of each of the red picture element **R** and the blue picture element **B** along the row direction (i.e., W2 = L1/2; W1 + W2 = L1). By contrast, a width **W4** of the other light shielding part **903a2** is half of the length **L2** of each of the green picture element **G** and the yellow picture element **Y** along the row direction (i.e., W4 = L2/2; W3 + W4 = L2).

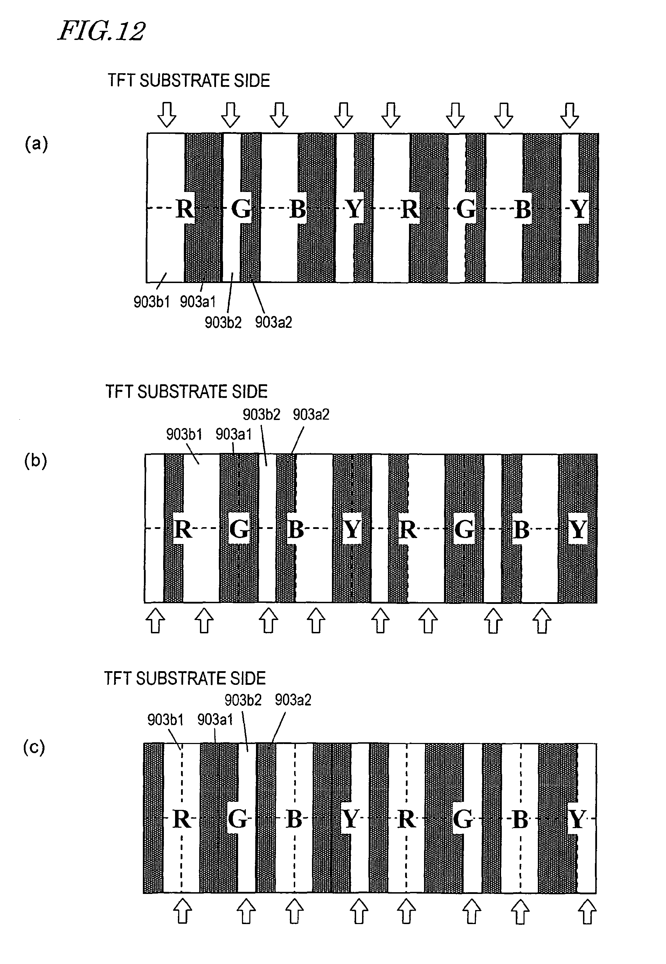

The wider light transmitting part **903b1**, the wider light shielding part **903a1**, the narrower light transmitting part **903b2** and the narrower light shielding part **903a2** described above are arranged cyclically in this order. The photomask **903** is located such that as shown in FIG. **12 (a)**, the wider light shielding part **903a1** overlaps a right half of each of the red picture element **R** and the blue picture element **B** and the narrower light shielding part **903a2** overlaps a right half of each of the green picture element **G** and the yellow picture element **Y** (namely, such that the wider light transmitting part **903b1** overlaps a left half of each of the red picture element **R** and the blue picture element **B** and the narrower light transmitting part **903b2** overlaps a left half of each of the green picture element **G** and the yellow picture element **Y**). In this state, ultraviolet rays are directed obliquely in the direction represented by the arrows. As a result of this exposure step, parts of the alignment film on the TFT substrate side corresponding to the left halves of the picture elements are given a prescribed pretilt direction (pretilt direction **PA1** shown in FIG. **4(a)**).

The shifted exposure, which would be performed to give a prescribed pretilt direction to the remaining parts (right half) of the alignment film, cannot be performed with the photomask **903** shown in FIG. **11**.

For example, it is assumed that from the state shown in FIG. **12(a)**, the photomask **903** is shifted in the row direction rightward by half of the length **L1** of the red picture element **R** and the blue picture element **B**. In this case, as shown in FIG. **12(b)**, the wider light shielding part **903a1** overlaps the entirety of the green picture element **G** and the yellow picture element **Y**, and the narrower light shielding part **903a2** overlaps a right half of the left half of each of the red picture element **R** and the blue picture element **B**. Namely, the wider light transmitting part **903b1** overlaps the right half of each of the red picture element **R** and the blue picture element **B**, and the narrower light transmitting part **903b2** overlaps a left half of the left half of each of the red picture element **R** and the blue picture element **B**. When the ultraviolet rays are directed in the direction represented by the arrows in this state, the part corresponding to the right half of each of the red picture element **R** and the blue picture element **B** is given a prescribed pretilt direction (pretilt direction **PA2** shown in FIG. **4(a)**), but the part corresponding to the right half of each of the green picture element **G** and the yellow picture element **Y** cannot be given a prescribed pretilt direction. The reason is that the right half of each of the green picture element **G** and the yellow picture element **Y** is shielded by the light shielding part **903a1**. The left half of the left half of each of the red picture element **R** and the blue picture element **B** is not shielded and thus irradiated with the ultraviolet rays, namely, is exposed double. The double-exposed areas cannot define a desired pretilt direction (pretilt direction given by the first exposure).

It is assumed that from the state shown in FIG. **12(a)**, the photomask **903** is shifted in the row direction rightward by 1/4 of the length **L1** of the red picture element **R** and the blue picture element **B** (i.e., 1/2 of the length **L2** of the green picture element **G** and the yellow picture element **Y**). In this case, as shown in FIG. **12(c)**, the wider light shielding part **903a1** overlaps the left half of each of the green picture element **G** and the yellow picture element **Y** and also a right half of the right half of each of the red picture element **R** and the blue picture element **B**, and the narrower light shielding part **903a2** overlaps the left half of the left half of each of the red picture element **R** and the blue picture element **B**. Namely, the wider light transmitting parts **903b1** overlap a central part (left half of the right half and right half of the left half) of each of the red picture element **R** and the blue picture element **B**, and the narrower light transmitting part **903b2** overlaps the right half of each of the green picture element **G** and the yellow picture element **Y**. When the ultraviolet rays are directed in the direction represented by the arrows in this state, the part corresponding to the right half of each of the green picture element **G** and the yellow picture element **Y** is given a prescribed pretilt direction (pretilt direction **PA2** shown in FIG. **4(a)**), but the part corresponding to the right half of the right half of each of the red picture element **R** and the blue picture element **B** cannot be given a prescribed pretilt direction. The reason is that the right half of the right half of each of the red picture element **R** and the blue picture element **B** is shielded by the light shielding part **903a1**. The right half of the left half of each of the red picture element **R** and the blue picture element **B** is not shielded and thus irradiated with the ultraviolet rays, namely, is exposed double.

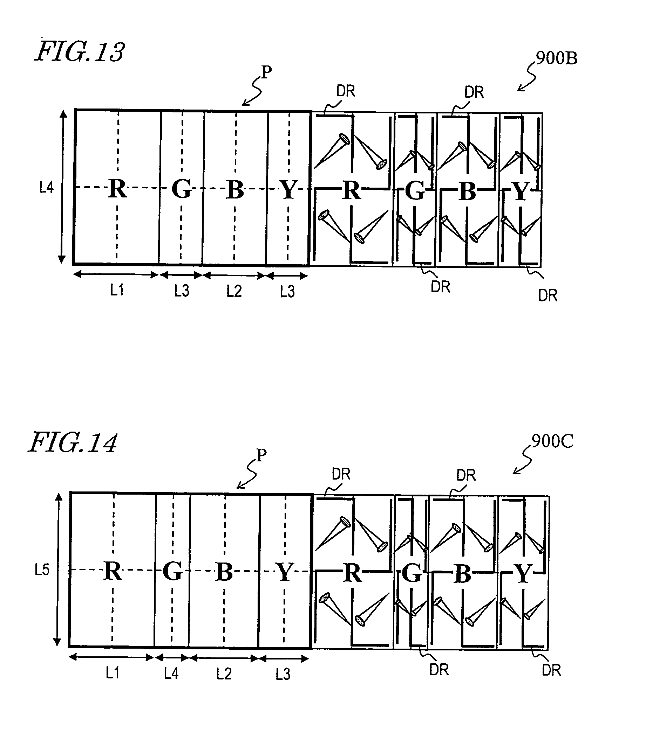

As described above, when one pixel includes a picture element having a different size from that of another picture element, the shifted exposure cannot be performed. Specifically, the shifted exposure cannot be performed in the direction in which there are a plurality of lengths of picture elements. In the above, examples in which there are two lengths of picture elements along the row direction are shown, but the same is applicable in the case where there are three or more lengths of picture elements along the row direction, or there are a plurality of lengths of picture elements along the column direction. For example, in a liquid crystal display device **900B** shown in FIG. **13** or in a liquid crystal display device **900C** shown in FIG. **14**, shifted exposure cannot be performed with a photomask designed by the conventional technological concept.

In the liquid crystal display device **900B** shown in FIG. **13****,** all the picture elements have an equal length **L4** along the column direction, but a length **L1** of a red picture element **R** along the row direction, a length **L2** of a blue picture element **B** along the row direction, and a length **L3** of each of a green picture element **G** and a yellow picture element **Y** along the row direction are different from each other. Specifically, the length **L2** of the blue picture element **G** along the row direction is longer than the length **L3** of each of the green picture element **G** and the yellow picture element **Y** along the row direction, and the length **L1** of the red picture element **R** along the row direction is still longer (i.e., L1 > L2 > L3). In this manner, in the liquid crystal display device **900B**, in one pixel **P**, the size of the red picture element **R**, the size of the blue picture element **B** and the size of each of the green picture element **G** and the yellow picture element **Y** are different from each other. There are three lengths of picture elements along the row direction.

In the liquid crystal display device **900C** shown in FIG. **14**, all the picture elements have an equal length **L5** along the column direction, but a length **L1** of a red picture element **R** along the row direction, a length **L2** of a blue picture element **B** along the row direction, a length **L3** of a yellow picture element **Y** along the row direction, and a length **L4** of a green picture element **G** along the row direction are different from each other. Specifically, the length **L1** of the red picture element **R** along the row direction, the length **L2** of the blue picture element **B** along the row direction, the length **L3** of the yellow picture element **Y** along the row direction, and the length **L4** of the green picture element **G** along the row direction are longer in this order (i.e., L1 > L2 > L3 > L4). In this manner, in the liquid crystal display device **900C**, in one pixel **P**, all the picture elements have different sizes. There are four lengths of picture elements along the row direction.

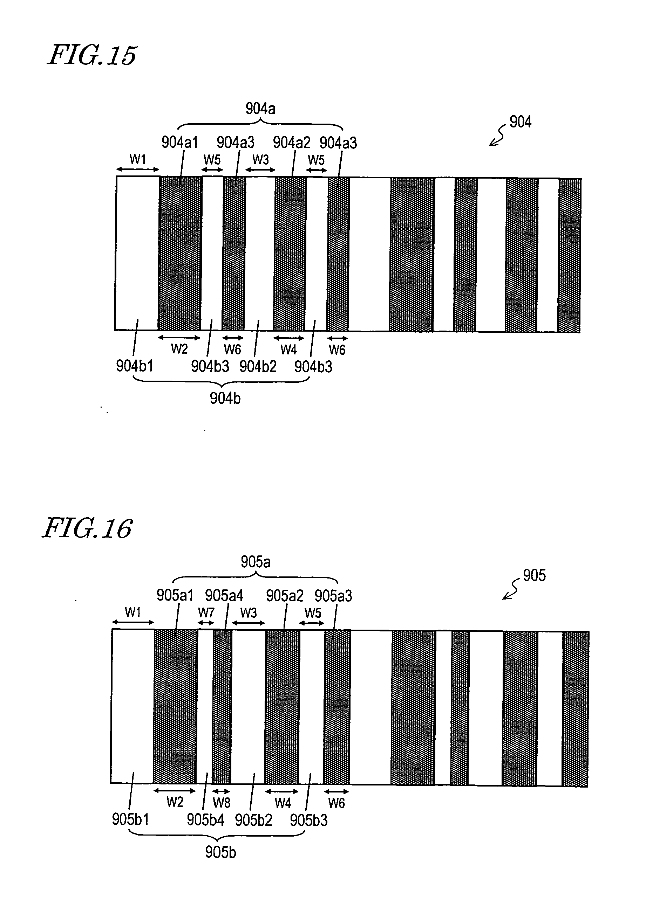

For performing optical alignment processing on an alignment film on the TFT substrate side of the liquid crystal display device **900B** shown in FIG. **13**, according to the conventional technological concept, a photomask **904** shown in FIG. **15** is designed. The photomask **904** includes a plurality of light shielding parts **904a** extending like stripes parallel to the column direction (vertical direction) and a plurality of light transmitting parts **904b** located between the plurality of light shielding parts **904a**. The plurality of light shielding parts **904a** include three types of light shielding parts **904a1**, **904a2** and **904a3** having different widths from each other, and the plurality of light transmitting parts **904b** include three types of light transmitting parts **904b1**, **904b2** and **904b3** having different widths from each other.

A width **W1** of the light transmitting part **904b1,** which is widest among the three types of light transmitting parts **904b1, 904b2** and **904b3,** is half of the length **L1** (see FIG. **13**) of the red picture element **R** along the row direction (i.e., W1 = L1/2). A width **W3** of the light transmitting part **904b2,** which is second widest, is half of the length **L2** (see FIG. **13**) of the blue picture element **B** along the row direction (i.e., W3 = L2/2). A width **W5** of the light transmitting part **904b3,** which is narrowest, is half of the length **L3** (see FIG. **13**) of each of the green picture element **G** and the yellow picture element **Y** along the row direction (i.e., W5 = L3/2).

A width **W2** of the light shielding part **904a1,** which is widest among the three types of light shielding parts **904a1, 904a2** and **904a3,** is half of the length **L1** of the red picture element **R** along the row direction (i.e., W2 = L1/2; W1 + W2 = L1). A width **W4** of the light shielding part **904a2,** which is second widest, is half of the length **L2** of the blue picture element **B** along the row direction (i.e., W4 = L2/2; W3 + W4 = L2). A width **W6** of the light shielding part **904a3,** which is narrowest, is half of the length **L3** of each of the green picture element **G** and the yellow picture element **Y** along the row direction (i.e., W6 = L3/2; W5 + W6 = L3).

For performing optical alignment processing on an alignment film on the TFT substrate side of the liquid crystal display device **900C** shown in FIG. **14****,** according to the conventional technological concept, a photomask **905** shown in FIG. **16** is designed. The photomask **905** includes a plurality of light shielding parts **905a** extending like stripes parallel to the column direction (vertical direction) and a plurality of light transmitting parts **905b** located between the plurality of light shielding parts **905a.** The plurality of light shielding parts **905a** include four types of light shielding parts **905a1, 905a2, 905a3** and **905a4** having different widths from each other, and the plurality of light transmitting parts **905b** include four types of light transmitting parts **905b1, 905b2, 905b3** and **905b4** having different widths from each other.

A width **W1** of the light transmitting part **905b1,** which is widest among the four types of light transmitting parts **905b1, 905b2, 905b3** and **905b4,** is half of the length **L1** (see FIG. **14****)** of the red picture element **R** along the row direction (i.e., W1 = L1/2). A width **W3** of the light transmitting part **905b2,** which is second widest, is half of the length **L2** (see FIG. **14**) of the blue picture element **B** along the row direction (i.e., W3 = L2/2). A width **W5** of the light transmitting part **905b3,** which is third widest, is half of the length **L3** (see FIG. **14**) of the yellow picture element Y along the row direction (i.e., W5 = L3/2). A width **W7** of the light transmitting part **905b4,** which is narrowest, is half of the length **L4** (see FIG. **14**) of the green picture element **G** along the row direction (i.e., W7 = L4/2).

A width **W2** of the light shielding part **905a1,** which is AAwidest among the four types of light shielding parts **905a1, 905a2, 905a3** and **905a4,** is half of the length **L1** of the red picture element **R** along the row direction (i.e., W2 = L1/2; W1 + W2 = L1). A width **W4** of the light shielding part **905a2,** which is second widest, is half of the length **L2** of the blue picture element **B** along the row direction (i.e., W4 = L2/2; W3 + W4 = L2). A width **W6** of the light shielding part **905a3,** which is third widest, is half of the length **L3** of the yellow picture element **Y** along the row direction (i.e., W6 = L3/2; W5 + W6 = L3). A width **W8** of the light shielding part **905a4,** which is narrowest, is half of the length **L4** of the green picture element **G** along the row direction (i.e., W8 = L4/2; W7 + W8 = L4).

As can be presumed from the above description made with reference to FIG. **12** regarding the use of the photomask **903** shown in FIG. **11****,** in the case where the photomask **904** shown in FIG. **15** or the photomask **905** shown in FIG. **16** is used, the shifted exposure cannot be performed, either. By contrast, according to the present invention, even in the case where one pixel includes a picture element having a different size from that of another picture element, the shifted exposure can be performed.

The present applicant has proposed, in International Application PCT/JP2010/062585, a technology for realizing the shifted exposure even in the case where there are two lengths of picture elements along the row direction and/or the column direction in one pixel. However, even with this technology, the shifted exposure cannot be performed in the case where there are three or more lengths of picture elements along the row direction and/or the column direction in one pixel. By contrast, according to the present invention, the shifted exposure can be performed regardless of the number of lengths of picture elements. Hereinafter, a liquid crystal display device and a method for producing the same according to the present invention will be specifically described.

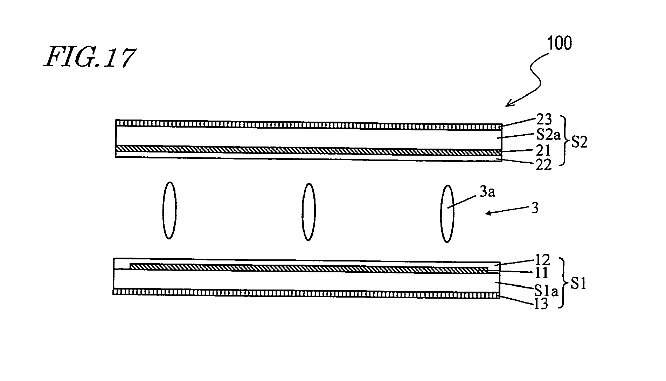

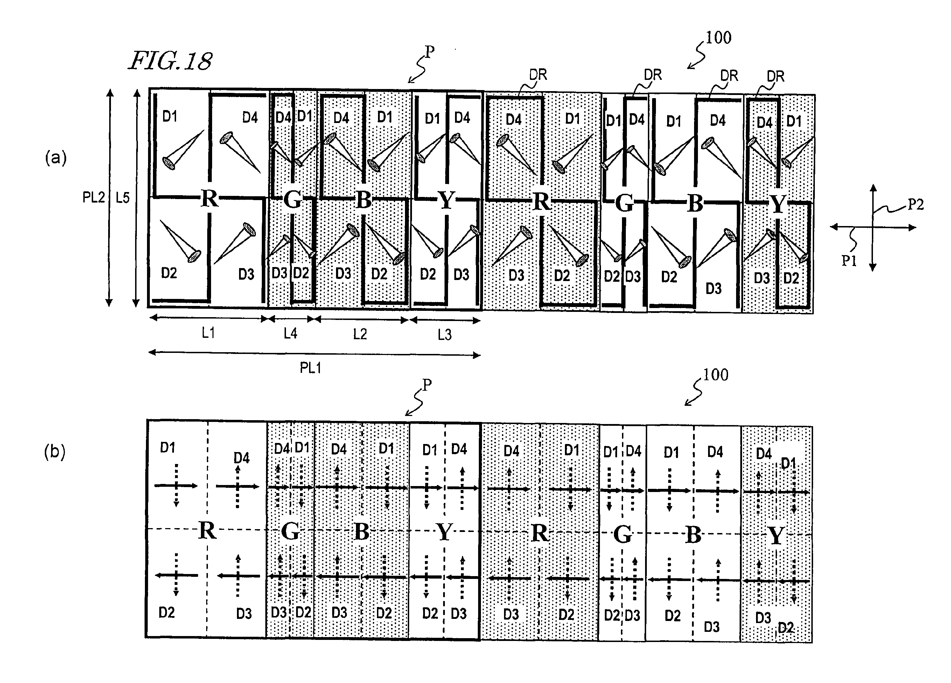

FIG. **17** and FIG. **18** show a liquid crystal display device **100** in this embodiment. FIG. **17** is a cross-sectional view schematically showing one picture element of the liquid crystal display device **100.** FIGS. **18(a)** and **(b)** are each a plan view schematically showing two pixels **P** of the liquid crystal display device **100.** As described later, the liquid crystal display device **100** is a multiple primary color liquid crystal display device which provides display using four primary colors. The liquid crystal display device **100** provides display in the 4D-RTN mode.

As shown in FIG. **17****,** the liquid crystal display device **100** includes a vertical alignment type liquid crystal layer **3,** a TFT substrate (also referred to as an "active matrix substrate" occasionally) **S1** and a CF substrate (also referred to as a "counter substrate" occasionally) **S2** which face each other with the liquid crystal layer **3** interposed therebetween, a picture element electrode **11** provided on the liquid crystal layer **3** side of the TFT substrate **S1** and a counter electrode **21** provided on the liquid crystal layer **3** side of the CF substrate **S2.**

The liquid crystal layer **3** contains liquid crystal molecules **3a** having a negative dielectric anisotropy (i.e., Δε < 0). When no voltage is applied to the liquid crystal layer **3** (i.e., when no voltage is applied between the picture element electrode **11** and the counter electrode **21**), as shown in FIG. **17****,** the liquid crystal molecules **3a** are aligned generally vertically with respect to surfaces of the substrates. The picture element electrode **11** is provided on an insulating transparent plate (e.g., glass plate or plastic plate) **S1a,** and the counter electrode **21** is provided on an insulating transparent plate (e.g., glass plate or plastic plate) **S2a.**

The liquid crystal display device **100** further includes a pair of optical alignment films **12** and **22** and a pair of polarizing plates **13** and **23.** Among the pair of optical alignment films **12** and **22,** one optical alignment film **12** is provided between the picture element electrode **11** and the liquid crystal layer **3,** and the other optical alignment film **22** is provided between the counter electrode **21** and the liquid crystal layer **3.** The pair of polarizing plates **13** and **23** face each other with the liquid crystal layer **3** interposed therebetween, and are located, as shown in FIG. **18****,** such that respective transmission axes (polarization axes) **P1** and **P2** are generally perpendicular to each other.

Although not shown, the TFT substrate **S1** further includes thin film transistors (TFTs), scanning lines for supplying a scanning signal to the TFTs, signal lines for supplying a video signal to the TFTs and the like. The CF substrate **S2** further includes color filters and a black matrix (light shielding layer).

As shown in FIGS. **18(a)** and **(b),** the liquid crystal display device **100** includes a plurality of pixels **P.** FIGS. **18(a)** and **(b)** each show two pixels **P** adjacent to each other, but the plurality of pixels **P** of the liquid crystal display device **100** are arranged in a matrix having a plurality of rows and a plurality of columns.

Each of the plurality of pixels **P** is defined by a red picture element **R** for displaying red, a green picture element **G** for displaying green, a blue picture element **B** for displaying blue, and a yellow picture element **Y** for displaying yellow. Namely, each of the plurality of pixels **P** includes four picture elements for displaying different colors from each other. These four picture elements are arranged in the pixel **P** in 1 row × 4 columns, and the red picture element **R,** the green picture element **G,** the blue picture element **B** and the yellow picture element **Y** are arranged in the pixel **P** in this order from left to right.

The red picture element **R,** the green picture element **G,** the blue picture element **B** and the yellow picture element **Y** are each divided into four areas having different alignment directions. Specifically, each picture element includes four liquid crystal domain **D1** through **D4** respectively having tilt directions of about 225°, about 315°, about 45° and about 135° when a voltage is applied between the picture element electrode **11** and the counter electrode **21.** As described above, the transmission axis **P1** of one of the pair of polarizing plates **13** and **23** is generally parallel to the horizontal direction of the display plane, and the transmission axis **P2** of the other polarizing plate is generally parallel to the vertical direction of the display plane. Accordingly, the tilt directions of the liquid crystal domains **D1** through **D4** each have an angle of about 45° with respect to the transmission axes **P1** and **P2** of the polarizing plates **13** and **23.** The four liquid crystal domains **D1** through **D4** are arranged in a matrix of 2 rows × 2 column in each picture element.

FIGS. **18(a)** and **(b)** show the same pixels **P.** In FIG. **18(a)****,** for each of the liquid crystal domains **D1** through **D4,** the tilt direction (reference alignment direction) and a pattern of the dark area **DR** are shown. In FIG. **18(b)****,** for each of the liquid crystal domains **D1** through **D4,** the pretilt direction of the optical alignment film **12** on the TFT substrate **S1** is represented by the dashed arrows, and the pretilt direction of the optical alignment film **22** on the CF substrate **S2** is represented by the solid arrows. These arrows representing the pretilt directions show that the liquid crystal molecules **3a** are pretilted such that an end on the arrow tip side is farther from the substrate (substrate on which the respective alignment film is provided) than an end on the opposite side. In the area of the optical alignment films corresponding to each of the liquid crystal domains **D1** through **D4,** the pretilt direction of one alignment film **12** and the pretilt direction of the other alignment film **22** are different by about 90° from each other. It is preferable that the pretilt angle defined by one alignment film **12** and the pretilt angle defined by the other alignment film **22** are approximately equal to each other as described above.

As shown in FIGS. **18(a)** and **(b),** all the four picture elements defining each pixel **P** have different lengths along the row direction. Specifically, a length **L1** of the red picture element **R** along the row direction, a length **L2** of the blue picture element **B** along the row direction, a length **L3** of the yellow picture element **Y** along the row direction, and a length **L4** of the green picture element **G** along the row direction are longer in this order (i.e., L1 > L2 > L3 > L4). By contrast, all the picture elements have an equal length **L5** along the column direction. In this manner, in the pixel **P** of the liquid crystal display device **100** in this embodiment, there is one length of picture elements in the column direction, whereas there are four lengths of picture elements in the row direction.

In the case where the 4D-RTN mode is merely adopted for a multiple primary color display device, four liquid crystal domains are arranged in the same order in all the picture elements. For example, in the examples shown in FIG. **7****,** FIG. **10****,** FIG. **13** and FIG. **14****,** all the picture elements have the gammadion alignment. Namely, the pair of optical alignment films have such an alignment regulation force that causes an identical alignment pattern to appear in repetition in the liquid crystal layer along both of the row direction and the column direction, with one picture element being the minimum unit.

By contrast, in the liquid crystal display device **100** in this embodiment, the pair of optical alignment films **12** and **22** have such an alignment regulation force that causes an identical alignment pattern to appear in repetition in the liquid crystal layer **3** along the row direction, with two pixels being the minimum unit. Namely, FIGS. **18(a)** and **(b)** each show the minimum repeat unit of alignment pattern. In the two pixels, which form the repeat unit of alignment pattern, there are picture elements in which the liquid crystal domains **D1** through **D4** are arranged in an order, and picture elements in which the liquid crystal domains **D1** through **D4** are arranged in another order, in a mixed state.

In the example shown in FIG. **18 (a)** and **(b)****,** in the red picture element **R** and the yellow picture element **Y** of the left pixel **P** and in the green picture element **G** and the blue picture element **B** of the right pixel **P,** the liquid crystal domains **D1** through **D4** are located in the order of top left, bottom left, bottom right and top right (i.e., counterclockwise from top left). Therefore, the dark area **DR** appearing in these picture elements is gammadion-shaped. By contrast, in the green picture element **G** and the blue picture element **B** of the left pixel **P** and in the red element **R** and the yellow picture element **Y** of the right pixel **P,** the liquid crystal domains **D1** through **D4** are located in the order of top right, bottom right, bottom left and top left (i.e., clockwise from top right). Therefore, the dark area **DR** appearing in these picture elements is letter 8-shaped. Accordingly, in the two pixels which form the repeat unit of alignment pattern, the type of alignment in the picture elements changes from left to right as gammadion, letter 8, letter 8, gammadion, letter 8, gammadion, gammadion, and letter 8.

In this manner, in the two pixels which form the repeat unit of alignment pattern, there are picture elements having the gammadion alignment and picture elements having the letter 8 alignment in a mixed state. Regarding each color, between in the picture element of the left pixel **P** and in the picture element of the right pixel **P,** the gammadion alignment and the letter 8 alignment are replaced with each other. Specifically, in the left pixel **P,** the red picture element **R** and the yellow picture element **Y** each have the gammadion alignment, and the green picture element **G** and the blue picture element **B** each have the letter 8 alignment. Thus, the type of alignment in the picture elements changes from left to right as gammadion, letter 8, letter 8, and gammadion. By contrast, in the right pixel **P,** the red picture element **R** and the yellow picture element **Y** each have the letter 8 alignment, and the green picture element **G** and the blue picture element **B** each have the gammadion alignment. Thus, the type of alignment in the picture elements changes from left to right as letter 8, gammadion, gammadion, and letter 8. Accordingly, in the repeat unit of alignment pattern, the alignment pattern is inverted between in the left half (left pixel **P**) and in the right half (right pixel **P**).

In the liquid crystal display device **100** having such a structure, the shifted exposure can be performed on the optical alignment film **12** and the optical alignment film **22** on the TFT substrate **S1.** Hereinafter, a method for producing the liquid crystal display device **100** will be described. The steps of producing the liquid crystal display device **100** except for the optical alignment processing performed on the optical alignment films **12** and **22** can be carried out by a known technique. Hence, the optical alignment processing performed on the optical alignment film **12** on the TFT substrate **S1** and the optical alignment processing performed on the optical alignment film **22** on the CF substrate **S2** will be described below. The exposure steps in the optical alignment processing described below may be carried out by using, for example, a proximity exposure device produced by Ushio Inc.

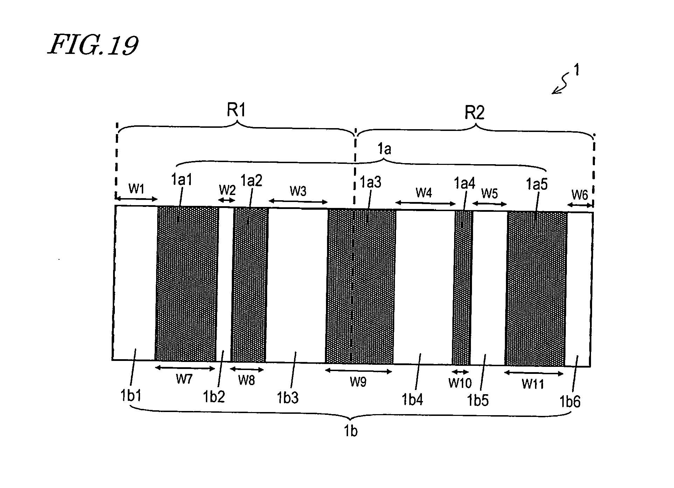

First, with reference to FIG. **19** through FIG. **21****,** the optical alignment processing performed on the optical alignment film **12** on the TFT substrate **S1** will be described.

First, a photomask **1** shown in FIG. **19** is prepared. FIG. **19** shows a part of the photomask **1,** and more specifically, an area corresponding to two pixels, which form the repeat unit of alignment pattern. As shown in FIG. **19****,** the photomask **1** has a mask pattern including a plurality of light shielding parts **1a** extending like stripes parallel to the column direction (vertical direction) and a plurality of light transmitting parts **1b** located between the plurality of light shielding parts **1a.**

A width **W1** (width in the row direction) of a light transmitting part **1b1,** which is leftmost among the plurality of light transmitting parts **1b,** is equal to half of the length **L1** of the red picture element **R** along the row direction (i.e., W1 = L1/2). A width **W2** of a light transmitting part **1b2,** which is second from left, is equal to half of the length **L4** of the green picture element **G** along the row direction (i.e., W2 = L4/2). A width **W3** of a light transmitting part **1b3,** which is third from left, is equal to a sum of half of the length **L2** of the blue picture element **B** along the row direction and half of the length **L3** of the yellow picture element **Y** along the row direction (i.e., W3 = (L2 + L3)/2). A width **W4** of a light transmitting part **1b4,** which is fourth from left, is equal to a sum of half of the length **L1** of the red picture element **R** along the row direction and half of the length **L4** of the green picture element **G** along the row direction (i.e., W4 = (L1 + L4)/2). A width **W5** of a light transmitting part **1b5,** which is fifth from left, is equal to half of the length **L2** of the blue picture element **B** along the row direction (i.e., W5 = L2/2). A width **W6** of a light transmitting part **1b6,** which is sixth from left (rightmost), is equal to half of the length **L3** of the yellow picture element **Y** along the row direction (i.e., W6 = L3/2).

A width **W7** (width in the row direction) of the light shielding part **1a1,** which is leftmost among the plurality of light shielding parts **1a,** is equal to a sum of half of the length **L1** of the red picture element **R** along the row direction and half of the length **L4** of the green picture element **G** along the row direction (i.e., W7 = (L1 + L4)/2). A width **W8** of a light shielding part **1a2,** which is second from left, is equal to half of the length **L2** of the blue picture element **B** along the row direction (i.e., W8 = L2/2). A width **W9** of a light shielding part **1a3,** which is third from left, is equal to a sum of half of the length **L3** of the yellow picture element **Y** along the row direction and half of the length **L1** of the red picture element **B** along the row direction (i.e., W9 = (L3 + L1)/2). A width **W10** of a light shielding part **1a4,** which is fourth from left, is equal to half of the length **L4** of the green picture element **G** along the row direction (i.e., W10 = L4/2). A width **W11** of a light shielding part **1a5,** which is fifth from left (rightmost), is equal to a sum of half of the length **L2** of the blue picture element **B** along the row direction and half of the length **L3** of the yellow picture element **Y** along the row direction (i.e., W11 = (L1 + L3)/2).

When the photomask **1** shown in FIG. **19** is divided into an area **R1** corresponding to the left half (left pixel **P**) of the minimum repeat unit of alignment pattern and an area **R2** corresponding to the right half (right pixel **P**) thereof, the mask pattern of the left area **R1** and the mask pattern of the right area **R2** are negative/positive-inverted to each other. Namely, the light shielding parts **1a** of the right area **R2** are located at the positions of the light transmitting parts **1b** in the left area **R1,** and the light transmitting parts **1b** of the right area **R2** are located at the positions of the light shielding parts **1a** in the left area **R1.**

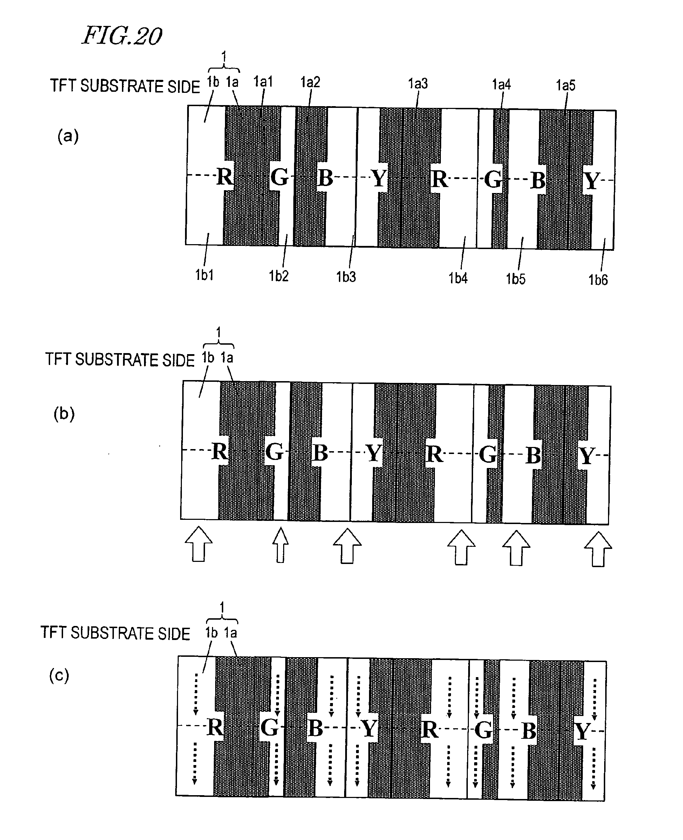

Next, as shown in FIG. **20(a)****,** the photomask **1** is located such that parts of the optical alignment film **12** corresponding to a left half of the red picture element **R,** a right half of the green picture element **G,** a right half of the blue picture element **B** and a left half of the yellow picture element **Y** of the left pixel **P,** and a right half of the red picture element **R,** a left half of the green picture element **G,** a left half of the blue picture element **B** and a right half of the yellow picture element **Y** of the right pixel **P,** overlap the light transmitting parts **1b.** In other words, the photomask **1** is located such that parts of the optical alignment film **12** corresponding to a right half of the red picture element **R,** a left half of the green picture element **G,** a left half of the blue picture element **B** and a right half of the yellow picture element **Y** of the left pixel **P,** and a left half of the red picture element **R,** a right half of the green picture element **G,** a right half of the blue picture element **B** and a left half of the yellow picture element **Y** of the right pixel **P,** overlap the light shielding parts **1a.**

Next, as shown in FIG. **20(b)****,** ultraviolet rays are directed obliquely in the direction represented by the arrows. As a result of this exposure step, as shown in FIG. **20(c)****,** the parts of the optical alignment film **12** corresponding to the left half of the red picture element **R,** the right half of the green picture element **G,** the right half of the blue picture element **B** and the left half of the yellow picture element **Y** of the left pixel **P,** and the right half of the red picture element **R,** the left half of the green picture element **G,** the left half of the blue picture element **B** and the right half of the yellow picture element **Y** of the right pixel **P,** are given a prescribed pretilt direction. The pretilt direction given at this point is the same as the pretilt direction **PA1** shown in FIG. **2(a)****.** Hereinafter, this pretilt direction will be referred to as a "first pretilt direction" for the sake of convenience.

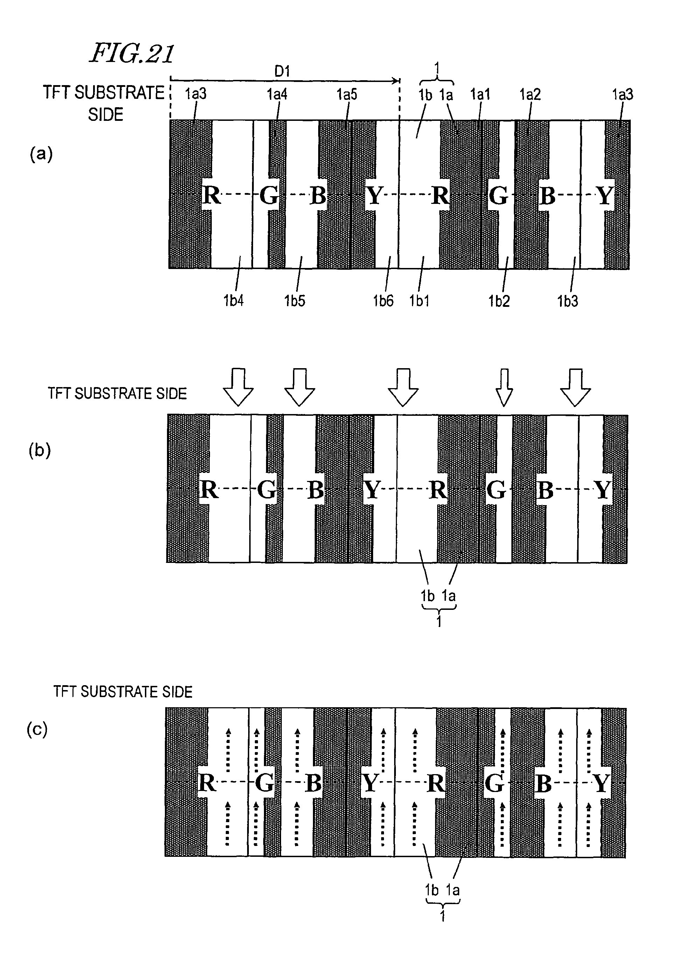

Next, as shown in FIG. **21(a)****,** the photomask **1** is shifted in the row direction by a prescribed distance **D1.** In this example, the prescribed distance **D1** is equal to a length **PL1** (see FIG. **18(a)**) of the pixel **P** along the row direction. Namely, the photomask **1** is shifted by one pixel in the row direction. As a result of this movement, the parts of the optical alignment film **12** corresponding to the right half of the red picture element **R,** the left half of the green picture element **G,** the left half of the blue picture element **B** and the right half of the yellow picture element **Y** of the left pixel **P,** and the left half of the red picture element **R,** the right half of the green picture element **G,** the right half of the blue picture element **B** and the left half of the yellow picture element **Y** of the right pixel **P,** overlap the light transmitting parts **1b** of the photomask **1.** In other words, the parts of the optical alignment film **12** corresponding to the left half of the red picture element **R,** the right half of the green picture element **G,** the right half of the blue picture element **B** and the left half of the yellow picture element **Y** of the left pixel **P,** and the right half of the red picture element **R,** the left half of the green picture element **G,** the left half of the blue picture element **B** and the right half of the yellow picture element **Y** of the right pixel **P,** overlap the light shielding parts **1a** of the photomask **1.**

Next, as shown in FIG. **21(b)****,** ultraviolet rays are directed obliquely in the direction represented by the arrows. As a result of this exposure step, as shown in FIG. **21(c)****,** the remaining parts of the optical alignment film **12,** namely, the parts thereof corresponding to the right half of the red picture element **R,** the left half of the green picture element **G,** the left half of the blue picture element **B** and the right half of the yellow picture element **Y** of the left pixel **P,** and the left half of the red picture element **R,** the right half of the green picture element **G,** the right half of the blue picture element **B** and the left half of the yellow picture element **Y** of the right pixel **P,** are given a prescribed pretilt direction. The pretilt direction given at this point is the same as the pretilt direction **PA2** shown in FIG. **2(a)** and is antiparallel to the first pretilt direction. Hereinafter, this pretilt direction will be referred to as a "second pretilt direction" for the sake of convenience.

As a result of the above-described optical alignment processing, in an area of the optical alignment film **12** corresponding to each picture element, an area having the first pretilt direction and an area having the second pretilt direction antiparallel to the first pretilt direction are formed. Hereinafter, the area having the first pretilt direction will be referred to as a "first area" for the sake of convenience, and the area having the second pretilt direction will be referred to as a "second area" for the sake of convenience. In the following, the exposure step of directing light to a part of the optical alignment film **12** which is to be the first area may be occasionally referred to as a "first exposure step", and the exposure step of directing light to a part of the optical alignment film **12** which is to be the second area may be occasionally referred to as a "second exposure step". In each of the first exposure step and the second exposure step, light (typically, ultraviolet rays as in this example) is directed in a direction inclining at, for example, 30° to 50° with respect to the normal direction to the substrate. The pretilt angle defined by the optical alignment film **12** is, for example, 88.5° to 89°.

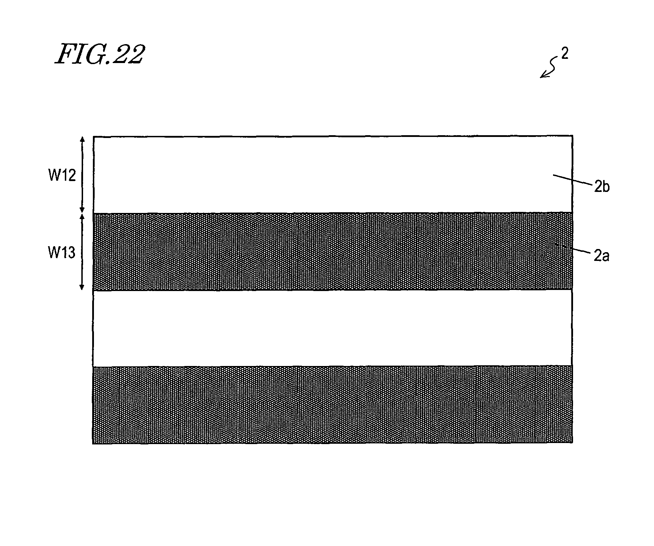

Now, with reference to FIG. **22** through FIG. **24****,** the optical alignment processing performed on the optical alignment film **22** on the CF substrate **S2** will be described.

First, a photomask **2** shown in FIG. **22** is prepared. FIG. **22** shows a part of the photomask **2,** and more specifically, an area corresponding to four pixels (four pixels **P** arranged in 2 rows × 2 columns). As shown in FIG. **22****,** the photomask **2** has a mask pattern including a plurality of light shielding parts **2a** extending like stripes parallel to the row direction (horizontal direction) and a plurality of light transmitting parts **2b** located between the plurality of light shielding parts **2a.** A width **W12** of each of the plurality of light transmitting parts **2b** (width in the column direction) is half of the length **L5** of each picture element along the column direction (i.e., W12 = L5/2). A width **W13** of each of the plurality of light shielding parts **2a** (width in the column direction) is also half of the length **L5** of each picture element along the column direction (i.e., W13 = L5/2; W12 + W13 = L5).

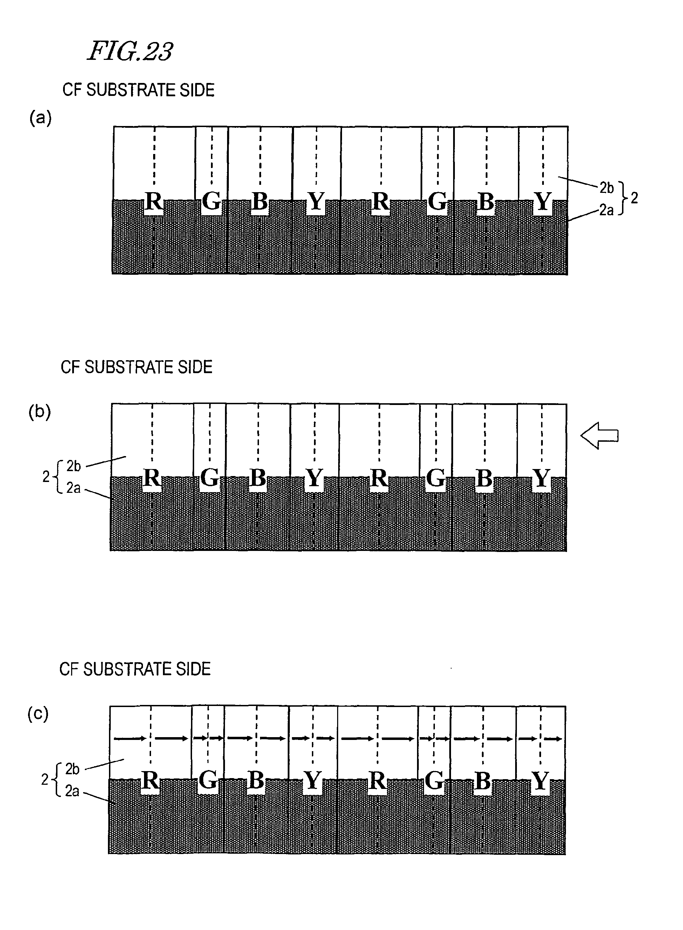

Next, as shown in FIG. **23(a)****,** the photomask **2** is located such that a part of the optical alignment film **22** corresponding to top halves of the picture elements overlaps the light transmitting part **2b.** In other words, the photomask **2** is located such that a part of the optical alignment film **22** corresponding to bottom halves of the picture elements overlaps the light shielding part **2a.**

Next, as shown in FIG. **23(b)****,** ultraviolet rays are directed obliquely in the direction represented by the arrow. As a result of this exposure step, as shown in FIG. **23(c)****,** the part of the optical alignment film **22** corresponding to the top halves of the picture elements is given a prescribed pretilt direction. The pretilt direction given at this point is the same as the pretilt direction **PB1** shown in FIG. **2(b)****.** Hereinafter, this pretilt direction will be referred to as a "third pretilt direction" for the sake of convenience.

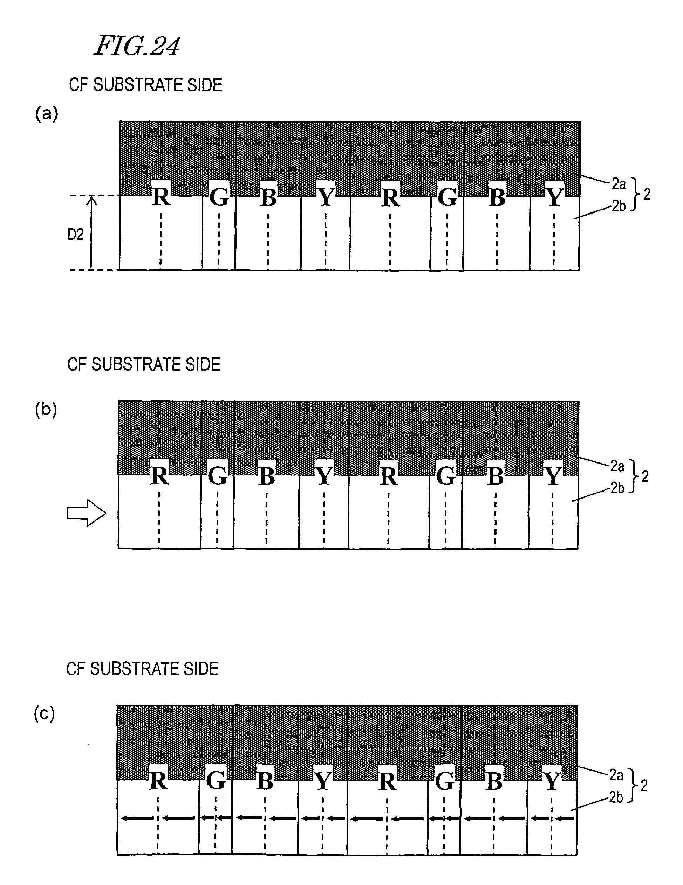

Next, as shown in FIG. **24(a)****,** the photomask **2** is shifted in the column direction by a prescribed distance **D2.** In this example, the prescribed distance **D2** is 1/2 of a length **PL2** (see FIG. **18(a)**) of the pixel **P** along the column direction, and is half (1/2) of the length **L5** of each picture element along the column direction. Namely, the photomask **2** is shifted by half of a pixel in the column direction. As a result of this movement, the part of the optical alignment film **22** corresponding to the bottom halves of the picture elements overlaps the light transmitting part **2b** of the photomask **2**. Namely, the part corresponding to the top halves of the picture elements overlaps the light shielding part **2a** of the photomask **2.**

Next, as shown in FIG. **24(b)****,** ultraviolet rays are directed obliquely in the direction represented by the arrow. As a result of this exposure step, as shown in FIG. **24(c)****,** the remaining part of the optical alignment film **22,** namely, the part thereof corresponding to the bottom halves of the picture elements is given a prescribed pretilt direction. The pretilt direction given at this point is the same as the pretilt direction **PB2** shown in FIG. **2(b)** and is antiparallel to the third pretilt direction. Hereinafter, this pretilt direction will be referred to as a "fourth pretilt direction" for the sake of convenience.

As a result of the above-described optical alignment processing, in an area of the optical alignment film **22** corresponding to each picture element, an area having the third pretilt direction and an area having the fourth pretilt direction antiparallel to the third pretilt direction are formed. Hereinafter, the area having the third pretilt direction will be referred to as a "third area" for the sake of convenience, and the area having the fourth pretilt direction will be referred to as a "fourth area" for the sake of convenience. In the following, the exposure step of directing light to a part of the optical alignment film **22** which is to be the third area may be occasionally referred to as a "third exposure step", and the exposure step of directing light to a part of the optical alignment film **22** which is to be the fourth area may be occasionally referred to as a "fourth exposure step". In each of the third exposure step and the fourth exposure step, light (typically, ultraviolet rays as in this example) is directed in a direction inclining at, for example, 30° to 50° with respect to the normal direction to the substrate. The pretilt angle defined by the optical alignment film **22** is, for example, 88.5° to 89°.

By bonding together the TFT substrate **S1** and the CF substrate **S2** processed with the optical alignment in the above-described manner, the liquid crystal display device **100** shown in FIG. **18** in which each picture element is divided into liquid crystal domains having different alignment directions is obtained.

In the above-described production method, in the step of forming the first area and the second area (step of performing the optical alignment processing on the optical alignment film **12** on the TFT substrate **S1**), two exposure steps (first exposure step and second exposure step) are performed by use of one, common photomask **1.** In the step of forming the third area and the fourth area (step of performing the optical alignment processing on the optical alignment film **22** on the CF substrate **S2**), two exposure steps (third exposure step and fourth exposure step) are performed by use of another, common photomask **2.** Namely, according to the production method in this embodiment, the shifted exposure can be performed in the row direction in which there are four lengths of picture elements in addition to the column direction in which there is one length of picture elements. Therefore, the optical alignment processing can be realized at low cost and in a short takt time.

Inversely describing, in the liquid crystal display device **100** in this embodiment, there are picture elements having different arrangement orders of the liquid crystal domains **D1** through **D4** (having different shapes of the dark area **DR**) in a mixed state, and an identical alignment pattern appears in repetition along the row direction, with two pixels being the minimum unit. Therefore, the liquid crystal display device **100** in this embodiment can be produced by the method in which the shifted exposure is performed for the optical alignment processing. By contrast, in the case where the 4D-RTN mode is merely adopted for a multiple primary color liquid crystal display device, all the picture elements in one pixel have the same arrangement pattern of the liquid crystal domains **D1** through **D4.** Therefore, the shifted exposure cannot be performed for the optical alignment processing on at least one of the substrates. In the liquid crystal display device **100** in this embodiment, there are picture elements having different arrangement patterns of the liquid crystal domains **D1** through **D4** in two pixels (minimum repeat unit of alignment pattern) in a mixed state, but this does not have any adverse influence on the viewing angle characteristics.

As described above, according to the present invention, even when the 4D-RTN mode is adopted for a multiple primary color liquid crystal display device, increase of the cost and the time which are required for the optical alignment processing can be suppressed. As described above, in the photomask **1** used for the shifted exposure in the row direction (direction in which there are four lengths of picture elements) in the production method in this embodiment, the mask patterns of the two areas **R1** and **R2** each corresponding to half of the minimum repeat unit of alignment pattern are negative/positive-inverted to each other. By use of such a photomask **1** designed by a concept different from the conventional concept, the shifted exposure in the direction in which there are four lengths of picture elements is realized.

It is sufficient that the mask patterns of the two areas **R1** and **R2** of the photomask **1** are negative/positive-inverted to each other, and the arrangement of the light shielding parts **1a** and the light transmitting parts **1b** of the photomask **1** is not limited to that shown in FIG. **19****.** Hereinafter, the designing concept of the photomask **1** and variations of the photomask designed by the concept will be specifically described.

First, regarding each of the red picture element **R,** the green picture element **G,** the blue picture element **B** and the yellow picture element **Y** included in one of the two pixels **P,** which form the minimum repeat unit of alignment pattern, it is determined whether the left half or the right half is to be exposed by the first exposure step. As a result, a mask pattern (arrangement of the light shielding parts **1a** and the light transmitting parts **1b**) of one of the two areas **R1** and **R2** is determined. For the mask pattern, there are two alternatives for each of the four picture elements. Therefore, there are 16 (= 2⁴) alternatives in total. Next, the mask pattern determined for one of the areas is negative/positive-inverted, and the resultant mask pattern is determined as the mask pattern of the other area. In this manner, a specific arrangement of the light shielding parts **1a** and the light transmitting parts **1b** of the photomask **1** can be determined. Since there are 16 alternatives for the mask pattern of one of the areas, there are also 16 variations of the photomask **1.**

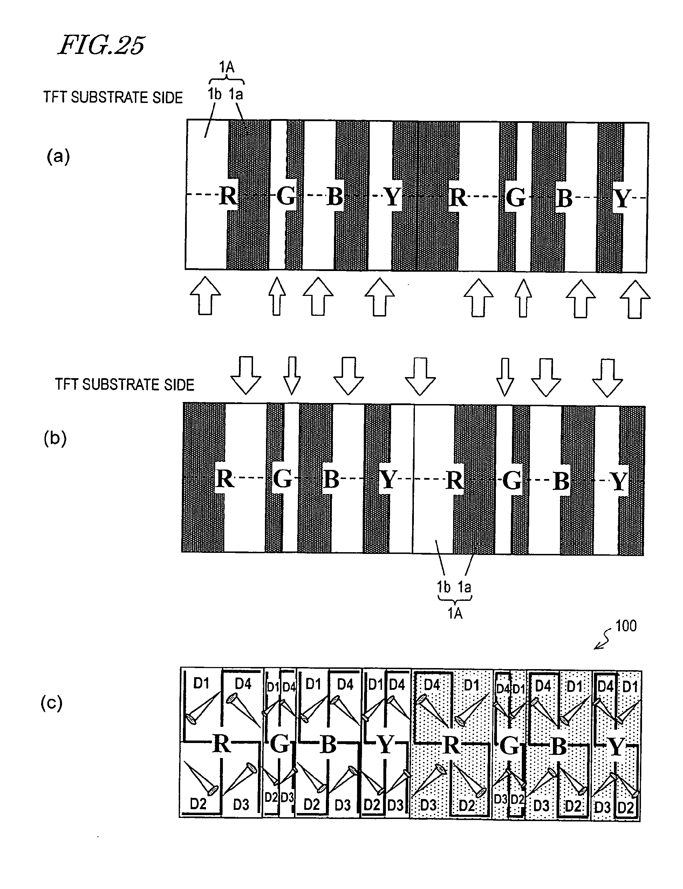

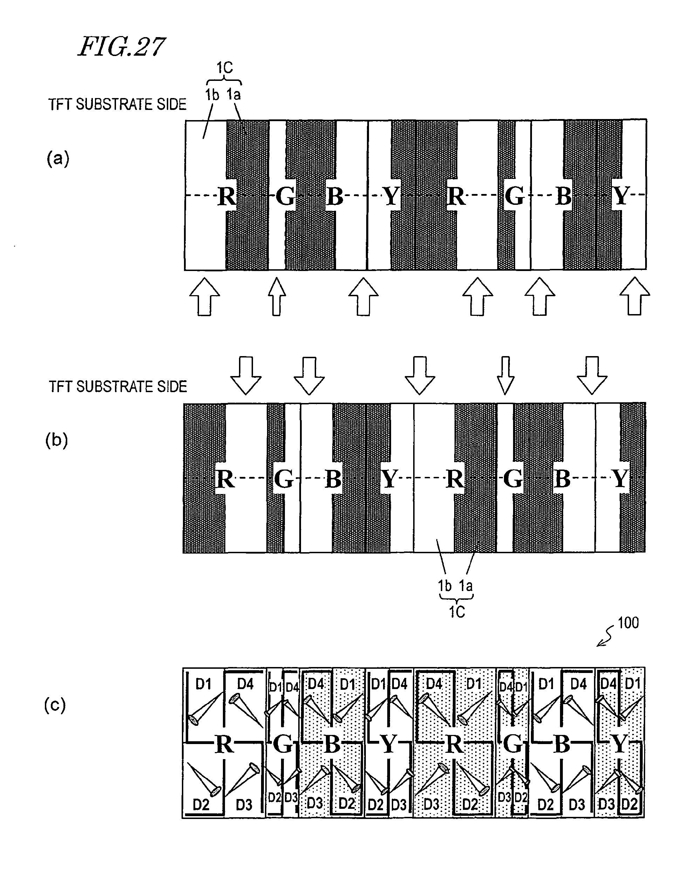

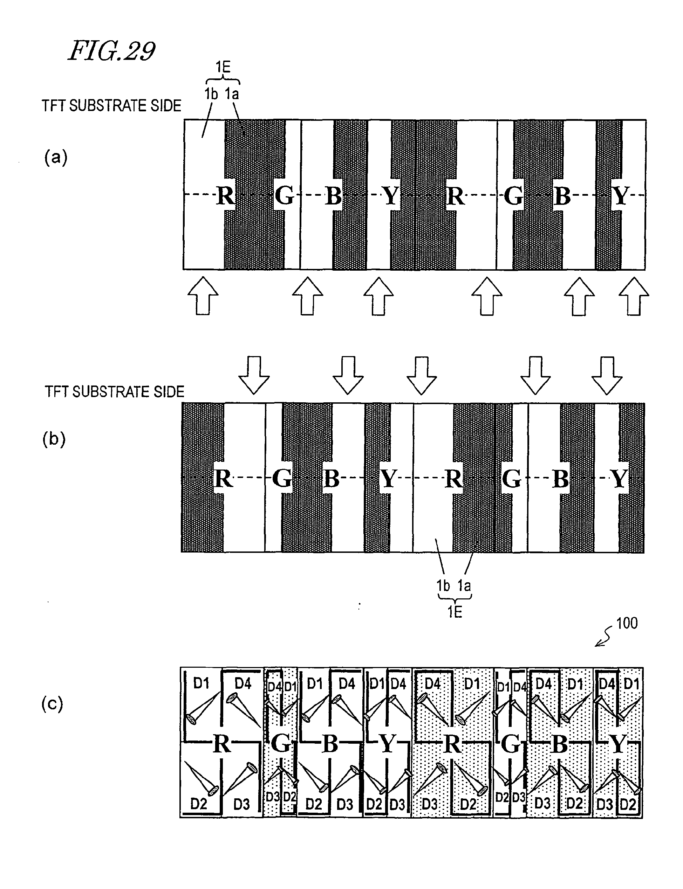

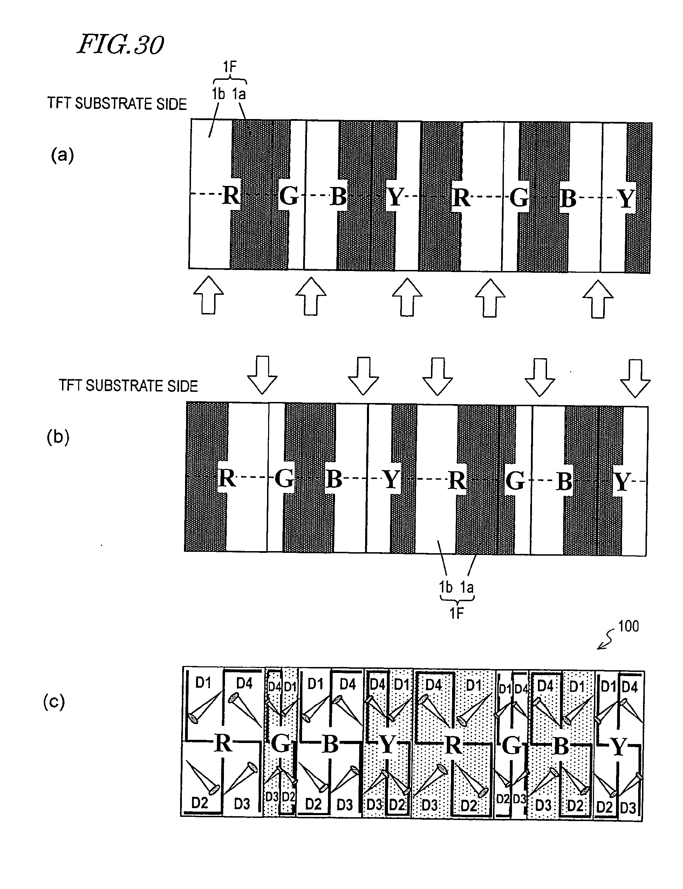

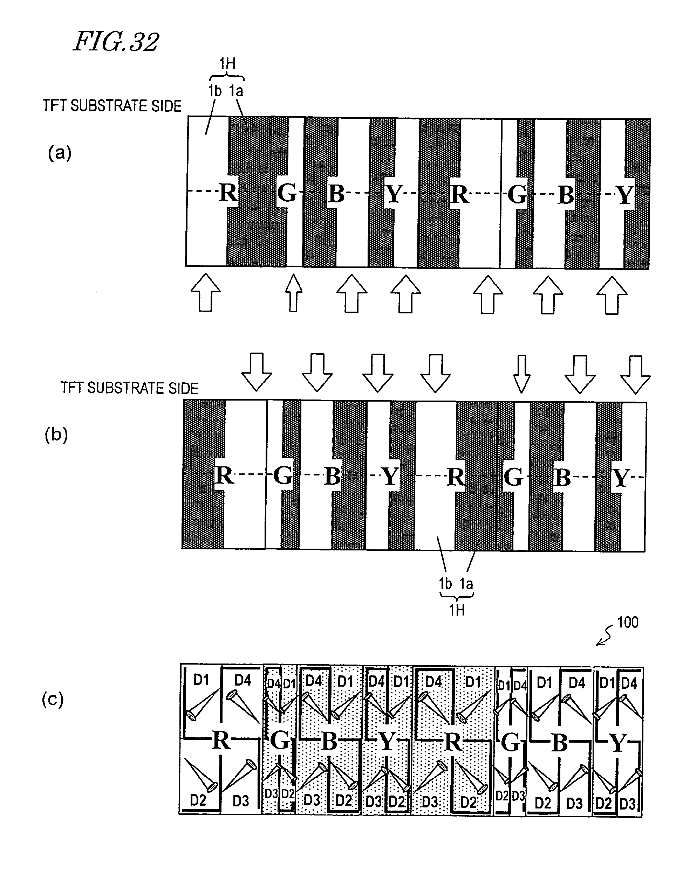

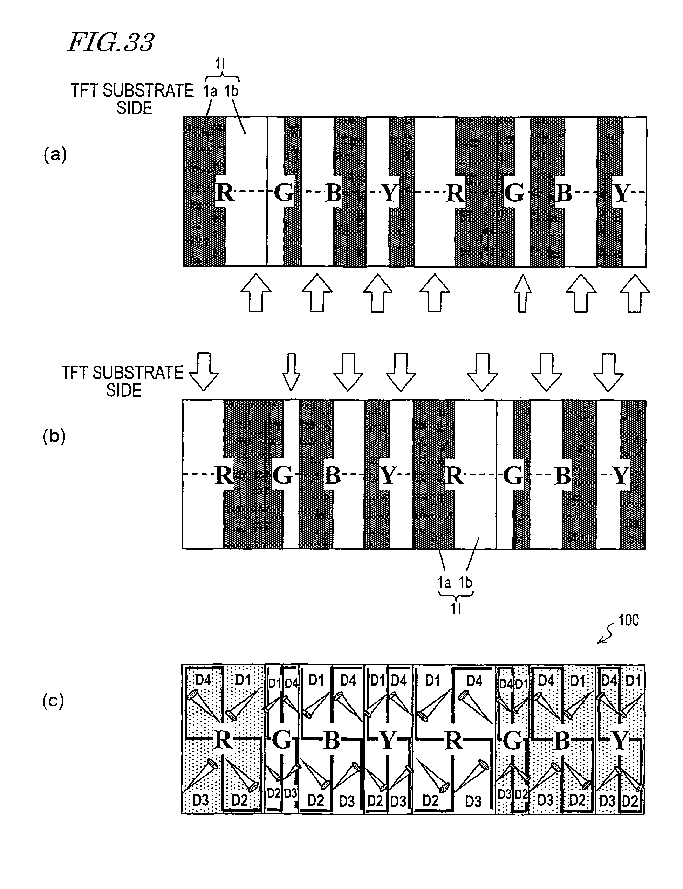

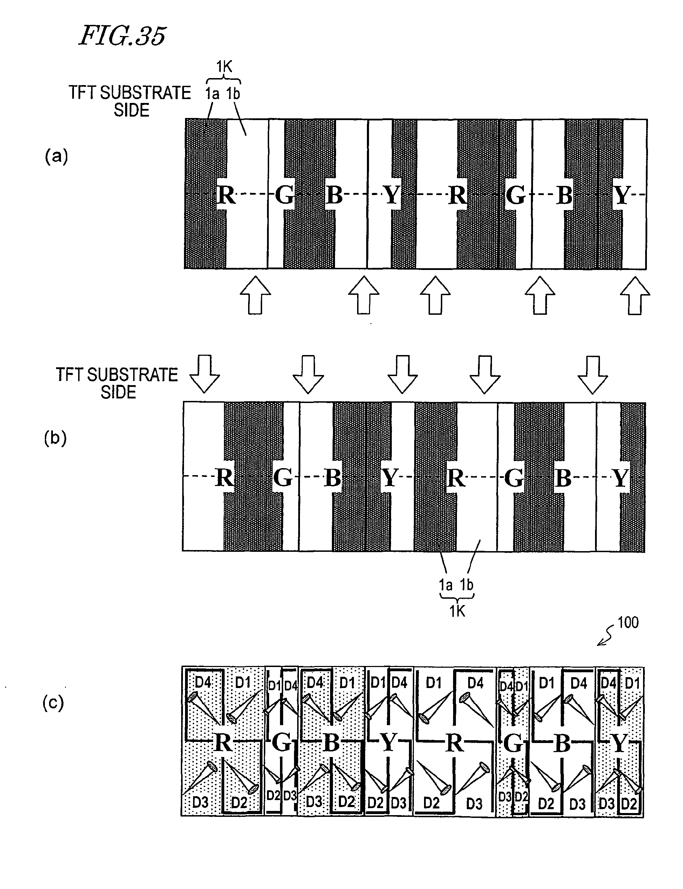

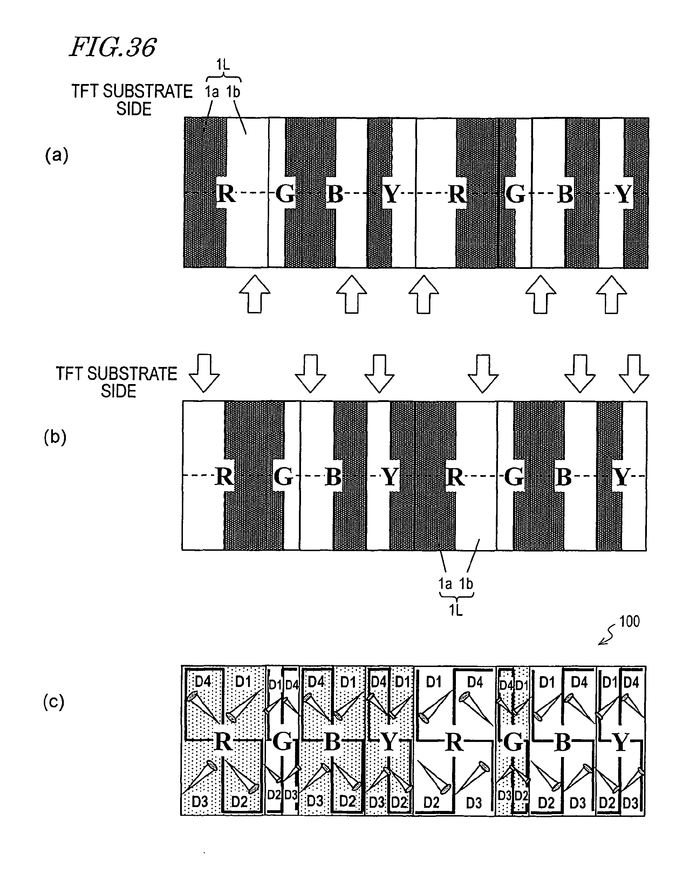

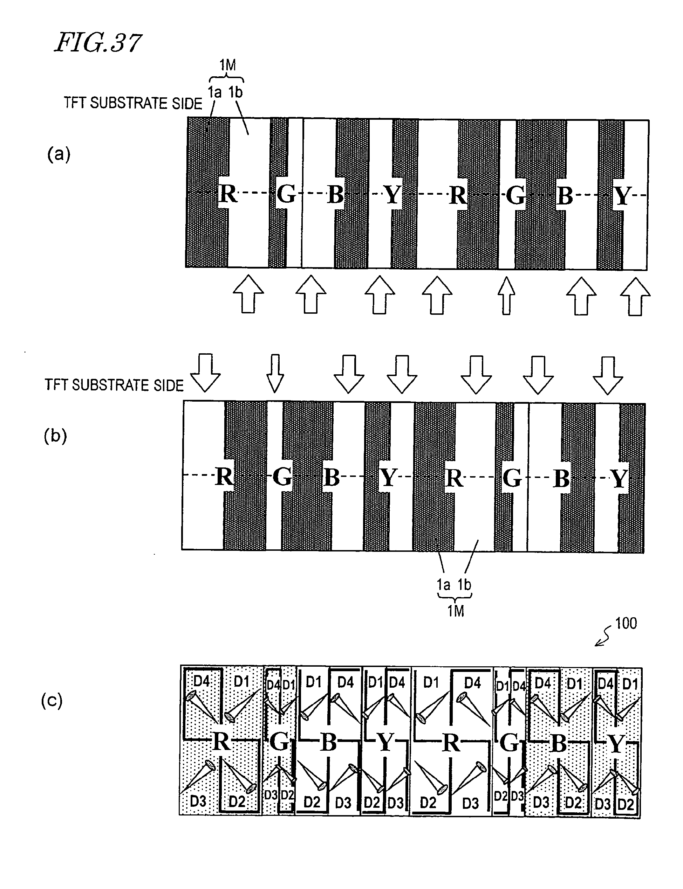

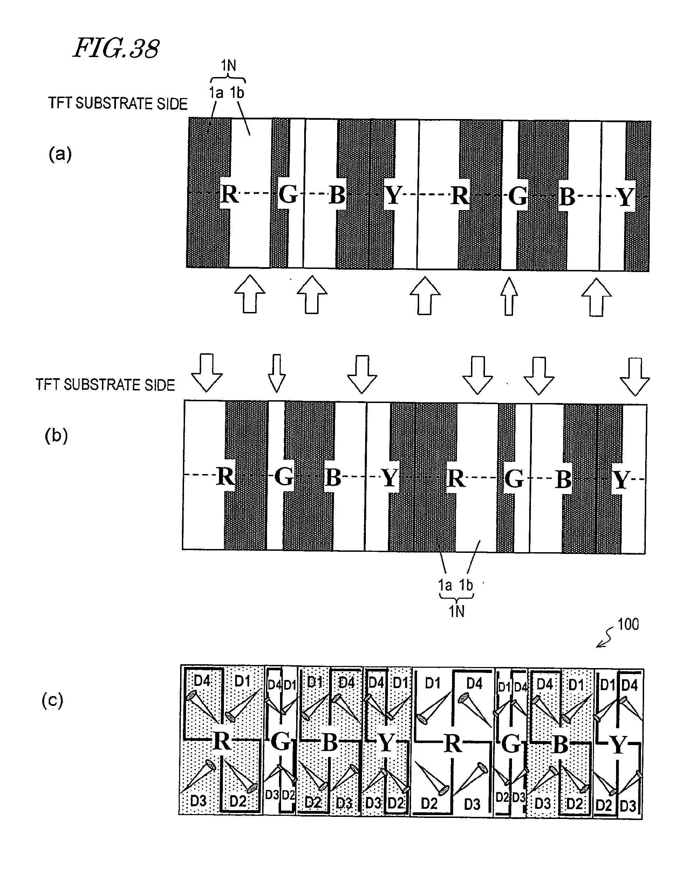

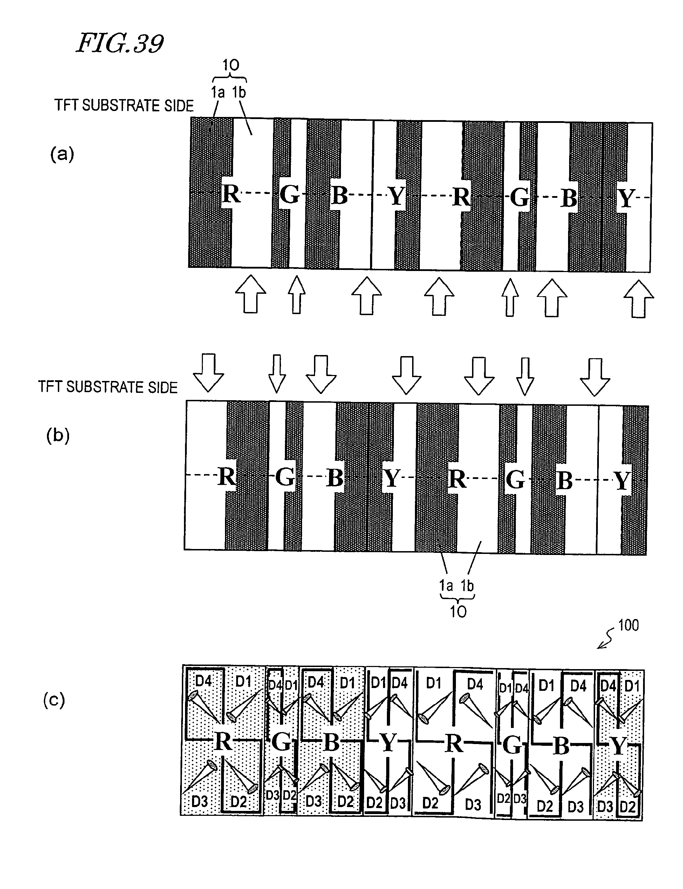

FIG. **25** through FIG. **40** show variations **1A** through **1P** of the photomask **1.** In each of FIG. **25** through FIG. **40****,** **(a)** shows the first exposure step performed when the corresponding variation among the variations **1A** through **1P** is used; **(b)** shows the second exposure step; and **(c)** shows the minimum repeat unit (i.e., two pixels) of alignment pattern in the liquid crystal display device **100** in a completed form.

As shown in **(a)** and **(b)** of FIG. **25** through FIG. **40****,** in any of the variations **1A** through **1P,** the mask pattern of the left area and the mask pattern of the right area are negative/positive-inverted to each other. Accordingly, the shifted exposure can be performed in the row direction. As shown in **(c)** of FIG. **25** through FIG. **40****,** the pair of optical alignment films **12** and **22** can be provided with such an alignment regulation force that causes an identical alignment pattern to appear in repetition along the row direction, with two pixels being the minimum unit.

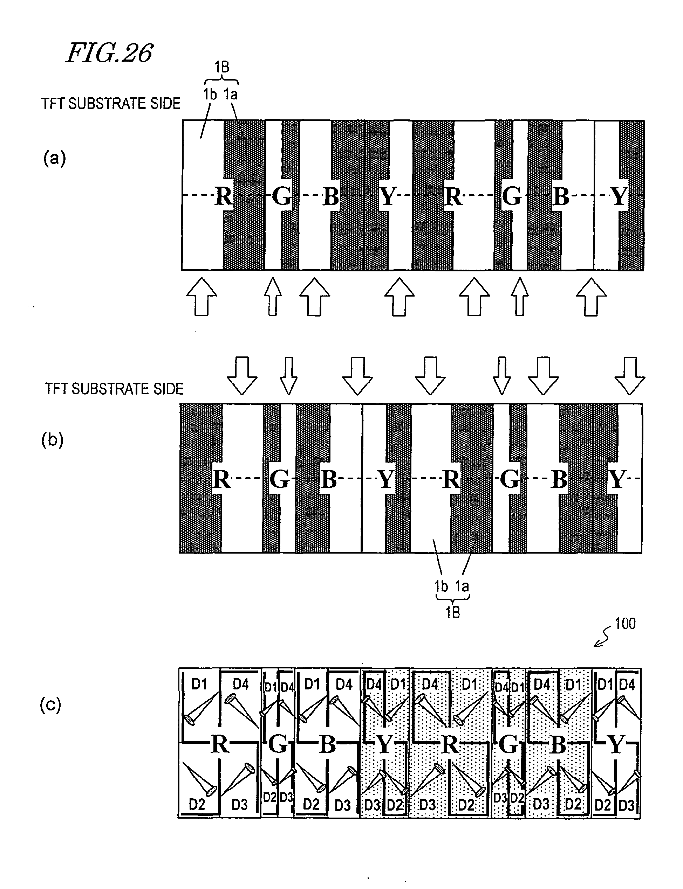

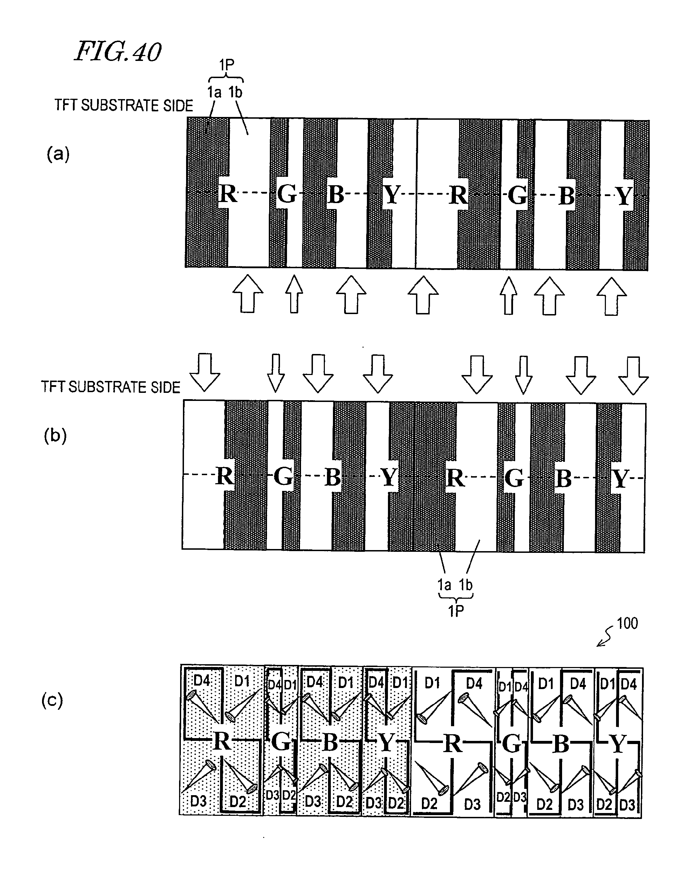

It is preferable that two types of picture elements having different alignment orders of the liquid crystal domains **D1** through **D4** (having different shape of the dark area **DR**) are not located unevenly in two pixels. A reason for this is that when the gammadion alignment and the letter 8 alignment are located significantly unevenly, such an unevenness may be visually recognized when being observed in an oblique direction. Accordingly, the alignment patterns in which one pixel includes both of picture elements having the gammadion alignment and picture elements having the letter 8 alignment in a mixed state as shown in **(c)** of FIG. **26** through **39** are more preferable to the alignment patterns in which one pixel includes only the picture elements having the gammadion alignment or only the picture elements having the letter 8 alignment as shown in **(c)** of FIG. **25** and FIG. **40****.** Namely, the variations **1B** through **10** shown in **(a)** and **(b)** of FIG. **26** through **39** are more preferable to the variations **1A** and **1P** shown in **(a)** and **(b)** of FIG. **25** and FIG. **40****.**

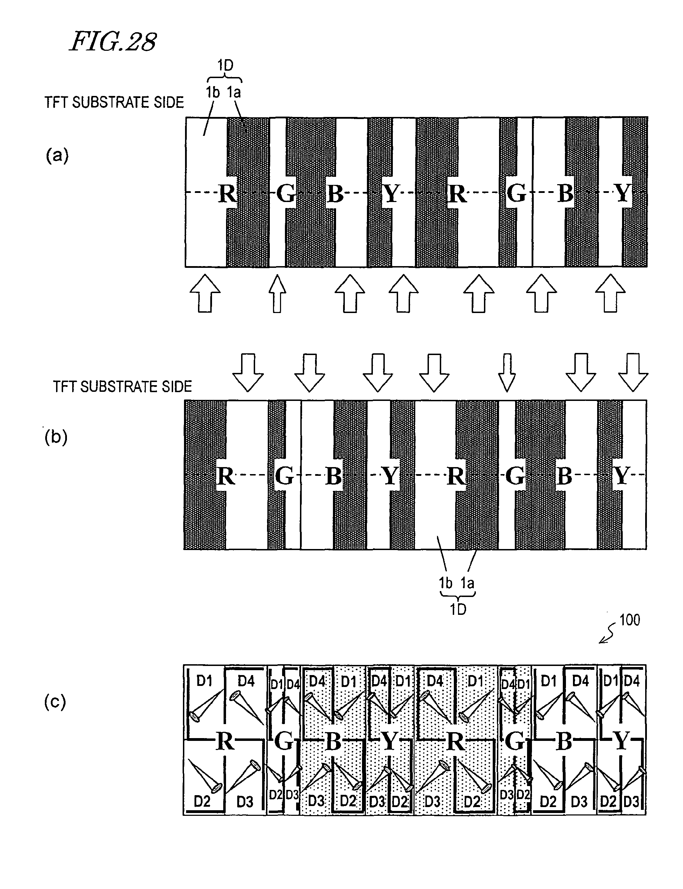

It is more preferable as the difference between the number of picture elements having the gammadion alignment and the number of picture elements having the letter 8 alignment in one pixel is smaller. Accordingly, among the alignment patterns shown in **(c)** of FIG. **26** through **39****,** the alignment patterns in which the difference is 0 as shown in **(c)** of FIGS. **28****,** **30****,** **31****,** **34****,** **35** and **37** are more preferable to the alignment patterns in which the difference is 2 as shown in **(c)** of FIGS. **26****,** **27****,** **29****,** **32****,** **33****,** **36****,** **38** and **39****.** Namely, among the variations **1B** through **10** shown in **(a)** and **(b)** of FIG. **26** through **39****,** the variations **1D, 1F, 1G, 1J, 1K** and **1M** shown in **(a)** and **(b)** of FIGS. **28****,** **30****,** **31****,** **34****,** **35** and **37** are more preferable to the variations **1B, 1C, 1E, 1H, 1I, 1L, 1N** and **10** shown in **(a)** and **(b)** of FIGS. **26****,** **27****,** **29****,** **32****,** **33****,** **36****,** **38** and **39****.**

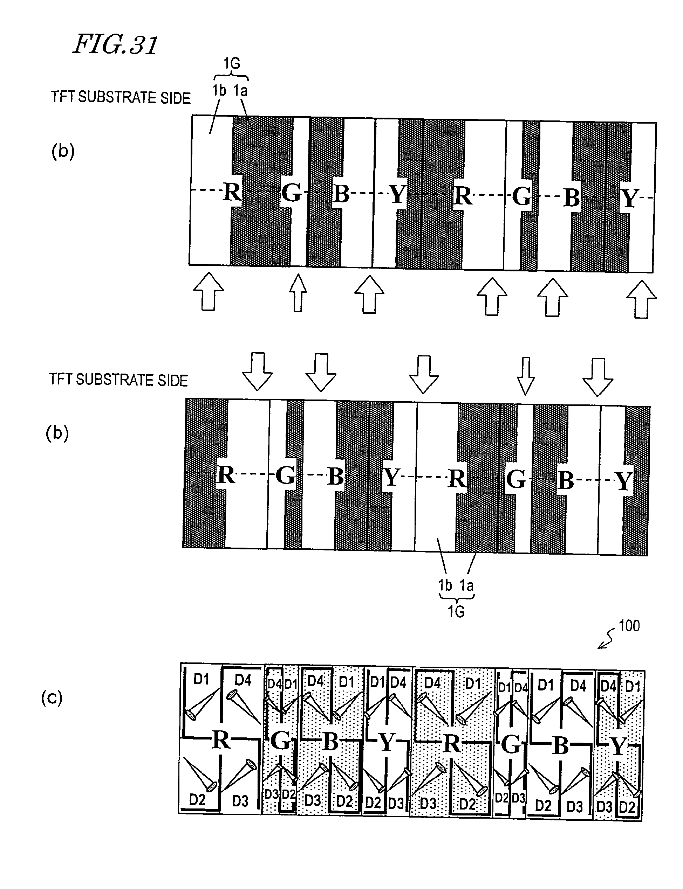

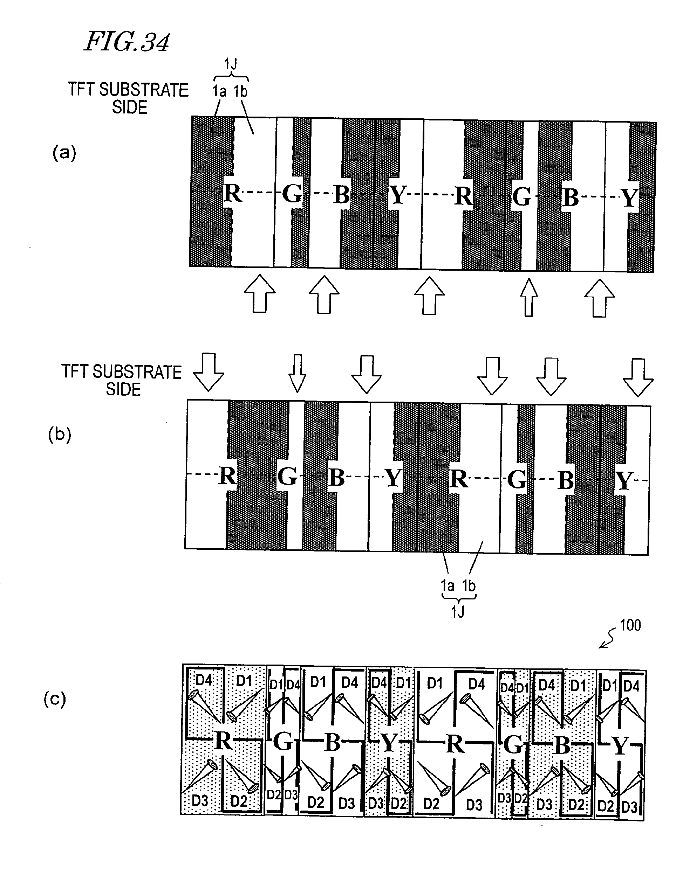

It is preferable that a total area size of the picture elements having the gammadion alignment and a total area size the picture elements having the letter 8 alignment in one pixel P are as close as possible to each other. Accordingly, it is preferable that the gammadion alignment and the letter 8 alignment appear alternately as the size of the picture element increases (or decreases) in one pixel. Namely, it is preferable that where the plurality of picture elements in each pixel **P** are ranked in accordance with the length along the row direction, one of any two picture elements having continuous ranks has the gammadion alignment and the other has the letter 8 alignment. For example, it is preferable that when the largest picture element has the gammadion alignment, the second largest picture element has the letter 8 alignment, the third largest picture element has the gammadion alignment, and the smallest picture element has the letter 8 alignment. By contrast, it is preferable that when the largest picture element has the letter 8 alignment, the second largest picture element has the gammadion alignment, the third largest picture element has the letter 8 alignment, and the smallest picture element has the gammadion alignment. Accordingly, among the alignment patterns shown in **(c)** of FIGS. **25** through **40****,** the alignment patterns shown in **(c)** of FIG. **31** and FIG. **34** are most preferable. Among the variations **1A** through **10** shown in **(a)** and **(b)** of FIGS. **25** through **40****,** the variations **1G** and **1J** shown in **(a)** and **(b)** of FIG. **31** and FIG. **34** are most preferable.

In this embodiment, each light transmitting part **1b** of the photomask **1** has such a width that overlaps the left half or the right half of each picture element exactly (i.e., each light shielding part **1a** also has such a width that overlaps the left half or the right half of each picture element exactly). In other words, in the exposure steps, the border between the light transmitting part **1b** and the light shielding part **1a** matches the central line (border between the left half and the right half) of each picture element (see FIG. **20** and FIG. **21**). However, the width of the light transmitting part **1b** and the light shielding part **1a** is not limited to this. The width of the light transmitting part **1b** may be increased by a prescribed amount Δ and the width of the light shielding part **1a** may be decreased by the same amount.

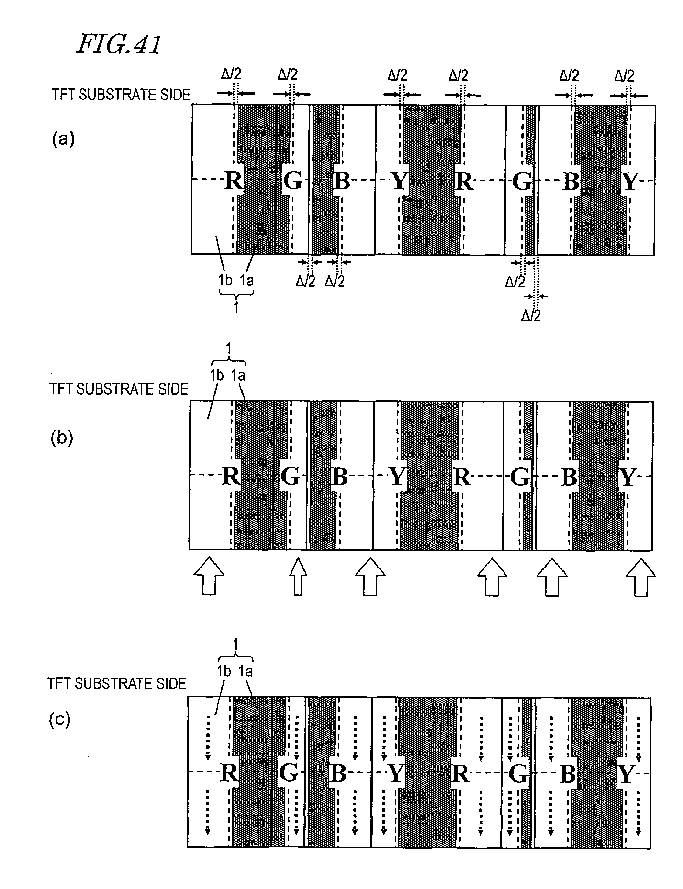

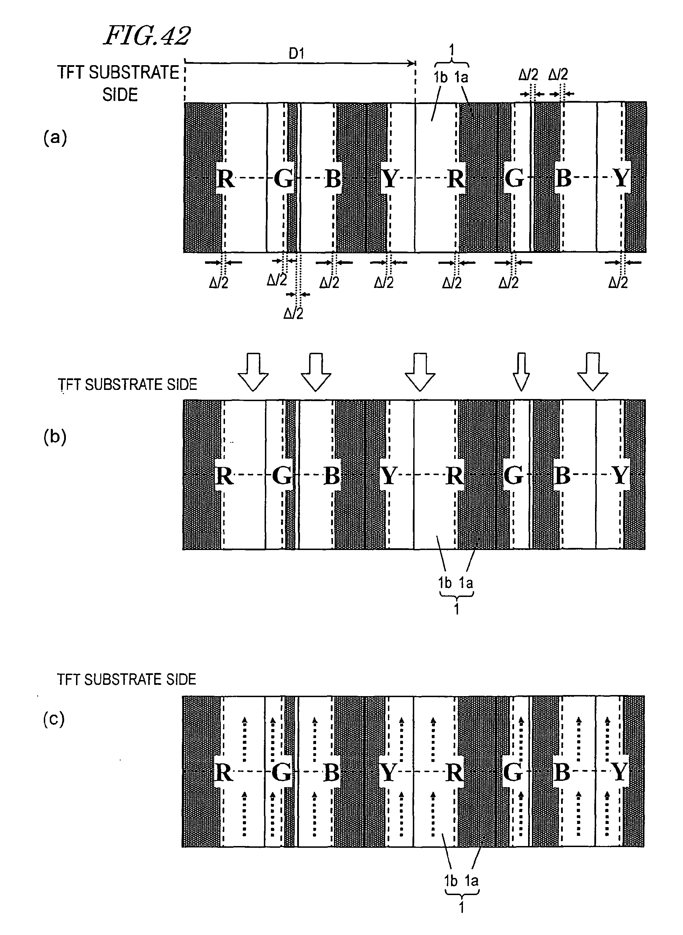

With reference to FIG. **41** and FIG. **42****,** optical alignment processing performed on the optical alignment film **12** on the TFT substrate **S1** in the case where such a photomask **1** is used will be described.

First, as shown in FIG. **41(a)****,** the photomask **1** is located such that parts of the optical alignment film **12** corresponding to a left half of the red picture element **R,** a right half of the green picture element **G,** a right half of the blue picture element **B** and a left half of the yellow picture element **Y** of the left pixel **P,** and a right half of the red picture element **R,** a left half of the green picture element **G,** a left half of the blue picture element **B** and a right half of the yellow picture element **Y** of the right pixel **P,** overlap the light transmitting parts **1b.** However, the width of each of the light shielding parts **1a** of the photomask **1** is smaller than by Δ than that shown in FIG. **19****.** Therefore, regarding the left pixel **P,** parts of the optical alignment film **12** corresponding to a part of the right half of each of the red picture element **R** and the yellow picture element **Y** and also corresponding to a part of the left half of each of the green picture element **G** and the blue picture element **B** (these parts each have a width of Δ/2) also overlap the light transmitting parts **1b.** Regarding the right pixel **P,** parts of the optical alignment film **12** corresponding to a part of the left half of each of the red picture element **R** and the yellow picture element **Y** and also corresponding to a part of the right half of each of the green picture element **G** and the blue picture element **B** (these parts each have a width of Δ/2) also overlap the light transmitting parts **1b.**

Next, as shown in FIG. **41(b)****,** ultraviolet rays are directed obliquely in the direction represented by the arrows. As a result of this exposure step, as shown in FIG. **41(c)****,** the parts of the optical alignment film **12** corresponding to the left half of the red picture element **R,** the right half of the green picture element **G,** the right half of the blue picture element **B** and the left half of the yellow picture element **Y** of the left pixel **P,** and the right half of the red picture element **R,** the left half of the green picture element **G,** the left half of the blue picture element **B** and the right half of the yellow picture element **Y** of the right pixel **P,** are given a prescribed pretilt direction.

Next, as shown in FIG. **42(a)****,** the photomask **1** is shifted in the row direction by a prescribed distance **D1** (specifically, by the length **PL1** along the row direction of the pixel **P**). As a result of this movement, the parts of the optical alignment film **12** corresponding to the right half of the red picture element **R,** the left half of the green picture element **G,** the left half of the blue picture element **B** and the right half of the yellow picture element **Y** of the left pixel **P,** and the left half of the red picture element **R,** the right half of the green picture element **G,** the right half of the blue picture element **B** and the left half of the yellow picture element **Y** of the right pixel **P,** overlap the light transmitting parts **1b** of the photomask **1.** However, the width of each of the light shielding parts **1a** of the photomask **1** is smaller than by Δ than that shown in FIG. **19****.** Therefore, regarding the left pixel **P,** parts of the optical alignment film **12** corresponding to a part of the left half of each of the red picture element **R** and the yellow picture element **Y** and also corresponding to a part of the right half of each of the green picture element **G** and the blue picture element **B** (these parts each have a width of Δ/2) also overlap the light transmitting parts **1b.** Regarding the right pixel **P,** parts of the optical alignment film **12** corresponding to a part of the right half of each of the red picture element **R** and the yellow picture element **Y** and also corresponding to a part of the left half of each of the green picture element **G** and the blue picture element **B** (these parts each have a width of Δ/2) also overlap the light transmitting parts **1b.**

Next, as shown in FIG. **42(b)****,** ultraviolet rays are directed obliquely in the direction represented by the arrows. As a result of this exposure step, as shown in FIG. **42 (c)****,** the remaining parts of the optical alignment film **12,** namely, the parts thereof corresponding to the right half of the red picture element **R,** the left half of the green picture element **G,** the left half of the blue picture element **B** and the right half of the yellow picture element **Y** of the left pixel **P,** and the left half of the red picture element **R,** the right half of the green picture element **G,** the right half of the blue picture element **B** and the left half of the yellow picture element **Y** of the right pixel **P,** are given a prescribed pretilt direction.

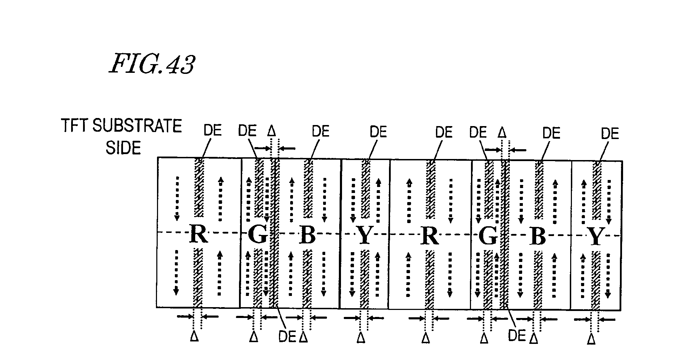

In the case where the optical alignment processing is performed as described above, as shown in FIG. **43****,** an area **DE** irradiated with the light in both of the first exposure step and the second exposure step (double-exposed area **DE**) is formed in a central part of each picture element (central part in the row direction) and also at the border between the green picture element **G** and the blue picture element **B.** The double-exposed area **DE** has a width equal to the increasing amount of the width Δ of the light transmitting part **1b** (decreasing amount of the width of the light shielding part **1a**).

The double-exposed area **DE** is an area for obtaining a margin against an alignment divergence which is caused when the photomask **1** is shifted for exposure. The alignment precision of the exposure device is about ± several micrometers at the maximum. Therefore, it is preferable from the viewpoint of reliability or the like that no unexposed area is formed in a picture element even when the alignment divergence occurs. When there is an unexposed area, ion components, which are impurities in the liquid crystal layer **3** and the alignment films **12** and **22,** are attracted to the unexposed area, which may cause faults such as DC divergence (divergence of the DC level between the signal voltage and the counter voltage), stains or the like.

Since the light transmitting parts **1b** and the light shielding parts **1a** of the photomask **1** have such width that forms the double-exposed areas **DE,** formation of an unexposed area can be prevented even when an alignment divergence occurs. From the viewpoint of preventing the formation of the unexposed area with more certainty, it is preferable that the increasing amount Δ of the width of each transmitting part **1b** is larger. However, when the increasing amount Δ is too large, namely, when the width of the double-exposed area **DE** is too large, the width of the dark line at or in the vicinity of the center of the picture element (part of the cross-shaped dark line **CL** which extends in the vertical direction) is increased and thus the transmittance is decreased. From the viewpoint of suppressing the decrease of the transmittance, it is preferable that the increasing amount Δ of the width of the light transmitting part **1b** is equal to or smaller than 10 µm (i.e., 0 < Δ ≤ 10). From the viewpoint of further suppressing the decrease of the transmittance and also preventing the formation of an unexposed area with more certainty, it is preferable that the increasing amount Δ is equal to or larger than 1 µm and equal to or smaller than 5 µm (i.e., 1 ≤ Δ ≤ 5).

In this embodiment, an area of the optical alignment film **12** on the TFT substrate **S1** corresponding to each picture element is divided into the left part and the right part and an area of the optical alignment film **22** on the CF substrate **S2** corresponding to each picture element is divided into the top part and the bottom part. The present invention is not limited to this structure. An area of the optical alignment film **12** on the TFT substrate **S1** corresponding to each picture element may be divided into the top part and the bottom part and an area of the optical alignment film **22** on the CF substrate **S2** corresponding to each picture element may be divided into the left part and the right part. In this case, for performing the optical alignment processing on the optical alignment film **12** on the TFT substrate **S1,** the photomask **2** shown in FIG. **22** may be used to perform the shifted exposure in the column direction, and for performing the optical alignment processing on the optical alignment film **22** on the CF substrate **S2,** the photomask **1** shown in FIG. **19** may be used to perform the shifted exposure in the row direction.

### (EMBODIMENT 2)

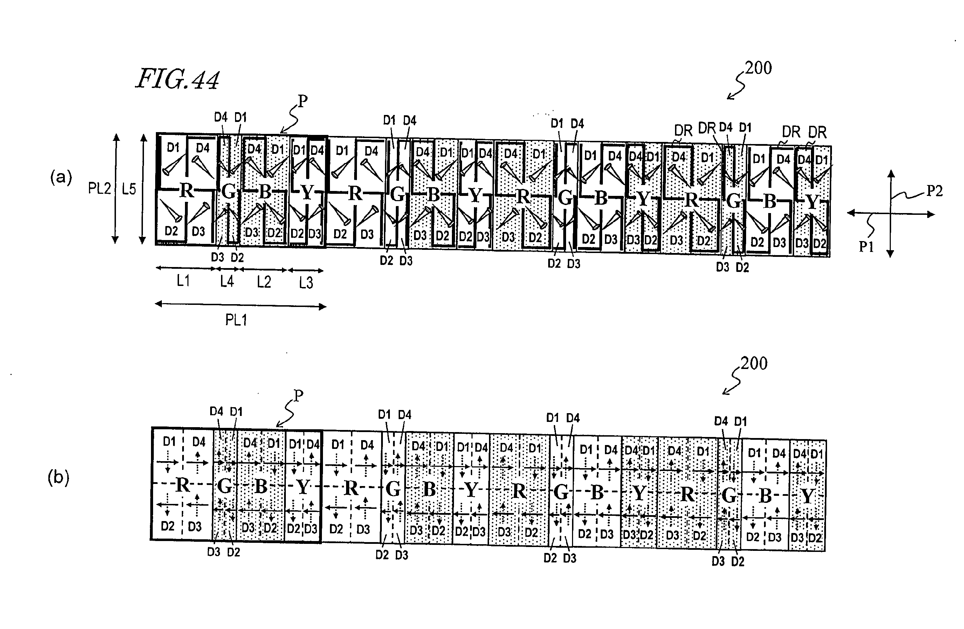

FIG. **44** shows a liquid crystal display device **200** in this embodiment. FIGS. 44(a) and (b) are each a plan view schematically showing four pixels **P** of the liquid crystal display device **200,** which are continuous in the row direction.

As shown in FIGS. 44(a) and (b), all the four picture elements defining each pixel **P** have different lengths along the row direction. Specifically, a length **L1** of the red picture element **R** along the row direction, a length **L2** of the blue picture element **B** along the row direction, a length **L3** of the yellow picture element **Y** along the row direction, and a length **L4** of the green picture element **G** along the row direction are longer in this order (i.e., L1 > L2 > L3 > L4). By contrast, all the picture elements have an equal length **L5** along the column direction. In this manner, in the pixel **P** of the liquid crystal display device **200** in this embodiment, there is one length of picture elements in the column direction, whereas there are four lengths of picture elements in the row direction.

In the liquid crystal display device **100** in Embodiment 1, the minimum repeat unit of alignment pattern is two pixels. By contrast, in the liquid crystal display device **200** in this embodiment, the minimum repeat unit of alignment pattern is four pixels. Namely, a pair of optical alignment films of the liquid crystal display device **200** have such an alignment regulation force that causes an identical alignment pattern to appear in repetition in the liquid crystal layer along the row direction, with four pixels being the minimum unit. Namely, FIGS. 44(a) and (b) each show the minimum repeat unit of alignment pattern.

In the four pixels, which form the repeat unit of alignment pattern, there are picture elements having the gammadion alignment and picture elements having the letter 8 alignment in a mixed state. Specifically, a red picture element **R** and a yellow picture element **Y** of the leftmost pixel **P,** a red picture element **R,** a green picture element **G** and a yellow picture element **Y** of the pixel **P** which is second from left, a green picture element **G** and a blue picture element **B** of the pixel **P** which is third from left, and a blue picture element **B** of the rightmost pixel **P** have the gammadion alignment. By contrast, a green picture element **G** and a blue picture element **G** of the leftmost pixel **P,** a blue picture element **B** of the pixel **P** which is second from left, a red picture element **R** and a yellow picture element **Y** of the pixel **P** which is third from left, and a red picture element **R,** a green picture element **G** and a yellow picture element **Y** of the rightmost pixel **P** have the letter 8 alignment.

In the two left pixels, the type of alignment in the picture elements changes from left to right as gammadion, letter 8, letter 8, gammadion, gammadion, gammadion, letter 8, and gammadion. By contrast, in the two right pixels, the type of alignment in the picture elements changes from left to right as letter 8, gammadion, gammadion, letter 8, letter 8, letter 8, gammadion, and letter 8. Thus, in the repeat unit of alignment pattern, the alignment pattern of the left half (two left pixels **P**) and the alignment pattern of the right half (two right pixels **P**) are inverted to each other.

In the liquid crystal display device **200** having such a structure also, shifted exposure can be performed both in the row direction and in the column direction. Hereinafter, optical alignment processing performed on the pair of optical alignment films included in the liquid crystal display device **200** will be described.

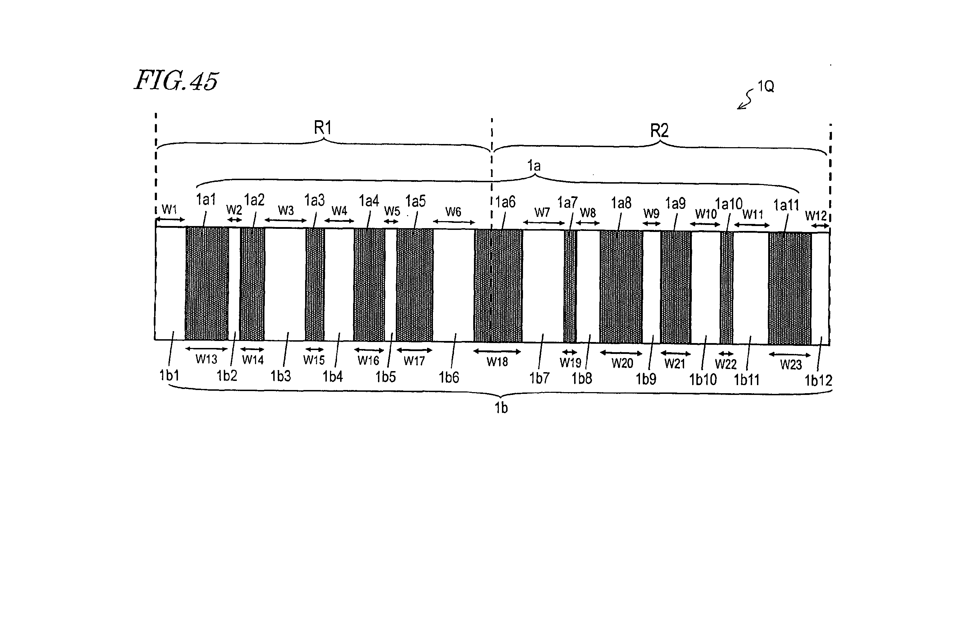

First, with reference to FIG. **45** through FIG. **47****,** optical alignment processing performed on an optical alignment film on a TFT substrate will be described.

First, a photomask **1Q** shown in FIG. **45** is prepared. FIG. **45** shows a part of the photomask **1Q,** and more specifically, an area corresponding to four pixels, which form the repeat unit of alignment pattern. As shown in FIG. **45****,** the photomask **1Q** has a mask pattern including a plurality of light shielding parts **1a** extending like stripes parallel to the column direction (vertical direction) and a plurality of light transmitting parts **1b** located between the plurality of light shielding parts **1a.**

A width **W1** (width in the row direction) of a light transmitting part **1b1,** which is leftmost among the plurality of light transmitting parts **1b,** is equal to half of the length **L1** of the red picture element **R** (i.e., W1 = L1/2). A width **W2** of a light transmitting part **1b2,** which is second from left, is equal to half of the length **L4** of the green picture element **G** (i.e., W2 = L4/2). A width **W3** of a light transmitting part **1b3,** which is third from left, is equal to a sum of half of the length **L2** of the blue picture element **B** and half of the length **L3** of the yellow picture element **Y** (i.e., W3 = (L2 + L3)/2). A width **W4** of a light transmitting part **1b4,** which is fourth from left, is equal to half of the length **L1** of the red picture element **R** (i.e., W4 = L1/2).

A width **W5** of a light transmitting part **1b5,** which is fifth from left, is equal to half of the length **L4** of the green picture element **G** (i.e., W5 = L4/2). A width **W6** of a light transmitting part **1b6,** which is sixth from left, is equal to a sum of half of the length **L2** of the blue picture element **B** and half of the length **L3** of the yellow picture element **Y** (i.e., W6 = (L2 + L3)/2). A width **W7** of a light transmitting part **1b7,** which is seventh from left, is equal to a sum of half of the length **L1** of the red picture element **R** and half of the length **L4** of the green picture element **G** (i.e., W7 = (L1 + L4)/2). A width **W8** of a light transmitting part **1b8,** which is eighth from left, is equal to half of the length L2 of the blue picture element **B** (i.e., W8 = L2/2).

A width **W9** of a light transmitting part **1b9,** which is ninth from left, is equal to half of the length **L3** of the yellow picture element **Y** (i.e., W9 = L3/2). A width **W10** of a light transmitting part **1b10,** which is 10th from left, is equal to half of the length **L1** of the red picture element **R** (i.e., W10 = L1/2). A width **W11** of a light transmitting part **1b11,** which is 11th from left, is equal to a sum of half of the length **L4** of the green picture element **G** and half of the length **L2** of the blue picture element **B** (i.e., W11 = (L4 + L2)/2). A width **W12** of a light transmitting part **1b12,** which is 12th from left (rightmost), is equal to half of the length **L3** of the yellow picture element **Y** (i.e., W12 = L3/2).

A width **W13** (width in the row direction) of a light shielding part **1a1,** which is leftmost among the plurality of light shielding parts **1a,** is equal to a sum of half of the length **L1** of the red picture element **R** and half of the length **L4** of the green picture element **G** (i.e., W13 = (L1 + L4)/2). A width **W14** of a light shielding part **1a2,** which is second from left, is equal to half of the length **L2** of the blue picture element **B** (i.e., W14 = L2/2). A width **W15** of a light shielding part **1a3,** which is third from left, is equal to half of the length **L3** of the yellow picture element **Y** (i.e., W15 = L3/2). A width **W16** of a light shielding part **1a4,** which is fourth from left, is equal to half of the length **L1** of the red picture element **R** (i.e., W16 = L1/2).

A width **W17** of a light shielding part **1a5,** which is fifth from left, is equal to a sum of half of the length **L4** of the green picture element **G** and half of the length **L2** of the blue picture element **B** (i.e., W17 = (L4 + L2)/2). A width **W18** of a light shielding part **1a6,** which is sixth from left, is equal to a sum of half of the length **L3** of the yellow picture element **Y** and half of the length **L1** of the red picture element **R** (i.e., W18 = (L3 + L1)/2). A width **W19** of a light shielding part **1a7,** which is seventh from left, is equal to half of the length **L4** of the green picture element **G** (i.e., W19 = L4/2). A width **W20** of a light shielding part **1a8,** which is eighth from left, is equal to a sum of half of the length **L2** of the blue picture element **G** and half of the length **L3** of the yellow picture element **Y** (i.e., W20 = (L2+ L3)/2).

A width **W21** of a light shielding part **1a9,** which is ninth from left, is equal to half of the length **L1** of the red picture element **R** (i.e., W21 = L1/2). A width **W22** of a light shielding part **1a10,** which is 10th from left, is equal to half of the length **L4** of the green picture element **G** (i.e., W22 = L4/2). A width **W23** of a light shielding part **1a11,** which is 11th from left (rightmost), is equal to a sum of half of the length **L2** of the blue picture element **B** and half of the length **L3** of the yellow picture element **Y** (i.e., W23 = (L2 + L3)/2).

When the photomask **1Q** shown in FIG. **45** is divided into an area **R1** corresponding to the left half (two left pixels **P**) of the minimum repeat unit of alignment pattern and an area **R2** corresponding to the right half (two right pixels **P**) thereof, the mask pattern of the left area **R1** and the mask pattern of the right area **R2** are negative/positive-inverted to each other. Namely, the light shielding parts **1a** of the right area **R2** are located at the positions of the light transmitting parts **1b** in the left area **R1,** and the light transmitting parts **1b** of the right area **R2** are located at the positions of the light shielding parts **1a** in the left area **R1.**

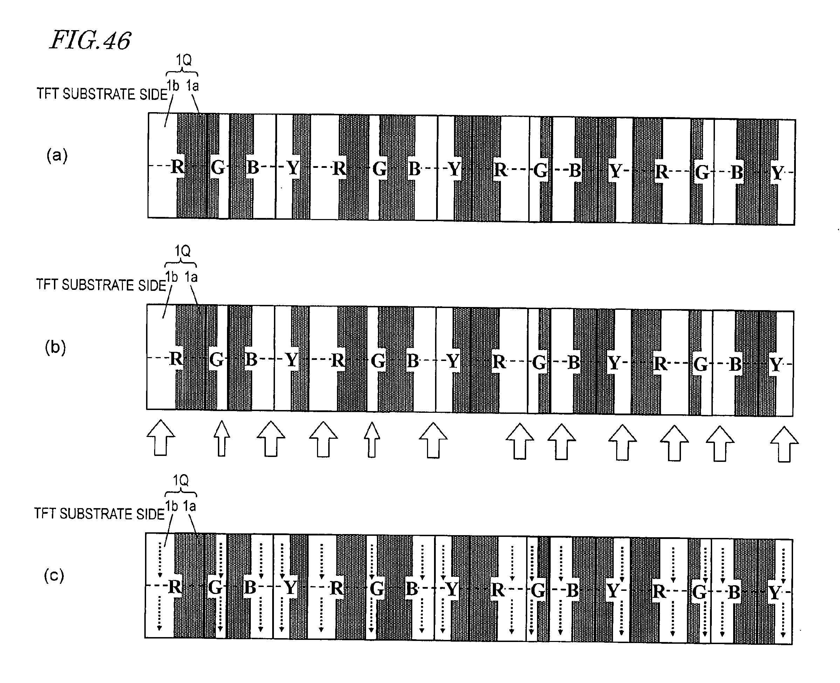

Next, as shown in FIG. **46(a)****,** the photomask **1** is located such that parts of the optical alignment film corresponding to a left half of the red picture element **R,** a right half of the green picture element **G,** a right half of the blue picture element **B** and a left half of the yellow picture element **Y** of the leftmost pixel **P,** and a left half of the red picture element **R,** a left half of the green picture element **G,** a right half of the blue picture element **B** and a left half of the yellow picture element **Y** of the pixel **P** which is second from left, overlap the light transmitting parts **1b.** At this point, a right half of the red picture element **R,** a left half of the green picture element **G,** a left half of the blue picture element **B** and a right half of the yellow picture element **Y** of the pixel **P** which is third from left, and a right half of the red picture element **R,** a right half of the green picture element **G,** a left half of the blue picture element **B** and a right half of the yellow picture element **Y** of the pixel **P** which is fourth from left (rightmost), also overlap the light transmitting parts **1b.**

Next, as shown in FIG. **46(b)****,** ultraviolet rays are directed obliquely in the direction represented by the arrows. As a result of this exposure step, as shown in FIG. **46(c)****,** the parts of the optical alignment film overlapping the light transmitting parts **1b** are given a prescribed pretilt direction. The pretilt direction given at this point is the same as the pretilt direction **PA1** shown in FIG. **2(a)****.**

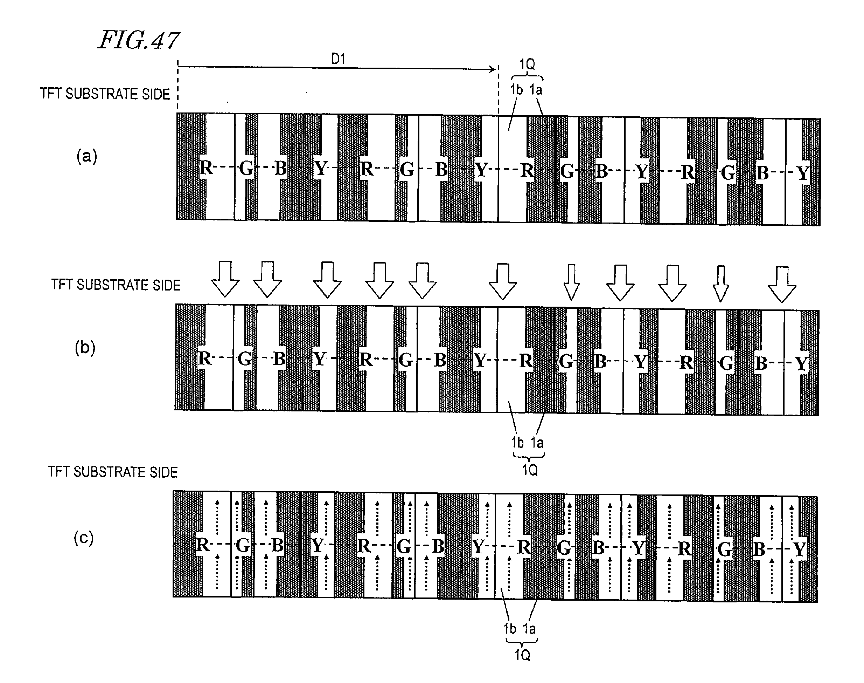

Next, as shown in FIG. **47(a)****,** the photomask **1Q** is shifted in the row direction by a prescribed distance **D1.** In this example, the prescribed distance **D1** is twice the length **PL1** (see FIG. **44(a)**) of the pixel **P** along the row direction. Namely, the photomask **1Q** is shifted by two pixels in the row direction. As a result of this movement, the parts of the optical alignment film corresponding to the right half of the red picture element **R,** the left half of the green picture element **G,** the left half of the blue picture element **B** and the right half of the yellow picture element **Y** of the leftmost pixel **P,** and the right half of the red picture element **R,** the right half of the green picture element **G,** the left half of the blue picture element **B** and the right half of the yellow picture element **Y** of the pixel **P** which is second from left, overlap the light transmitting parts **1b** of the photomask **1Q.** At this point, the parts corresponding to the left half of the red picture element **R,** the right half of the green picture element **G,** the right half of the blue picture element **B** and the left half of the yellow picture element **Y** of the pixel **P** which is third from left, and the left half of the red picture element **R,** the left half of the green picture element **G,** the right half of the blue picture element **B** and the left half of the yellow picture element **Y** of the pixel **P** which is fourth from left (rightmost), also overlap the light transmitting parts **1b.**

Next, as shown in FIG. **47(b)****,** ultraviolet rays are directed obliquely in the direction represented by the arrows. As a result of this exposure step, as shown in FIG. **47(c)****,** the remaining parts of the optical alignment film, namely, the parts thereof overlapping the post-movement photomask **1Q** are given a prescribed pretilt direction. The pretilt direction given at this point is the same as the pretilt direction **PA2** shown in FIG. **2(a)** and is antiparallel to the pretilt direction shown in FIG. **46(c)****.**

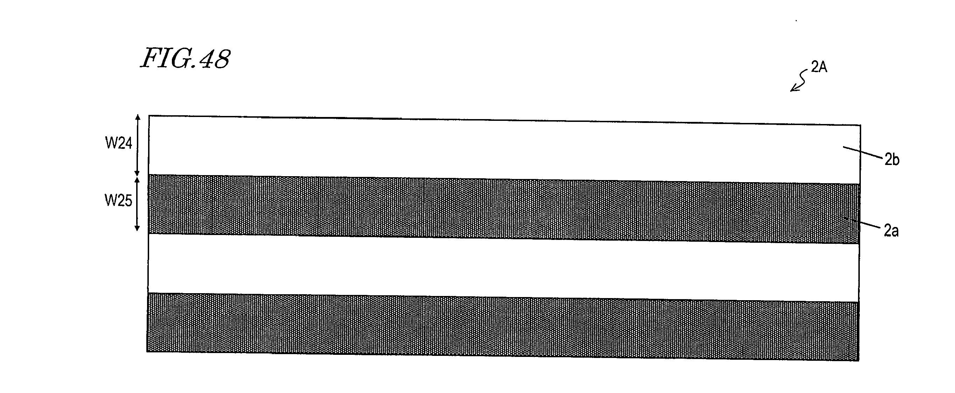

As a result of the above-described optical alignment processing, in an area of the optical alignment film on the TFT substrate corresponding to each picture element, two areas having antiparallel pretilt directions to each other are formed. Now, with reference to FIG. **48** through FIG. **50****,** optical alignment processing performed on the optical alignment film on a CF substrate will be described.

First, a photomask **2A** shown in FIG. **48** is prepared. FIG. **48** shows a part of the photomask **2A,** and more specifically, an area corresponding to eight pixels (eight pixels **P** arranged in 2 rows × 4 columns). As shown in FIG. **48****,** the photomask **2A** has a mask pattern including a plurality of light shielding parts **2a** extending like stripes parallel to the row direction (horizontal direction) and a plurality of light transmitting parts **2b** located between the plurality of light shielding parts **2a.** A width **W24** of each of the plurality of light transmitting parts **2b** (width in the column direction) is half of the length **L5** of each picture element along the column direction (i.e., W24 = L5/2). A width **W25** of each of the plurality of light shielding parts **2a** (width in the column direction) is also half of the length **L5** of each picture element along the column direction (i.e., W25 = L5/2; W24 + W25 = L5).

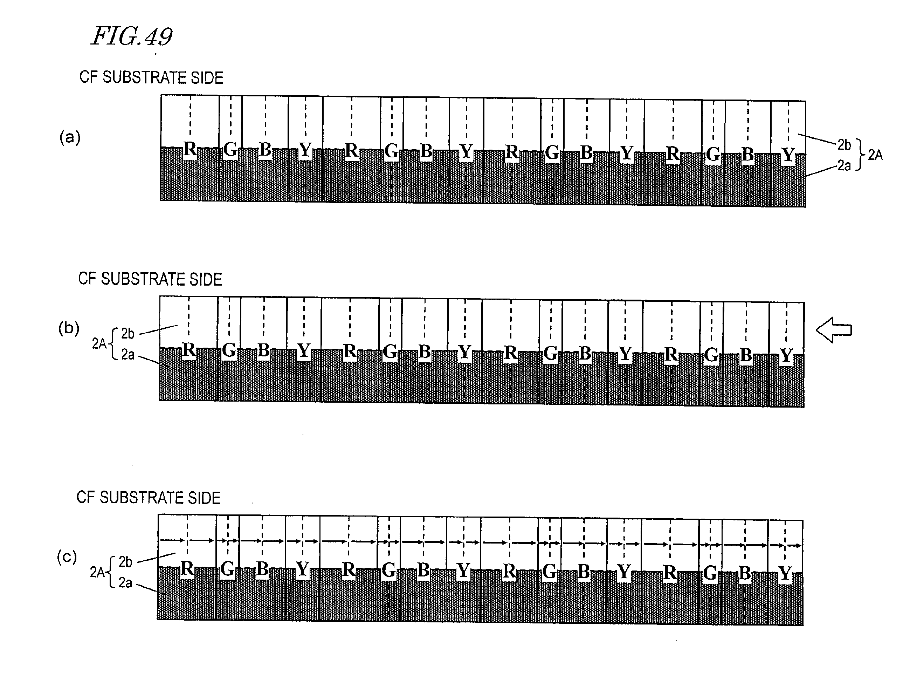

Next, as shown in FIG. **49(a)****,** the photomask **2A** is located such that a part of the optical alignment film corresponding to top halves of the picture elements overlaps the light transmitting part **2b.** In other words, the photomask **2A** is located such that a part of the optical alignment film corresponding to bottom halves of the picture elements overlaps the light shielding part **2a.**

Next, as shown in FIG. **49(b)****,** ultraviolet rays are directed obliquely in the direction represented by the arrow. As a result of this exposure step, as shown in FIG. **49(c)****,** the part of the optical alignment film corresponding to the top halves of the picture elements is given a prescribed pretilt direction. The pretilt direction given at this point is the same as the pretilt direction **PB1** shown in FIG. **2(b)****.**

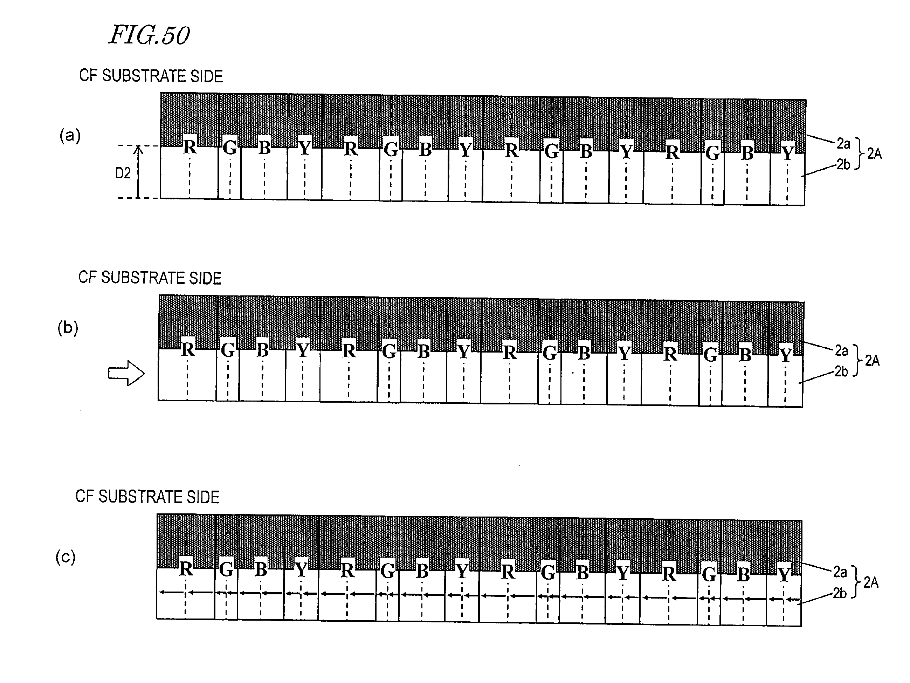

Next, as shown in FIG. **50(a)****,** the photomask **2A** is shifted in the column direction by a prescribed distance **D2.** In this example, the prescribed distance **D2** is 1/2 of the length **PL2** (see FIG. **44(a)**) of the pixel **P** along the column direction, and is half (1/2) of the length **L5** of each picture element along the column direction. Namely, the photomask **2A** is shifted by half of a pixel in the column direction. As a result of this movement, the part of the optical alignment film corresponding to the bottom halves of the picture elements overlaps the light transmitting part **2b** of the photomask **2A.** Namely, the part corresponding to the top halves of the picture elements overlaps the light shielding part **2a** of the photomask **2A.**

Next, as shown in FIG. **50(b)****,** ultraviolet rays are directed obliquely in the direction represented by the arrow. As a result of this exposure step, as shown in FIG. **50 (c)****,** the remaining part of the optical alignment film, namely, the part thereof corresponding to the bottom halves of the picture elements is given a prescribed pretilt direction. The pretilt direction given at this point is the same as the pretilt direction PB2 shown in FIG. 2(b) and is antiparallel to the pretilt direction shown in FIG. 49(c).

As a result of the above-described optical alignment processing, in an area of the optical alignment film on the CF substrate corresponding to each picture element, two areas having antiparallel pretilt directions to each other are formed. By bonding together the TFT substrate and the CF substrate processed with the optical alignment in the above-described manner, the liquid crystal display device 200 shown in FIG. **44** in which each picture element is divided into liquid crystal domains having different alignment directions is obtained.

In the production method of the liquid crystal display device **200** also, in the step of performing the optical alignment processing on the optical alignment film on the TFT substrate, the two exposure steps are performed by use of one, common photomask **1Q.** In the step of performing the optical alignment processing on the optical alignment film on the CF substrate, the two exposure steps are performed by use of one, common photomask **2A.** Namely, the shifted exposure can be performed in the row direction in which there are four lengths of picture elements in addition to the column direction in which there is one length of picture elements. Therefore, the optical alignment processing can be realized at low cost and in a short takt time. As described above, in the liquid crystal display device **200** in this embodiment, there are picture elements having different arrangement orders of the liquid crystal domains **D1** through **D4** (having different shapes of the dark area **DR**) in a mixed state, and an identical alignment pattern appears in repetition along the row direction, with four pixels being the minimum unit. Therefore, the liquid crystal display device **200** in this embodiment can be produced by the method in which the shifted exposure is performed for the optical alignment processing.

It is sufficient that the mask patterns of the two areas **R1** and **R2** of the photomask **1Q** are negative/positive-inverted to each other, and the arrangement of the light shielding parts **1a** and the light transmitting parts **1b** of the photomask **1Q** is not limited to that shown in FIG. **45****.** Hereinafter, the designing concept of the photomask **1Q** will be described.

First, regarding each of the red picture element **R,** the green picture element **G,** the blue picture element **B** and the yellow picture element **Y** included in the two left pixels or the two right pixels among the four pixels, which form the minimum repeat unit of alignment pattern, it is determined whether the left half or the right half is to be exposed by the first exposure step. As a result, a mask pattern (arrangement of the light shielding parts **1a** and the light transmitting parts **1b**) of one of the two areas **R1** and **R2** is determined. For the mask pattern, there are two alternatives for each of the eight picture elements. Therefore, there are 256 (= 2⁸) alternatives in total. Next, the mask pattern determined for one of the areas is negative/positive-inverted, and the resultant mask pattern is determined as the mask pattern of the other area. In this manner, a specific arrangement of the light shielding parts **1a** and the light transmitting parts **1b** of the photomask **1Q** can be determined. Since there are 256 alternatives for the mask pattern of one of the areas, there are also 256 variations of the photomask **1Q.**

### (EMBODIMENT 3)

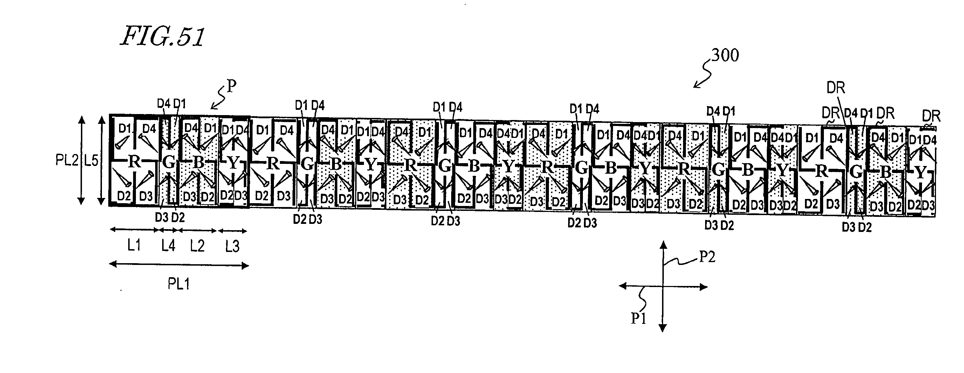

FIG. **51** shows a liquid crystal display device **300** in this embodiment. FIG. **51** is a plan view schematically showing six pixels **P** of the liquid crystal display device **300,** which are continuous in the row direction.

As shown in FIG. **51****,** all the four picture elements defining each pixel **P** have different lengths along the row direction. Specifically, a length **L1** of the red picture element **R** along the row direction, a length **L2** of the blue picture element **B** along the row direction, a length **L3** of the yellow picture element **Y** along the row direction, and a length **L4** of the green picture element **G** along the row direction are longer in this order (i.e., L1 > L2 > L3 > L4). By contrast, all the picture elements have an equal length **L5** along the column direction. In this manner, in the pixel **P** of the liquid crystal display device **300** in this embodiment, there is one length of picture elements in the column direction, whereas there are four lengths of picture elements in the row direction.

In the liquid crystal display device **100** in Embodiment 1, the minimum repeat unit of alignment pattern is two pixels. In the liquid crystal display device **200** in Embodiment 2, the minimum repeat unit of alignment pattern is four pixels. By contrast, in the liquid crystal display device **300** in this embodiment, the minimum repeat unit of alignment pattern is six pixels. Namely, a pair of optical alignment films of the liquid crystal display device **300** have such an alignment regulation force that causes an identical alignment pattern to appear in repetition in the liquid crystal layer along the row direction, with six pixels being the minimum unit. FIG. **51** shows the minimum repeat unit of alignment pattern.

In the six pixels, which form the repeat unit of alignment pattern, there are picture elements having the gammadion alignment and picture elements having the letter 8 alignment in a mixed state. Specifically, a red picture element **R** and a yellow picture element **Y** of the leftmost pixel **P,** a red picture element **R,** a green picture element **G** and a yellow picture element **Y** of the pixel **P** which is second from left, a green picture element **G** and a blue picture element **B** of the pixel **P** which is third from left, a green picture element **G** and a blue picture element **B** of the pixel **P** which is fourth from left, a blue picture element **B** of the pixel **P** which is fifth from left, and a red picture element **R** and a yellow picture element **Y** of the rightmost pixel **P** have the gammadion alignment. By contrast, a green picture element **G** and a blue picture element **B** of the leftmost pixel **P,** a blue picture element **B** of the pixel **P** which is second from left, a red picture element **R** and a yellow picture element **Y** of the pixel **P** which is third from left, a red picture element **R** and a yellow picture element **Y** of the pixel **P** which is fourth from left, a red picture element **R,** a green picture element **G** and a yellow picture element **Y** of the pixel **P** which is fifth from left, and a green picture element **G** and a blue picture element **B** of the rightmost pixel **P** have the letter 8 alignment.

In the three left pixels, the type of alignment in the picture elements changes from left to right as gammadion, letter 8, letter 8, gammadion, gammadion, gammadion, letter 8, gammadion, letter 8, gammadion, gammadion, and letter 8. By contrast, in the three right pixels, the type of alignment in the picture elements changes from left to right as letter 8, gammadion, gammadion, letter 8, letter 8, letter 8, gammadion, letter 8, gammadion, letter 8, letter 8, and gammadion. Thus, in the repeat unit of alignment pattern, the alignment pattern of the left half (three left pixels **P**) and the alignment pattern of the right half (three right pixels **P**) are inverted to each other.

In the liquid crystal display device **300** having such a structure also, shifted exposure can be performed both in the row direction and in the column direction. Hereinafter, optical alignment processing performed on the pair of optical alignment films included in the liquid crystal display device **300** will be described.

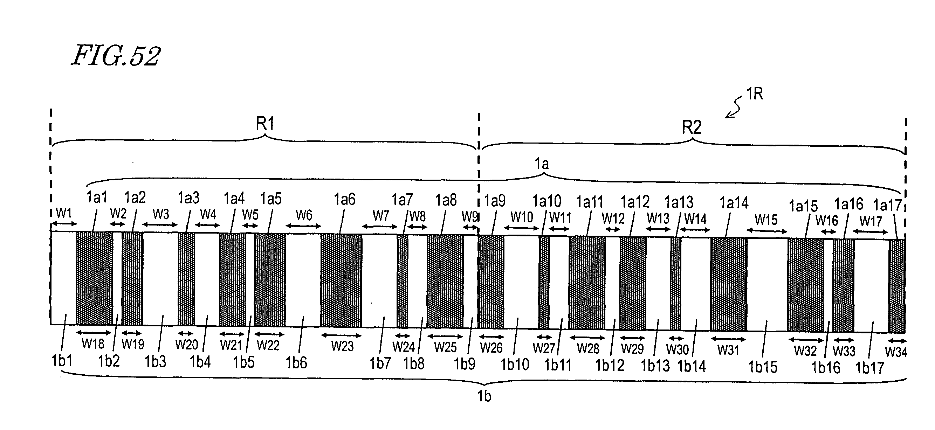

First, with reference to FIG. **52** through FIG. **54****,** optical alignment processing performed on an optical alignment film on a TFT substrate will be described.

First, a photomask **1R** shown in FIG. **52** is prepared. FIG. **52** shows a part of the photomask **1R,** and more specifically, an area corresponding to six pixels, which form the repeat unit of alignment pattern. As shown in FIG. **52****,** the photomask **1R** has a mask pattern including a plurality of light shielding parts **1a** extending like stripes parallel to the column direction (vertical direction) and a plurality of light transmitting parts **1b** located between the plurality of light shielding parts **1a.**

A width **W1** (width in the row direction) of a light transmitting part **1b1,** which is leftmost among the plurality of light transmitting parts **1b,** is equal to half of the length **L1** of the red picture element **R** (i.e., W1 = L1/2). A width **W2** of a light transmitting part **1b2,** which is second from left, is equal to half of the length **L4** of the green picture element **G** (i.e., W2 = L4/2). A width **W3** of a light transmitting part **1b3,** which is third from left, is equal to a sum of half of the length **L2** of the blue picture element **B** and half of the length **L3** of the yellow picture element **Y** (i.e., W3 = (L2 + L3)/2). A width **W4** of a light transmitting part **1b4,** which is fourth from left, is equal to half of the length **L1** of the red picture element **R** (i.e., W4 = L1/2).

A width **W5** of a light transmitting part **1b5,** which is fifth from left, is equal to half of the length **L4** of the green picture element **G** (i.e., W5 = L4/2). A width **W6** of a light transmitting part **1b6,** which is sixth from left, is equal to a sum of half of the length **L2** of the blue picture element **B** and half of the length **L3** of the yellow picture element **Y** (i.e., W6 = (L2 + L3)/2). A width **W7** of a light transmitting part **1b7,** which is seventh from left, is equal to a sum of half of the length **L1** of the red picture element **R** and half of the length **L4** of the green picture element **G** (i.e., W7 = (L1 + L4)/2). A width **W8** of a light transmitting part **1b8,** which is eighth from left, is equal to half of the length **L2** of the blue picture element **B** (i.e., W8 = L2/2).

A width **W9** of a light transmitting part **1b9,** which is ninth from left, is equal to half of the length **L3** of the yellow picture element **Y** (i.e., W9 = L3/2). A width **W10** of a light transmitting part **1b10,** which is 10th from left, is equal to a sum of half of the length **L1** of the red picture element **R** and half of the length **L4** of the green picture element **G** (i.e., W10 = (L1 + L4)/2). A width **W11** of a light transmitting part **1b11,** which is 11th from left, is equal to half of the length **L2** of the blue picture element **B** (i.e., W11 = L2/2. A width **W12** of a light transmitting part **1b12,** which is 12th from left, is equal to half of the length **L3** of the yellow picture element **Y** (i.e., W12 = L3/2).

A width **W13** of a light transmitting part **1b13,** which is 13th from left, is equal to half of the length **L1** of the red picture element **R** (i.e., W13 = L1/2). A width **W14** of a light transmitting part **1b14,** which is 14th from left, is equal to a sum of half of the length **L4** of the green picture element **G** and half of the length **L2** of the blue picture element **B** (i.e., W14 = (L4 + L2)/2). A width **W15** of a light transmitting part **1b15,** which is 15th from left, is equal to a sum of half of the length **L3** of the yellow picture element **Y** and half of the length **L1** of the red picture element **R** (i.e., W15 = (L3 + L1)/2). A width **W16** of a light transmitting part **1b16,** which is 16th from left, is equal to half of the length **L4** of the green picture element **G** (i.e., W16 = L4/2). A width **W17** of a light transmitting part **1b17,** which is 17th from left (rightmost), is equal to a sum of half of the length **L2** of the blue picture element **B** and half of the length **L3** of the yellow picture element **Y** (i.e., W17 = (L2 + L3)/2).

A width **W18** (width in the row direction) of a light shielding part **1a1,** which is leftmost among the plurality of light shielding parts **1a,** is equal to a sum of half of the length **L1** of the red picture element **R** and half of the length **L4** of the green picture element **G** (i.e., W18 = (L1 + L4)/2). A width **W19** of a light shielding part **1a2,** which is second from left, is equal to half of the length **L2** of the blue picture element **B** (i.e., W19 = L2/2). A width **W20** of a light shielding part **1a3,** which is third from left, is equal to half of the length **L3** of the yellow picture element **Y** (i.e., W20 = L3/2). A width **W21** of a light shielding part **1a4,** which is fourth from left, is equal to half of the length **L1** of the red picture element **R** (i.e., W21 = L1/2).

A width **W22** of a light shielding part **1a5,** which is fifth from left, is equal to a sum of half of the length **L4** of the green picture element **G** and half of the length **L2** of the blue picture element **B** (i.e., W22 = (L4 + L2)/2). A width **W23** of a light shielding part **1a6,** which is sixth from left, is equal to a sum of half of the length **L3** of the yellow picture element **Y** and half of the length **L1** of the red picture element **R** (i.e., W23 = (L3 + L1)/2). A width **W24** of a light shielding part **1a7,** which is seventh from left, is equal to half of the length **L4** of the green picture element **G** (i.e., W24 = L4/2). A width **W25** of a light shielding part **1a8,** which is eighth from left, is equal to a sum of half of the length **L2** of the blue picture element **B** and half of the length **L3** of the yellow picture element **Y** (i.e., W25 = (L2+ L3)/2).

A width **W26** of a light shielding part **1a9,** which is ninth from left, is equal to half of the length **L1** of the red picture element **R** (i.e., W26 = L1/2). A width **W27** of a light shielding part **1a10,** which is 10th from left, is equal to half of the length **L4** of the green picture element **G** (i.e., W27 = L4/2). A width **W28** of a light shielding part **1a11,** which is 11th from left, is equal to a sum of half of the length **L2** of the blue picture element **B** and half of the length **L3** of the yellow picture element **Y** (i.e., W28 = (L2 + L3)/2). A width **W29** of a light shielding part **1a12,** which is 12th from left, is equal to half of the length **L1** of the red picture element **R** (i.e., W29 = L1/2).

A width **W30** of a light shielding part **1a13,** which is 13th from left, is equal to half of the length **L4** of the green picture element **G** (i.e., W30 = L4/2). A width **W31** of a light shielding part **1a14,** which is 14th from left, is equal to a sum of half of the length **L2** of the blue picture element **B** and half of the length **L3** of the yellow picture element **Y** (i.e., W31 = (L2 + L3)/2). A width **W32** of a light shielding part **1a15,** which is 15th from left, is equal to a sum of half of the length **L1** of the red picture element **R** and half of the length **L4** of the green picture element **G** (i.e., W32 = (L1 + L4)/2). A width **W33** of a light shielding part **1a16,** which is 16th from left, is equal to half of the length **L2** of the blue picture element **B** (i.e., W33 = L2/2). A width **W34** of a light shielding part **1a17,** which is 17th from left (rightmost), is equal to half of the length **L3** of the yellow picture element **Y** (i.e., W34 = L3/2).

When the photomask **1R** shown in FIG. **52** is divided into an area **R1** corresponding to the left half (three left pixels **P**) of the minimum repeat unit of alignment pattern and an area **R2** corresponding to the right half (three right pixels P) thereof, the mask pattern of the left area **R1** and the mask pattern of the right area **R2** are negative/positive-inverted to each other. Namely, the light shielding parts **1a** of the right area **R2** are located at the positions of the light transmitting parts **1b** in the left area **R1,** and the light transmitting parts **1b** of the right area **R2** are located at the positions of the light shielding parts **1a** in the left area **R1.**

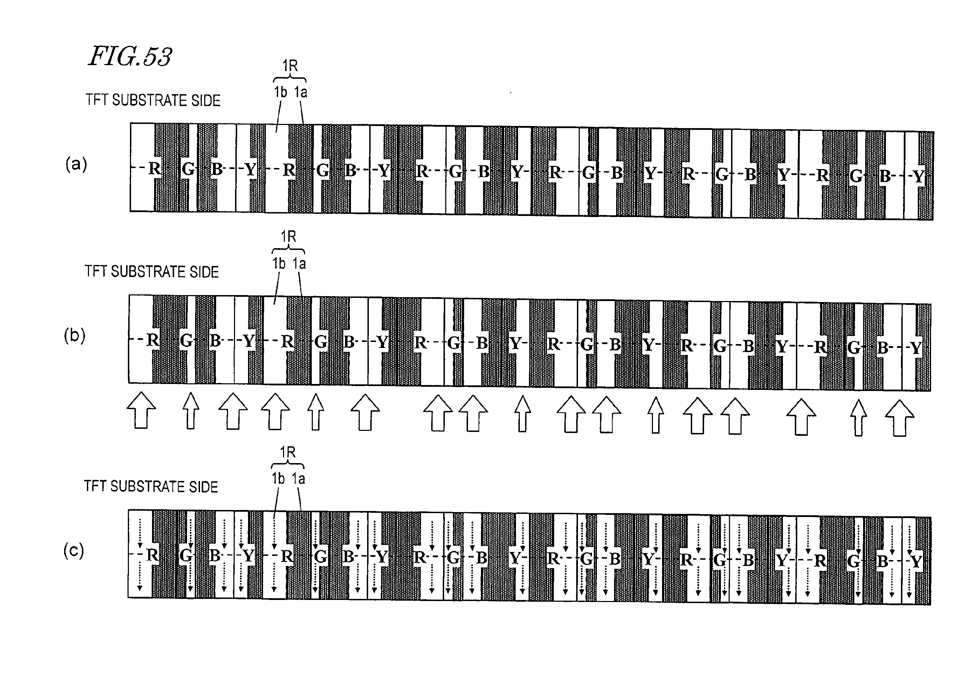

Next, as shown in FIG. **53(a)****,** the photomask **1** is located such that parts of the optical alignment film corresponding to a left half of the red picture element **R,** a right half of the green picture element **G,** a right half of the blue picture element **B** and a left half of the yellow picture element **Y** of the leftmost pixel **P,** and a left half of the red picture element **R,** a left half of the green picture element **G,** a right half of the blue picture element **B** and a left half of the yellow picture element **Y** of the pixel **P** which is second from left, overlap the light transmitting parts **1b.** At this point, parts corresponding to a right half of the red picture element **R,** a left half of the green picture element **G,** a left half of the blue picture element **B** and a right half of the yellow picture element **Y** of the pixel **P** which is third from left, and a right half of the red picture element **R,** a left half of the green picture element **G,** a left half of the blue picture element **B** and a right half of the yellow picture element **Y** of the pixel **P** which is fourth from left, also overlap the light transmitting parts **1b.** Parts corresponding to a right half of the red picture element **R,** a right half of the green picture element **G,** a left half of the blue picture element **B** and a right half of the yellow picture element **Y** of the pixel **P** which is fifth from left, and a left half of the red picture element **R,** a right half of the green picture element **G,** a right half of the blue picture element **B** and a left half of the yellow picture element **Y** of the pixel **P** which is sixth from left (rightmost), also overlap the light transmitting parts **1b.**

Next, as shown in FIG. **53(b)****,** ultraviolet rays are directed obliquely in the direction represented by the arrows. As a result of this exposure step, as shown in FIG. **53(c)****,** the parts of the optical alignment film overlapping the light transmitting parts **1b** are given a prescribed pretilt direction. The pretilt direction given at this point is the same as the pretilt direction **PA1** shown in FIG. **2(a)****.**

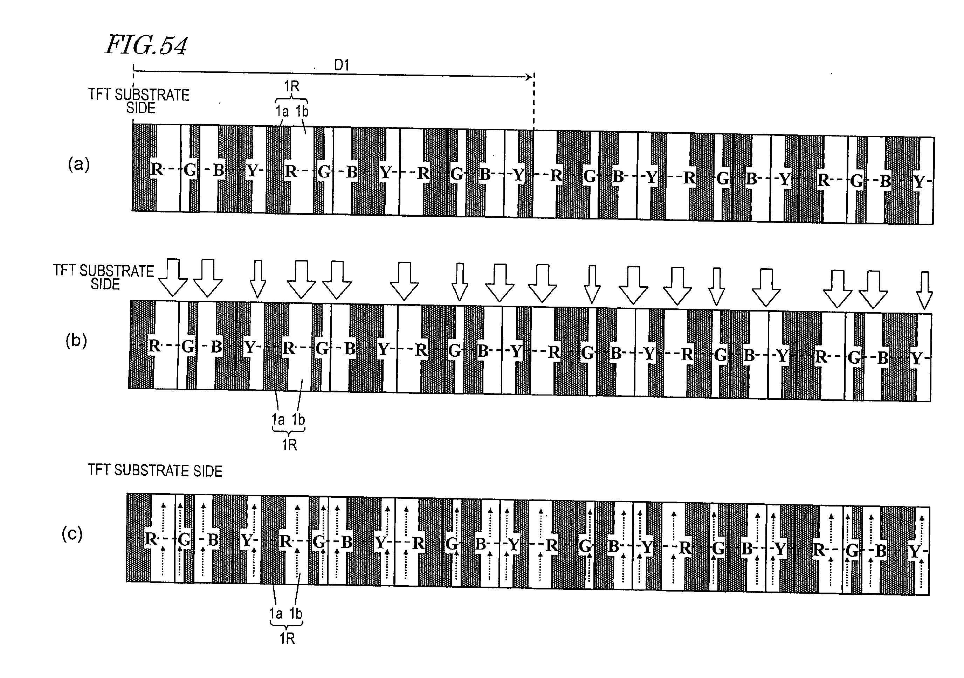

Next, as shown in FIG. **54(a)****,** the photomask **1R** is shifted in the row direction by a prescribed distance **D1.** In this example, the prescribed distance **D1** is three times the length **PL1** (see FIG. 51(a)) of the pixel **P** along the row direction. Namely, the photomask **1R** is shifted by three pixels in the row direction. As a result of this movement, the parts of the optical alignment film corresponding to the right half of the red picture element **R,** the left half of the green picture element **G,** the left half of the blue picture element **B** and the right half of the yellow picture element **Y** of the leftmost pixel **P,** and the right half of the red picture element **R,** the right half of the green picture element **G,** the left half of the blue picture element **B** and the right half of the yellow picture element **Y** of the pixel **P** which is second from left, overlap the light transmitting parts **1b** of the photomask **1R.** At this point, the parts corresponding to the left half of the red picture element **R,** the right half of the green picture element **G,** the right half of the blue picture element **B** and the left half of the yellow picture element **Y** of the pixel **P** which is third from left, and the left half of the red picture element **R,** the right half of the green picture element **G,** the right half of the blue picture element **B** and the left half of the yellow picture element **Y** of the pixel **P** which is fourth from left, also overlap the light transmitting parts **1b.** The parts corresponding to the left half of the red picture element **R,** the left half of the green picture element **G,** the right half of the blue picture element **B** and the left half of the yellow picture element **Y** of the pixel **P** which is fifth from left, and the right half of the red picture element **R,** the left half of the green picture element **G,** the left half of the blue picture element **B** and the right half of the yellow picture element **Y** of the pixel **P** which is sixth from left (rightmost), also overlap the light transmitting parts **1b.**

Next, as shown in FIG. **54(b)****,** ultraviolet rays are directed obliquely in the direction represented by the arrows. As a result of this exposure step, as shown in FIG. **54 (c)****,** the remaining parts of the optical alignment film, namely, the parts thereof overlapping the post-movement photomask **1R** are given a prescribed pretilt direction. The pretilt direction given at this point is the same as the pretilt direction **PA2** shown in FIG. **2(a)** and is antiparallel to the pretilt direction shown in FIG. **53(c)****.**

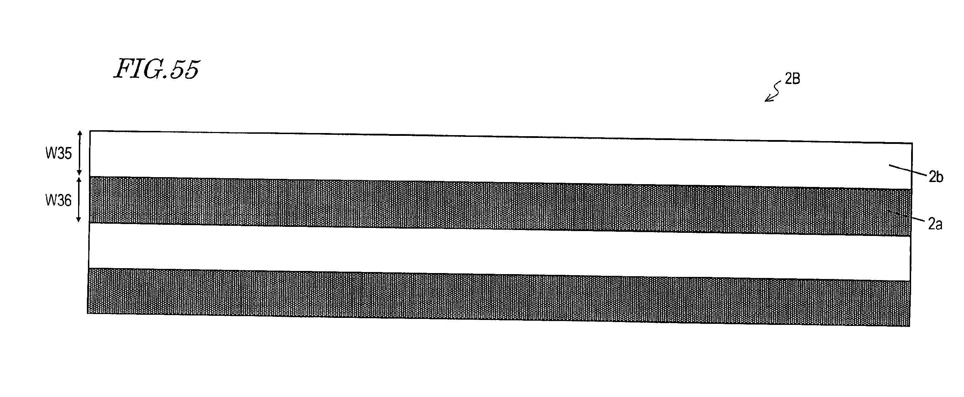

As a result of the above-described optical alignment processing, in an area of the optical alignment film on the TFT substrate corresponding to each picture element, two areas having antiparallel pretilt directions to each other are formed. Now, with reference to FIG. **55** through FIG. **57****,** the optical alignment processing performed on the optical alignment film on a CF substrate will be described.

First, a photomask **2B** shown in FIG. **55** is prepared. FIG. **55** shows a part of the photomask **2B,** and more specifically, an area corresponding to 12 pixels (12 pixels **P** arranged in 2 rows × 6 columns). As shown in FIG. **55****,** the photomask **2B** has a mask pattern including a plurality of light shielding parts **2a** extending like stripes parallel to the row direction (horizontal direction) and a plurality of light transmitting parts **2b** located between the plurality of light shielding parts **2a.** A width **W35** of each of the plurality of light transmitting parts **2b** (width in the column direction) is half of the length **L5** of each picture element along the column direction (i.e., W35 = L5/2). A width **W36** of each of the plurality of light shielding parts **2a** (width in the column direction) is also half of the length **L5** of each picture element along the column direction (i.e., W36 = L5/2; W35 + W36 = L5).

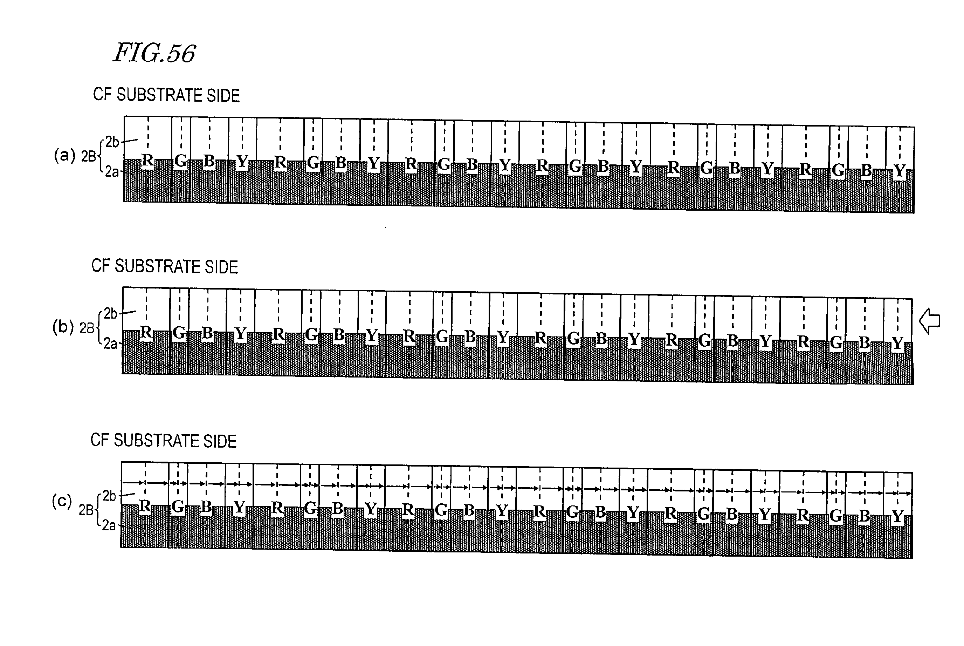

Next, as shown in FIG. **56(a)****,** the photomask **2B** is located such that a part of the optical alignment film corresponding to top halves of the picture elements overlaps the light transmitting part **2b.** In other words, the photomask **2B** is located such that a part of the optical alignment film corresponding to bottom halves of the picture elements overlaps the light shielding part **2a.**

Next, as shown in FIG. **56(b)****,** ultraviolet rays are directed obliquely in the direction represented by the arrow. As a result of this exposure step, as shown in FIG. 56(c), the part of the optical alignment film corresponding to the top halves of the picture elements is given a prescribed pretilt direction. The pretilt direction given at this point is the same as the pretilt direction PB1 shown in FIG. 2(b).

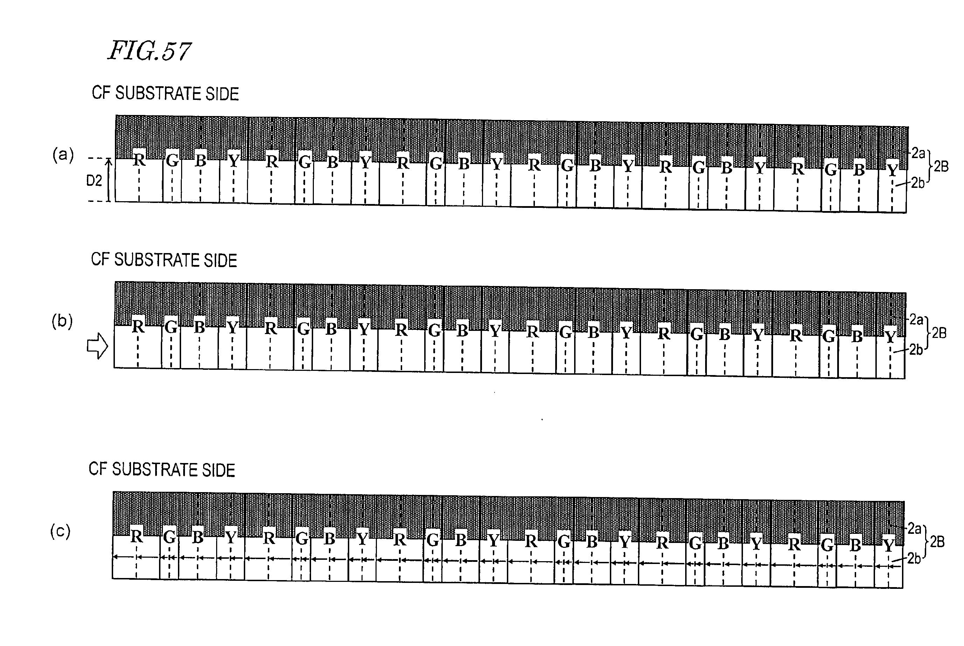

Next, as shown in FIG. 57(a), the photomask 2B is shifted in the column direction by a prescribed distance D2. In this example, the prescribed distance D2 is 1/2 of the length PL2 (see FIG. 51(a)) of the pixel P along the column direction, and is half (1/2) of the length L5 of each picture element along the column direction. Namely, the photomask **2B** is shifted by half of a pixel in the column direction. As a result of this movement, the part of the optical alignment film corresponding to the bottom halves of the picture elements overlaps the light transmitting part **2b** of the photomask **2B.** Namely, the part corresponding to the top halves of the picture elements overlaps the light shielding part **2a** of the photomask **2B.**

Next, as shown in FIG. **57(b)****,** ultraviolet rays are directed obliquely in the direction represented by the arrow. As a result of this exposure step, as shown in FIG. **57 (c)****,** the remaining part of the optical alignment film, namely, the part thereof corresponding to the bottom halves of the picture elements is given a prescribed pretilt direction. The pretilt direction given at this point is the same as the pretilt direction **PB2** shown in FIG. **2(b)** and is antiparallel to the pretilt direction shown in FIG. **56(c)****.**

As a result of the above-described optical alignment processing, in an area of the optical alignment film on the CF substrate corresponding to each picture element, two areas having antiparallel pretilt directions to each other are formed. By bonding together the TFT substrate and the CF substrate processed with the optical alignment in the above-described manner, the liquid crystal display device 300 shown in FIG. **51** in which each picture element is divided into liquid crystal domains having different alignment directions is obtained.

In the production method of the liquid crystal display device **300** also, in the step of performing the optical alignment processing on the optical alignment film on the TFT substrate, the two exposure steps are performed by use of one, common photomask **1R.** In the step of performing the optical alignment processing on the optical alignment film on the CF substrate, the two exposure steps are performed by use of one, common photomask **2B.** Namely, the shifted exposure can be performed in the row direction in which there are four lengths of picture elements in addition to the column direction in which there is one length of picture elements. Therefore, the optical alignment processing can be realized at low cost and in a short takt time. As described above, in the liquid crystal display device **300** in this embodiment, there are picture elements having different arrangement orders of the liquid crystal domains **D1** through **D4** (having different shapes of the dark area **DR**) in a mixed state, and an identical alignment pattern appears in repetition along the row direction, with six pixels being the minimum unit. Therefore, the liquid crystal display device **300** in this embodiment can be produced by the method in which the shifted exposure is performed for the optical alignment processing.

It is sufficient that the mask patterns of the two areas **R1** and **R2** of the photomask **1R** are negative/positive-inverted to each other, and the arrangement of the light shielding parts **1a** and the light transmitting parts **1b** of the photomask **1R** is not limited to that shown in FIG. **52****.** Hereinafter, the designing concept of the photomask **1R** will be described.

First, regarding each of the red picture element **R,** the green picture element **G,** the blue picture element **B** and the yellow picture element **Y** included in the three left pixels or the three right pixels among the six pixels, which form the minimum repeat unit of alignment pattern, it is determined whether the left half or the right half is to be exposed by the first exposure step. As a result, a mask pattern (arrangement of the light shielding parts **1a** and the light transmitting parts **1b**) of one of the two areas **R1** and **R2** is determined. For the mask pattern, there are two alternatives for each of the 12 picture elements. Therefore, there are 4096 (= 2¹²) alternatives in total. Next, the mask pattern determined for one of the areas is negative/positive-inverted, and the resultant mask pattern is determined as the mask pattern of the other area. In this manner, a specific arrangement of the light shielding parts **1a** and the light transmitting parts **1b** of the photomask **1R** can be determined. Since there are 4096 alternatives for the mask pattern of one of the areas, there are also 4096 variations of the photomask **1R.**

In Embodiments 1, 2 and 3 described above, the minimum repeat unit of alignment pattern is two pixels, four pixels and six pixels, respectively. The present invention is not limited to these. The minimum repeat unit of alignment pattern may be any even number of pixels, namely, 2n pixels (n is an integer of 1 or greater). It is sufficient that in the 2n pixels, which form the minimum repeat unit of alignment pattern, there are picture elements having different alignment orders of the liquid crystal domains **D1** through **D4** in a mixed state.

The minimum repeat unit of alignment pattern does not need to be 2n pixels continuous along the row direction. In the case where there are a plurality of lengths of picture elements along the column direction, the minimum repeat unit of alignment pattern may be 2n pixels continuous along the column direction.

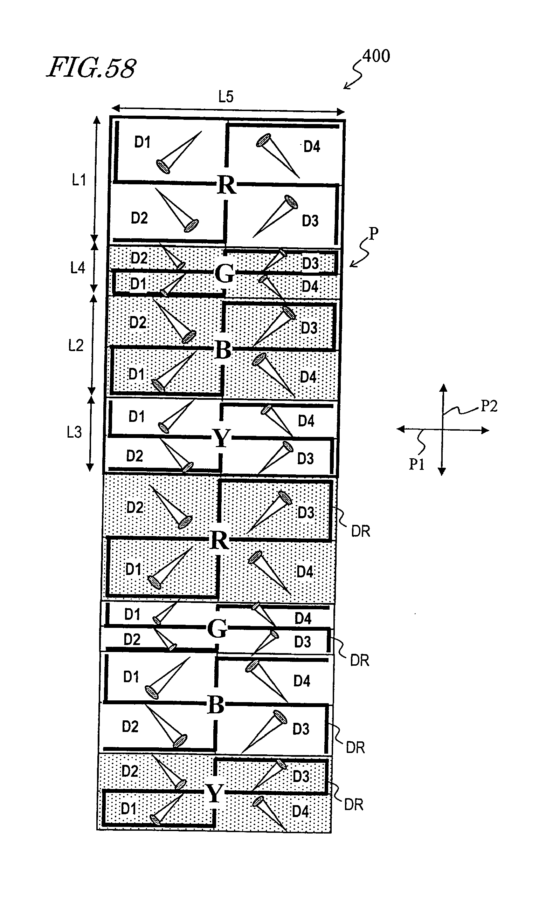

For example, in a liquid crystal display device **400** shown in FIG. **58****,** the four picture elements defining each pixel **P** are arranged in 4 rows × 1 column, and all the four picture elements have different lengths along the column direction. Specifically, a length **L1** of the red picture element **R** along the column direction, a length **L2** of the blue picture element **B** along the column direction, a length **L3** of the yellow picture element **Y** along the column direction, and a length **L4** of the green picture element **G** along the column direction are longer in this order (i.e., L1 > L2 > L3 > L4). By contrast, all the picture elements have an equal length **L5** along the row direction. In this manner, in the pixel **P** of the liquid crystal display device **400,** there is one length of picture elements in the row direction, whereas there are four lengths of picture elements in the column direction. In the liquid crystal display device **400,** as shown in the figure, two pixels continuous along the column direction form the minimum repeat unit of alignment pattern. Therefore, shifted exposure can be performed in the column direction in addition to the row direction.

The minimum repeat unit of alignment pattern can be 2n pixels in the case where a mask pattern of an area of the photomask corresponding to certain n pixel(s) (n is an integer of 1 or greater) continuous along the row direction (or the column direction) and a mask pattern of an area of the photomask corresponding to another n pixel(s) adjacent to the certain n pixel(s) along the row direction (or the column direction) are negative/positive-inverted to each other.

In the step of moving the photomask between the two exposure steps, the photomask is shifted by n pixel(s) in the row direction or the column direction. In this photomask moving step, it may be occasionally difficult to shift the photomask by a distance longer than 10 pixels. In an existing exposure device, the upper limit of the range in which the photomask can be mechanically moved is about 2 mm (2000 µm). It is mechanically difficult to move the photomask by a longer distance, and it is also difficult to guarantee a sufficient alignment precision of shifting. In the meantime, in a liquid crystal display panel designed for a TV, the size of a pixel is about 200 µm at the smallest. Therefore, it is preferable that the distance by which the photomask is moved corresponds to 10 (= 2000/200) pixels or less. For this reason, it is preferable that the minimum repeat unit of alignment pattern is 2 pixels or greater and 20 pixels or less (i.e., 1 ≤ n ≤ 10).

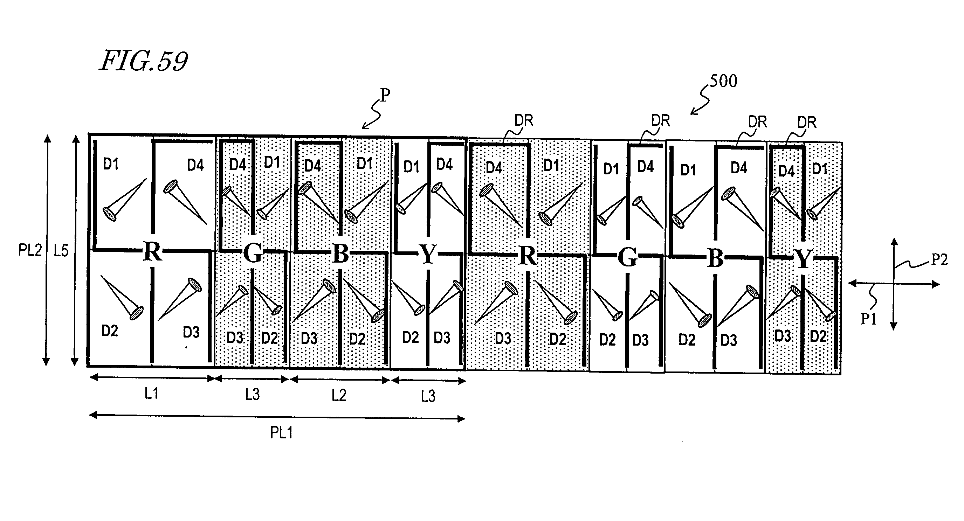

In the above embodiments, there are four lengths of picture elements along the row direction, and all the four picture elements defining each pixel **P** have different sizes. The present invention is not limited to this. The present invention is preferably usable regardless of the number of lengths of picture elements along the row direction or the column direction. For example, there are two lengths of picture elements along the row direction, or there are three lengths of picture elements along the row direction as in a liquid crystal display device **500** shown in FIG. **59****.**

In the liquid crystal display device **500** as shown in FIG. **59****,** a green picture element **G** and a yellow picture element **Y** both have an equal length **L3** along the row direction, and a length **L1** of a red picture element **R** along the row direction, a length **L2** of a blue picture element **B** along the row direction, and the length **L3** of each of the green picture element **G** and the yellow picture element **Y** along the row direction are longer in this order (i.e., L1 > L2 > L3). By contrast, all the picture elements have an equal length **L5** along the column direction. In this manner, in the pixel **P** of the liquid crystal display device **500,** there is one length of picture elements in the column direction, whereas there are three lengths of picture elements in the row direction. In the liquid crystal display device **500** also, there are picture elements having different alignment orders of the liquid crystal domains **D1** through **D4** in a mixed state, and an identical alignment pattern appears in repetition along the row direction, with 2n pixels being the minimum unit (FIG. **59** shows a case where the minimum unit is two pixels). Owing to such a structure, shifted exposure can be performed.

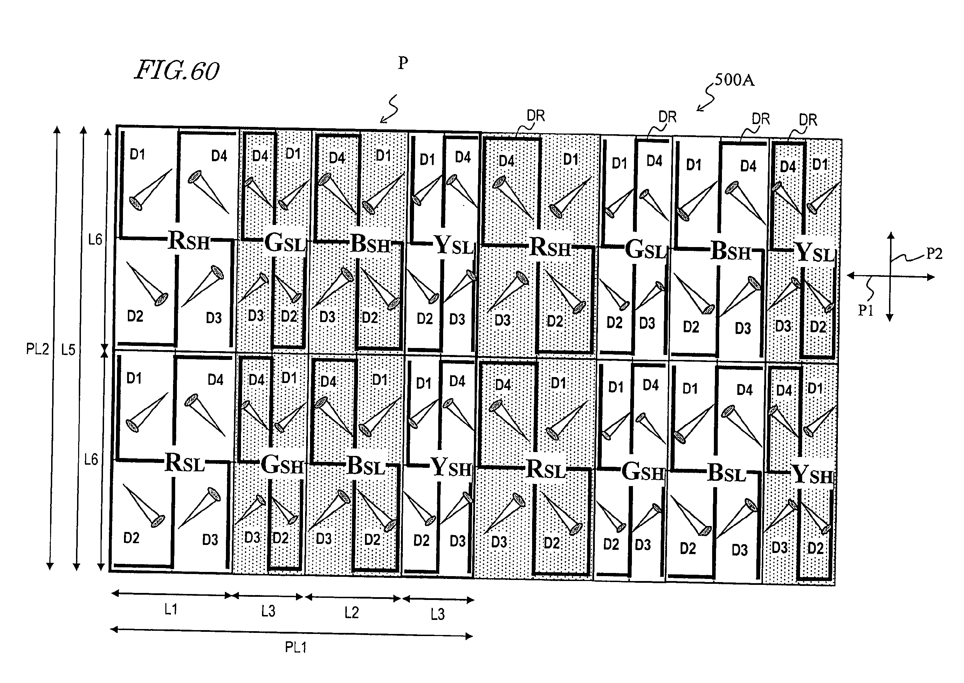

As in a liquid crystal display device **500A** shown in FIG. **60****,** a picture element division driving technology may be used. Unlike the liquid crystal display device **500** shown in FIG. **59****,** in the liquid crystal display device **500A,** each of picture elements defining each pixel **P** includes a plurality of sub picture elements capable of applying different voltages to the corresponding parts of the liquid crystal layer.

Specifically, a red picture element **R** includes a dark sub picture element **R_{SL}** for providing a relatively low luminance and a bright sub picture element **R_{SH}** for providing a relatively high luminance. Similarly, a green picture element **G** includes a dark sub picture element **G_{SL}** and a bright sub picture element **G_{SH}.** A blue picture element **B** includes a dark sub picture element **B_{SL}** and a bright sub picture element **B_{SH}.** A yellow picture element **Y** includes a dark sub picture element **Y_{SL}** and a bright sub picture element **Y_{SH}.** In each picture element, the dark sub picture element and the bright picture element are arranged in the column direction (i.e., in one column). As a specific structure for realizing the picture element division driving, any of various structures as disclosed in Patent Documents 3 and 4 is usable.

The dark sub picture element and the bright sub picture element included in each picture element are each divided into four domains having different alignment directions. Specifically, each sub picture element includes four liquid crystal domains **D1** through **D4** respectively having tilt directions of about 225°, about 315°, about 45° and about 135° when a voltage is applied. The tilt directions of the liquid crystal domains **D1** through **D4** have an angle of about 45° with respect to transmission axes **P1** and **P2** of a pair of polarizing plates located in crossed Nicols. The liquid crystal domains **D1** through **D4** are arranged in a matrix of 2 rows × 2 columns.

As described above, in the liquid crystal display device **500A,** one picture element includes a plurality of sub picture elements, and four liquid crystal domains **D1** through **D4** are formed in each sub picture element. In the case where the four liquid crystal domains **D1** through **D4** are formed in each sub picture element also, a dark area **DR** appears which has a different shape in accordance with the arrangement of the liquid crystal domains **D1** through **D4** in the sub picture element.

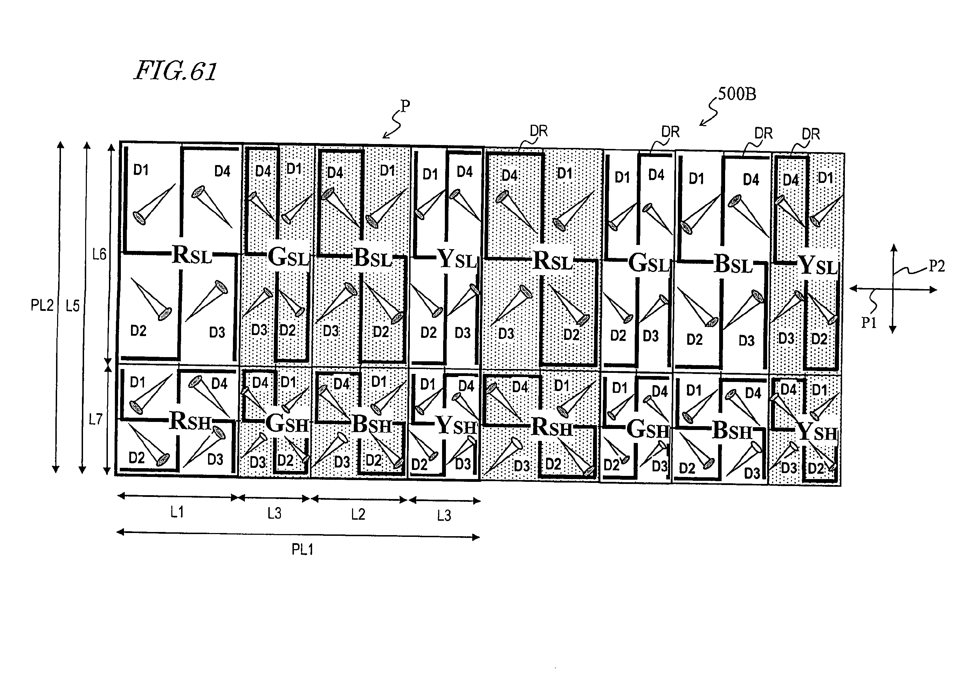

FIG. **60** shows a structure in which the dark sub picture elements **R_{SL}, G_{SL}, B_{SL}** and **Y_{SL}** and the bright sub picture elements **R_{SH}, G_{SH}, B_{SH}** and **Y_{SH}** have an equal length **L6** along the column direction. Alternatively, as in a liquid crystal display device **500B** shown in FIG. **61****,** the length **L6** of each of the dark sub picture elements **R_{SL}, G_{SL},** B_{SL} and **Y_{SL}** along the column direction may be different from a length L7 of each of the bright sub picture elements R_{SH}, G_{SH}, B_{SH} and Y_{SH} along the column direction. In the liquid crystal display device 500B, the length L6 of each of the dark sub picture elements R_{SL}, G_{SL}, B_{SL} and Y_{SL} along the column direction is N times (N is an integer of 2 or greater) the length L7 of each of the bright sub picture elements R_{SH}, G_{SH}, B_{SH} and Y_{SH} along the column direction (i.e., L6 = N·L7).

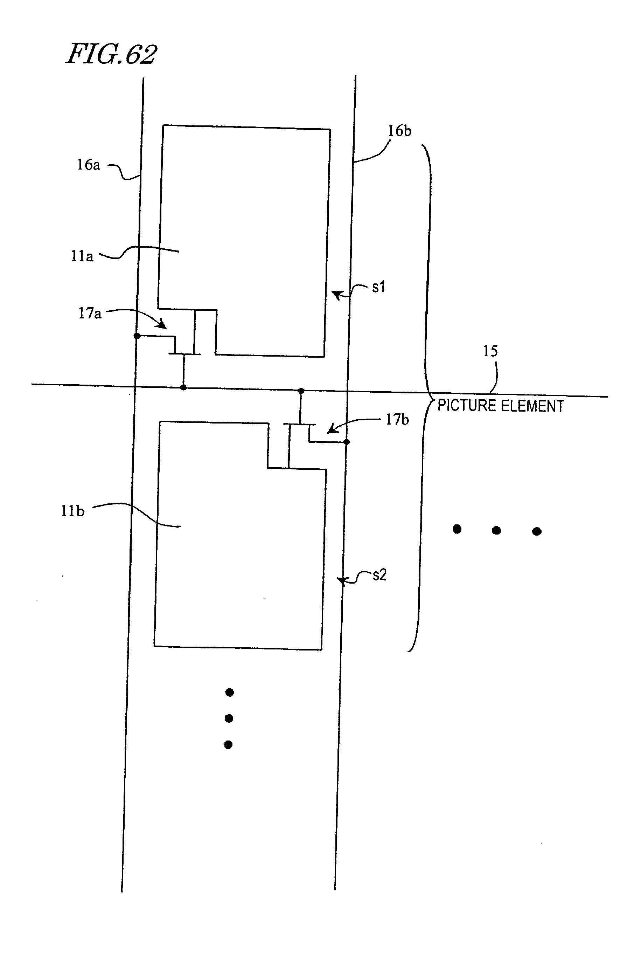

Now, a specific structure for performing the picture element division driving will be described. FIG. 62 shows an example of specific structure of each picture element. As shown in FIG. 62, the picture element includes a first sub picture element s1 and a second sub picture element s2 which can provide different levels of luminance from each other. Namely, for displaying a gray scale, the picture element can be driven such that an effective voltage applied to a part of the liquid crystal layer corresponding to the first sub picture element **s1** is different from an effective voltage applied to a part of the liquid crystal layer corresponding to the second sub picture element s2. One of the first sub picture element **s1** and the second sub picture element s2 is each of the dark sub picture elements **R_{SL}**, G_{SL}, B_{SL} and Y_{SL}, shown in FIG. 60 and FIG. 61 and the other of the first sub picture element **s1** and the second sub picture element s2 is each of the bright sub picture elements **R_{SH}, G_{SH}, B_{SH}** and **Y_{SH}** shown in FIG. **60** and FIG. **61****.** The number of sub picture elements included in one picture element (also referred to as a "dividing number of the picture element") is not limited to 2, and may be, for example, 4.

When a picture element is divided into a plurality of sub picture elements, for example, the sub picture element **s1** and the sub picture element **s2,** which can provide different levels of luminance from each other, the picture element is observed in the state where different γ characteristics are present in a mixed state. Therefore, the viewing angle dependence of the γ characteristic (the problem that the γ characteristic as observed in a front direction and the γ characteristic as observed in an oblique direction are different from each other) is alleviated. The γ characteristic is gray scale dependence of the display luminance. The γ characteristic as observed in the front direction being different from the γ characteristic as observed in an oblique direction means that the gray scale display state is different in accordance with the direction of observation.

A structure for applying different effective voltages to the parts of the liquid crystal layer corresponding to the first sub picture element **s1** and the second sub picture element **s2** may be any of the structures disclosed in, for example, Patent Documents 3 and 4.

For example, a structure shown in FIG. **62** can be adopted. In a general liquid crystal display device which does not perform picture element division driving, one picture element includes one picture element electrode connected to a signal line via a switching element (e.g., TFT). By contrast, the one picture element shown in FIG. **62** includes two sub picture element electrodes **11a** and **11b** respectively connected to different signal lines **16a** and **16b** via corresponding TFTs **17a** and **17b.**

The first sub picture element **s1** and the second sub picture element **s2** form one picture element. Therefore, gate electrodes of the TFTs **17a** and **17b** are connected to a common scanning line (gate line) **15** and are controlled to be turned on or off by the same scanning signal. Signal lines (source lines) **16a** and **16b** are supplied with signal voltages (gray scale voltages) such that the first sub picture element **s1** and the second sub picture element **s2** provide different levels of luminance. The signal voltages supplied to the signal lines **16a** and **16b** are adjusted such that an average luminance of the first sub picture element **s1** and the second sub picture element **s2** matches the picture element luminance indicated by a display signal (video signal) input from an external device.

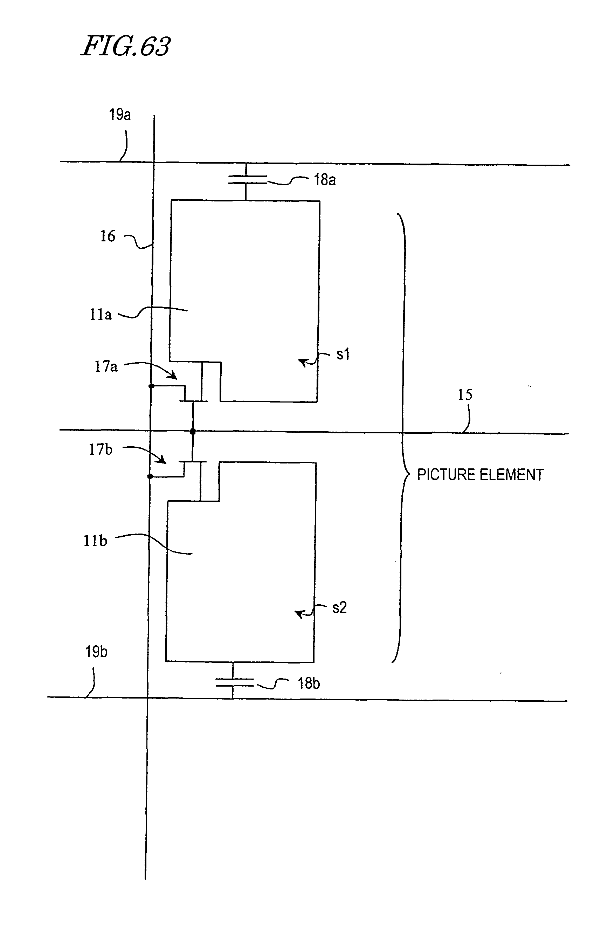

Alternatively, a structure shown in FIG. **63** may be adopted. In the structure shown in FIG. **63****,** source electrodes of the TFTs **17a** and **17b** are connected to a common (same) signal line **16.** The first sub picture element **s1** and the second sub picture element **s2** respectively include storage capacitors (CS) **18a** and **18b.** The storage capacitors **18a** and **18b** are respectively connected to storage capacitor lines (CS lines) **19a** and **19b.** The storage capacitors **18a** and **18b** respectively include storage capacitor electrodes electrically connected to the sub picture element electrodes **11a** and **11b**, storage capacitor counter electrodes electrically connected to the storage capacitor lines **19a** and **19b**, and an insulating layer provided between these electrodes (the storage capacitor electrodes, the storage capacitor counter electrodes, and the insulating layer are not shown). The storage capacitor counter electrodes of the storage capacitors **18a** and **18b** are independent from each other and may be supplied with voltages different from each other (referred to as "storage capacitor counter voltages") from the storage capacitor lines **19a** and **19b.** By supplying different the storage capacitor counter voltages to the storage capacitor counter electrodes, the effective voltage to be applied to the part of the liquid crystal layer corresponding to the first sub picture element **s1** can be made different from the effective voltage to be applied to the part of the liquid crystal layer corresponding to the second picture element **s2,** by use of capacitance division.

In the structure shown in FIG. **62****,** the first sub picture element **s1** and the second sub picture element **s2** are respectively connected to the TFTs **17a** and **17b** which are independent from each other. The source electrodes of the TFTs **17a** and **17b** are respectively connected to the signal lines **16a** and **16b.** Accordingly, any effective voltage can be applied to a part of the liquid crystal layer corresponding to each of the plurality of sub picture elements **s1** and **s2.** However, the number of the signal lines (**16a, 16b**) is twice the number of the signal lines in a liquid crystal display device which does not perform the picture element division driving, and the number of signal line driving circuits also needs to be twice the number of signal line driving circuits in such a liquid crystal display device.

By contrast, with the structure shown in FIG. **63**, the sub picture element electrodes **11a** and **11b** do not need to be supplied with different signal voltages. Thus, the TFTs **17a** and **17b** may be connected to the common signal line **16** and supplied with the same signal voltage. Accordingly, the number of the signal lines **16** is the same as that in a liquid crystal display device which does not perform picture element division driving, and the structure of the signal line driving circuits can be the same as that usable in a liquid crystal display device which does not perform picture element division driving.

In the above embodiments, each pixel **P** is defined by four picture elements. The present invention is not limited to this. Each pixel **P** may be defined by five or more picture elements. For example, each pixel **P** may be defined by five picture elements, i.e., a red picture element **R,** a green picture element **G,** a blue picture element **B,** a yellow picture element **Y** and a cyan picture element for displaying cyan. Alternatively, each pixel **P** may be defined by six picture elements, i.e., the above-mentioned picture elements and a magenta picture element for displaying magenta. Still alternatively, each pixel **P** may be defined by three picture elements (e.g., a red picture element **R,** a green picture element **G** and a blue picture element **B**). Namely, there is no specific limitation on the number of primary colors used for display, and the present invention is usable for a multiple primary color display device and also for a three primary color display device.

In the case where each pixel **P** is defined by an odd number of picture elements also, it is preferable that the difference between the number of picture elements having the gammadion alignment and the number of picture elements having the letter 8 alignment in one pixel is as small as possible. Therefore, in the case where each pixel **P** is defined by an odd number of picture elements, an alignment pattern in which the difference between the number of picture elements having the gammadion alignment and the number of picture elements having the letter 8 alignment is 1 is most preferable. Summarizing the case where each pixel **P** is defined by an odd number of picture elements and the case where each pixel **P** is defined by an even number of picture elements, it is preferable that in n pixel(s) which is half on one side of 2n pixels, which form the repeat unit of alignment pattern, the difference between the number of picture elements having the gammadion alignment and the number of picture elements having the letter 8 alignment is 0 or 1, and that in n pixel(s) which is half on the other side of the 2n pixels, the difference between the number of picture elements having the gammadion alignment and the number of picture elements having the letter 8 alignment is 0 or 1.

### (EMBODIMENT 4)

In the above, an effect is described that even in the case where one pixel includes a picture element having a different size from that of another picture element, the shifted exposure can be performed. The present invention provides another effect that even in the case where a positional shift occurs when the TFT substrate and the CF substrate are bonded together (hereinafter, the positional shift will be referred to as a "bonding shift"), reduction of the display quality which would otherwise be caused by a color shift when the display plane is observed in an oblique direction can be suppressed. Hereinafter, this effect will be specifically described.

As described above, International Application PCT/JP2010/062585 proposes a technology for realizing the shifted exposure even in the case where there are two lengths of picture elements along the row direction and/or the column direction in one pixel. However, with this technology, when the bonding shift occurs, a color shift may be visually recognized when the display plane is observed in an oblique direction.

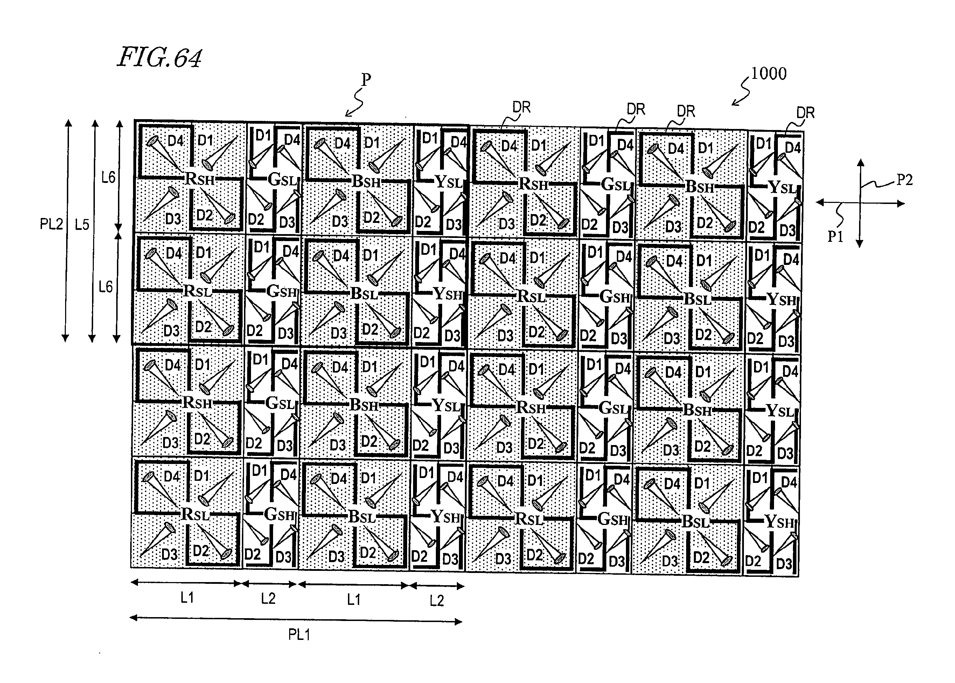

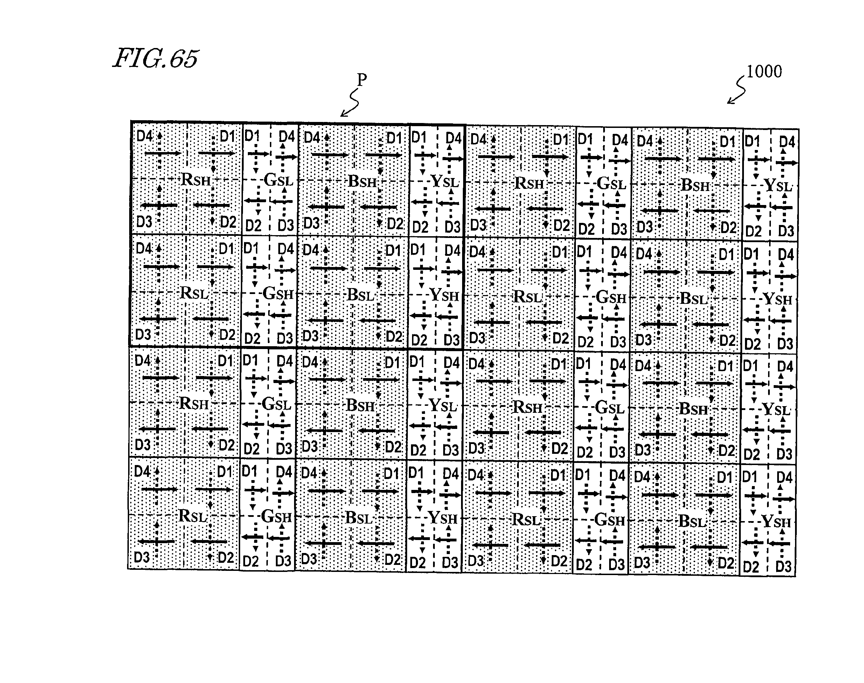

FIG. **64** and FIG. **65** show a liquid crystal display device **1000** obtained by the technology described in International Application PCT/JP2010/062585. FIG. **64** and FIG. **65** is each a plan view showing four pixels **P** of the liquid crystal display device **1000,** which are arranged in 2 rows × 2 columns.

For the liquid crystal display device **1000,** the picture element division driving technology is used. Therefore, a red picture element **R** includes a dark sub picture element **R_{SL}** for providing a relatively low luminance and a bright sub picture element **R_{SH}** for providing a relatively high luminance. Similarly, a green picture element **G** includes a dark sub picture element **G_{SL}** and a bright sub picture element **G_{SH}.** A blue picture element **B** includes a dark sub picture element **B_{SL}** and a bright sub picture element **B_{SH}.** A yellow picture element **Y** includes a dark sub picture element **Y_{SL}** and a bright sub picture element **Y_{SH}.** In each picture element, the dark sub picture element and the bright picture element are arranged in the column direction (i.e., in one column). The dark sub picture element and the bright picture element included in each picture element is each divided into four areas having different alignment directions. Namely, each sub picture element includes four liquid crystal domains **D1** through **D4.**

In the liquid crystal display device **1000,** the red picture element **R** and the blue picture element **B** both have an equal length **L1** along the row direction. The green picture element **G** and the yellow picture element **Y** both have an equal length **L2** along the row direction. The former length **L1** is longer than the latter length **L2** (i.e., L1 > L2). By contrast, all the picture elements have an equal length **L5** along the column direction. In this manner, in the pixel **P** of the liquid crystal display device **1000,** there is one length of picture elements in the column direction, whereas there are two lengths of picture elements in the row direction. The dark sub picture elements **R_{SL}, G_{SL}, B_{SL}** and **Y_{SL}** and the bright sub picture elements **R_{SH}**, **G_{SH}, B_{SH}** and **Y_{SH}** have an equal length **L6** along the column direction.

In each of the sub picture elements of the red picture element **R** and the blue picture element **B,** the liquid crystal domains **D1** through **D4** are located in the order of top right, bottom right, bottom left and top left (i.e., clockwise from top right). Therefore, the dark area **DR** appearing in each sub picture element of the red picture element **R** and the blue picture element **B** is generally letter 8-shaped. By contrast, in each of the sub picture elements of the green picture element **G** and the yellow picture element **Y,** the liquid crystal domains **D1** through **D4** are located in the order of top left, bottom left, bottom right and top right (i.e., counterclockwise from top left). Therefore, the dark area **DR** appearing in each sub picture element of the green picture element **G** and the yellow picture element **Y** is generally gammadion-shaped.

In this manner, in the liquid crystal display device **1000,** the red picture element **R** and the blue picture element **B** have a different alignment pattern of the liquid crystal domains **D1** through **D4** from that of the green picture element **G** and the yellow picture element **Y.** In one pixel **P,** there are picture elements having the gammadion alignment and the picture elements having letter 8 alignment in a mixed state. It should be noted that as can be seen from FIG. **64** and FIG. **65****,** in the liquid crystal display device **1000,** an identical alignment pattern appears in repetition in the liquid crystal layer along the row direction, with 1/2 pixel being the minimum unit, and an identical alignment pattern appears in repetition in the liquid crystal layer along the column direction also, with 1/2 pixel being the minimum unit. Namely, the minimum repeat unit of alignment pattern is not an even number of pixels (2n pixels) .

In the liquid crystal display device **1000** having the above-described structure also, shifted exposure can be performed on optical alignment films on a TFT substrate and a CF substrate. Hereinafter, optical alignment processing performed on the optical alignment films included in the liquid crystal display device **1000** will be described.

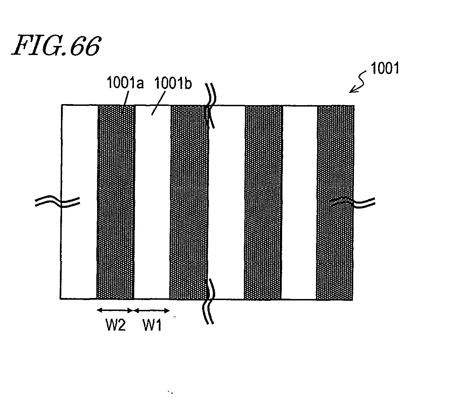

First, with reference to FIG. **66** through FIG. **68****,** optical alignment processing performed on the optical alignment film on the TFT substrate will be described.

First, a photomask **1001** shown in FIG. **66** is prepared. As shown in FIG. **66****,** the photomask 1001 includes a plurality of light shielding parts **1001a** extending like stripes parallel to the column direction (vertical direction) and a plurality of light transmitting parts **1001b** located between the plurality of light shielding parts **1001a.** A width **W1** (width in the row direction) of each of the plurality of light transmitting parts **1001b** is equal to a sum of half of the length **L1** of each of the red picture element **R** and the blue picture element **B** along the row direction and half of the length **L2** of each of the green picture element **G** and the yellow picture element **Y** along the row direction (i.e., W1 = (L1 + L2)/2). A width **W2** (width in the row direction) of each of the plurality of light shielding parts **1001a** is also equal to a sum of half of the length **L1** of each of the red picture element **R** and the blue picture element **B** along the row direction and half of the length **L2** of each of the green picture element **G** and the yellow picture element **Y** along the row direction (i.e., W2 = (L1 + L2)/2; W1 + W2 = L1 + L2).

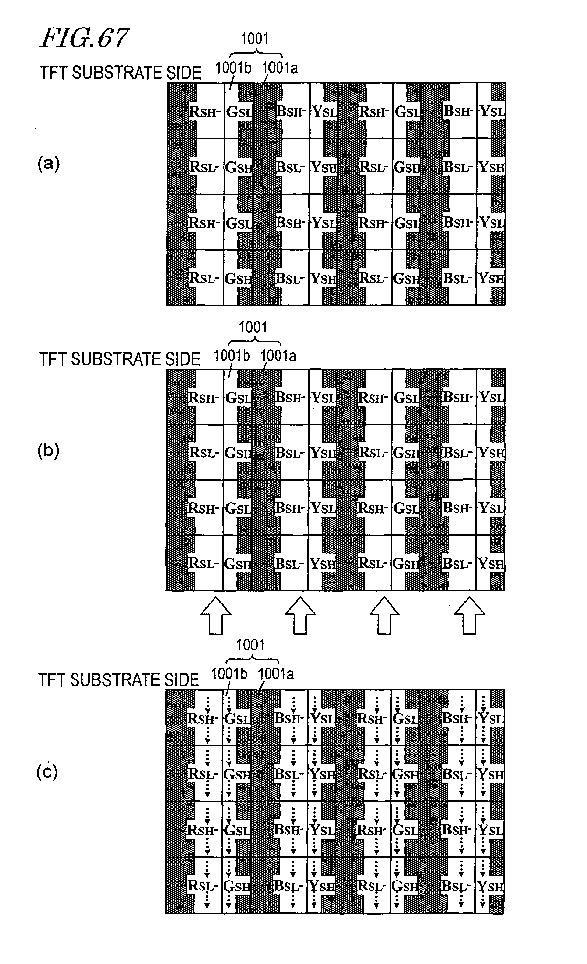

Next, as shown in FIG. **67(a)****,** the photomask **1001** is located such that parts of the optical alignment film corresponding to a right half of each of the red picture element **R** and the blue picture element **B** and a left half of each of the green picture element **G** and the yellow picture element **Y** overlap the light transmitting parts **1001b** (in other words, such that parts corresponding to a left half of each of the red picture element **R** and the blue picture element **B** and a right half of the green picture element **G** and the yellow picture element **Y** overlap the light shielding parts **1001a).**

Next, as shown in FIG. **67(b)****,** ultraviolet rays are directed obliquely in the direction represented by the arrows. As a result of this exposure step, as shown in FIG. **67(c)**, the parts of the optical alignment film corresponding to the right half of each of the red picture element **R** and the blue picture element **B** and the left half of each of the green picture element **G** and the yellow picture element **Y** are given a prescribed pretilt direction. The pretilt direction given at this point is the same as the pretilt direction **PA1** shown in FIG. **2(a)****.**

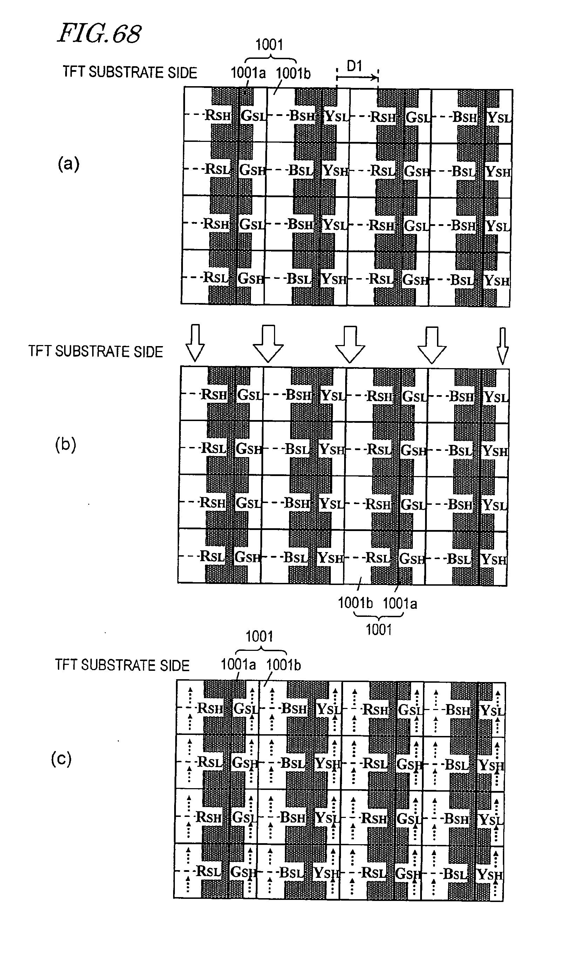

Next, as shown in FIG. **68(a)****,** the photomask **1001** is shifted in the row direction by a prescribed distance **D1.** In this example, the prescribed distance **D1** is 1/4 of the length **PL1** (see FIG. **64**) of the pixel **P** along the row direction. As a result of this movement, the parts of the optical alignment film corresponding to the left half of each of the red picture element **R** and the blue picture element **B** and the right half of each of the green picture element **G** and the yellow picture element **Y** overlap the light transmitting parts **1001b** of the photomask **1001.** Namely, the parts of the optical alignment film corresponding to the right half of each of the red picture element **R** and the blue picture element **B** and the left half of each of the green picture element **G** and the yellow picture element **Y** overlap the light shielding parts **1001a** of the photomask **1001.**

Next, as shown in FIG. **68(b)****,** ultraviolet rays are directed obliquely in the direction represented by the arrows. As a result of this exposure step, as shown in FIG. **68(c)**, the remaining parts of the optical alignment film **12,** namely, the parts thereof corresponding to the left half of each of the red picture element **R** and the blue picture element **B** and the right half of each of the green picture element **B** and the yellow picture element **Y** are given a prescribed pretilt direction. The pretilt direction given at this point is the same as the pretilt direction **PA2** shown in FIG. **2(a)** and is antiparallel to the pretilt direction shown in FIG **67(c)****.**

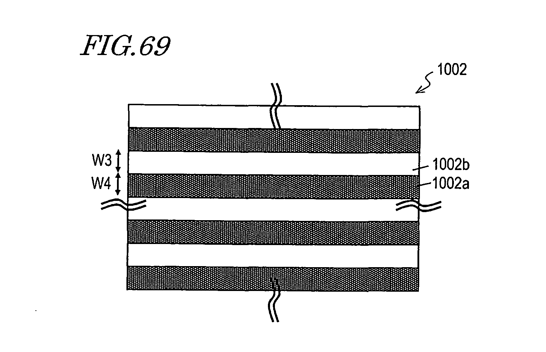

As a result of the above-described optical alignment processing, in an area of the optical alignment film on the TFT substrate corresponding to each picture element, two areas having antiparallel pretilt directions to each other are formed. Now, with reference to FIG. **69** through FIG. **71****,** optical alignment processing performed on the optical alignment film on the CF substrate will be described.

First, a photomask **1002** shown in FIG. **69** is prepared. As shown in FIG. **69****,** the photomask **1002** includes a plurality of light shielding parts **1002a** extending like stripes parallel to the row direction (horizontal direction) and a plurality of light transmitting parts **1002b** located between the plurality of light shielding parts **1002a.** A width **W3** of each of the plurality of light transmitting parts **1002b** (width in the column direction) is half of the length **L6** of each picture element along the column direction (i.e., W3 = L6/2). A width **W4** of each of the plurality of light shielding parts **1002a** (width in the column direction) is also half of the length **L6** of each picture element along the column direction (i.e., W4 = L6/2; W3 + W4 = L6).

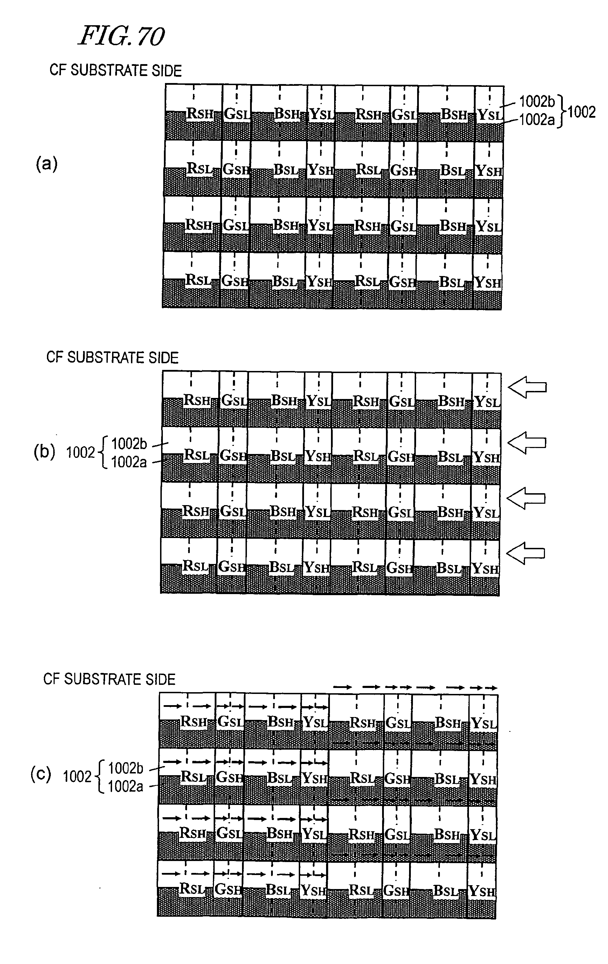

Next, as shown in FIG. **70(a)****,** the photomask **1002** is located such that parts of the optical alignment film corresponding to top halves of the sub picture elements overlap the light transmitting parts **1002b** (namely, such that parts corresponding to bottom halves of the sub picture elements overlap the light shielding parts **1002a).**

Next, as shown in FIG. **70(b)****,** ultraviolet rays are directed obliquely in the direction represented by the arrows. As a result of this exposure step, as shown in FIG. **70(c)****,** the parts of the optical alignment film corresponding to the top halves of the sub picture elements are given a prescribed pretilt direction. The pretilt direction given at this point is the same as the pretilt direction **PB1** shown in FIG. **2(b)****.**

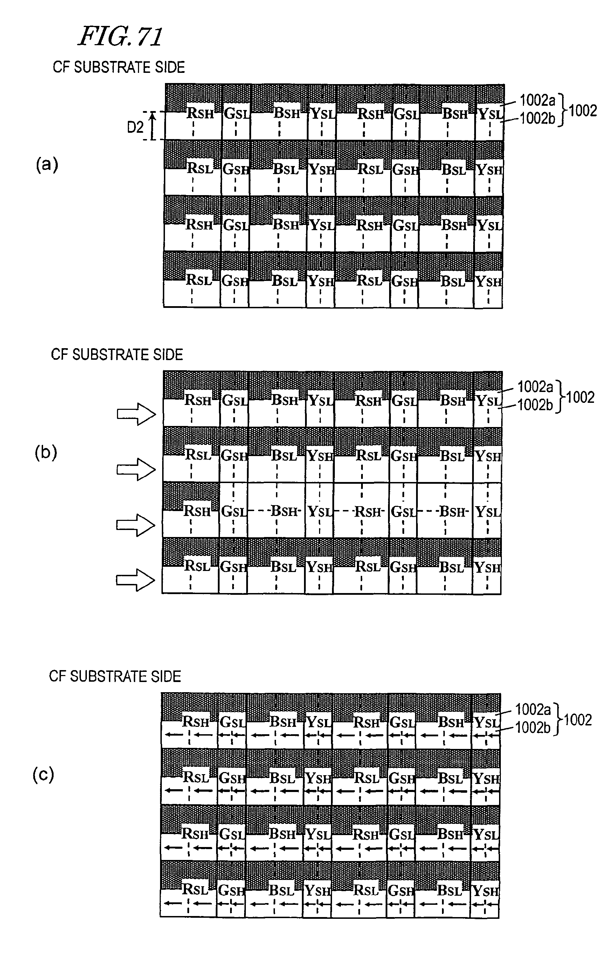

Next, as shown in FIG. **71(a)****,** the photomask 1002 is shifted in the column direction by a prescribed distance **D2.** The prescribed distance **D2** is 1/4 of the length **PL2** (see FIG. **64**) of the pixel **P** along the column direction, is 1/4 of the length **L5** of each picture element along the column direction, and half (1/2) of the length **L6** of each sub picture element along the column direction. As a result of this movement, the parts of the optical alignment film corresponding to the bottom halves of the sub picture elements overlap the light transmitting part **1002b** of the photomask **1002.** Namely, the parts of the optical alignment film corresponding to the top halves of the sub picture elements overlap the light shielding part **1002a** of the photomask **1002.**

Next, as shown in FIG. **71(b)****,** ultraviolet rays are directed obliquely in the direction represented by the arrows. As a result of this exposure step, as shown in FIG. **71(c)**, the remaining parts of the optical alignment film, namely, the parts thereof corresponding to the bottom halves of the sub picture elements are given a prescribed pretilt direction. The pretilt direction given at this point is the same as the pretilt direction **PB2** shown in FIG. **2(b)** and is antiparallel to the pretilt direction shown in FIG. **70(c)****.**

As a result of the above-described optical alignment processing, in an area of the optical alignment film on the CF substrate corresponding to each picture element, two areas having antiparallel pretilt directions to each other are formed. By bonding together the TFT substrate and the CF substrate processed with the optical alignment in the above-described manner, the liquid crystal display device **1001** shown in FIG. **64** and FIG. **65** in which each sub picture element is divided into liquid crystal domains having different alignment directions is obtained.

In the above-described production method of the liquid crystal display device **1000** also, in the step of performing the optical alignment processing on the optical alignment film on the TFT substrate, the two exposure steps are performed by use of one, common photomask **1001.** In the step of performing the optical alignment processing on the optical alignment film on the CF substrate, the two exposure steps are performed by use of one, common photomask **1002.** Namely, the shifted exposure can be performed in the row direction in which there are two lengths of picture elements in addition to the column direction in which there is one length of picture elements. However, with the liquid crystal display device **1000,** in the case where a bonding shift occurs during the production, a color shift may be visually recognized when a display plane is observed in an oblique direction.

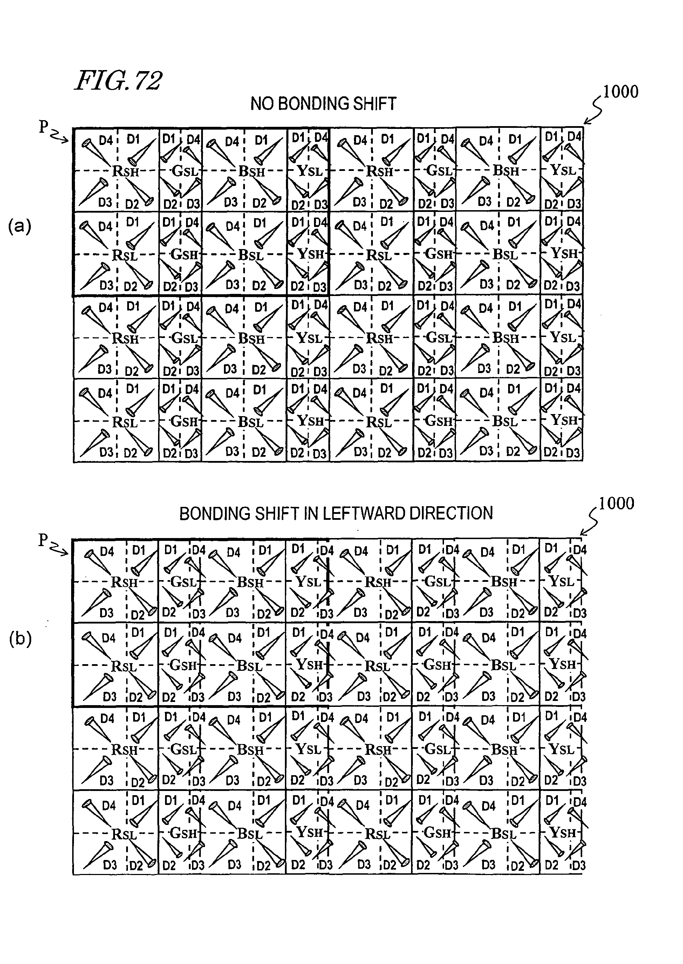

FIG. **72(a)** shows an alignment state of the liquid crystal display device **1000** when the bonding shift does not occur, and FIG. **72(b)** shows an alignment state of the liquid crystal display device **1000** when the bonding shift occurs in a leftward direction (i.e., when the position of the CF substrate is shifted leftward with respect to the proper position thereof).

When the bonding shift does not occur, as shown in FIG. **72(a)****,** the four liquid crystal domains **D1** through **D4** have an equal length to each other along the row direction in each sub picture element. Therefore, the four liquid crystal domains **D1** through **D4** have an equal area size to each other.

By contrast, when the bonding shift occurs in the leftward direction, as shown in FIG. **72(b)****,** in each sub picture element, two left liquid crystal domains each have a longer length along the row direction, and two right liquid crystal domains have a shorter length along the row direction. Therefore, in each sub picture element, the two left liquid crystal domains each have a larger area size than that of each of the two right liquid crystal domains.

Specifically, in each sub picture element of the red picture element **R** and the blue picture element **B,** the liquid crystal domains **D3** and **D4** each have a longer length along the row direction, and the liquid crystal domains **D1** and **D2** each have a shorter length along the row direction. Therefore, the liquid crystal domains **D3** and **D4** each have a larger area size than that of each of the liquid crystal domains **D1** and **D2.**

In each sub picture element of the green picture element **G** and the yellow picture element **Y,** the liquid crystal domains **D1** and **D2** each have a longer length along the row direction, and the liquid crystal domains **D3** and **D4** each have a shorter length along the row direction. Therefore, the liquid crystal domains **D1** and **D2** each have a larger area size than that of each of the liquid crystal domains **D3** and **D4.**

In this manner, when the bonding shift occurs, the four liquid crystal domains have different area sizes (or the difference between the area sizes is increased). Even in the case where the four liquid crystal domains have different sizes, there is no problem when the display plane is observed in the front direction. In the case where, for example, white of a certain gray scale is displayed, when the display plane is observed in the front direction, each pixel **P** is visually recognized white regardless of whether the alignment state is as in FIG. **72(a)** or as in FIG. **72(b)****.**

However, in the case where the four liquid crystal domains have different area sizes, when the display plane is observed in an oblique direction (i.e., when the line of sight is inclined from the normal direction to the display plane), a color shift may occasionally occur. In the case where, for example, the bonding shift occurs in the row direction (leftward direction or rightward direction), a color shift occurs when the line of sight is inclined toward a top end of the display plane (when the display plane is observed from a top oblique direction) or toward a bottom end thereof (when the display plane is observed from a bottom oblique direction).

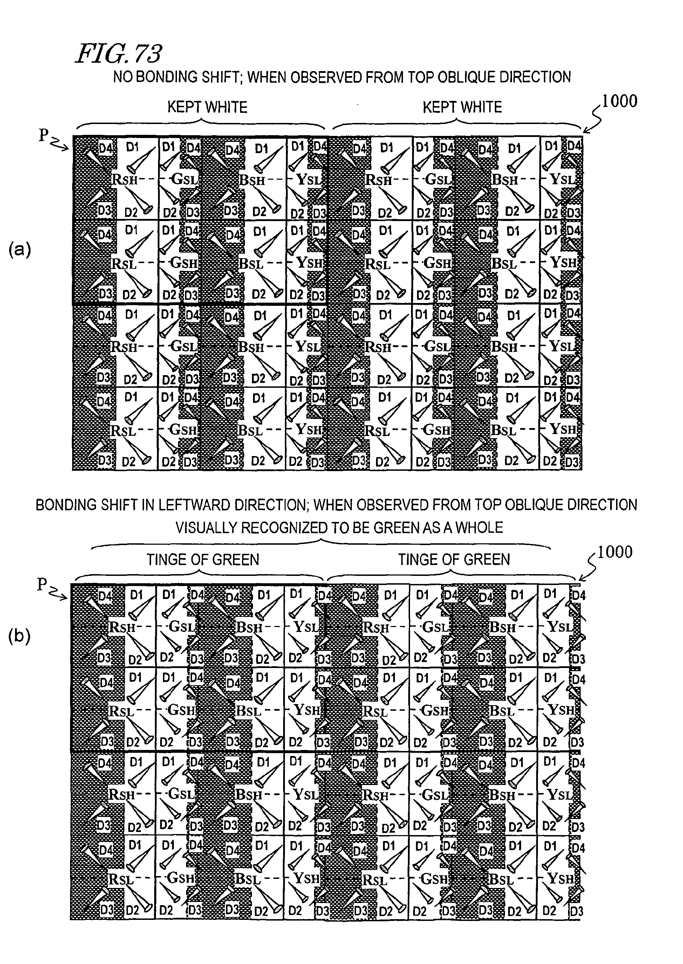

FIGS. 73(a) and (b) schematically show how the display plane of the liquid crystal display device **1000** is visually recognized when being observed from the top oblique direction in the case where the bonding shift does not occur and the bonding shift occurs in the leftward direction, respectively. FIGS. 73(a) and (b) both show a state where white of a certain gray scale is displayed. In both of FIGS. 73(a)and (b), a part of each picture element is shown dark. This is because when the display plane is observed from the top oblique direction, the liquid crystal domains **D3** and **D4,** in which the liquid crystal molecules fall toward the top end of the display plane, are visually recognized dark. Therefore, when the line of sight is inclined toward the top end of the display plane to a relatively large degree, the liquid crystal domains **D1** and **D2** mainly contribute to the display.

As described above, when the bonding shift does not occur, the four liquid crystal domains **D1** through **D4** have an equal area size in each sub picture element. Therefore, as can be seen from FIG. **73(a)****,** when the display plane is observed from the top oblique direction, the ratio of the effective area size of each of the red picture element **R,** the blue picture element **B,** the green picture element **G** and the yellow picture element **Y** (the ratio of the total area size of the liquid crystal domains **D1** and **D2,** mainly contributing to the display, of each picture element) with respect to the area size of the pixel **P** is equal to that when the display plane is observed from the front direction. Accordingly, even when the display plane is observed from the top oblique direction, the color displayed by the pixel **P** is kept white.

By contrast, when the bonding shift occurs in the leftward direction, in each sub picture element, the area size of each of the two left liquid crystal domains is larger than the area size of each of the two right liquid crystal domains. Specifically, in each sub picture element of the red picture element **R** and the blue picture element **B,** the area size of each of the liquid crystal domains **D3** and **D4** is larger than the area size of each of the liquid crystal domains **D1** and **D2.** In each sub picture element of the green picture element **G** and the yellow picture element **Y**, the area size of each of the liquid crystal domains **D1** and **D2** is larger than the area size of each of the liquid crystal domains **D3** and **D4.** Therefore, as can be seen from FIG. **73(b)****,** when the display plane is observed from the top oblique direction, the ratio of the effective area size of each of the red picture element **R,** the blue picture element **B,** the green picture element **G** and the yellow picture element **Y** with respect to the area size of the pixel **P** is different from that when the display plane is observed from the front direction. Specifically, the ratio of the effective area size of each of the red picture element **R** and the blue picture element **B** is decreased, and the ratio of the effective area size of each of the green picture element **G** and the yellow picture element **Y** is increased. Therefore, when the display plane is observed from the top oblique direction, the color displayed by each pixel **P** has a tinge of green. As a result, the plurality of pixels **P** are visually recognized as displaying green as a whole.

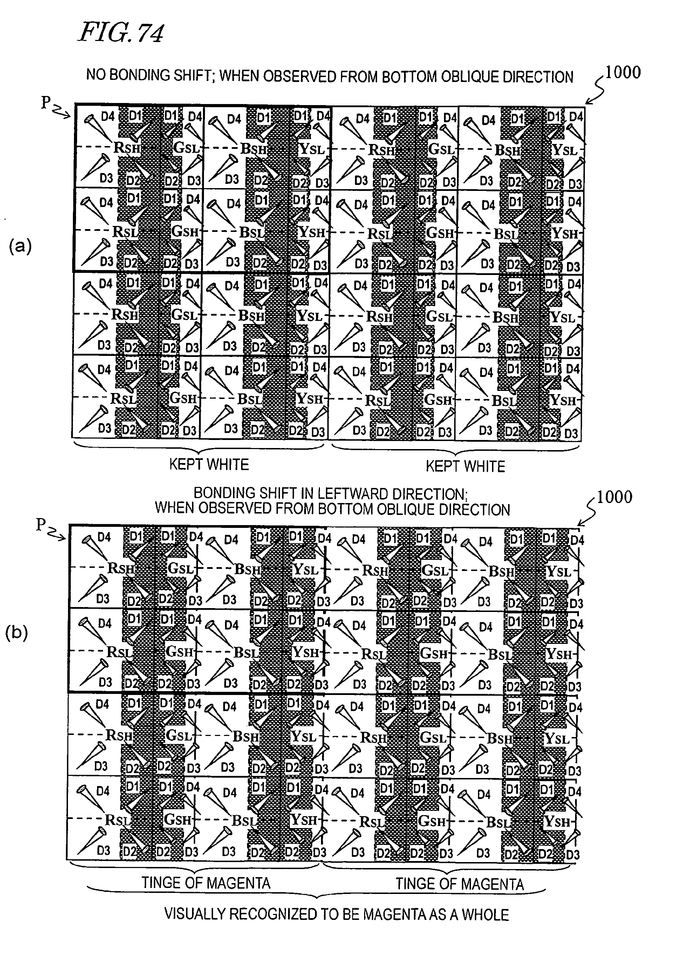

FIGS. 74(a) and (b) schematically show how the display plane of the liquid crystal display device **1000** is visually recognized when being observed from the bottom oblique direction in the case where the bonding shift does not occur and the bonding shift occurs in the leftward direction, respectively. FIGS. 74(a) and (b) both show a state where white of a certain gray scale is displayed. In both of FIGS. 74(a)and (b), a part of each picture element is shown dark. This is because when the display plane is observed from the bottom oblique direction, the liquid crystal domains **D1** and **D2,** in which the liquid crystal molecules fall toward the bottom end of the display plane, are visually recognized dark. Therefore, when the line of sight is inclined toward the bottom end of the display plane to a relatively large degree, the liquid crystal domains **D3** and **D4** mainly contribute to the display.

As described above, when the bonding shift does not occur, the four liquid crystal domains **D1** through **D4** have an equal area size in each sub picture element. Therefore, as can be seen from FIG. **74(a)****,** when the display plane is observed from the bottom oblique direction, the ratio of the effective area size of each of the red picture element **R,** the blue picture element **B,** the green picture element **G** and the yellow picture element **Y** (the ratio of the total area size of the liquid crystal domains **D3** and **D4,** mainly contributing to the display, of each picture element) with respect to the area size of the pixel **P** is equal to that when the display plane is observed from the front direction. Accordingly, even when the display plane is observed from the bottom oblique direction, the color displayed by the pixel **P** is kept white.

By contrast, when the bonding shift occurs in the leftward direction, in each sub picture element, the area size of each of the two left liquid crystal domains is larger than the area size of each of the two right liquid crystal domains. Specifically, in each sub picture element of the red picture element **R** and the blue picture element **B,** the area size of each of the liquid crystal domains **D3** and **D4** is larger than the area size of each of the liquid crystal domains **D1** and **D2.** In each sub picture element of the green picture element **G** and the yellow picture element **Y,** the area size of each of the liquid crystal domains **D1** and **D2** is larger than the area size of each of the liquid crystal domains **D3** and **D4.** Therefore, as can be seen from FIG. **74(b)****,** when the display plane is observed from the bottom oblique direction, the ratio of the effective area size of each of the red picture element **R,** the blue picture element **B,** the green picture element **G** and the yellow picture element **Y** with respect to the area size of the pixel **P** is different from that when the display plane is observed from the front direction. Specifically, the ratio of the effective area size of each of the red picture element **R** and the blue picture element **B** is increased, and the ratio of the effective area size of each of the green picture element **G** and the yellow picture element **Y** is decreased. Therefore, when the display plane is observed from the bottom oblique direction, the color displayed by each pixel **P** has a tinge of magenta. As a result, the plurality of pixels **P** are visually recognized as displaying magenta as a whole.

As described above, with the liquid crystal display device **1000,** when the bonding shift occurs during the production, a color shift may be visually recognized (e.g., white is colored green or magenta) when the display plane is observed in an oblique direction. By contrast, according to the present invention, reduction of the display quality which would otherwise be caused by such a color shift can be suppressed.

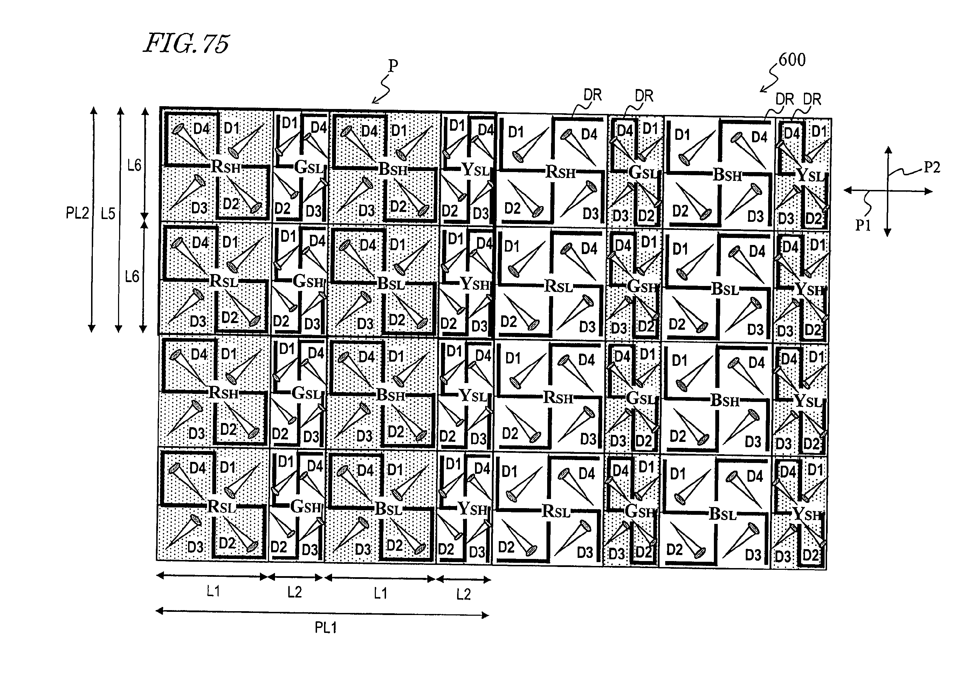

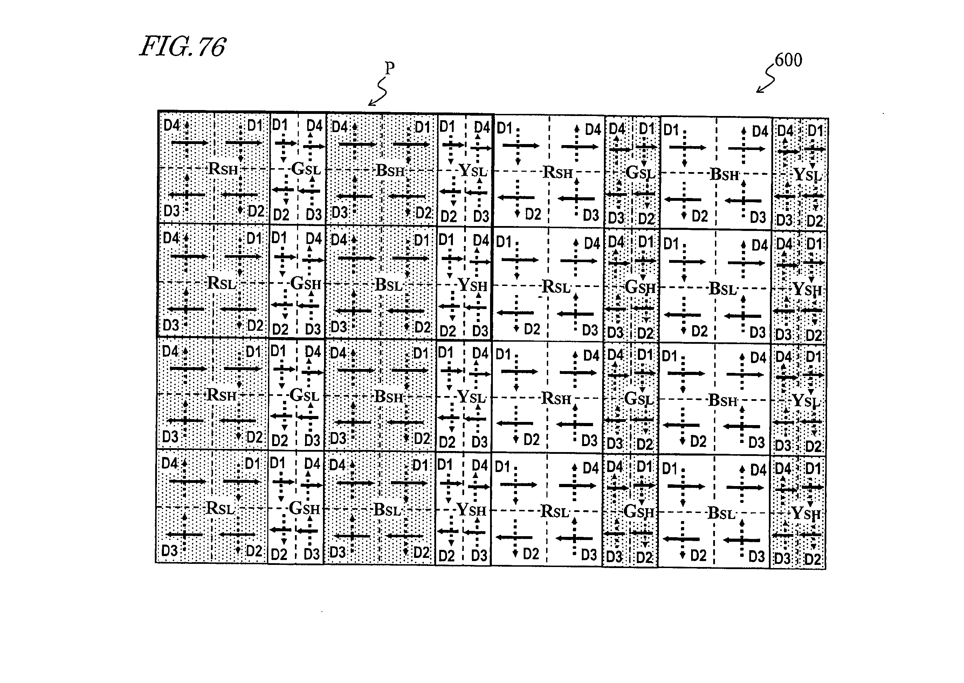

FIG. **75** and FIG. **76** show a liquid crystal display device **600** in this embodiment. FIG. **75** and FIG. **76** are each a plan view schematically showing four pixels **P** of the liquid crystal display device **600,** which are arranged in 2 rows × 2 columns.

For the liquid crystal display device **600,** the picture element division driving technology is used. Therefore, a red picture element **R** includes a dark sub picture element **R_{SL}** for providing a relatively low luminance and a bright sub picture element **R_{SH}** for providing a relatively high luminance. Similarly, a green picture element **G** includes a dark sub picture element **G_{SL}** and a bright sub picture element **G_{SH}**. A blue picture element **B** includes a dark sub picture element **B_{SL}** and a bright sub picture element **B_{SH}.** A yellow picture element **Y** includes a dark sub picture element **Y_{SL}** and a bright sub picture element **Y_{SH}.** In each picture element, the dark sub picture element and the bright picture element are arranged in the column direction (i.e., in one column). The dark sub picture element and the bright picture element included in each picture element is each divided into four areas having different alignment directions. Namely, each sub picture element includes four liquid crystal domains **D1** through **D4.**

In the liquid crystal display device **600,** the red picture element **R** and the blue picture element **B** both have an equal length **L1** along the row direction. The green picture element **G** and the yellow picture element **Y** both have an equal length **L2** along the row direction. The former length **L1** is longer than the latter length **L2** (i.e., L1 > L2). By contrast, all the picture elements have an equal length **L5** along the column direction. In this manner, in the pixel **P** of the liquid crystal display device **600,** there is one length of picture elements in the column direction, whereas there are two lengths of picture elements in the row direction. The dark sub picture elements **R_{SL}, G_{SL}**, **B_{SL}** and **Y_{SL}** and the bright sub picture elements **R_{SH}, G_{SH}, B_{SH}** and **Y_{SH}** have an equal length **L6** along the column direction.

In the liquid crystal display device **600** in this embodiment, a pair of optical alignment films have such an alignment regulation force that causes an identical alignment pattern to appear in repetition in the liquid crystal layer along the row direction, with two pixels being the minimum unit. In the two pixels which form the repeat unit of alignment pattern along the row direction, there are picture elements including sub picture elements having the gammadion alignment and picture elements including sub picture elements having the letter 8 alignment in a mixed state. Specifically, the sub picture elements of each of the green picture element **G** and the yellow picture element **Y** of the left pixel **P,** and the sub picture elements of each of the red picture element **R** and the blue picture element **B** of the right pixel **P,** each have the gammadion alignment. By contrast, the sub picture elements of each of the red picture element **R** and the blue picture element **B** of the left pixel **P,** and the sub picture elements of each of the green picture element **G** and the yellow picture element **Y** of the right pixel **P,** each have the letter 8 alignment.

In the left pixel **P,** the type of alignment in the sub picture elements changes from left to right as letter 8, gammadion, letter 8, and gammadion. By contrast, in the right pixel **P,** the type of alignment in the sub picture elements changes from left to right as gammadion, letter 8, gammadion, and letter 8. Thus, in the repeat unit of alignment pattern, the alignment pattern of the left half (left pixel **P**) and the alignment pattern of the right half (right pixel **P**) are inverted to each other.

In the liquid crystal display device **600** also, shifted exposure can be performed along both of the row direction and the column direction. Hereinafter, optical alignment processing performed on the pair of optical alignment film included in the liquid crystal display device **600** will be described below.

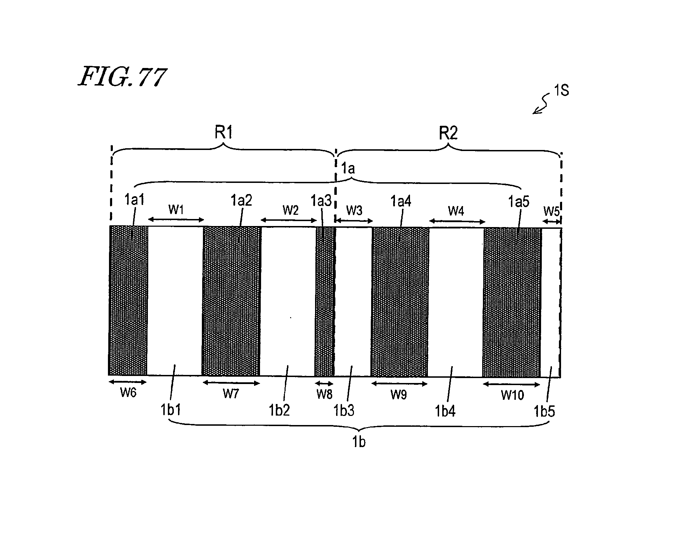

First, with reference to FIG. **77** through FIG. **79****,** optical alignment processing performed on the optical alignment film on a TFT substrate will be described.

First, a photomask **1S** shown in FIG. **77** is prepared. FIG. **77** shows a part of the photomask **1S,** and more specifically, an area corresponding to two pixels, which form the repeat unit of alignment pattern. As shown in FIG. **77****,** the photomask **1S** has a mask pattern including a plurality of light shielding parts **1a** extending like stripes parallel to the column direction (vertical direction) and a plurality of light transmitting parts **1b** located between the plurality of light shielding parts **1a**.

A width **W1** (width in the row direction) of a light transmitting part **1b1,** which is leftmost among the plurality of light transmitting parts **1b**, is equal to a sum of half of a length **L1** of the red picture element **R** along the row direction and half of the length **L2** of the green picture element **G** along the row direction (i.e., W1 = (L1 + L2)/2). A width **W2** of a light transmitting part **1b2,** which is second from left, is equal to a sum of half of the length **L1** of the blue picture element **B** along the row direction and half of the length **L2** of the yellow picture element **Y** (i.e., W2 = (L1 + L2)/2). A width **W3** of a light transmitting part **1b3,** which is third from left, is equal to half of the length **L1** of the red picture element **R** along the row direction (i.e., W3 = L1/2). A width **W4** of a light transmitting part **1b4**, which is fourth from left, is equal to a sum of half of the length **L2** of the green picture element **G** along the row direction and half of the length **L1** of the blue picture element **B** along the row direction (i.e., W4 = (L1 + L2)/2). A width **W5** of a light transmitting part **1b5,** which is fifth from left (rightmost), is equal to half of the length **L2** of the yellow picture element **Y** along the row direction (i.e., W5 = L2/2).

A width **W6** (width in the row direction) of a light shielding part **1a1**, which is leftmost among the plurality of light shielding parts **1a**, is equal to half of the length **L1** of the red picture element **R** along the row direction (i.e., W6 = L1/2). A width **W7** of a light shielding part **1a2**, which is second from left, is equal to a sum of half of the length **L2** of the green picture element **G** along the row direction and half of the length **L1** of the blue picture element **B** along the row direction (i.e., W7 = (L1 + L2)/2). A width **W8** of a light shielding part **1a3,** which is third from left, is equal to half of the length **L2** of the yellow picture element **Y** along the row direction (i.e., W8 = L2/2). A width **W9** of a light shielding part **1a4,** which is fourth from left, is equal to a sum of half of the length **L1** of the red picture element **R** along the row direction and half of the length **L2** of the green picture element **G** along the row direction (i.e., W9 = (L1 + L2)/2). A width **W10** of a light shielding part **1a5**, which is fifth from left (rightmost), is equal to a sum of half of the length **L1** of the blue picture element **B** along the row direction and half of the length **L2** of the yellow picture element **Y** along the row direction (i.e., W10 = (L1 + L2)/2).

When the photomask **1S** shown in FIG. **77** is divided into an area **R1** corresponding to the left half (left pixel **P**) of the minimum repeat unit of alignment pattern and an area **R2** corresponding to the right half (right pixel **P)** thereof, the mask pattern of the left area **R1** and the mask pattern of the right area **R2** are negative/positive-inverted to each other. Namely, the light shielding parts **1a** of the right area **R2** are located at the positions of the light transmitting parts **1b** in the left area **R1,** and the light transmitting parts **1b** of the right area **R2** are located at the positions of the light shielding parts **1a** in the left area **R1**.

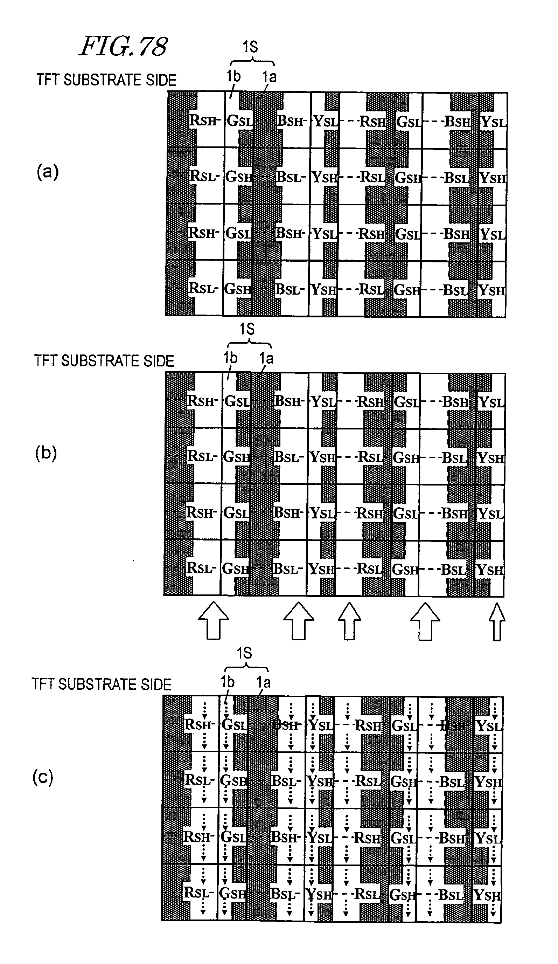

Next, as shown in FIG. **78(a)****,** the photomask **1S** is located such that parts of the optical alignment film corresponding to a right half of the red picture element **R,** a left half of the green picture element **G,** a right half of the blue picture element **B** and a left half of the yellow picture element **Y** of the left pixel **P,** and a left half of the red picture element **R,** a right half of the green picture element **G,** a left half of the blue picture element **B** and a right half of the yellow picture element **Y** of the right pixel **P,** overlap the light transmitting parts **1b**. In other words, the photomask **1S** is located such that parts of the optical alignment film corresponding to a left half of the red picture element **R,** a right half of the green picture element **G,** a left half of the blue picture element **B** and a right half of the yellow picture element **Y** of the left pixel **P,** and a right half of the red picture element **R,** a left half of the green picture element **G,** a right half of the blue picture element **B** and a left half of the yellow picture element **Y** of the right pixel **P,** overlap the light shielding parts **1a**.

Next, as shown in FIG. **78(b)****,** ultraviolet rays are directed obliquely in the direction represented by the arrows. As a result of this exposure step, as shown in FIG. **78(c)**, the parts of the optical alignment film corresponding to the right half of the red picture element **R**, the left half of the green picture element **G,** the right half of the blue picture element **B** and the left half of the yellow picture element **Y** of the left pixel **P,** and the left half of the red picture element **R,** the right half of the green picture element **G,** the left half of the blue picture element **B** and the right half of the yellow picture element **Y** of the right pixel **P,** are given a prescribed pretilt direction. The pretilt direction given at this point is the same as the pretilt direction **PA1** shown in FIG. **2(a)****.**

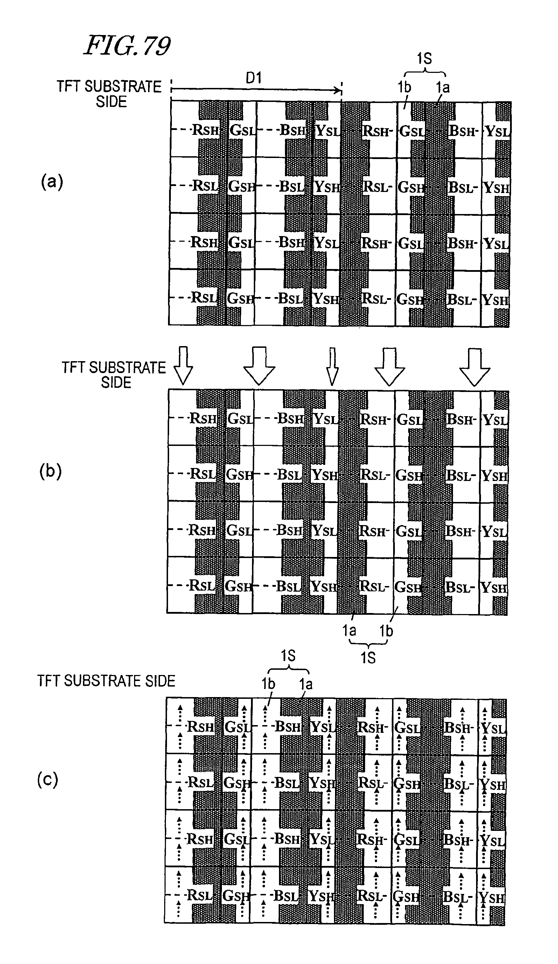

Next, as shown in FIG. **79(a)****,** the photomask **1S** is shifted in the row direction by a prescribed distance **D1.** In this example, the prescribed distance **D1** is equal to the length **PL1** (see FIG. **75**) of the pixel **P** along the row direction. Namely, the photomask **1S** is shifted by one pixel in the row direction. As a result of this movement, the parts of the optical alignment film corresponding to the left half of the red picture element **R,** the right half of the green picture element **G,** the left half of the blue picture element **B** and the right half of the yellow picture element **Y** of the left pixel **P,** and the right half of the red picture element **R,** the left half of the green picture element **G,** the right half of the blue picture element **B** and the left half of the yellow picture element **Y** of the right pixel **P,** overlap the light transmitting parts **1b** of the photomask **1S.** In other words, the parts of the optical alignment film corresponding to the right half of the red picture element **R,** the left half of the green picture element **G,** the right half of the blue picture element **B** and the left half of the yellow picture element **Y** of the left pixel **P,** and the left half of the red picture element **R,** the right half of the green picture element **G,** the left half of the blue picture element **B** and the right half of the yellow picture element **Y** of the right pixel **P,** overlap the light shielding parts **1a** of the photomask **1S**.

Next, as shown in FIG. **79(b)****,** ultraviolet rays are directed obliquely in the direction represented by the arrows. As a result of this exposure step, as shown in FIG. **79(c)**, the remaining parts of the optical alignment film, namely, the parts thereof corresponding to the left half of the red picture element **R,** the right half of the green picture element **G,** the left half of the blue picture element **B** and the right half of the yellow picture element **Y** of the left pixel **P,** and the right half of the red picture element **R,** the left half of the green picture element **G,** the right half of the blue picture element **B** and the left half of the yellow picture element **Y** of the right pixel **P,** are given a prescribed pretilt direction. The pretilt direction given at this point is the same as the pretilt direction **PA2** shown in FIG. **2 (a)** and is antiparallel to the pretilt direction shown in FIG. **78(c)****.**

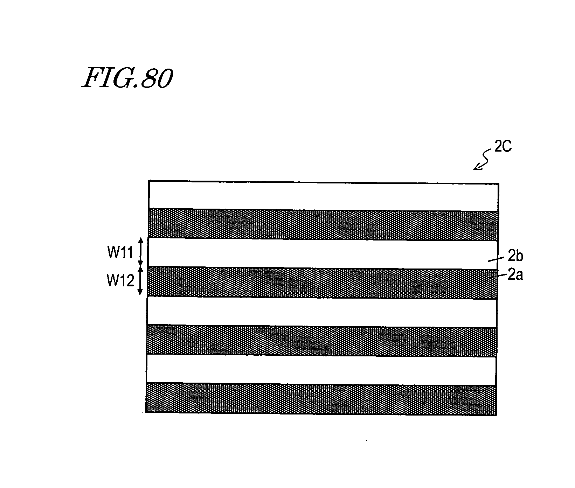

As a result of the above-described optical alignment processing, in an area of the optical alignment film on the TFT substrate corresponding to each sub picture element, two areas having antiparallel pretilt directions to each other are formed. Now, with reference to FIG. **80** through FIG. **82****,** optical alignment processing performed on the optical alignment film on a CF substrate will be described.

First, a photomask **2C** shown in FIG. **80** is prepared. FIG. **80** shows a part of the photomask **2C,** and more specifically, an area corresponding to four pixels (four pixels **P** arranged in 2 rows × 2 columns). As shown in FIG. **80****,** the photomask **2C** has a mask pattern including a plurality of light shielding parts **2a** extending like stripes parallel to the row direction (horizontal direction) and a plurality of light transmitting parts **2b** located between the plurality of light shielding parts **2a.** A width **W11** of each of the plurality of light transmitting parts **2b** (width in the column direction) is half of the length **L6** of each picture element along the column direction (i.e., W11 = L6/2). A width **W12** of each of the plurality of light shielding parts **2a** (width in the column direction) is also half of the length **L6** of each picture element along the column direction (i.e., W12 = L6/2; W11 + W12 = L6).

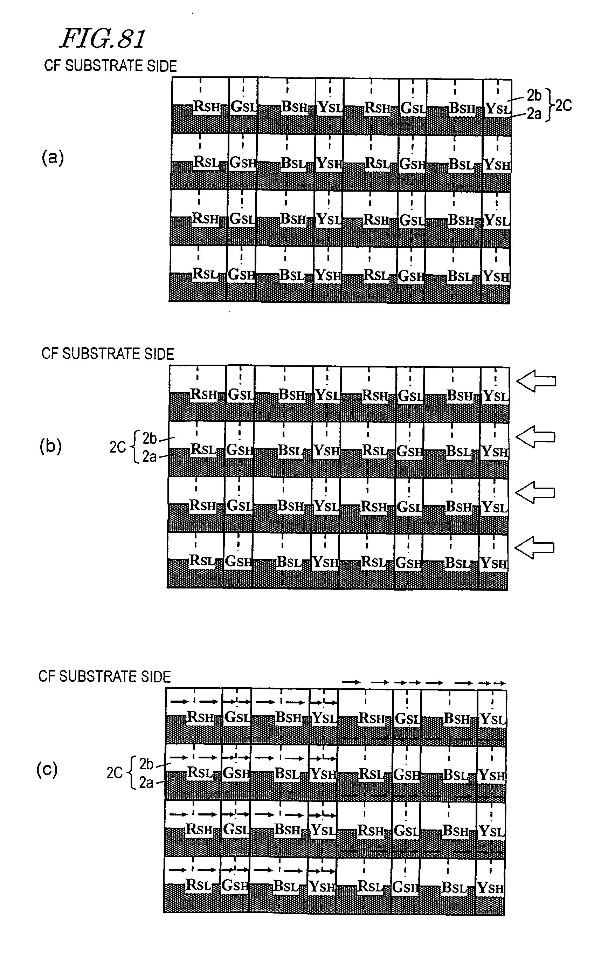

Next, as shown in FIG. **81(a)****,** the photomask **2C** is located such that parts of the optical alignment film corresponding to top halves of the sub picture elements overlap the light transmitting parts **2b.** In other words, the photomask **2C** is located such that parts of the optical alignment film corresponding to bottom halves of the sub picture elements overlap the light shielding parts **2a.**

Next, as shown in FIG. **81(b)****,** ultraviolet rays are directed obliquely in the direction represented by the arrows. As a result of this exposure step, as shown in FIG. **81(c)****,** the parts of the optical alignment film corresponding to the top halves of the sub picture elements are given a prescribed pretilt direction. The pretilt direction given at this point is the same as the pretilt direction **PB1** shown in FIG. **2(b)****.**

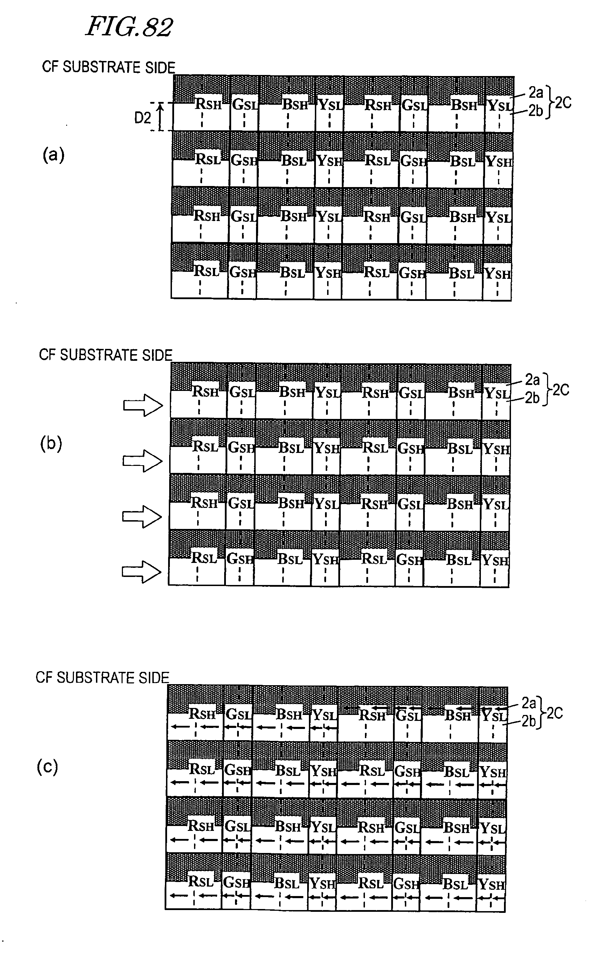

Next, as shown in FIG. **82(a)****,** the photomask **2C** is shifted in the column direction by a prescribed distance **D2.** In this example, the prescribed distance **D2** is 1/4 of the length **PL2** (see FIG. **75**) of the pixel **P** along the column direction, is 1/4 of the length **L5** of each picture element along the column direction, and is half (1/2) of the length **L6** of each sub picture element along the column direction. Namely, the photomask **2C** is shifted by 1/4 of a pixel in the column direction. As a result of this movement, the parts of the optical alignment film corresponding to the bottom halves of the sub picture elements overlap the light transmitting parts **2b** of the photomask **2C.** Namely, the parts corresponding to the top halves of the sub picture elements overlap the light shielding parts **2a** of the photomask **2C.**

Next, as shown in FIG. **82(b)****,** ultraviolet rays are directed obliquely in the direction represented by the arrows. As a result of this exposure step, as shown in FIG. **82(c)****,** the remaining parts of the optical alignment film, namely, the parts thereof corresponding to the bottom halves of the sub picture elements are given a prescribed pretilt direction. The pretilt direction given at this point is the same as the pretilt direction **PB2** shown in FIG. **2(b)** and is antiparallel to the pretilt direction shown in FIG **81(c)****.**

As a result of the above-described optical alignment processing, in an area of the optical alignment film on the CF substrate corresponding to each sub picture element, two areas having antiparallel pretilt directions to each other are formed. By bonding together the TFT substrate and the CF substrate processed with the optical alignment in the above-described manner, the liquid crystal display device **600** shown in FIG. **75** and FIG. **76** in which each sub picture element is divided into liquid crystal domains having different alignment directions is obtained.

In the production method of the liquid crystal display device **600** also, in the step of performing the optical alignment processing on the optical alignment film on the TFT substrate, the two exposure steps are performed by use of one, common photomask **1S.** In the step of performing the optical alignment processing on the optical alignment film on the CF substrate, the two exposure steps are performed by use of one, common photomask **2C.** Namely, the shifted exposure can be performed in the row direction in which there are two lengths of picture elements in addition to the column direction in which there is one length of picture elements. Therefore, the optical alignment processing can be realized at low cost and in a short takt time. In addition, with the liquid crystal display device **600**, even when a bonding shift occurs during the production, reduction of the display quality which would otherwise be caused by a color shift can be suppressed.

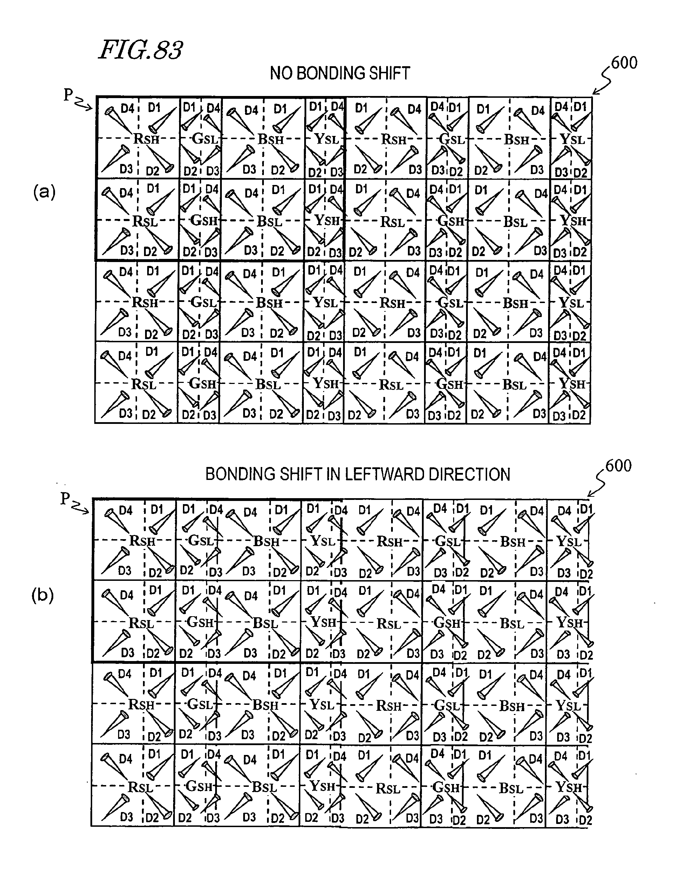

FIGS. **83(a)** shows an alignment state of the liquid crystal display device **600** when the bonding shift does not occur, and FIG. **83(b)** shows an alignment state of the liquid crystal display device **600** when the bonding shift occurs in the leftward direction (i.e., when the position of the CF substrate is shifted leftward with respect to the proper position thereof).

When the bonding shift does not occur, as shown in FIG. **83(a)****,** the four liquid crystal domains **D1** through **D4** have an equal length to each other along the row direction in each sub picture element. Therefore, the four liquid crystal domains **D1** through **D4** have an equal area size to each other.

By contrast, when the bonding shift occurs in the leftward direction, as shown in FIG. **83(b)****,** in each sub picture element, two left liquid crystal domains each have a longer length along the row direction, and two right liquid crystal domains each have a shorter length along the row direction. Therefore, in each sub picture element, the two left liquid crystal domains each have a larger area size than that of each of the two right liquid crystal domains.

Specifically, in the left pixel **P,** in each sub picture element of the red picture element **R** and the blue picture element **B,** the liquid crystal domains **D3** and **D4** each have a longer length along the row direction, and the liquid crystal domains **D1** and **D2** each have a shorter length along the row direction. Therefore, the liquid crystal domains **D3** and **D4** each have a larger area size than that of each of the liquid crystal domains **D1** and **D2.** Also in the left pixel **P,** in each sub picture element of the green picture element **G** and the yellow picture element **Y,** the liquid crystal domains **D1** and **D2** each have a longer length along the row direction, and the liquid crystal domains **D3** and **D4** each have a shorter length along the row direction. Therefore, the liquid crystal domains **D1** and **D2** each have a larger area size than that of each of the liquid crystal domains **D3** and **D4.**

By contrast, in the right pixel **P,** in each sub picture element of the red picture element **R** and the blue picture element **B,** the liquid crystal domains **D1** and **D2** each have a longer length along the row direction, and the liquid crystal domains **D3** and **D4** each have a shorter length along the row direction. Therefore, the liquid crystal domains **D1** and **D2** each have a larger area size than that of each of the liquid crystal domains **D3** and **D4.** Also in the right pixel **P,** in each sub picture element of the green picture element **G** and the yellow picture element **Y,** the liquid crystal domains **D3** and **D4** each have a longer length along the row direction, and the liquid crystal domains **D1** and **D2** each have a shorter length along the row direction. Therefore, the liquid crystal domains **D3** and **D4** each have a larger area size than that of each of the liquid crystal domains **D1** and **D2.**

In this manner, when the bonding shift occurs, the four liquid crystal domains have different area sizes. Even in the case where the four liquid crystal domains have different sizes, there is no problem when a display plane is observed in the front direction. In the case where, for example, white of a certain gray scale is displayed, when the display plane is observed in the front direction, each pixel **P** is visually recognized white regardless of whether the alignment state is as in FIG. **83(a)** or as in FIG. **83(b)****.**

However, in the case where the four liquid crystal domains have different area sizes, when the display plane is observed in an oblique direction, a color shift may occur. In the case where, for example, the bonding shift occurs in the row direction, a color shift occurs when the display plane is observed from the top oblique direction or from the bottom oblique direction.

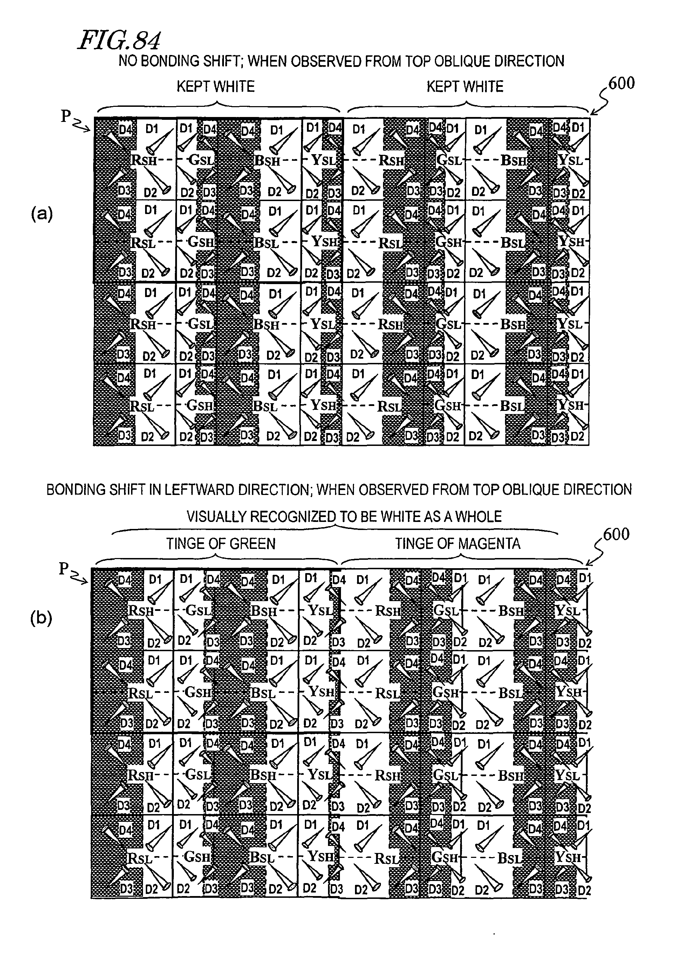

FIGS. 84(a) and (b) schematically show how the display plane of the liquid crystal display device **600** is visually recognized when being observed from the top oblique direction in the case where the bonding shift does not occur and the bonding shift occurs in the leftward direction, respectively. FIGS. **84 (a)** and **(b)** both show a state where white of a certain gray scale is displayed. In both of FIGS. **84 (a)** and **(b)****,** like in FIGS. 73(a) and (b), the liquid crystal domains **D3** and **D4,** which are visually recognized dark when the display plane is observed from the top oblique direction (the liquid crystal domains **D3** and **D4,** in which the liquid crystal molecules fall toward the top end of the display plane) are shown dark. When the line of sight is inclined toward the top end of the display plane to a relatively large degree, the liquid crystal domains **D1** and **D2** mainly contribute to the display.

As described above, when the bonding shift does not occur, the four liquid crystal domains **D1** through **D4** have an equal area size in each sub picture element. Therefore, as can be seen from FIG. **84(a)****,** when the display plane is observed from the top oblique direction, the ratio of the effective area size of each of the red picture element **R,** the blue picture element **B,** the green picture element **G** and the yellow picture element **Y** (the ratio of the total area size of the liquid crystal domains **D1** and **D2,** mainly contributing to the display, of each picture element) with respect to the area size of the pixel **P** is equal to that when the display plane is observed from the front direction. Accordingly, even when the display plane is observed from the top oblique direction, the color displayed by each pixel **P** is kept white.

By contrast, when the bonding shift occurs in the leftward direction, in each sub picture element, the area size of each of the two left liquid crystal domains is larger than the area size of each of the two right liquid crystal domains. Specifically, in the left pixel **P,** in each sub picture element of the red picture element **R** and the blue picture element **B,** the area size of each of the liquid crystal domains **D3** and **D4** is larger than the area size of each of the liquid crystal domains **D1** and **D2.** In each sub picture element of the green picture element **G** and the yellow picture element **Y,** the area size of each of the liquid crystal domains **D1** and **D2** is larger than the area size of each of the liquid crystal domains **D3** and **D4.** Therefore, as can be seen from FIG. **84(b)****,** when the display plane is observed from the top oblique direction, the ratio of the effective area size of each of the red picture element **R,** the blue picture element **B,** the green picture element **G** and the yellow picture element **Y** with respect to the area size of the left pixel **P** is different from that when the display plane is observed from the front direction. Specifically, the ratio of the effective area size of each of the red picture element **R** and the blue picture element **B** is decreased, and the ratio of the effective area size of each of the green picture element **G** and the yellow picture element **Y** is increased. Therefore, when the display plane is observed from the top oblique direction, the color displayed by the left pixel **P** has a tinge of green.

In the right pixel **P,** in each sub picture element of the red picture element **R** and the blue picture element **B,** the area size of each of the liquid crystal domains **D1** and **D2** is larger than the area size of each of the liquid crystal domains **D3** and **D4.** In each sub picture element of the green picture element **G** and the yellow picture element **Y,** the area size of each of the liquid crystal domains **D3** and **D4** is larger than the area size of each of the liquid crystal domains **D1** and **D2.** Therefore, as can be seen from FIG. **84(b)****,** when the display plane is observed from the top oblique direction, the ratio of the effective area size of each of the red picture element **R,** the blue picture element **B,** the green picture element **G** and the yellow picture element **Y** with respect to the area size of the right pixel **P** is different from that when the display plane is observed from the front direction. Specifically, the ratio of the effective area size of each of the red picture element **R** and the blue picture element **B** is increased, and the ratio of the effective area size of each of the green picture element **G** and the yellow picture element **Y** is decreased. Therefore, when the display plane is observed from the top oblique direction, the color displayed by the right pixel **P** has a tinge of magenta. However, as described above, the color displayed by the left pixel **P** has a tinge of green. Therefore, the plurality of pixels **P** are visually recognized as being white as a whole.

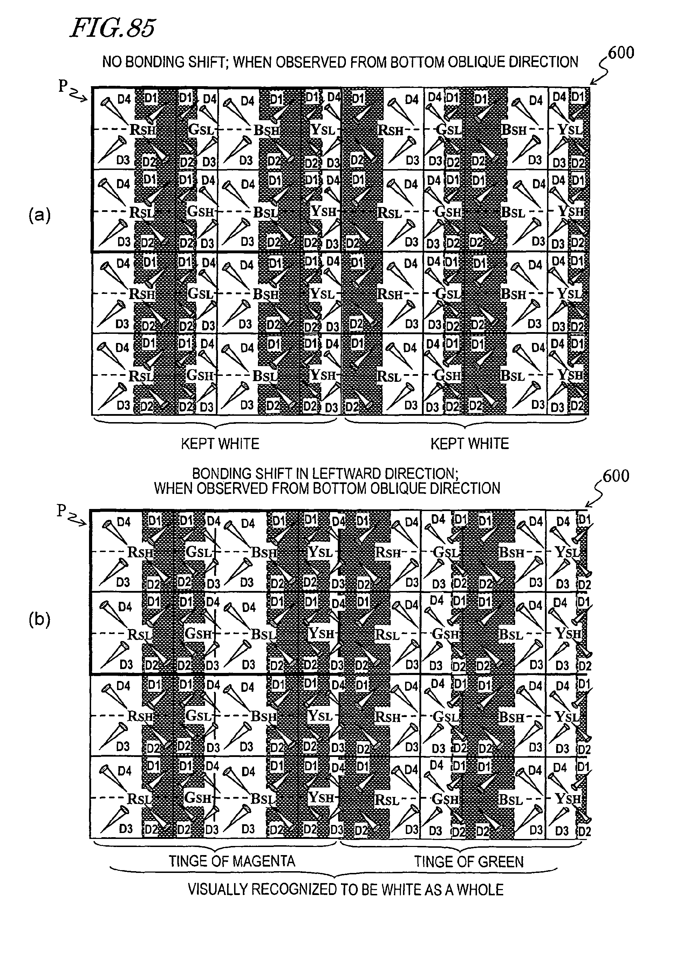

FIGS. 85(a) and (b) schematically show how the display plane of the liquid crystal display device **600** is visually recognized when being observed from the bottom oblique direction in the case where the bonding shift does not occur and the bonding shift occurs in the leftward direction, respectively. FIGS. 85(a) and (b) both show a state where white of a certain gray scale is displayed. In both of FIGS. **85 (a)** and **(b)****,** like in FIGS. 74(a) and (b), the liquid crystal domains **D1** and **D2,** which are visually recognized dark when the display plane is observed from the bottom oblique direction (the liquid crystal domains **D1** and **D2,** in which the liquid crystal molecules fall toward the bottom end of the display plane) are shown dark. When the line of sight is inclined toward the bottom end of the display plane to a relatively large degree, the liquid crystal domains **D3** and **D4** mainly contribute to the display.

As described above, when the bonding shift does not occur, the four liquid crystal domains **D1** through **D4** have an equal area size in each sub picture element. Therefore, as can be seen from FIG. **85(a)****,** when the display plane is observed from the bottom oblique direction, the ratio of the effective area size of each of the red picture element **R,** the blue picture element **B,** the green picture element **G** and the yellow picture element **Y** (the ratio of the total area size of the liquid crystal domains **D3** and **D4,** mainly contributing to the display, of each picture element) with respect to the area size of the pixel **P** is equal to that when the display plane is observed from the front direction. Accordingly, even when the display plane is observed from the bottom oblique direction, the color displayed by each pixel **P** is kept white.

By contrast, when the bonding shift occurs in the leftward direction, in each sub picture element, the area size of each of the two left liquid crystal domains is larger than the area size of each of the two right liquid crystal domains. Specifically, in the left pixel **P,** in each sub picture element of the red picture element **R** and the blue picture element **B,** the area size of each of the liquid crystal domains **D3** and **D4** is larger than the area size of each of the liquid crystal domains **D1** and **D2.** In each sub picture element of the green picture element **G** and the yellow picture element **Y,** the area size of each of the liquid crystal domains **D1** and **D2** is larger than the area size of each of the liquid crystal domains **D3** and **D4.** Therefore, as can be seen from FIG. **85(b)****,** when the display plane is observed from the bottom oblique direction, the ratio of the effective area size of each of the red picture element **R,** the blue picture element **B,** the green picture element **G** and the yellow picture element **Y** with respect to the area size of the left pixel **P** is different from that when the display plane is observed from the front direction. Specifically, the ratio of the effective area size of each of the red picture element **R** and the blue picture element **B** is increased, and the ratio of the effective area size of each of the green picture element **G** and the yellow picture element **Y** is decreased. Therefore, when the display plane is observed from the bottom oblique direction, the color displayed by the left pixel **P** has a tinge of magenta.

In the right pixel **P,** in each sub picture element of the red picture element **R** and the blue picture element **B,** the area size of each of the liquid crystal domains **D1** and **D2** is larger than the area size of each of the liquid crystal domains **D3** and **D4.** In each sub picture element of the green picture element **G** and the yellow picture element **Y,** the area size of each of the liquid crystal domains **D3** and **D4** is larger than the area size of each of the liquid crystal domains **D1** and **D2.** Therefore, as can be seen from FIG. **85(b)****,** when the display plane is observed from the bottom oblique direction, the ratio of the effective area size of each of the red picture element **R,** the blue picture element **B,** the green picture element **G** and the yellow picture element **Y** with respect to the area size of the right pixel **P** is different from that when the display plane is observed from the front direction. Specifically, the ratio of the effective area size of each of the red picture element **R** and the blue picture element **B** is decreased, and the ratio of the effective area size of each of the green picture element **G** and the yellow picture element **Y** is increased. Therefore, when the display plane is observed from the bottom oblique direction, the color displayed by the right pixel **P** has a tinge of green. However, as described above, the color displayed by the left pixel **P** has a tinge of magenta. Therefore, the plurality of pixels **P** are visually recognized as being white as a whole.

As described above, with the liquid crystal display device **600** also, when the bonding shift occurs during the production, a color shift occurs in each pixel **P** when the display plane is observed in an oblique direction. However, in the liquid crystal display device **600,** there are pixels **P** in which the tinge of color is shifted in different directions (pixels **P** having a tinge of green and pixels **P** having a tinge of magenta) in the row direction in a mixed state. As a result, the color displayed by the plurality of pixels **P** is kept white as a whole. Therefore, the color shift is unlikely to be visually recognized, and the reduction of the display quality which would otherwise be caused by the color shift can be suppressed.

In this embodiment, a structure using the picture element division driving technology (i.e., each picture element is divided into a plurality of sub picture elements) is described. Even with a structure which does not use the picture element division driving technology, the effect of suppressing the reduction of the display quality which would otherwise be caused by the color shift can be provided.

### (EMBODIMENT 5)

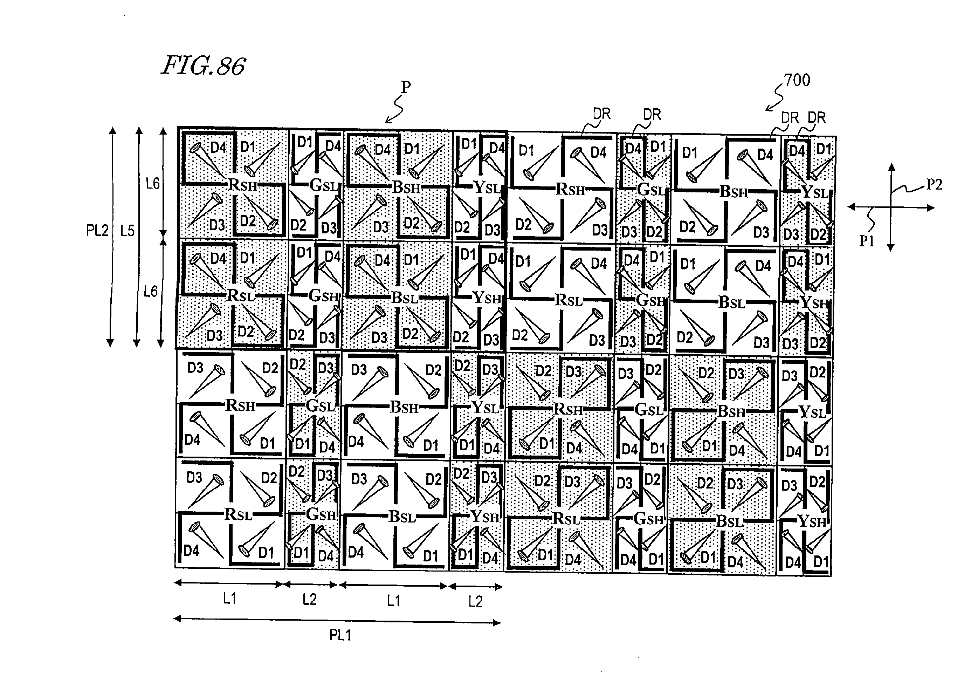

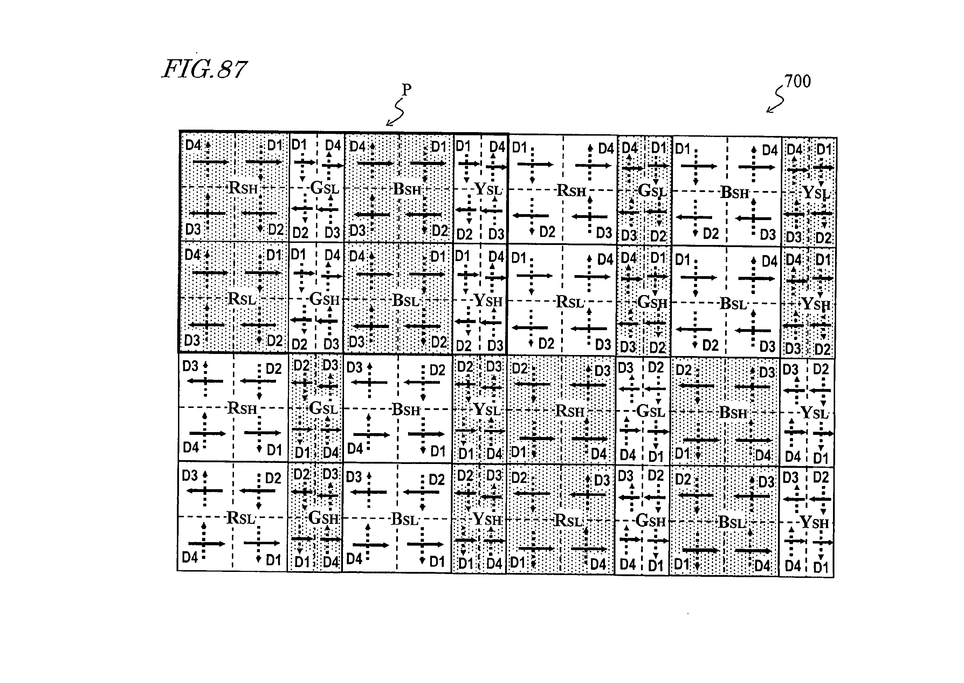

FIG. **86** and FIG. **87** show a liquid crystal display device **700** in this embodiment. FIG. **86** and FIG. **87** are each a plan view schematically showing four pixels **P** of the liquid crystal display device **700,** which are arranged in 2 rows × 2 columns.

For the liquid crystal display device **700,** the picture element division driving technology is used. Therefore, a red picture element **R** includes a dark sub picture element **R_{SL}** for providing a relatively low luminance and a bright sub picture element **R_{SH}** for providing a relatively high luminance. Similarly, a green picture element **G** includes a dark sub picture element **G_{SL}** and a bright sub picture element **G_{SH}.** A blue picture element **B** includes a dark sub picture element **B_{SL}** and a bright sub picture element **B_{SH}.** A yellow picture element **Y** includes a dark sub picture element **Y_{SL}** and a bright sub picture element **Y_{SH}.** In each picture element, the dark sub picture element and the bright picture element are arranged in the column direction (i.e., in one column). The dark sub picture element and the bright picture element included in each picture element is each divided into four areas having different alignment directions. Namely, each sub picture element includes four liquid crystal domains **D1** through **D4.**

In the liquid crystal display device **700,** the red picture element **R** and the blue picture element **B** both have an equal length **L1** along the row direction. The green picture element **G** and the yellow picture element **Y** both have an equal length **L2** along the row direction. The former length **L1** is longer than the latter length **L2** (i.e., L1 > L2). By contrast, all the picture elements have an equal length **L5** along the column direction. In this manner, in the pixel **P** of the liquid crystal display device **700,** there is one length of picture elements in the column direction, whereas there are two lengths of picture elements in the row direction. The dark sub picture elements **R_{SL}, G_{SL}, B_{SL}** and **Y_{SL}** and the bright sub picture elements **R_{SH}, G_{SH}, B_{SH}** and **Y_{SH}** have an equal length **L6** along the column direction.

In the liquid crystal display device **700** in this embodiment, a pair of optical alignment films have such an alignment regulation force that causes an identical alignment pattern to appear in repetition in the liquid crystal layer along the row direction, with two pixels being the minimum unit. In the two pixels which form the repeat unit of alignment pattern along the row direction, there are picture elements including sub picture elements having the gammadion alignment and picture elements including sub picture elements having the letter 8 alignment in a mixed state. Specifically, the sub picture elements of each of the green picture element **G** and the yellow picture element **Y** of the top left pixel **P,** and the sub picture elements of each of the red picture element **R** and the blue picture element **B** of the top right pixel **P,** each have the gammadion alignment. By contrast, the sub picture elements of each of the red picture element **R** and the blue picture element **B** of the top left pixel **P,** and the sub picture elements of each of the green picture element G and the yellow picture element **Y** of the top right pixel **P,** each have the letter 8 alignment.

In the top left pixel **P,** the type of alignment in the sub picture elements changes from left to right as letter 8, gammadion, letter 8, and gammadion. By contrast, in the top right pixel **P,** the type of alignment in the sub picture elements changes from left to right as gammadion, letter 8, gammadion, and letter 8. Thus, in the repeat unit of alignment pattern along the row direction, the alignment pattern of the left half (top left pixel **P**) and the alignment pattern of the right half (top right pixel **P**) are inverted to each other.

In the liquid crystal display device **700** in this embodiment, because of the alignment regulation force of a pair of optical alignment films, an identical alignment pattern appears in repetition in the liquid crystal layer also along the column direction, with two pixels being the minimum unit. In the two pixels which form the repeat unit of alignment pattern along the column direction, there are picture elements having the gammadion alignment (picture elements including sub picture elements having the gammadion alignment) and picture elements having the letter 8 alignment (picture elements including sub picture elements having the letter 8 alignment) in a mixed state. For example, the sub picture elements of each of the green picture element **G** and the yellow picture element **Y** of the top left pixel **P,** and the sub picture elements of each of the red picture element **R** and the blue picture element **B** of the bottom left pixel **P,** each have the gammadion alignment. By contrast, the sub picture elements of each of the red picture element **R** and the blue picture element **B** of the top left pixel **P,** and the sub picture elements of each of the green picture element **G** and the yellow picture element **Y** of the bottom left pixel **P,** each have the letter 8 alignment.

In addition, regarding each color, between in the picture element of the top left pixel **P** and in the picture element of the bottom left pixel **P,** the gammadion alignment and the letter 8 alignment are replaced with each other. Similarly, regarding each color, between in the picture element of the top right pixel **P** and in the picture element of the bottom right pixel **P,** the gammadion alignment and the letter 8 alignment are replaced with each other. Therefore, in the repeat unit of alignment pattern, the alignment pattern of the top half and the alignment pattern of the bottom half (the top left pixel **P** and the bottom left pixel **P,** or the top right pixel **P** and the bottom right pixel **P**) are inverted to each other.

As described above, in the liquid crystal display device **700** in this embodiment, the minimum repeat unit of alignment pattern along the row direction is two pixels, and the minimum repeat unit of alignment pattern along the column direction is also two pixels. On the pair of optical alignment films included in the liquid crystal display device **700,** optical alignment processing is performed as follows.

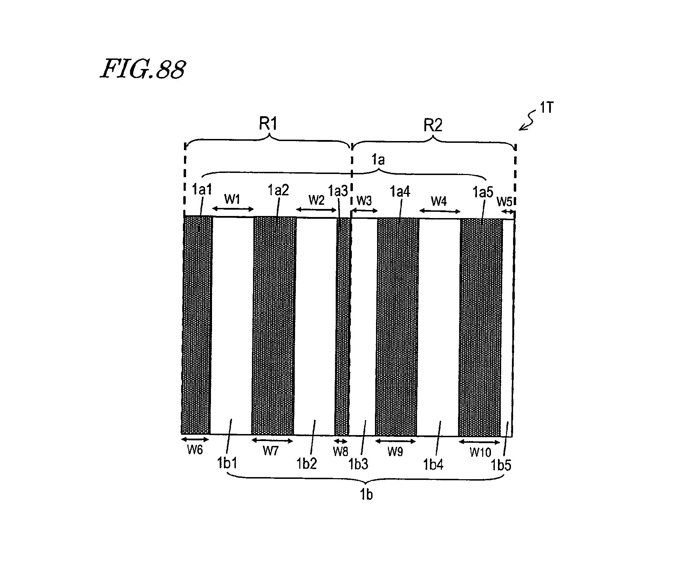

First, with reference to FIG. **88** through FIG. **90****,** optical alignment processing performed on the optical alignment film on a TFT substrate will be described.

First, a photomask **1T** shown in FIG. **88** is prepared. FIG. **88** shows a part of the photomask **1T,** and more specifically, an area corresponding to four pixels (four pixels **P** arranged in 2 rows × 2 columns). As shown in FIG. **88****,** the photomask **1T** has a mask pattern including a plurality of light shielding parts **1a** extending like stripes parallel to the column direction (vertical direction) and a plurality of light transmitting parts **1b** located between the plurality of light shielding parts **1a.**

A width **W1** (width in the row direction) of a light transmitting part **1b1,** which is leftmost among the plurality of light transmitting parts **1b,** is equal to a sum of half of the length **L1** of the red picture element **R** along the row direction and half of the length **L2** of the green picture element **G** along the row direction (i.e., W1 = (L1 + L2)/2). A width **W2** of a light transmitting part **1b2,** which is second from left, is equal to a sum of half of the length **L1** of the blue picture element **B** along the row direction and half of the length **L2** of the yellow picture element **Y** (i.e., W2 = (L1 + L2)/2). A width **W3** of a light transmitting part **1b3,** which is third from left, is equal to half of the length **L1** of the red picture element **R** along the row direction (i.e., W3 = L1/2). A width **W4** of a light transmitting part **1b4,** which is fourth from left, is equal to a sum of half of the length **L2** of the green picture element **G** along the row direction and half of the length **L1** of the blue picture element **B** along the row direction (i.e., W4 = (L1 + L2)/2). A width **W5** of a light transmitting part **1b5,** which is fifth from left (rightmost), is equal to half of the length **L2** of the yellow picture element **Y** along the row direction (i.e., W5 = L2/2).

A width **W6** (width in the row direction) of a light shielding part **1a1,** which is leftmost among the plurality of light shielding parts **1a,** is equal to half of the length **L1** of the red picture element **R** along the row direction (i.e., W6 = L1/2). A width **W7** of a light shielding part **1a2**, which is second from left, is equal to a sum of half of the length **L2** of the green picture element **G** along the row direction and half the length **L1** of the blue picture element **B** along the row direction (i.e., W7 = (L1 + L2)/2). A width **W8** of a light shielding part **1a3**, which is third from left, is equal to half of the length **L2** of the yellow picture element **Y** along the row direction (i.e., W8 = L2/2) . A width **W9** of a light shielding part **1a4**, which is fourth from left, is equal to a sum of half of the length **L1** of the red picture element **R** along the row direction and half of the length **L2** of the green picture element **G** along the row direction (i.e., W9 = (L1 + L2)/2). A width **W10** of a light shielding part **1a5**, which is fifth from left (rightmost), is equal to a sum of half of the length **L1** of the blue picture element **B** along the row direction and half of the length **L2** of the yellow picture element **Y** along the row direction (i.e., W10 = (L1 + L2)/2).

When the photomask **1T** shown in FIG. **88** is divided into an area **R1** corresponding to the left half (left pixel **P**) of the minimum repeat unit of alignment pattern along the row direction and an area **R2** corresponding to the right half (right pixel **P**) thereof, the mask pattern of the left area **R1** and the mask pattern of the right area **R2** are negative/positive-inverted to each other. Namely, the light shielding parts **1a** of the right area **R2** are located at the positions of the light transmitting parts **1b** in the left area **R1,** and the light transmitting parts **1b** of the right area **R2** are located at the positions of the light shielding parts **1a** in the left area **R1**.

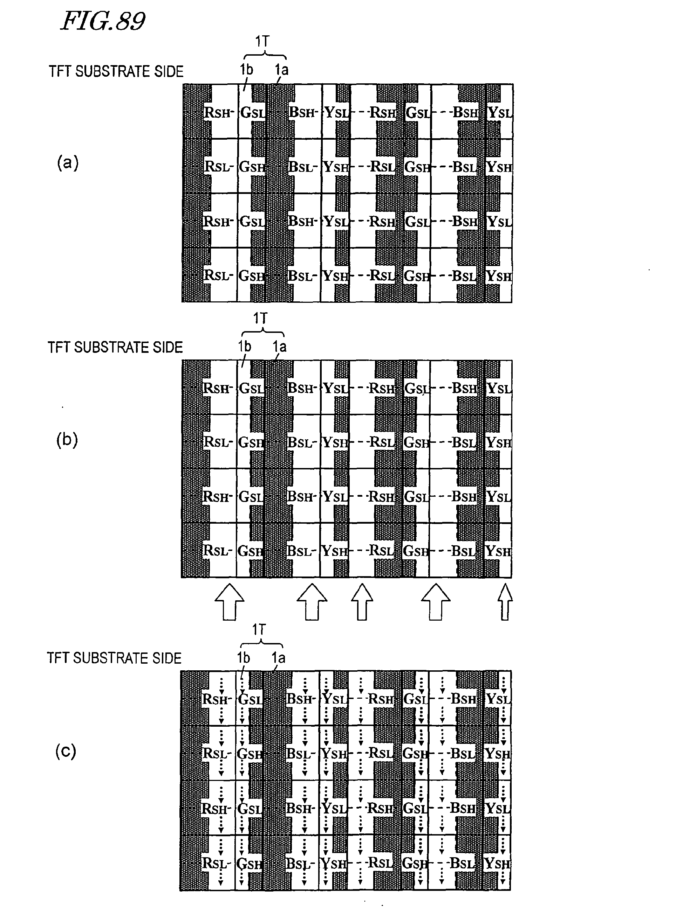

Next, as shown in FIG. **89(a)****,** the photomask **1T** is located such that parts of the optical alignment film corresponding to a right half of the red picture element **R,** a left half of the green picture element **G,** a right half of the blue picture element **B** and a left half of the yellow picture element **Y** of the left pixel **P,** and a left half of the red picture element **R,** a right half of the green picture element **G,** a left half of the blue picture element **B** and a right half of the yellow picture element **Y** of the right pixel **P,** overlap the light transmitting parts **1b**. In other words, the photomask **1T** is located such that parts of the optical alignment film corresponding to a left half of the red picture element **R,** a right half of the green picture element **G,** a left half of the blue picture element **B** and a right half of the yellow picture element **Y** of the left pixel **P,** and a right half of the red picture element **R,** a left half of the green picture element **G,** a right half of the blue picture element **B** and a left half of the yellow picture element **Y** of the right pixel **P,** overlap the light shielding parts **1a**.

Next, as shown in FIG. **89(b)****,** ultraviolet rays are directed obliquely in the direction represented by the arrows. As a result of this exposure step, as shown in FIG. **89(c)****,** the parts of the optical alignment film corresponding to the right half of the red picture element **R,** the left half of the green picture element **G,** the right half of the blue picture element **B** and the left half of the yellow picture element **Y** of the left pixel **P,** and the left half of the red picture element **R,** the right half of the green picture element **G,** the left half of the blue picture element **B** and the right half of the yellow picture element **Y** of the right pixel **P,** are given a prescribed pretilt direction. The pretilt direction given at this point is the same as the pretilt direction **PA1** shown in FIG. **2(a)****.**

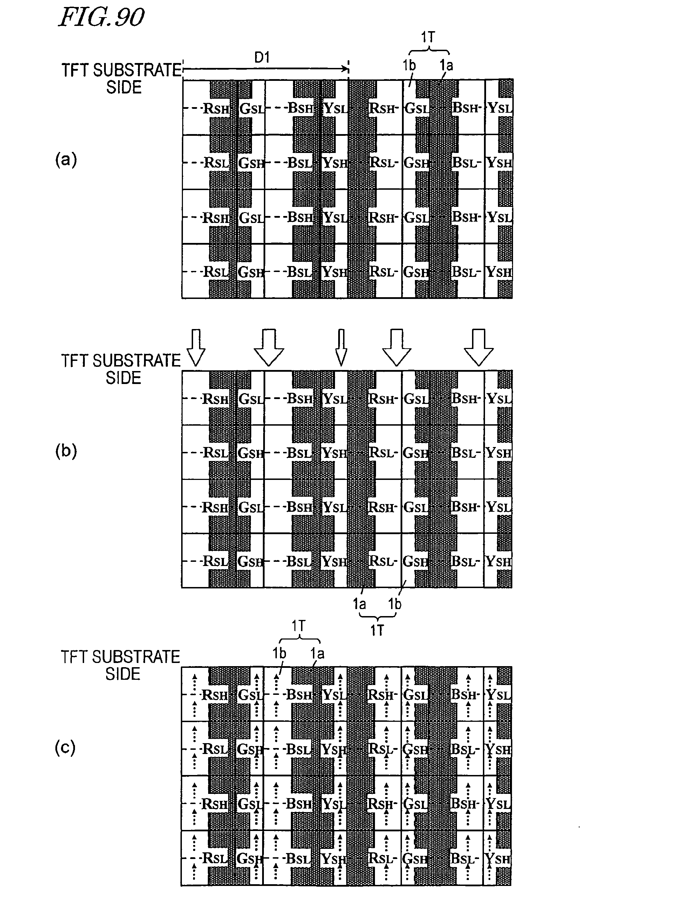

Next, as shown in FIG. **90(a)****,** the photomask **1T** is shifted in the row direction by a prescribed distance **D1.** In this example, the prescribed distance **D1** is equal to the length **PL1** (see FIG. **86**) of the pixel **P** along the row direction. Namely, the photomask **1T** is shifted by one pixel in the row direction. As a result of this movement, the parts of the optical alignment film corresponding to the left half of the red picture element **R,** the right half of the green picture element **G,** the left half of the blue picture element **B** and the right half of the yellow picture element **Y** of the left pixel **P,** and the right half of the red picture element **R,** the left half of the green picture element **G,** the right half of the blue picture element **B** and the left half of the yellow picture element **Y** of the right pixel **P,** overlap the light transmitting parts **1b** of the photomask **1T.** In other words, the parts of the optical alignment film corresponding to the right half of the red picture element **R,** the left half of the green picture element **G,** the right half of the blue picture element **B** and the left half of the yellow picture element **Y** of left pixel **P,** and the left half of the red picture element **R,** the right half of the green picture element **G,** the left half of the blue picture element **B** and the right half of the yellow picture element **Y** of the right pixel **P,** overlap the light shielding parts **1a** of the photomask **1T**.

Next, as shown in FIG. **90(b)****,** ultraviolet rays are directed obliquely in the direction represented by the arrows. As a result of this exposure step, as shown in FIG. **90(c)****,** the remaining parts of the optical alignment film, namely, the parts thereof corresponding to the left half of the red picture element **R,** the right half of the green picture element **G,** the left half of the blue picture element **B** and the right half of the yellow picture element **Y** of the left pixel **P,** and the right half of the red picture element **R,** the left half of the green picture element **G,** the right half of the blue picture element **B** and the left half of the yellow picture element **Y** of the right pixel **P,** are given a prescribed pretilt direction. The pretilt direction given at this point is the same as the pretilt direction **PA2** shown in FIG. **2(a)** and is antiparallel to the pretilt direction shown in FIG. **89(c)****.**

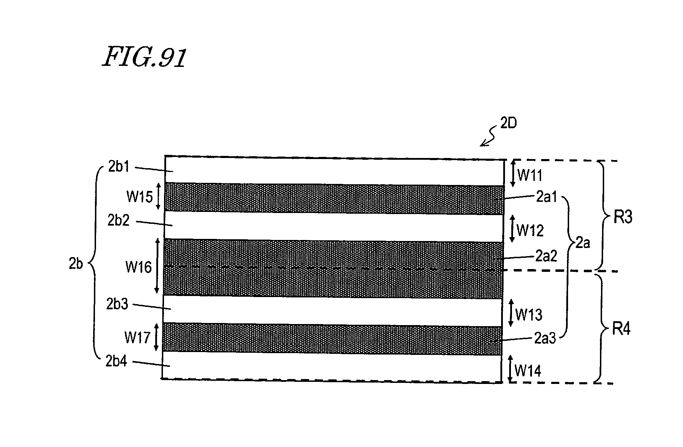

As a result of the above-described optical alignment processing, in an area of the optical alignment film on the TFT substrate corresponding to each sub picture element, two areas having antiparallel pretilt directions to each other are formed. Now, with reference to FIG. **91** through FIG. **93****,** the optical alignment processing performed on the optical alignment film on a CF substrate will be described.

First, a photomask **2D** shown in FIG. **91** is prepared. FIG. **91** shows a part of the photomask **2D,** and more specifically, an area corresponding to four pixels (four pixels **P** arranged in 2 rows × 2 columns). As shown in FIG. **91****,** the photomask **2D** has a mask pattern including a plurality of light shielding parts **2a** extending like stripes parallel to the row direction (horizontal direction) and a plurality of light transmitting parts **2b** located between the plurality of light shielding parts **2a.**

Widths **W11** through **W14** of the plurality of light transmitting parts **2b** (**2b1** through **2b4**) (width in the column direction) are each half of the length **L6** of each sub picture element along the column direction (i.e., W11 = W12 = W13 = W14 = L6/2). A width **W15** (width in the column direction) of a light shielding part **2a1,** which is uppermost among the plurality of light shielding parts **2a,** is equal to half of the length **L6** of each sub picture element along the column direction (i.e., W5 = L6/2). A width **W16** of a light shielding part **2a2,** which is second from top, is equal to the length **L6** of each sub picture element along the column direction (i.e., W16 = L6). A width **W17** of a light shielding part **2a3,** which is third from top (lowermost), is equal to half of the length **L6** of each sub picture element along the column direction (i.e., W17 = L6/2).

When the photomask **2D** shown in FIG. **91** is divided into an area **R3** corresponding to the top half (top pixel **P**) of the minimum repeat unit of alignment pattern along the column direction and an area **R4** corresponding to the bottom half (bottom pixel **P**) thereof, the mask pattern of the top area **R3** and the mask pattern of the bottom area **R4** are negative/positive-inverted to each other. Namely, the light shielding parts **2a** of the bottom area **R4** are located at the positions of the light transmitting parts **2b** in the top area **R3,** and the light transmitting parts **2b** of the bottom area **R4** are located at the positions of the light shielding parts **2a** in the top area **R3.**

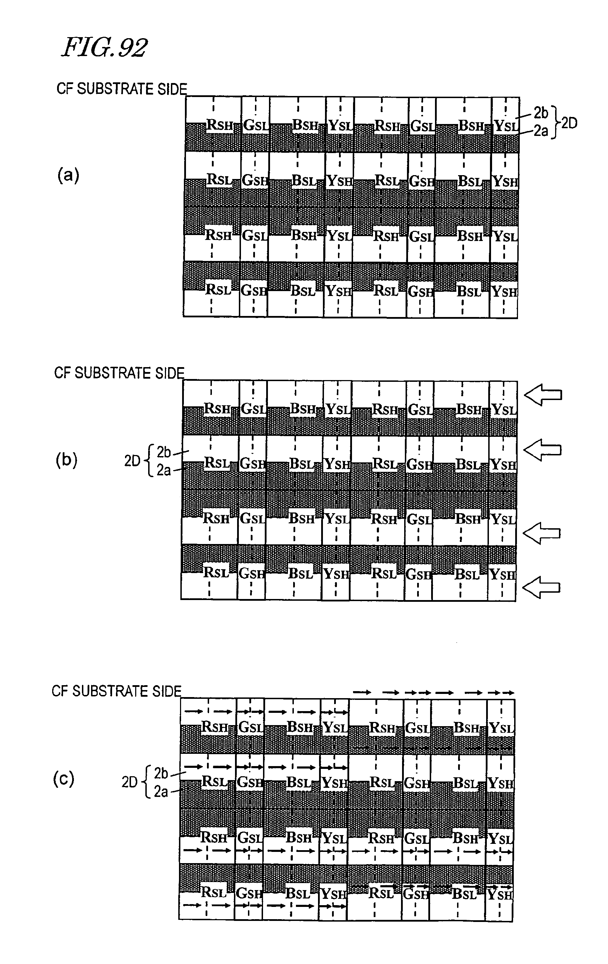

Next, as shown in FIG. **92(a)****,** the photomask **2D** is located such that parts of the optical alignment film corresponding to top halves of the sub picture elements of the top pixels **P,** and bottom halves of the sub picture elements of the bottom pixels **P,** overlap the light transmitting parts **2b.** In other words, the photomask **2D** is located such that parts of the optical alignment film corresponding to bottom halves of the sub picture elements of the top pixels **P,** and top halves of the sub picture elements of the bottom pixels **P,** overlap the light shielding parts **2a.**

Next, as shown in FIG. **92(b)****,** ultraviolet rays are directed obliquely in the direction represented by the arrows. As a result of this exposure step, as shown in FIG. **92(c)****,** the parts of the optical alignment film corresponding to the top halves of the sub picture elements of the top pixels **P,** and the bottom halves of the sub picture elements of the bottom pixels **P,** are given a prescribed pretilt direction. The pretilt direction given at this point is the same as the pretilt direction **PB1** shown in FIG. **2(b)****.**

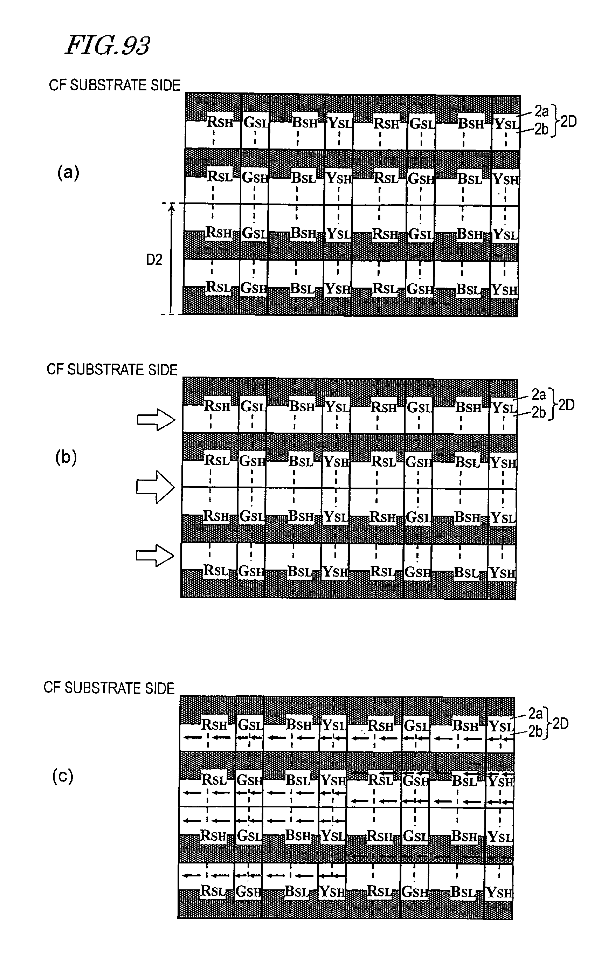

Next, as shown in FIG. **93(a)****,** the photomask **2D** is shifted in the column direction by a prescribed distance **D2.** In this example, the prescribed distance **D2** is equal to the length **PL2** (see FIG. **86**) of the pixel **P** along the column direction. Namely, the photomask **2D** is shifted by one pixel in the column direction. As a result of this movement, the parts of the optical alignment film corresponding to the bottom halves of the sub picture elements of the top pixels **P,** and top halves of the sub picture elements of the bottom pixels **P,** overlap the light transmitting parts **2b** of the photomask **2D.** Namely, the parts corresponding to the top halves of the sub picture elements of the top pixels **P,** and bottom halves of the sub picture elements of the bottom pixels **P,** overlap the light shielding parts **2a** of the photomask **2D.**

Next, as shown in FIG. **93(b)****,** ultraviolet rays are directed obliquely in the direction represented by the arrows. As a result of this exposure step, as shown in FIG. **93(c)****,** the remaining parts of the optical alignment film, namely, the parts thereof corresponding to the bottom halves of the sub picture elements of the top pixels **P,** and the top halves of the sub picture elements of the bottom pixels **P,** are given a prescribed pretilt direction. The pretilt direction given at this point is the same as the pretilt direction **PB2** shown in FIG. **2(b)** and is antiparallel to the pretilt direction shown in FIG **92(c)****.**

As a result of the above-described optical alignment processing, in an area of the optical alignment film on the CF substrate corresponding to each sub picture element, two areas having antiparallel pretilt directions to each other are formed. By bonding together the TFT substrate and the CF substrate processed with the optical alignment in the above-described manner, the liquid crystal display device **700** shown in FIG. **86** and FIG. **87** in which each sub picture element is divided into liquid crystal domains having different alignment directions is obtained.

In the production method of the liquid crystal display device **700** also, in the step of performing the optical alignment processing on the optical alignment film on the TFT substrate, the two exposure steps are performed by use of one, common photomask **1T.** In the step of performing the optical alignment processing on the optical alignment film on the CF substrate, the two exposure steps are performed by use of one, common photomask **2D.** Namely, shifted exposure can be performed in the row direction in which there are two lengths of picture elements in addition to the column direction in which there is one length of picture elements. Therefore, the optical alignment processing can be realized at low cost and in a short takt time. In addition, with the liquid crystal display device **700,** even when a bonding shift occurs during the production, reduction of the display quality which would otherwise be caused by a color shift can be suppressed.

With the liquid crystal display device **1000** shown in FIG. **64** and the like and with the liquid crystal display device **600** shown in FIG. **75** and the like, in the case where the bonding shift occurs in the column direction (upward direction or downward direction), a brightness shift may occur when the line of sight is inclined toward a left end of a display plane (when the display plane is observed from a left oblique direction) or when the line of sight is inclined toward a right end of the display plane (when the display plane is observed from a right oblique direction). With the liquid crystal display device **700** in this embodiment, reduction of the display quality which would otherwise be caused by such a brightness shift can be suppressed.

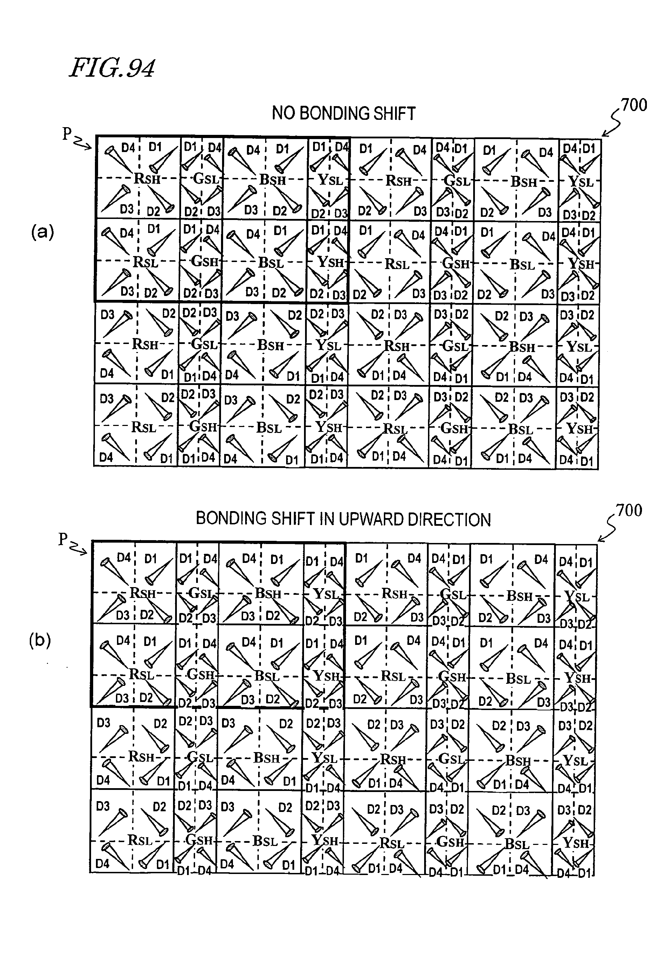

FIGS. **94(a)** shows an alignment state of the liquid crystal display device **700** when the bonding shift does not occur, and FIG. **94(b)** shows an alignment state of the liquid crystal display device **700** when the bonding shift occurs in the upward direction (i.e., when the position of the CF substrate is shifted upward with respect to the proper position thereof).

When the bonding shift does not occur, as shown in FIG. **94(a)****,** the four liquid crystal domains **D1** through **D4** have an equal length to each other along the column direction in each sub picture element. Therefore, the four liquid crystal domains **D1** through **D4** have an equal area size to each other.

By contrast, when the bonding shift occurs in the upward direction, as shown in FIG. **94(b)****,** in each sub picture element, two top liquid crystal domains each have a longer length along the column direction, and two bottom liquid crystal domains each have a shorter length along the column direction. Therefore, in each sub picture element, the two top liquid crystal domains each have a larger area size than that of each of the two bottom liquid crystal domains.

Specifically, in each sub picture element of the top pixel **P,** the liquid crystal domains **D1** and **D4** each have a longer length along the column direction, and the liquid crystal domains **D2** and **D3** each have a shorter length along the column direction. Therefore, the liquid crystal domains **D1** and **D4** each have a larger area size than that of each of the liquid crystal domains **D2** and **D3.** By contrast, in each sub picture element of the bottom pixel **P,** the liquid crystal domains **D2** and **D3** each have a longer length along the column direction, and the liquid crystal domains **D1** and **D4** each have a shorter length along the column direction. Therefore, the liquid crystal domains **D2** and **D3** each have a larger area size than that of each of the liquid crystal domains **D1** and **D4.**

In this manner, when the bonding shift occurs in the column direction also, the four liquid crystal domains have different area sizes. Even in the case where the four liquid crystal domains have different sizes, there is no problem when the display plane is observed in the front direction. In the case where, for example, white of a certain gray scale is displayed, when the display plane is observed in the front direction, each pixel **P** is visually recognized white regardless of whether the alignment state is as in FIG. **94(a)** or as in FIG. **94(b)****.** In the alignment state shown in FIG. **94(a)****,** the brightness of each pixel **P** is equal to that in the alignment state shown in FIG. **94(b)****.** Namely, no brightness shift occurs.

However, in the case where the bonding shift occurs in the column direction, the brightness shift occurs when the display plane is observed from the right oblique direction or from the left oblique direction.

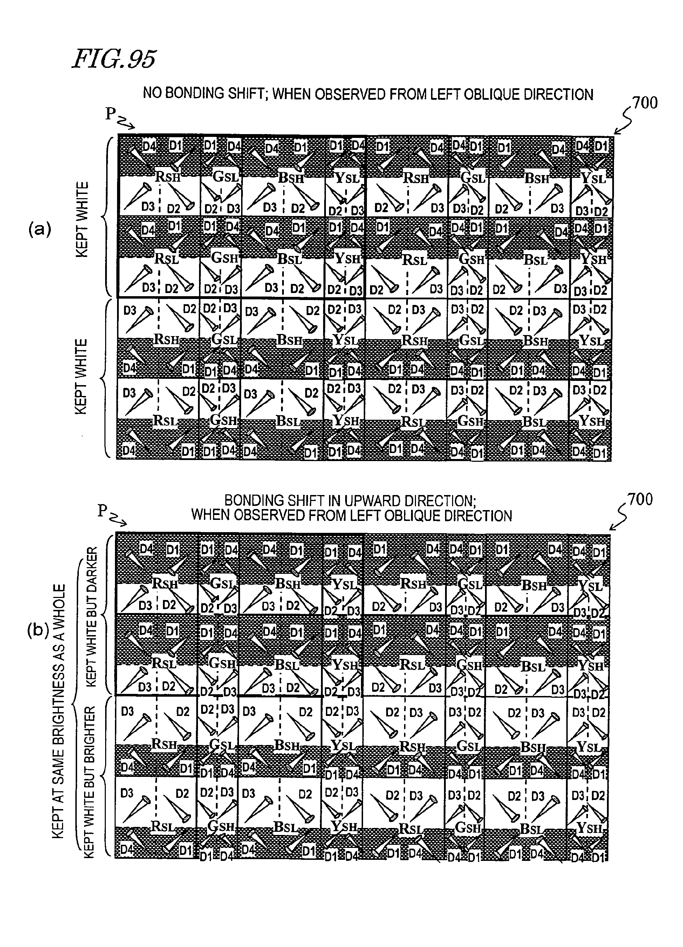

FIGS. 95(a) and (b) schematically show how the display plane of the liquid crystal display device **700** is visually recognized when being observed from the left oblique direction in the case where the bonding shift does not occur and the bonding shift occurs in the upward direction, respectively. FIGS. 95(a) and (b) both show a state where white of a certain gray scale is displayed. In both of FIGS. 95(a) and(b), the liquid crystal domains **D1** and **D4,** which are visually recognized dark when the display plane is observed from the left oblique direction (the liquid crystal domains **D1** and **D4,** in which the liquid crystal molecules fall toward the left end of the display plane) are shown dark. When the line of sight is inclined toward the left end of the display plane to a relatively large degree, the liquid crystal domains **D2** and **D3** mainly contribute to the display.

As described above, when the bonding shift does not occur, the four liquid crystal domains **D1** through **D4** have an equal area size in each sub picture element. Therefore, as can be seen from FIG. **95(a)****,** when the display plane is observed from the left oblique direction, the ratio of the effective area size of each of the red picture element **R,** the blue picture element **B,** the green picture element **G** and the yellow picture element **Y** (the ratio of the total area size of the liquid crystal domains **D2** and **D3,** mainly contributing to the display, of each picture element) with respect to the area size of the pixel **P** is equal to that when the display plane is observed from the front direction. Accordingly, even when the display plane is observed from the left oblique direction, the color displayed by each pixel **P** is kept white.

Even when the bonding shift occurs in the upward direction, as can be seen from FIG. **95(b)****,** when the display plane is observed from the left oblique direction, the ratio of the effective area size of each of the red picture element **R,** the blue picture element **B,** the green picture element **G** and the yellow picture element **Y** with respect to the area size of the pixel **P** is equal to that when the display plane is observed from the front direction. Accordingly, the color displayed by each pixel **P** is kept white.

However, when the bonding shift occurs in the upward direction, in each sub picture element, the area size of each of two top liquid crystal domains is larger than the area size of each of two bottom liquid crystal domains. As a result, the brightness of each pixel **P** when the display plane is observed from the left oblique direction is different from the proper brightness (brightness when the bonding shift does not occur).

Specifically, in each sub picture element of the top pixel **P,** the area size of each of the liquid crystal domains **D1** and **D4** is larger than the area size of each of the liquid crystal domains **D2** and **D3.** Therefore, as can be seen from FIG. **95(b)****,** when the display plane is observed from the left oblique direction, the white displayed by the top pixel **P** is darker than the proper color.

In each sub picture element of the bottom pixel **P,** the area size of each of the liquid crystal domains **D2** and **D3** is larger than the area size of each of the liquid crystal domains **D1** and **D4.** Therefore, as can be seen from FIG. **95(b)****,** when the display plane is observed from the left oblique direction, the white displayed by the bottom pixel **P** is brighter than the proper color.

As can be seen from the above, in the case where the bonding shift occurs in the upward direction, the brightness shift occurs in each pixel **P** when the display plane is observed from the left oblique direction. However, in the liquid crystal display device **700,** as shown in FIG. **95(b)****,** there are pixels **P** displayed dark (top pixels **P**) and pixels **P** displayed bright (bottom pixels **P**) along the column direction in a mixed state. Therefore, the overall brightness provided by the plurality of pixels **P** can be kept equal to the brightness when the bonding shift does not occur. By contrast, with the liquid crystal display device **1000** and the liquid crystal display device **600,** in the case where the bonding shift occurs in the upward direction, when the display plane is observed from the left oblique direction, the display provided by the plurality of pixels **P** is uniformly dark.

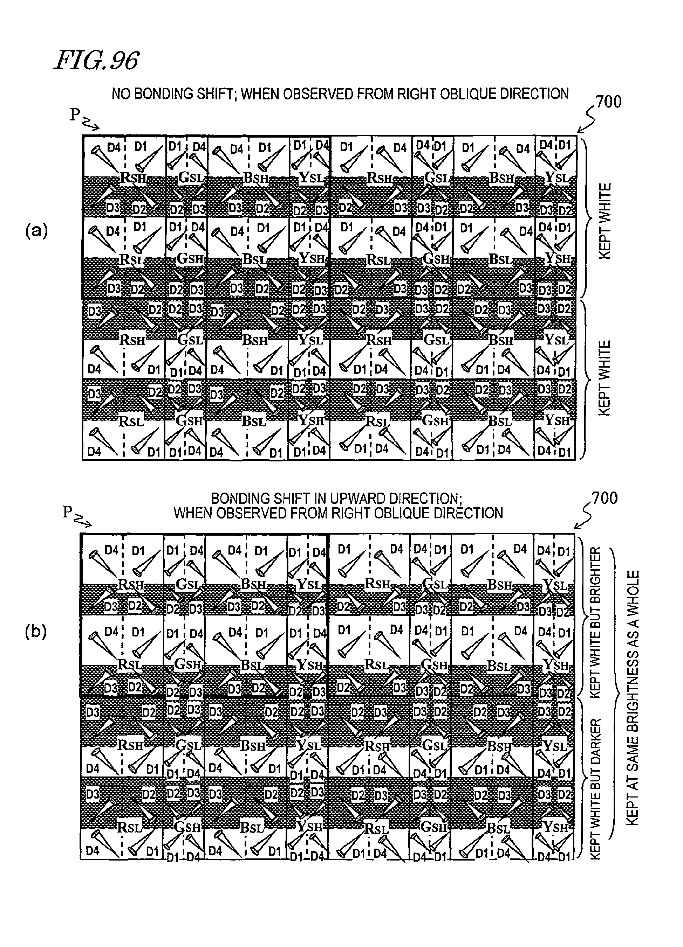

FIGS. 96(a) and (b) schematically show how the display plane of the liquid crystal display device **700** is visually recognized when being observed from the right oblique direction in the case where the bonding shift does not occur and the bonding shift occurs in the upward direction, respectively. FIGS. 96(a) and (b) both show a state where white of a certain gray scale is displayed. In both of FIGS. 96(a) and(b), the liquid crystal domains **D2** and **D3,** which are visually recognized dark when the display plane is observed from the right oblique direction (the liquid crystal domains **D2** and **D3,** in which the liquid crystal molecules fall toward the right end of the display plane) are shown dark. When the line of sight is inclined toward the right end of the display plane to a relatively large degree, the liquid crystal domains **D1** and **D4** mainly contribute to the display.

As described above, when the bonding shift does not occur, the four liquid crystal domains **D1** through **D4** have an equal area size in each sub picture element. Therefore, as can be seen from FIG. **96(a)****,** when the display plane is observed from the right oblique direction, the ratio of the effective area size of each of the red picture element **R,** the blue picture element **B,** the green picture element **G** and the yellow picture element **Y** (the ratio of the total area size of the liquid crystal domains **D1** and **D,** mainly contributing to the display, of each picture element) with respect to the area size of the pixel **P** is equal to that when the display plane is observed from the front direction. Accordingly, even when the display plane is observed from the right oblique direction, the color displayed by each pixel **P** is kept white.

Even when the bonding shift occurs in the upward direction, as can be seen from FIG. **96(b)****,** when the display plane is observed from the right oblique direction, the ratio of the effective area size of each of the red picture element **R,** the blue picture element **B,** the green picture element **G** and the yellow picture element **Y** with respect to the area size of the pixel **P** is equal to that when the display plane is observed from the front direction. Accordingly, the color displayed by each pixel **P** is kept white.

However, when the bonding shift occurs in the upward direction, in each sub picture element, the area size of each of two top liquid crystal domains is larger than the area size of each of two bottom liquid crystal domains. As a result, the brightness of each pixel **P** when the display plane is observed from the right oblique direction is different from the proper brightness (brightness when the bonding shift does not occur).

Specifically, in each sub picture element of the top pixel **P,** the area size of each of the liquid crystal domains **D1** and **D4** is larger than the area size of each of the liquid crystal domains **D2** and **D3.** Therefore, as can be seen from FIG. **96(b)****,** when the display plane is observed from the right oblique direction, the white displayed by the top pixel **P** is brighter than the proper color.

In each sub picture element of the bottom pixel **P,** the area size of each of the liquid crystal domains **D2** and **D3** is larger than the area size of each of the liquid crystal domains **D1** and **D4.** Therefore, as can be seen from FIG. **96(b)****,** when the display plane is observed from the right oblique direction, the white displayed by the bottom pixel **P** is darker than the proper color.

As can be seen from the above, in the case where the bonding shift occurs in the upward direction, the brightness shift occurs in each pixel **P** when the display plane is observed from the right oblique direction. However, in the liquid crystal display device **700,** as shown in FIG. **96(b)****,** there are pixels **P** displayed dark (bottom pixels **P**) and pixels **P** displayed bright (top pixels **P)** along the column direction in a mixed state. Therefore, the overall brightness provided by the plurality of pixels **P** can be kept equal to the brightness when the bonding shift does not occur. By contrast, with the liquid crystal display device **1000** and the liquid crystal display device **600,** in the case where the bonding shift occurs in the upward direction, when the display plane is observed from the right oblique direction, the display provided by the plurality of pixels **P** is uniformly bright.

As described above, with the liquid crystal display device **700,** even when the brightness shift occurs in each pixel **P** due to the bonding shift, white displayed by the plurality of pixels **P** can have an equal luminance to the luminance when the bonding shift does not occur. A reason for this is that there are pixels **P** displayed bright and pixels **P** displayed dark in a mixed state. As a result, the brightness shift is unlikely to be visually recognized, and the reduction of the display quality which would otherwise be caused by the brightness shift is suppressed.

In this embodiment, a structure using the picture element division driving technology (i.e., each picture element is divided into a plurality of sub picture elements) is described. Even with a structure which does not use the picture element division driving technology, the effect of suppressing the reduction of the display quality which would otherwise be caused by the brightness shift can be provided.

In this embodiment, the minimum repeat unit of alignment pattern along the column direction is two pixels. The present invention is not limited to this. The minimum repeat unit of alignment pattern along the column direction may be any even number of pixels, namely, 2m pixels (m is an integer of 1 or greater). It is sufficient that in the 2m pixels, which form the minimum repeat unit of alignment pattern along the column direction, there are picture elements having different alignment orders of the liquid crystal domains **D1** through **D4** in a mixed state.

The minimum repeat unit of alignment pattern along the column direction can be 2m pixels in the case where a mask pattern of an area of the photomask corresponding to certain m pixel(s) (m is an integer of 1 or greater) continuous along the column direction and a mask pattern of an area of the photomask corresponding to another m pixel(s) adjacent to the certain m pixel(s) along the column direction are negative/positive-inverted to each other. In the step of moving the photomask between the two exposure steps, the photomask is shifted by m pixel(s) in the column direction. It is preferable for the above-described reason that the minimum repeat unit of alignment pattern along the column direction is 2 pixels or greater and 20 pixels or less (i.e., 1 ≤ m ≤ 10). It is preferable that in m pixel (s) which is half on one side of 2m pixels which form the repeat unit of alignment pattern along the column direction, the difference between the number of picture elements having the gammadion alignment and the number of picture elements having the letter 8 alignment is 0 or 1, and that in m pixel (s) which is half on the other side of the 2m pixels, the difference between the number of picture elements having the gammadion alignment and the number of picture elements having the letter 8 alignment is 0 or 1.

### INDUSTRIAL APPLICABILITY

A liquid crystal display device according to the present invention is preferably usable for applications of TV receivers or the like which are required to provide high quality display.

### REFERENCE SIGNS LIST

**1, 1A - 1T** Photomask
**2, 2A - 2D** Photomask
**1a, 2a** Light shielding part of the photomask
**1b, 2b** Light transmitting part of the photomask
**3** Liquid crystal layer
**3a** Liquid crystal molecule
**10, 20, 30, 40** Picture element
**11** Picture element electrode
**12, 22** Optical alignment film
**13, 23** Polarizing plate
**21** Counter electrode
**100, 200, 300, 400** Liquid crystal display device
**500, 500A, 500B, 600, 700** Liquid crystal display device
**R** Red picture element
**G** Green picture element
**B** Blue picture element
**Y** Yellow picture element
**S1** TFT substrate (active matrix substrate)
**S2** CF substrate (counter substrate)
**S1a, S2a** Transparent plate
**SD1 - SD4** Edge of the picture element electrode
**EG1 - EG4** Edge portion of the picture element electrode
**D1 - D4** Liquid crystal domain
**t1 - t4** Tilt direction (reference alignment direction)
**e1 - e4** Azimuthal angle direction perpendicular to the edge of the picture element electrode and directed to the inside of the picture element electrode
**DR** Dark area
**SL** Straight dark line
**CL** Cross-shaped dark line
**P** Pixel
**DE** Double-exposed area

## Claims

1. A liquid crystal display device, comprising:
a vertical alignment type liquid crystal layer;
a first substrate and a second substrate facing each other with the liquid crystal layer interposed therebetween;
a first electrode provided on the liquid crystal layer side of the first substrate and a second electrode provided on the liquid crystal layer side of the second substrate;
a pair of optical alignment films provided between the first electrode and the liquid crystal layer and between the second electrode and the liquid crystal layer; and
a plurality of pixels arranged in a matrix having a plurality of rows and a plurality of columns;
wherein:
the plurality of pixels each include a plurality of picture elements for displaying different colors from each other, the plurality of picture elements including at least three picture elements;
each of the plurality of picture elements includes a first liquid crystal domain in which a tilt direction of liquid crystal molecules at a center and in the vicinity thereof in a layer plane and in a thickness direction of the liquid crystal layer when a voltage is applied between the first electrode and the second electrode is a predetermined first tilt direction, a second liquid crystal domain in which the tilt direction is a predetermined second tilt direction, a third liquid crystal domain in which the tilt direction is a predetermined third tilt direction, and a fourth liquid crystal domain in which the tilt direction is a predetermined fourth tilt direction; the first, second, third and fourth tilt directions are such that a difference between any two of these four directions is approximately equal to an integral multiple of 90°; and the first, second, third and fourth liquid crystal domains are arranged in a matrix of 2 rows × 2 columns;
the pair of optical alignment films have such an alignment regulation force that causes an identical alignment pattern to appear in repetition in the liquid crystal layer along a first direction which is parallel to one of a row direction and a column direction, with 2n pixels (n is an integer of 1 or greater) being a minimum unit; and
in the 2n pixels which form the repeat unit of alignment pattern, there are first picture elements and second picture elements in a mixed state, the first picture elements each including the first, second, third and fourth liquid crystal domains located in a first order, and the second picture elements each including the first, second, third and fourth liquid crystal domains located in a second order which is different from the first order.

2. The liquid crystal display device of claim 1, wherein in the 2n pixels forming the repeat unit of alignment pattern, an alignment pattern of n pixel(s) which is half on one side of the 2n pixels and an alignment pattern of another n pixel (s) which is half on the other side of the 2n pixels are inverted to each other.

3. The liquid crystal display device of claim 1 or 2, wherein in the n pixel (s) which is half on one side of the 2n pixels forming the repeat unit of alignment pattern, a difference between the number of the first picture element(s) and the number of the second picture element (s) is 0 or 1; and in the another n pixel (s) which is half on the other side of the 2n pixels, a difference between the number of the first picture element(s) and the number of the second picture element(s) is 0 or 1.

4. The liquid crystal display device of claim 3, wherein when the plurality of picture elements in each of the plurality of pixels are ranked in accordance with a length thereof along the first direction, one of any two picture elements having continuous ranks is the first picture element and the other of the two picture elements is the second picture element.

5. The liquid crystal display device of any one of claims 1 through 4, wherein n is 1 or greater and 10 or less.

6. The liquid crystal display device of any one of claims 1 through 5, wherein the plurality of picture elements include a picture element having a prescribed first length L1 along the first direction and a picture element having a second length L2, which is different from the first length L1, along the first direction.

7. The liquid crystal display device of claim 6, wherein the plurality of picture elements further include a picture element having a third length L3, which is different from the first length L1 and is also different from the second length L2, along the first direction.

8. The liquid crystal display device of any one of claims 1 through 7, wherein:
when a gray scale is displayed, in each of the plurality of picture elements, a dark area darker than the gray scale appears;
the dark area appearing in the first picture element is generally gammadion-shaped; and
the dark area appearing in the second picture element is generally letter 8-shaped.

9. The liquid crystal display device of any one of claims 1 through 8, wherein:
because of the alignment regulation force of the pair of optical alignment films, an identical alignment pattern appears in repetition in the liquid crystal layer along a second direction which is parallel to the other of the row direction and the column direction, with 2m pixels (m is an integer of 1 or greater) being a minimum unit; and
in the 2m pixels which form the repeat unit of alignment pattern along the second direction, there are the first picture elements and the second picture elements in a mixed state.

10. The liquid crystal display device of claim 9, wherein in the 2m pixels forming the repeat unit of alignment pattern along the second direction, an alignment pattern of m pixel(s) which is half on one side of the 2m pixels and an alignment pattern of another m pixel(s) which is half on the other side of the 2m pixels are inverted to each other.

11. The liquid crystal display device of claim 9 or 10, wherein in the m pixel (s) which is half on one side of the 2m pixels forming the repeat unit of alignment pattern along the second direction, a difference between the number of the first picture element(s) and the number of the second picture element(s) is 0 or 1; and in the another m pixel(s) which is half on the other side of the 2m pixels, a difference between the number of the first picture element(s) and the number of the second picture element(s) is 0 or 1.

12. The liquid crystal display device of any one of claims 9 through 11, wherein m is 1 or greater and 10 or less.

13. The liquid crystal display device of any one of claims 1 through 12, wherein:
the first, second, third and fourth liquid crystal domains are located such that the tilt directions of any two adjacent liquid crystal domains thereamong are different by 90° from each other;
the first tilt direction and the third tilt direction have an angle of about 180° with respect to each other;
in the first picture element,
a portion of edges of the first electrode close to the first liquid crystal domain includes a first edge portion such that an azimuthal angle direction perpendicular to the first edge portion and directed to the inside of the first electrode has an angle exceeding 90° with respect to the first tilt direction;
a portion of edges of the first electrode close to the second liquid crystal domain includes a second edge portion such that an azimuthal angle direction perpendicular to the second edge portion and directed to the inside of the first electrode has an angle exceeding 90° with respect to the second tilt direction;
a portion of edges of the first electrode close to the third liquid crystal domain includes a third edge portion such that an azimuthal angle direction perpendicular to the third edge portion and directed to the inside of the first electrode has an angle exceeding 90° with respect to the third tilt direction;
a portion of edges of the first electrode close to the fourth liquid crystal domain includes a fourth edge portion such that an azimuthal angle direction perpendicular to the fourth edge portion and directed to the inside of the first electrode has an angle exceeding 90° with respect to the fourth tilt direction; and
the first edge portion and the third edge portion are generally parallel to one of a horizontal direction and a vertical direction of a display plane, and the second edge portion and the fourth edge portion are generally parallel to the other of the horizontal direction and the vertical direction of the display plane; and
in the second picture element,
a portion of edges of the first electrode close to a first liquid crystal domain includes a first edge portion such that an azimuthal angle direction perpendicular to the first edge portion and directed to the inside of the first electrode has an angle exceeding 90° with respect to the first tilt direction;
a portion of edges of the first electrode close to the third liquid crystal domain includes a third edge portion such that an azimuthal angle direction perpendicular to the third edge portion and directed to the inside of the first electrode has an angle exceeding 90° with respect to the third tilt direction; and
the first edge portion and the third edge portion each include a first portion generally parallel to the horizontal direction of the display plane and a second portion generally parallel to the vertical direction of the display plane.

14. The liquid crystal display device of any one of claims 1 through 13, wherein:
the plurality of picture elements each include a plurality of sub picture elements capable of applying different voltages to corresponding parts of the liquid crystal layer; and
the plurality of sub picture elements each include the first, second, third and fourth liquid crystal domains.

15. The liquid crystal display device of any one of claims 1 through 14, wherein the plurality of picture elements include a red picture element for displaying red, a green picture element for displaying green, and a blue picture element for displaying blue.

16. The liquid crystal display device of claim 15, wherein the plurality of picture elements further include a yellow picture element for displaying yellow.

17. The liquid crystal display device of any one of claims 1 through 16, further comprising a pair of polarizing plates facing each other with the liquid crystal layer interposed therebetween and located such that transmission axes thereof are generally perpendicular to each other;
wherein the first, second, third and fourth tilt directions make an angle of approximately 45° with respect to the transmission axes of the pair of polarizing plates.

18. The liquid crystal display device of any one of claims 1 through 17, wherein:
the liquid crystal layer contains liquid crystal molecules having a negative dielectric anisotropy; and
a pretilt direction defined by one of the pair of optical alignment films and a pretilt direction defined by the other of the pair of optical alignment films are different by approximately 90° from each other.

19. A method for producing a liquid crystal display device, the liquid crystal display device including:
a vertical alignment type liquid crystal layer;
a first substrate and a second substrate facing each other with the liquid crystal layer interposed therebetween;
a first electrode provided on the liquid crystal layer side of the first substrate and a second electrode provided on the liquid crystal layer side of the second substrate;
a first optical alignment film provided between the first electrode and the liquid crystal layer and a second optical alignment film provided between the second electrode and the liquid crystal layer; and
a plurality of pixels arranged in a matrix having a plurality of rows and a plurality of columns;
wherein:
the plurality of pixels each include a plurality of picture elements for displaying different colors from each other, the plurality of picture elements including at least three picture elements; and
each of the plurality of picture elements includes a first liquid crystal domain in which a tilt direction of liquid crystal molecules at a center and in the vicinity thereof in a layer plane and in a thickness direction of the liquid crystal layer when a voltage is applied between the first electrode and the second electrode is a predetermined first tilt direction, a second liquid crystal domain in which the tilt direction is a predetermined second tilt direction, a third liquid crystal domain in which the tilt direction is a predetermined third tilt direction, and a fourth liquid crystal domain in which the tilt direction is a predetermined fourth tilt direction; the first, second, third and fourth tilt directions are such that a difference between any two of these four directions is approximately equal to an integral multiple of 90°; and the first, second, third and fourth liquid crystal domains are arranged in a matrix of 2 rows × 2 columns;
the method comprising:
a step (A) of forming, by optical alignment processing, a first area having a first pretilt direction and a second area having a second pretilt direction which is antiparallel to the first pretilt direction, in an area of the first optical alignment film corresponding to each of the plurality of picture elements; and
a step (B) of forming, by optical alignment processing, a third area having a third pretilt direction and a fourth area having a fourth pretilt direction which is antiparallel to the third pretilt direction, in an area of the second optical alignment film corresponding to each of the plurality of picture elements;
wherein:
the step (A) of forming the first area and the second area includes:
a first exposure step of directing light to a part of the first optical alignment film which is to be the first area; and
a second exposure step of directing light to a part of the first optical alignment film which is to be the second area, after the first exposure step;
the first exposure step and the second exposure step are performed by use of one, common first photomask having a mask pattern including a plurality of striped light shielding parts and a plurality of light transmitting parts located between the plurality of light shielding parts; and
a mask pattern of an area of the first photomask corresponding to certain n pixel(s) (n is an integer of 1 or greater) continuous along a first direction which is parallel to one of a row direction and a column direction, and a mask pattern of an area of the first photomask corresponding to another n pixel(s) adjacent to the certain n pixel(s) along the first direction, are negative/positive-inverted to each other.

20. The method for producing a liquid crystal display device of claim 19, wherein the plurality of striped light shielding parts extend along a second direction which is parallel to the other of the row direction and the column direction.

21. The method for producing a liquid crystal display device of claim 19 or 20, wherein the step (A) of forming the first area and the second area further includes:
a first photomask locating step of, before the first exposure step, locating the first photomask such that a part of the first optical alignment film corresponding to about half of each of the plurality of picture elements overlaps each of the plurality of light shielding parts; and
a first photomask moving step of, between the first exposure step and the second exposure step, shifting the first photomask along the first direction by n pixel(s).

22. The method for producing a liquid crystal display device of any one of claims 19 through 21, wherein the plurality of picture elements include a picture element having a prescribed first length L1 along the first direction and a picture element having a second length L2, which is different from the first length L1, along the first direction.

23. The method for producing a liquid crystal display device of claim 22, wherein the plurality of picture elements further include a picture element having a third length L3, which is different from the first length L1 and is also different from the second length L2, along the first direction.

24. The method for producing a liquid crystal display device of any one of claims 19 through 23, wherein n is 1 or greater and 10 or less.

25. The method for producing a liquid crystal display device of any one of claims 19 through 24, wherein:
the step (B) of forming the third area and the fourth area includes:
a third exposure step of directing light to a part of the second optical alignment film which is to be the third area; and
a fourth exposure step of directing light to a part of the second optical alignment film which is to be the fourth area, after the third exposure step;
the third exposure step and the fourth exposure step are performed by use of one, common second photomask having a mask pattern including a plurality of striped light shielding parts and a plurality of light transmitting parts located between the plurality of light shielding parts; and
a mask pattern of an area of the second photomask corresponding to certain m pixel(s) (m is an integer of 1 or greater) continuous along a second direction which is parallel to the other of the row direction and the column direction, and a mask pattern of an area of the second photomask corresponding to another m pixel(s) adjacent to the certain m pixel(s) along the second direction, are negative/positive-inverted to each other.

26. The method for producing a liquid crystal display device of claim 25, wherein the plurality of striped light shielding parts of the second photomask extend along the first direction.

27. The method for producing a liquid crystal display device of claim 25 or 26, wherein the step (B) of forming the third area and the fourth area further includes:
a second photomask locating step of, before the third exposure step, locating the second photomask such that a part of the second optical alignment film corresponding to about half of each of the plurality of picture elements overlaps each of the plurality of light shielding parts; and
a second photomask moving step of, between the third exposure step and the fourth exposure step, shifting the second photomask along the second direction by m pixel(s).

28. The method for producing a liquid crystal display device of any one of claims 19 through 27, wherein the plurality of picture elements include a red picture element for displaying red, a green picture element for displaying green, and a blue picture element for displaying blue.

29. The method for producing a liquid crystal display device of claim 28, wherein the plurality of picture elements further include a yellow picture element for displaying yellow.
